# EUROPEAN PATENT SPECIFICATION

(11) **EP 3 130 651 B1**
(45) Date of publication and mention of the grant of the patent: **16.10.2019**
(21) Application number: 16002042.6
(22) Date of filing: 20.07.2012
(51) Int. Cl.: C09K 19/34, C09K 19/44, C09K 19/04, C09K 19/12, C09K 19/30

(54) **LIQUID-CRYSTALLINE MEDIUM**
FLÜSSIGKRISTALLINES MEDIUM
MILIEU LIQUIDE CRISTALLIN

(30) Priority: 09.08.2011 EP 11006531
(43) Date of publication of application: 15.02.2017
(62) Divisional of application: 12005324.4
(73) Proprietor: Merck Patent GmbH, 64293 Darmstadt (DE)
(72) Inventor: Hung, Gavin, 320 Zhongli City Taoyuan (TW); Chang, Roger, 11153 Taipei (TW); Tsai, Kris, 320 Zhongli City Taoyuan (TW); Oyang, Glavin, Newtaipei City (TW)

(56) References cited:
- EP-A2- 2 508 588
- WO-A1-2010/089092
- WO-A1-2012/079676
- US-A1- 2011 095 229
- US-A1- 2011 127 465
- US-A1- 2011 180 756

## Description

The present invention relates to a liquid-crystalline medium (LC medium), to the use thereof for electro-optical purposes, and to LC displays containing this medium.

Liquid crystals are used principally as dielectrics in display devices, since the optical properties of such substances can be modified by an applied voltage. Electro-optical devices based on liquid crystals are extremely well known to the person skilled in the art and can be based on various effects. Examples of such devices are cells having dynamic scattering, DAP (deformation of aligned phases) cells, guest/host cells, TN cells having a twisted nematic structure, STN (supertwisted nematic) cells, SBE (super-birefringence effect) cells and OMI (optical mode interference) cells. The commonest display devices are based on the Schadt-Helfrich effect and have a twisted nematic structure. In addition, there are also cells which work with an electric field parallel to the substrate and liquid-crystal plane, such as, for example, IPS (in-plane switching) cells. TN, STN, FFS (fringe field switching) and IPS cells, in particular, are currently commercially interesting areas of application for the media according to the invention.

The liquid-crystal materials must have good chemical and thermal stability and good stability to electric fields and electromagnetic radiation. Furthermore, the liquid-crystal materials should have low viscosity and produce short addressing times, low threshold voltages and high contrast in the cells.

They should furthermore have a suitable mesophase, for example a nematic or cholesteric mesophase for the above-mentioned cells, at the usual operating temperatures, i.e. in the broadest possible range above and below room temperature. Since liquid crystals are generally used as mixtures of a plurality of components, it is important that the components are readily miscible with one another. Further properties, such as the electrical conductivity, the dielectric anisotropy and the optical anisotropy, have to satisfy various requirements depending on the cell type and area of application. For example, materials for cells having a twisted nematic structure should have positive dielectric anisotropy and low electrical conductivity.

For example, for matrix liquid-crystal displays with integrated non-linear elements for switching individual pixels (MLC displays), media having large positive dielectric anisotropy, broad nematic phases, relatively low birefringence, very high specific resistance, good UV and temperature stability and low vapour pressure are desired.

Matrix liquid-crystal displays of this type are known. Examples of non-linear elements which can be used to individually switch the individual pixels are active elements (i.e. transistors). The term "active matrix" is then used, where a distinction can be made between two types:
1. MOS (metal oxide semiconductor) or other diodes on silicon wafers as substrate.
2. Thin-film transistors (TFTs) on a glass plate as substrate.

The use of single-crystal silicon as substrate material restricts the display size, since even modular assembly of various part-displays results in problems at the joints.

In the case of the more promising type 2, which is preferred, the electro-optical effect used is usually the TN effect. A distinction is made between two technologies: TFTs comprising compound semiconductors, such as, for example, CdSe, or TFTs based on polycrystalline or amorphous silicon. Intensive work is being carried out worldwide on the latter technology.

The TFT matrix is applied to the inside of one glass plate of the display, while the other glass plate carries the transparent counterelectrode on its inside. Compared with the size of the pixel electrode, the TFT is very small and has virtually no adverse effect on the image. This technology can also be extended to fully colour-capable displays, in which a mosaic of red, green and blue filters is arranged in such a way that a filter element is opposite each switchable pixel.

The TFT displays usually operate as TN cells with crossed polarisers in transmission and are backlit.

The term MLC displays here encompasses any matrix display with integrated non-linear elements, i.e., besides the active matrix, also displays with passive elements, such as varistors or diodes (MIM = metal-insulator-metal).

MLC displays of this type are particularly suitable for TV applications (for example pocket televisions) or for high-information displays for computer applications (laptops) and in automobile or aircraft construction. Besides problems regarding the angle dependence of the contrast and the response times, difficulties also arise in MLC displays due to insufficiently high specific resistance of the liquid-crystal mixtures [TOGASHI, S., SEKI-GUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, pp. 141 ff., Paris; STROMER, M., Proc. Eurodisplay 84, Sept. 1984: Design of Thin Film Transistors for Matrix Addressing of Television Liquid Crystal Displays, pp. 145 ff., Paris]. With decreasing resistance, the contrast of an MLC display deteriorates, and the problem of after-image elimination may occur. Since the specific resistance of the liquid-crystal mixture generally drops over the life of an MLC display owing to interaction with the interior surfaces of the display, a high (initial) resistance is very important in order to obtain acceptable lifetimes. In particular in the case of low-volt mixtures, it was hitherto impossible to achieve very high specific resistance values. It is furthermore important that the specific resistance exhibits the smallest possible increase with increasing temperature and after heating and/or UV exposure. The low-temperature properties of the mixtures from the prior art are also particularly disadvantageous. It is demanded that no crystallisation and/or smectic phases occur, even at low temperatures, and the temperature dependence of the viscosity is as low as possible. The MLC displays from the prior art thus do not satisfy today's requirements.

Besides liquid-crystal displays which use backlighting, i.e. are operated transmissively and if desired transflectively, reflective liquid-crystal displays are also particularly interesting. These reflective liquid-crystal displays use the ambient light for information display. They thus consume significantly less energy than backlit liquid-crystal displays having a corresponding size and resolution. Since the TN effect is characterised by very good contrast, reflective displays of this type can even be read well in bright ambient conditions. This is already known of simple reflective TN displays, as used, for example, in watches and pocket calculators. However, the principle can also be applied to high-quality, higher-resolution active matrix-addressed displays, such as, for example, TFT displays. Here, as already in the transmissive TFT-TN displays which are generally conventional, the use of liquid crystals of low birefringence (Δn) is necessary in order to achieve low optical retardation (d · Δn). This low optical retardation results in usually acceptably low viewing-angle dependence of the contrast (cf. DE 30 22 818). In reflective displays, the use of liquid crystals of low birefringence is even more important than in transmissive displays since the effective layer thickness through which the light passes is approximately twice as large in reflective displays as in transmissive displays having the same layer thickness.

For TV and video applications, displays having fast response times are required in order to be able to reproduce multimedia content, such as, for example, films and video games, in near-realistic quality. Such short response times can be achieved, in particular, if liquid-crystal media having low values for the viscosity, in particular the rotational viscosity γ₁, and having high optical anisotropy (Δn) are used.

US 2011/0127465 A1, US 2011/0180756 A1, WO 2010/089092 A1 and WO 209/156118 A1 disclose liquid crystalline media according to the state of the art, which are characterized by several drawbacks, amongst others, by relatively high rotational viscosities. Also EP 2 508 588 A2 and WO 2012/079676 A1 disclose similar liquid crystalline media.

Thus, there continues to be a great demand for MLC displays having very high specific resistance at the same time as a large working-temperature range, short response times, even at low temperatures, and a low threshold voltage which do not exhibit these disadvantages or only do so to a lesser extent.

In TN (Schadt-Helfrich) cells, media are desired which facilitate the following advantages in the cells:
- extended nematic phase range (in particular down to low temperatures)
- the ability to switch at extremely low temperatures (outdoor use, automobiles, avionics)
- increased resistance to UV radiation (longer service life)
- low threshold (driving) voltage
- fast response times
- sufficiently high birefringence
- sufficiently high resistivity to provide a sufficiently high Voltage Holding Ratio (HR)
- a sufficiently high pretilt in cells and displays, in particular to avoid defects in orientation.

The media available from the prior art do not enable these advantages to be achieved while simultaneously retaining the other parameters.

In the case of supertwisted (STN) cells, media are desired which facilitate greater multiplexability and/or lower threshold voltages and/or broader nematic phase ranges (in particular at low temperatures). To this end, a further widening of the available parameter latitude (clearing point, smectic-nematic transition or melting point, viscosity, dielectric parameters, elastic parameters) is urgently desired.

In particular in the case of LC displays for TV and video applications (for example LCD TVs, monitors, PDAs, notebooks, games consoles), a significant reduction in the response times is desired. A reduction in the layer thickness d ("cell gap") of the LC medium in the LC cell theoretically results in faster response times, but requires LC media having higher birefringence Δn in order to ensure an adequate optical retardation (d·Δn). However, the LC materials of high birefringence known from the prior art generally also have high rotational viscosity at the same time, which in turn has an adverse effect on the response times. There is therefore a demand for LC media which simultaneously have fast response times, low rotational viscosities and high birefringence.

The present invention thus has the object of providing media for MLC, TN, FFS, VA-IPS or IPS displays of this type, in particular for TN-TFT displays, which do not have the above-mentioned disadvantages, or only do so to a reduced extent, and preferably have a low threshold voltage, low rotational viscosity, fast response times and at the same time high specific resistance values, high thermal stability, high UV stability and in particular high values of the voltage holding ratio (VHR) on UV exposure and heating.

It has now been found that a small amount of a polymerisable compound added to a specific LC medium having a positive dielectrically anisotropy, applied into the LC cell and after polymerisation in situ, improves the response times and the electro-optical properties.

By addition of small amounts of one or more polymerisable compounds, also known as "reactive mesogens" (RMs), to the LC mixture for the TN mode LC media are obtained which show improved properties compared to LC mixtures without any RMs.

Displays containing the mixtures according to the present invention enable the setting of a pretilt angle and preferably at the same time have very high specific resistance values, low threshold voltages and short response times.

The present invention relates to a liquid-crystalline medium, characterised in that it contains
- a polymerisable component (A) containing one more polymerisable compound(s), preferably selected from the group of the mesogenic compounds
and
- a liquid crystalline component (B) containing one or more compounds of the general formula I 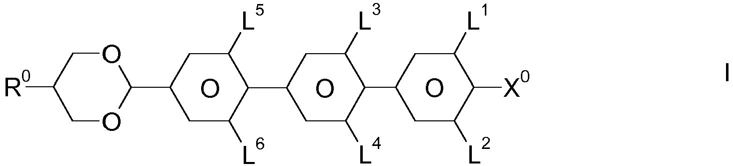 in which
- R⁰: denotes an alkyl or alkoxy radical having 1 to 15 C atoms, where, in addition, one or more CH₂ groups in these radicals may each be replaced, independently of one another, by -C≡C-, -CF₂O-, -CH=CH-, 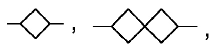 -O-, -CO-O- or -O-CO- in such a way that O atoms are not linked directly to one another, and where, in addition, one or more H atoms may be replaced by halogen,
- X⁰: denotes F, Cl, CN, SF₅, SCN, NCS, a halogenated alkyl radical, a halogenated alkenyl radical, a halogenated alkoxy radical or a halogenated alkenyloxy radical having up to 6 C atoms, and
- L¹⁻⁶: each, independently of one another, denote H or F and
additionally one or more compounds selected from the group of formulae X, XI and XII 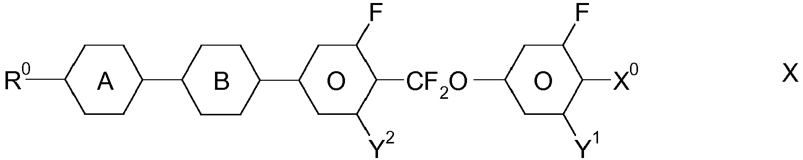 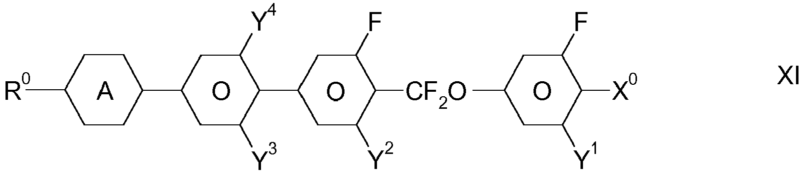 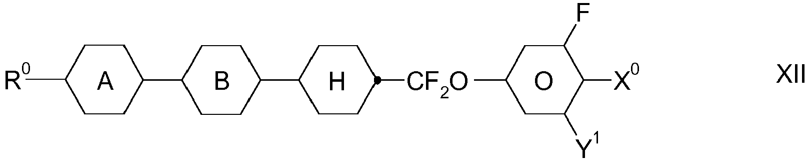 in which
Y¹⁻⁴, independently of one another, denote H or F, and
R⁰ and X⁰ have the meaning indicated in formula I, and 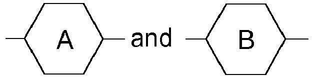 each, independently of one another, denote 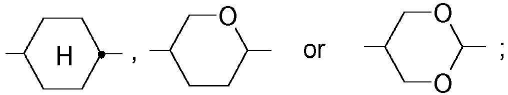 with the proviso that the media having the following five compositions

| Composition Abbreviation | c/% | Physical properties | |
|---|---|---|---|
| CC-3-V | 37.0% | Clearing point [°C]: | 80.0 |
| CCP-V-1 | 5.0% | Δn [589 nm, 20°C]: | 0.1287 |
| PGU-2-F | 3.0% | Δε [1 kHz, 20°C]: | 17.3 |
| PGU-3-F | 8.0% | γ₁ [mPa·s, 20°C]: | 99 |
| BCH-3F.F.F | 8.0% | LTS [bulk, -25°C]: | > 1000 h |
| APUQU-2-F | 7.0% | V₁₀ [V]: | 1.05 |
| APUQU-3-F | 8.0% | | |
| PGUQU-3-F | 4.0% | | |
| PGUQU-4-F | 6.0% | | |
| PGUQU-5-F | 6.0% | | |
| DPGU-4-F | 8.0% | | |

| Composition Abbreviation | c/% | Physical properties | |
|---|---|---|---|
| CC-3-V | 22.0% | Clearing point [°C]: | 79.5 |
| CCP-1F.F.F | 3.0% | Δn [589 nm, 20°C]: | 0.1294 |
| CCP-2F.F.F | 9.0% | Δε [1 kHz, 20°C]: | 20.2 |
| CCP-3F.F.F | 9.0% | γ₁ [mPa·s, 20°C]: | 129 |
| CPU-3-OXF | 12.0% | LTS [bulk, -25°C]: | > 1000 h |
| PGU-2-F | 3.0% | V₁₀ [V]: | 1.05 |
| PGU-3-F | 6.0% | | |
| APUQU-2-F | 7.0% | | |
| APUQU-3-F | 7.0% | | |
| PGUQU-3-F | 4.0% | | |
| PGUQU-4-F | 5.0% | | |
| PGUQU-5-F | 6.0% | | |
| DPGU-4-F | 7.0% | | |

| Composition Abbreviation | c/% | Physical properties | |
|---|---|---|---|
| CC-3-V | 33.0% | Clearing point [°C]: | 93.5 |
| CC-3-V1 | 12.0% | Δn [589 nm, 20°C]: | 0.1086 |
| CCP-V2-1 | 6.0% | Δε [1 kHz, 20°C]: | 13.7 |
| CCP-30CF3 | 6.0% | γ₁ [mPa·s, 20°C]: | 92 |
| CCQU-3-F | 4.0% | V₀ [V]: | 1.09 |
| APUQU-2-F | 10.0% | | |
| APUQU-3-F | 10.0% | | |
| PGUQU-3-F | 5.0% | | |
| PGUQU-4-F | 8.0% | | |
| DPGU-4-F | 6.0% | | |

| Composition Abbreviation | c/% | Physical properties | |
|---|---|---|---|
| CC-3-V | 31.0 | Clearing point [°C]: | 96.0 |
| CC-3-V1 | 12.0 | Δn [589 nm, 20°C]: | 0.1087 |
| CCP-V2-1 | 5.0 | Δε [1 kHz, 20°C]: | 15.2 |
| CCGU-3-F | 3.0 | γ₁ [mPa·s, 20°C]: | 106 |
| CCQU-3-F | 11.0 | V₀ [V]: | 1.03 |
| APUQU-2-F | 10.0 | | |
| APUQU-3-F | 10.0 | | |
| PGUQU-3-F | 5.0 | | |
| PGUQU-4-F | 6.0 | | |
| DPGU-4-F | 7.0 | | |

| Composition Abbreviation | c/% | Physical properties | | | |
|---|---|---|---|---|---|
| APUQU-3-F | 5.5 | T(N,I) | = | 90.3 | °C |
| CCQU-5-F | | nₑ(20°C, 589.3 nm) | = | 1.5919 | |
| PUQU-3-F | 14.0 | Δn (20°C, 589.3 nm) | = | 0.1062 | |
| CCP-3-OT | 2.5 | ε∥ (20°C, 1 kHz) | = | 10.5 | |
| PGU-2-F | 3.0 | Δε (20°C, 1 kHz) | = | 7.4 | |
| CPGU-3-OT | 4.0 | γ₁ (20°C) | = | 73 | mPa·s |
| DPGU-4-F | 3.0 | k₁ (20°C) | = | 14.3 | pN |
| CC-3-V | 33.5 | k₃/k₁(20°C) | = | 1.15 | |
| CC-3-V1 | 10.0 | V₁₀ (20°C) | = | 1.70 | V |
| CCP-V-1 | 13.0 | V₉₀ (20°C) | = | 2.57 | V |
| CCP-V2-1 | 6.0 | | | | |
| PGP-2-2V | 2.0 | | | | |
| CPPC-3-3 | 9.5 | | | | |

are excluded.

The invention furthermore relates to the use of a medium according to the invention for electro-optical purposes.

The invention also relates to an electro-optical liquid crystal display containing a liquid crystalline medium according to the invention which is characterised in that it is a TN, STN or TN-TFT display.

Surprisingly, it has been found that polymer-stabilized (PS) LC media comprising compounds of the formula I and/or formula IA have a very good ratio of rotational viscosity γ₁ and clearing point, a high value for the optical anisotropy Δε and high birefringence Δn, as well as fast response times, a low threshold voltage, a high clearing point, high positive dielectric anisotropy and a broad nematic phase range. Furthermore, the compounds of the formula I are very readily soluble in liquid-crystalline media.

Additionally the media may compriuse one od more compounds of formula IA 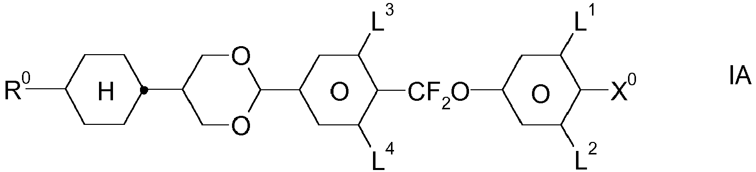 in which the parameters have the respective meanings given under formula I above.

Suitable polymerisable compounds, also called "reactive mesogens (RMs)", of the component (A) are known from the prior art. Many of these compounds are commercially available.

Suitable and preferred polymerisable compounds (monomers) for example, are selected from the following formulae, 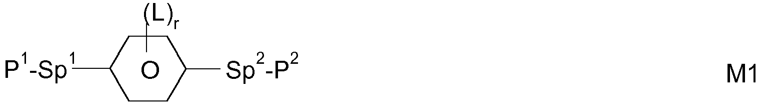 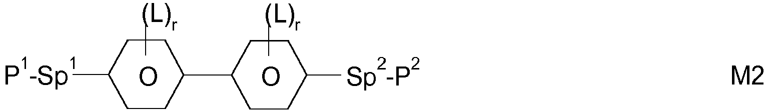 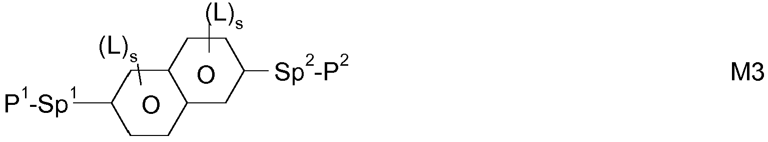 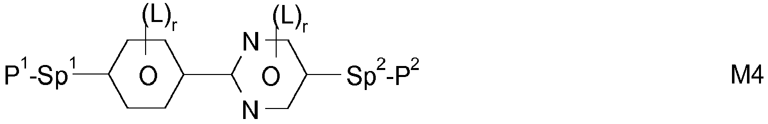 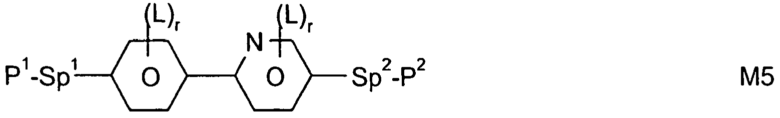 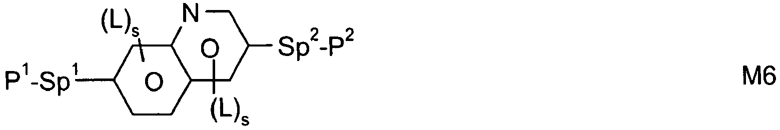 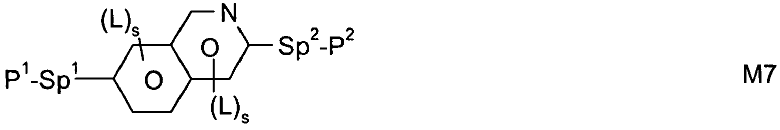 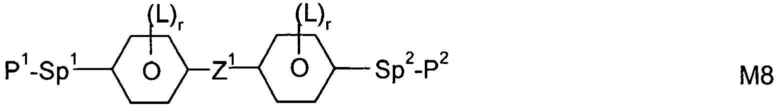 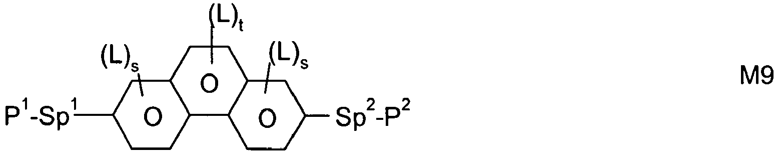 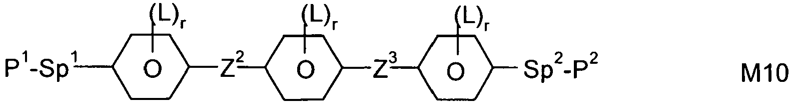 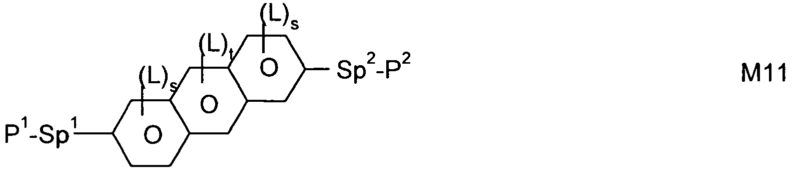 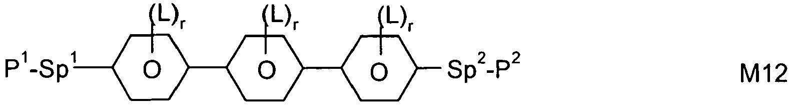 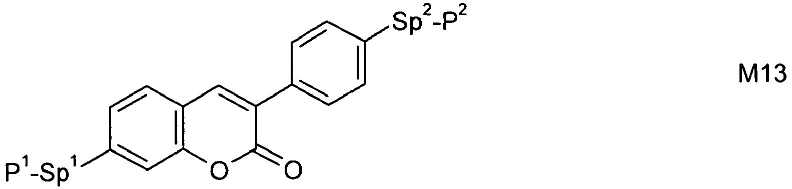 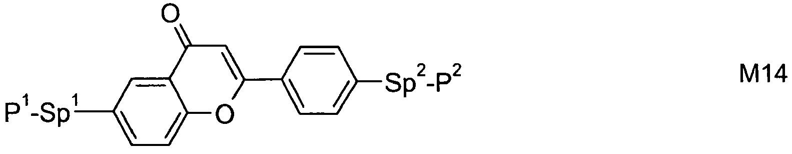 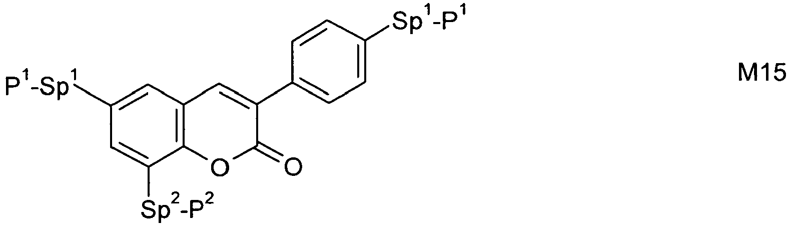 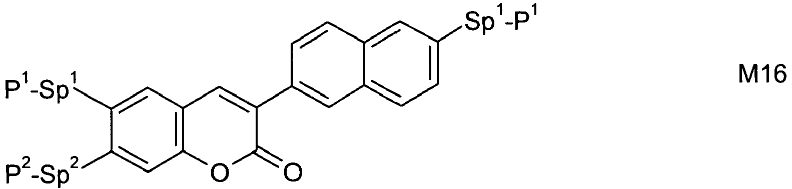 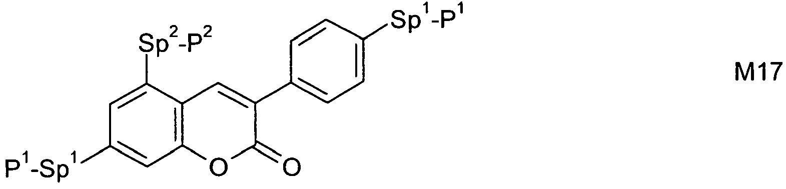 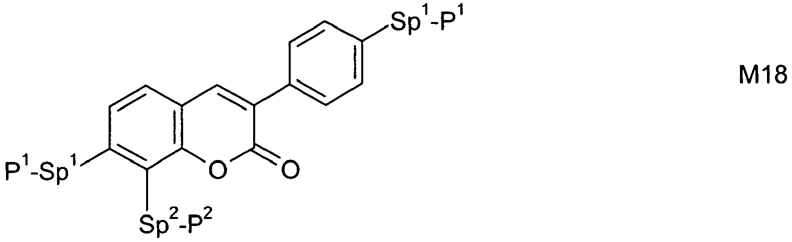 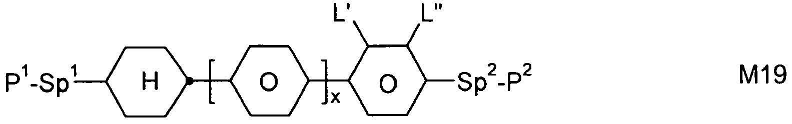 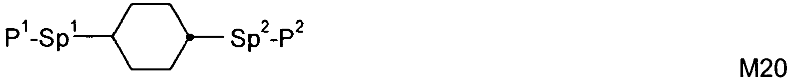 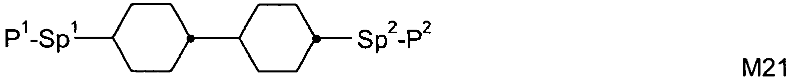 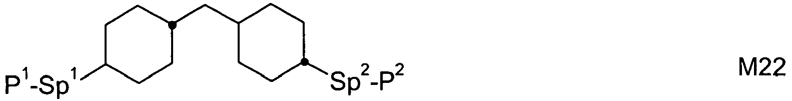 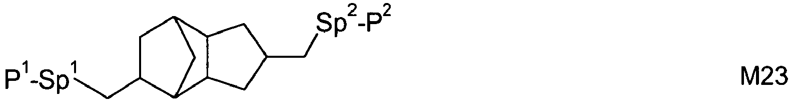 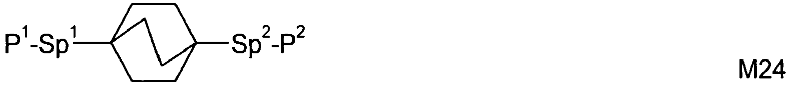 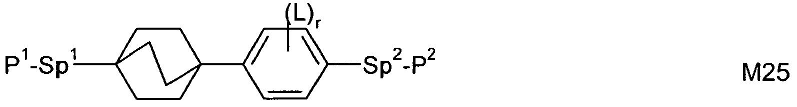 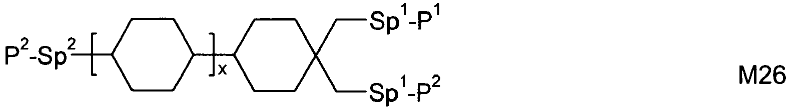 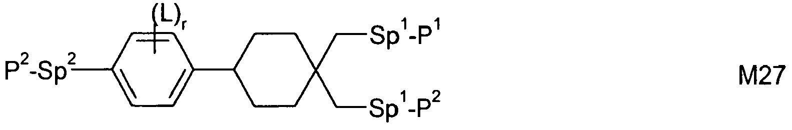 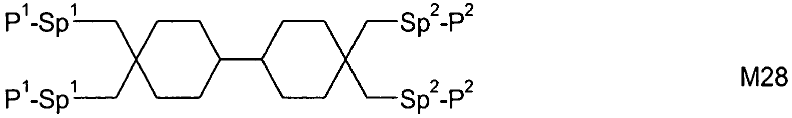 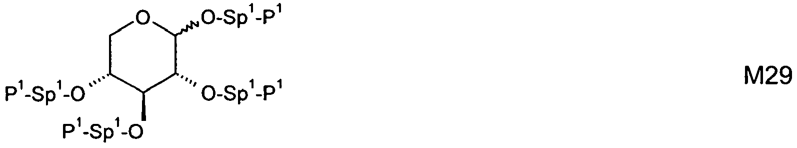 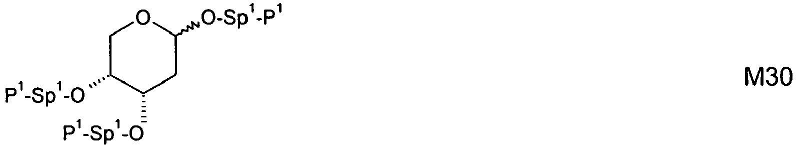 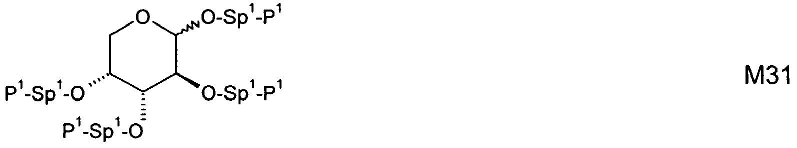 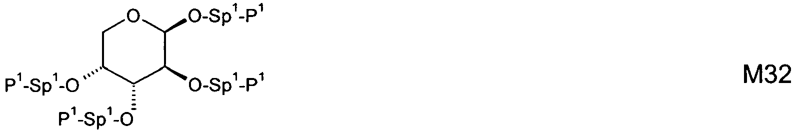 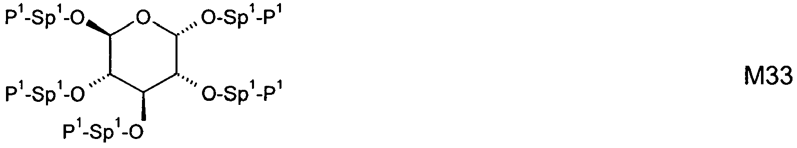 in which the individual radicals have the following meanings:
- P¹ and P²: each, independently of one another, denote a polymerisable group, preferably having one of the meanings indicated above and below for P, particularly preferably an acrylate, methacrylate, fluoroacrylate, oxetane, vinyl, vinyloxy or epoxide group,
- Sp¹ and Sp²: each, independently of one another, denote a single bond or a spacer group, preferably having one of the meanings indicated above and below for Sp, and particularly preferably denote -(CH₂)ₚ₁-, -(CH₂)ₚ₁-O-, -(CH₂)ₚ₁-CO-O- or -(CH₂)ₚ₁-O-CO-O-, in which p1 is an integer from 1 to 12, and where the linking to the adjacent ring in the last-mentioned groups takes place via the O atom,
where, in addition, one or more of the radicals P¹-Sp¹- and P²-Sp²- may denote R^{aa}, with the proviso that at least one of the radicals P¹-Sp¹- and P²-Sp²- present does not denote R^{aa},
- R^{aa}: denotes H, F, Cl, CN or straight-chain or branched alkyl having 1 to 25 C atoms, in which, in addition, one or more non-adjacent CH₂ groups may each be replaced, independently of one another, by C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),
- R⁰, R⁰⁰: each, independently of one another and identically or differently on each occurrence, denote H or alkyl having 1 to 12 C atoms,
- R^{y} and R^{z}: each, independently of one another, denote H, F, CH₃ or CF₃,
- Z¹: denotes -O-, -CO-, -C(R^{y}R^{z})- or -CF₂CF₂-,
- Z² and Z³: each, independently of one another, denote -CO-O-, -O-CO-, -CH₂O-, -OCH₂-, -CF₂O-, -OCF₂- or -(CH₂)ₙ-, where n is 2, 3 or 4,
- L: on each occurrence, identically or differently, denotes F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms, preferably F,
- L' and L": each, independently of one another, denote H, F or Cl,
- r: denotes 0, 1, 2, 3 or 4,
- s: denotes 0, 1, 2 or 3,
- t: denotes 0, 1 or 2,
- x: denotes 0 or 1.

In the compounds of formulae M1 to M33 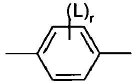 is preferably 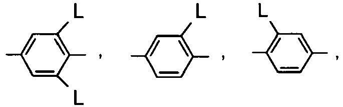 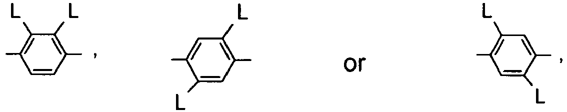 wherein L on each occurrence, identically or differently, has one of the meanings given above or below, and is preferably F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ or P-Sp-, very preferably F, Cl, CN, CH₃, C₂H₅, OCH₃, COCH₃, OCF₃ or P-Sp-, more preferably F, Cl, CH₃, OCH₃, COCH₃ or OCF₃ , especially F or CH₃.

Preferred spacer groups Sp are selected from the formula Sp'-X', so that the radical "P-Sp-" conforms to the formula "P-Sp'-X'-", where
- Sp': denotes alkylene having 1 to 20, preferably 1 to 12 C atoms, which is optionally mono- or polysubstituted by F, Cl, Br, I or CN and in which, in addition, one or more non-adjacent CH₂ groups may each be replaced, independently of one another, by -O-, -S-, -NH-, -NR⁰-, -SiR⁰R⁰⁰-, -CO-, -COO-, -OCO-, -OCO-O-, -S-CO-, -CO-S-, -NR⁰-CO-O-, -O-CO-NR⁰-, -NR⁰-CO-NR⁰-, -CH=CH- or -C≡C- in such a way that O and/or S atoms are not linked directly to one another,
- X': denotes -O-, -S-, -CO-, -COO-, -OCO-, -O-COO-, -CO-NR⁰-, -NR⁰-CO-, -NR⁰-CO-NR⁰-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-COO-, -OCO-CH=CH- or a single bond,
- R⁰ and R⁰⁰: each, independently of one another, denote H or alkyl having 1 to 12 C atoms, and
- Y² and Y³: each, independently of one another, denote H, F, Cl or CN.

X' is preferably -O-, -S-, -CO-, -COO-, -OCO-, -O-COO-, -CO-NR⁰-, -NR⁰-CO-, -NR⁰-CO-NR⁰- or a single bond.

Typical spacer groups Sp' are, for example, -(CH₂)ₚ₁-, -(CH₂CH₂O)_{q1}-CH₂CH₂-, -CH₂CH₂-S-CH₂CH₂-, -CH₂CH₂-NH-CH₂CH₂- or -(SiR⁰R⁰⁰-O)ₚ₁-, in which p1 is an integer from 1 to 12, q1 is an integer from 1 to 3, and R⁰ and R⁰⁰ have the above-mentioned meanings.

Particularly preferred groups -X'-Sp'- are -(CH₂)ₚ₁-, -O-(CH₂)ₚ₁-, -OCO-(CH₂)ₚ₁-, -OCOO-(CH₂)ₚ₁-.

Particularly preferred groups Sp' are, for example, in each case straight-chain ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

Above and below, the following meanings apply:
The term "mesogenic group" as used herein is known to the person skilled in the art and is described in the literature, and will be understood to mean a group which, due to the anisotropy of its attracting and repelling interactions, essentially contributes to causing a liquid crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerisation. Typical mesogenic groups are, for example, rigid rod- or disc-shaped units. An overview of the terms and definitions used in connection with mesogenic or LC compounds is given in Pure Appl. Chem. 73(5), 888 (2001) and C. Tschierske, G. Pelzl, S. Diele, Angew. Chem. 2004, 116, 6340-6368.

The term "spacer group", or "Sp", as used herein, is known to the person skilled in the art and is described in the literature, see, for example, Pure Appl. Chem. 73(5), 888 (2001) and C. Tschierske, G. Pelzl, S. Diele, Angew. Chem. 2004, 116, 6340-6368. Unless indicated otherwise, the terms "spacer group" or "spacer" as used herein will be understood to mean a flexible group which connects the mesogenic group and the polymerisable group(s) to one another in a polymerisable mesogenic compound.

As used herein, the terms "reactive mesogen" and "RM" will be understood to mean a compound containing one mesogenic group and one or more functional groups which are suitable for polymerisation (also referred to as polymerisable group or group P).

As used herein, the terms "low-molecular-weight compound" and "unpolymerisable compound" will be understood to mean compounds, usually monomeric compounds, which contain no functional group which is suitable for polymerisation under the usual conditions known to the person skilled in the art, in particular under the conditions used for the polymerisation of RMs.

As used herein, the term "organic group" will be understood to mean a carbon or hydrocarbon group.

As used herein a "carbon group" will be understood to mean a mono- or polyvalent organic group containing at least one carbon atom, where this either contains no further atoms (such as, for example, -C≡C-) or optionally contains one or more further atoms, such as, for example, N, O, S, P, Si, Se, As, Te or Ge (for example carbonyl, etc.). The term "hydrocarbon group" denotes a carbon group which additionally contains one or more H atoms and optionally one or more heteroatoms, such as, for example, N, O, S, P, Si, Se, As, Te or Ge.

As used herein, the term "halogen" will be understood to mean F, Cl, Br or I.

A carbon or hydrocarbon group can be a saturated or unsaturated group. Unsaturated groups are, for example, aryl, alkenyl or alkynyl groups. A carbon or hydrocarbon radical having more than 3 C atoms can be straight-chain, branched and/or cyclic and may also contain spiro links or condensed rings.

As used herein, the terms "alkyl", "aryl", "heteroaryl", will be understood to encompass polyvalent groups, like for example alkylene, arylene, heteroarylene.

As used herein, the term "aryl" will be understood to mean an aromatic carbon group or a group derived therefrom, and the term "heteroaryl" will be understood to mean an aryl as defined above, which contains one or more heteroatoms.

Preferred carbon and hydrocarbon groups are optionally substituted alkyl, alkenyl, alkynyl, alkoxy, alkylcarbonyl, alkoxycarbonyl, alkylcarbonyloxy and alkoxycarbonyloxy having 1 to 40, preferably 1 to 25, particularly preferably 1 to 18 C atoms, optionally substituted aryl or aryloxy having 6 to 40, preferably 6 to 25 C atoms, or optionally substituted alkylaryl, arylalkyl, alkylaryloxy, arylalkyloxy, arylcarbonyl, aryloxycarbonyl, arylcarbonyloxy and aryloxycarbonyloxy having 6 to 40, preferably 6 to 25 C atoms.

Further preferred carbon and hydrocarbon groups are C₁-C₄₀ alkyl, C₂-C₄₀ alkenyl, C₂-C₄₀ alkynyl, C₃-C₄₀ allyl, C₄-C₄₀ alkyldienyl, C₄-C₄₀ polyenyl, C₆-C₄₀ aryl, C₆-C₄₀ alkylaryl, C₆-C₄₀ arylalkyl, C₆-C₄₀ alkylaryloxy, C₆-C₄₀ arylalkyloxy, C₂-C₄₀ heteroaryl, C₄-C₄₀ cycloalkyl, C₄-C₄₀ cycloalkenyl, etc. Particular preference is given to C₁-C₂₂ alkyl, C₂-C₂₂ alkenyl, C₂-C₂₂ alkynyl, C₃-C₂₂ allyl, C₄-C₂₂ alkyldienyl, C₆-C₁₂ aryl, C₆-C₂₀ arylalkyl and C₂-C₂₀ heteroaryl.

Further preferred carbon and hydrocarbon groups are straight-chain, branched or cyclic alkyl radicals having 1 to 40, preferably 1 to 25 C atoms, which are unsubstituted or mono- or polysubstituted by F, Cl, Br, I or CN and in which one or more non-adjacent CH₂ groups may each be replaced, independently of one another, by -C(R^{x})=C(R^{x})-, -C≡C-, -N(R^{x})-, -O-, -S-, -CO-, -CO-O-, -O-CO-, -O-CO-O- in such a way that O and/or S atoms are not linked directly to one another.

R^{x} preferably denotes H, halogen, a straight-chain, branched or cyclic alkyl chain having 1 to 25 C atoms, in which, in addition, one or more non-adjacent C atoms may be replaced by -O-, -S-, -CO-, -CO-O-, -O-CO-, -O-CO-O-, and in which one or more H atoms may be replaced by fluorine, an optionally substituted aryl or aryloxy group having 6 to 40 C atoms or an optionally substituted heteroaryl or heteroaryloxy group having 5 to 40 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl, etc.

Preferred alkynyl groups are, for example, ethynyl, propynyl, butynyl, pentynyl, hexynyl, octynyl, etc.

Preferred alkoxy groups are, for example, methoxy, ethoxy, 2-methoxy-ethoxy, n-propoxy, i-propoxy, n-butoxy, i-butoxy, s-butoxy, t-butoxy, 2-methylbutoxy, n-pentoxy, n-hexoxy, n-heptyloxy, n-octyloxy, n-nonyloxy, n-decyloxy, n-undecyloxy, n-dodecyloxy, etc.

Preferred amino groups are, for example, dimethylamino, methylamino, methylphenylamino, phenylamino, etc.

Aryl and heteroaryl groups can be monocyclic or polycyclic, i.e. they can have one ring (such as, for example, phenyl) or two or more rings, which may also be fused (such as, for example, naphthyl) or covalently linked (such as, for example, biphenyl), or contain a combination of fused and linked rings. Heteroaryl groups contain one or more heteroatoms, preferably selected from O, N, S and Se.

Particular preference is given to mono-, bi- or tricyclic aryl groups having 6 to 25 C atoms and mono-, bi- or tricyclic heteroaryl groups having 2 to 25 C atoms, which optionally contain fused rings and are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another.

Preferred aryl groups are, for example, phenyl, biphenyl, terphenyl, [1,1':3',1"] terphenyl-2'-yl, naphthyl, anthracene, binaphthyl, phenanthrene, pyrene, dihydropyrene, chrysene, perylene, tetracene, pentacene, benzo-pyrene, fluorene, indene, indenofluorene, spirobifluorene, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphth-imidazole, phenanthrimidazole, pyridimidazole, pyrazinimidazole, quinoxa-linimidazole, benzoxazole, naphthoxazole, anthroxazole, phenanthroxa-zole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene, benzothiadiazothiophene, or combinations of these groups. The heteroaryl groups may also be substituted by alkyl, alkoxy, thioalkyl, fluorine, fluoroalkyl or further aryl or heteroaryl groups.

The (non-aromatic) alicyclic and heterocyclic groups encompass both saturated rings, i.e. those which contain exclusively single bonds, and also partially unsaturated rings, i.e. those which may also contain multiple bonds. Heterocyclic rings contain one or more heteroatoms, preferably selected from Si, O, N, S and Se.

The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 3 to 25 C atoms, which optionally contain fused rings and are optionally substituted. Preference is furthermore given to 5-, 6-, 7- or 8-membered carbocyclic groups in which, in addition, one or more C atoms may be replaced by Si and/or one or more CH groups may be replaced by N and/or one or more non-adjacent CH₂ groups may be replaced by -O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]-pentane-1,3-diyl, bicyclo[2.2.2]octane-1,4-diyl, spiro[3.3]heptane-2,6-diyl, octahydro-4,7-methanoindane-2,5-diyl.

The aryl, heteroaryl, carbon and hydrocarbon radicals optionally have one or more substituents, which are preferably selected from the group comprising silyl, sulfo, sulfonyl, formyl, amine, imine, nitrile, mercapto, nitro, halogen, C₁₋₁₂ alkyl, C₆₋₁₂ aryl, C₁₋₁₂-alkoxy, hydroxyl, or combinations of these groups.

Preferred substituents are, for example, solubility-promoting groups, such as alkyl or alkoxy, electron-withdrawing groups, such as fluorine, nitro or nitrile, or substituents for increasing the glass transition temperature (Tg) in the polymer, in particular bulky groups, such as, for example, t-butyl or optionally substituted aryl groups.

Preferred substituents, also referred to as "L" below, are, for example, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, in which R^{x} has the above-mentioned meaning, and Y¹ denotes halogen, optionally substituted silyl or aryl having 6 to 40, preferably 6 to 20 C atoms, and straight-chain or branched alkyl, alkoxy, alkylcarbonyl, alkoxycarbonyl, alkylcarbonyloxy or alkoxycarbonyloxy having 1 to 25 C atoms, in which one or more H atoms may optionally be replaced by F or Cl.

"Substituted silyl or aryl" preferably means substituted by halogen, -CN, R⁰, -OR⁰, -CO-R⁰, -CO-O-R⁰, -O-CO-R⁰ or -O-CO-O-R⁰, in which R⁰ has the above-mentioned meaning.

Particularly preferred substituents L are, for example, F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, furthermore phenyl. 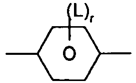 is preferably 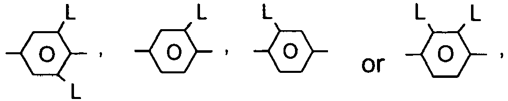 in which L has one of the above-mentioned meanings.

The polymerisable group P is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or C≡C triple bond, and groups which are suitable for polymerisation with ring opening, such as, for example, oxetane or epoxide groups.

Preferred groups P are selected from CH₂=CW¹-COO-, CH₂=CW¹-CO-, 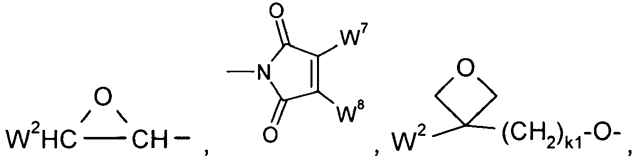 CH₂=CW²-(O)ₖ₃-, CW¹=CH-CO-(O)ₖ₃-, CW¹=CH-CO-NH-, CH₂=CW¹-CO-NH-, CH₃-CH=CHO-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined above, and k₁, k₂ and k₃ each, independently of one another, denote 0 or 1, k₃ preferably denotes 1.

Particularly preferred groups P are CH₂=CH-COO-, CH₂=C(CH₃)-COO-, CH₂=CH-, CH₂=CH-O-, (CH₂=CH)₂CH-OCO-, CH₂=CH₂CH-O-, 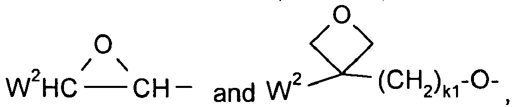 in particular vinyloxy, acrylate, methacrylate, fluoroacrylate, chloroacrylate, oxetane and epoxide.

For the production of displays like PSA displays, the LC medium is filled into a display cell comprising two plane parallel, opposing substrates, and two electrodes, where at least one substrate is transparent to light and at least one substrate has one or two electrodes. The polymerisable compounds of component A are polymerised or crosslinked (if one compound contains two or more polymerisable groups) by in-situ polymerisation in the LC medium between the substrates of the LC display cell, preferably while a voltage is applied to the electrodes. The polymerisation can be carried out in one step. It is also possible firstly to carry out the polymerisation, optionally with application of a voltage in a first step in order to produce a pretilt angle, and subsequently, in a second polymerisation step without an applied voltage, to polymerise or crosslink the compounds which have not reacted in the first step ("end curing").

Suitable and preferred polymerisation methods are, for example, thermal or photopolymerisation, preferably photopolymerisation, in particular UV photopolymerisation. One or more initiators can optionally also be added here. Suitable conditions for the polymerisation and suitable types and amounts of initiators are known to the person skilled in the art and are described in the literature. Suitable for free-radical polymerisation are, for example, the commercially available photoinitiators Irgacure651®, Irgacure184®, Irgacure907®, Irgacure369® or Darocure1173® (BASF SE). If an initiator is employed, its proportion is preferably 0.001 to 5% by weight, particularly preferably 0.001 to 1 % by weight.

The polymerisable compounds according to the invention are also suitable for polymerisation without an initiator, which is accompanied by considerable advantages, such, for example, lower material costs and in particular less contamination of the LC medium by possible residual amounts of the initiator or degradation products thereof. The polymerisation can thus also be carried out without the addition of an initiator. In a preferred embodiment, the LC medium thus comprises no polymerisation initiator.

The polymerisable component (A) or the LC medium may also comprise one or more stabilisers in order to prevent undesired spontaneous polymerisation of the RMs, for example during storage or transport. Suitable types and amounts of stabilisers are known to the person skilled in the art and are described in the literature. Particularly suitable are, for example, the commercially available stabilisers from the Irganox® series (Ciba AG), such as, for example, Irganox® 1076. If stabilisers are employed, their proportion, based on the total amount of RMs or the polymerisable component A, is preferably 10-500,000 ppm, particularly preferably 50-50,000 ppm.

Particular preference is given to LC media comprising 1, 2 or 3 polymerisable compounds.

Preference is furthermore given to LC media in which component (B) is an LC compound or an LC mixture which has a nematic liquid crystal phase.

Preference is furthermore given to achiral polymerisable compounds according to the invention and LC media in which the compounds of component (A) and/or (B) are selected exclusively from the group consisting of achiral compounds.

Preference is furthermore given to LC media in which the polymerisable component or component (A) comprises one or more polymerisable compounds containing two or more, preferably two or three, polymerisable groups (di- or multireactive).

Preference is furthermore given displays, for example PSA displays, and LC media in which the polymerisable component or component (A) comprises exclusively polymerisable compounds containing two or three polymerisable groups.

The LC media according to the invention for use in displays preferably contain from > 0 to < 5% by weight, particularly preferably from > 0 to < 1 % by weight, very particularly preferably from 0.01 to 0.5 % by weight, of polymerisable compounds of component (A), in particular polymerisable compounds seleted from RMs. In a preferred embodiment the component (A) contains at least one compound selected from the group of the compounds of the formula M1 to M33, in particular the compounds of the formula M2, M3, M9, M10, M12 and M15. Especially preferred polymerisable compounds are given in Table E:
The proportion of the liquid crystalline component or component B in the LC media according to the invention is preferably from 95 to < 100%, particularly preferably from 99 to <100%.

The mixture according to the instant invention consists of a component (A) and component (B) and optionally one or more additives and/or stabilizers.

The polymerisable compounds of component (A) can be polymerised individually, but it is also possible to polymerise mixtures which comprise two or more polymerisable compounds, which are preferably selected from RMs. In the latter case, copolymers are formed.

The polymerisable compounds are prepared analogously to processes known to the person skilled in the art and described in standard works of organic chemistry, such as, for example, in Houben-Weyl, Methoden der organischen Chemie [Methods of Organic Chemistry], Thieme-Verlag, Stuttgart. The synthesis of polymerisable acrylates and methacrylates of the formula I and/or formula IA can be carried out analogously to the methods described in US 5,723,066. Further, particularly preferred methods are given in the examples.

In the simplest case, the synthesis is carried out by esterification or etherification of commercially available diols of the general formula HO-A¹-Z¹-(A²-Z²)ₘ₁-A³-OH, in which A¹⁻³, Z^{1,2} and m1 have the above-mentioned meanings, such as, for example, 1-(3-hydroxyphenyl)phenyl-3-ol, using corresponding acids, acid derivatives, or halogenated compounds containing a group P, such as, for example, (meth)acryloyl chloride or (meth)-acrylic acid, in the presence of a dehydrating reagent, such as, for example, DCC (dicyclohexylcarbodiimide).

The polymerisable compounds are polymerised or cross-linked (if a compound contains two or more polymerisable groups) by in-situ polymerisation in the LC medium between the substrates of the LC display with application of a voltage. Suitable and preferred polymerisation methods are, for example, thermal or photopolymerisation, preferably photopolymerisation, in particular UV photopolymerisation. If necessary, one or more initiators may also be added here. Suitable conditions for the polymerisation, and suitable types and amounts of initiators, are known to the person skilled in the art and are described in the literature. Suitable for free-radical polymerisation are, for example, the commercially available photoinitiators Irgacure651®, Irgacure184®, Irgacure907®, Irgacure369® or Darocure1173® (BASF SE).

If an initiator is employed, its proportion in the LC mixture as a whole is preferably 0.01 to 10 % by weight, particularly preferably 0.001 to 5 % and especially preferred 0.01 to 2 % by weight. However, the polymerisation can also take place without addition of an initiator. In a further preferred embodiment, the LC medium does not comprise a polymerisation initiator.

The polymerisable component (A) and/or the LC medium (= component (B)) may also comprise one or more stabilisers in order to prevent undesired spontaneous polymerisation of the RMs, for example during storage or transport. Suitable types and amounts of stabilisers are known to the person skilled in the art and are described in the literature. Particularly suitable are, for example, the commercially available stabilisers of the Irganox® series (BASF SE), for example Irganox® 1076. If stabilisers are employed, their proportion, based on the total amount of RMs or polymerisable component (A), is preferably 10 - 5000 ppm, particularly preferably 50 - 500 ppm.

The polymerisable compounds according to the invention are particularly suitable for polymerisation without initiator, which is associated with considerable advantages, such as, for example, lower material costs and in particular less contamination of the LC medium by possible residual amounts of the initiator or degradation products thereof.

The LC medium according to the invention preferably contains 0.001 - 5 % by weight, particularly preferably < 2 % by weight, very particularly preferably < 1 % by weight and very most preferably < 0.5 % by weight, of polymerisable compounds, based on the LC component (B).

The liquid-crystalline component (B) contains at least one compound of the formula I and/or IA. The compounds are known, for example from WO 2009/103495.

The compounds of the formula I and IA have a broad range of applications. Depending on the choice of substituents, they can serve as base materials of which liquid-crystalline media are predominantly composed; however, liquid-crystalline base materials from other classes of compound can also be added to the compounds of the formula I and/or formula IA in order, for example, to modify the dielectric and/or optical anisotropy of a dielectric of this type and/or to optimise its threshold voltage and/or its viscosity.

Preferred compounds of the formula I and IA are mentioned below, 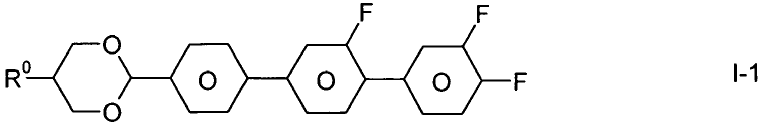 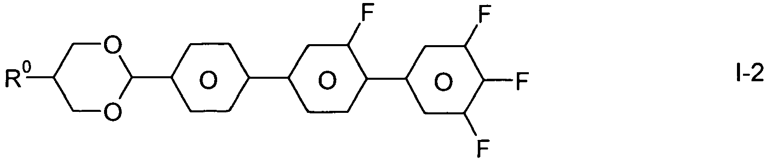 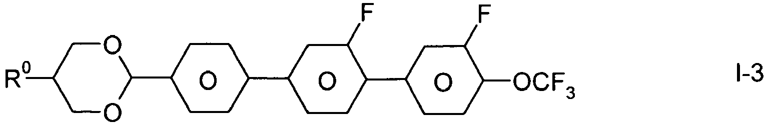 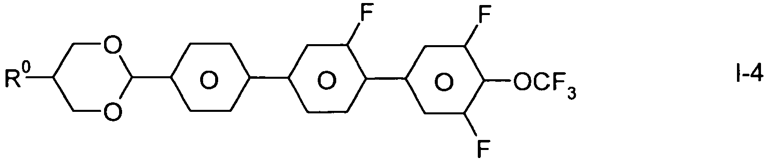 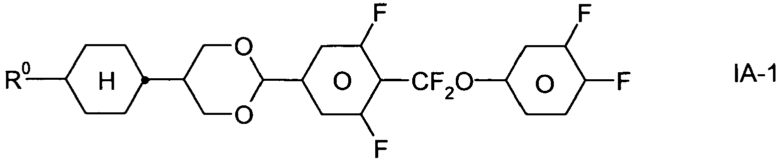 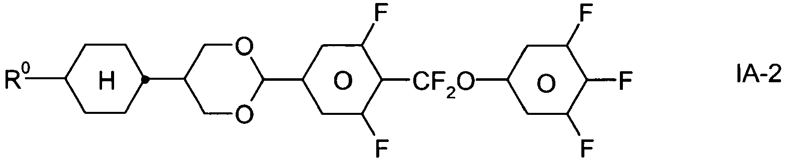 in which R⁰ has the meanings indicated above and preferably denotes straight-chain alkyl. Particular preference is given to the compounds of the formulae 1-2, 1-4 and IA-2, preferably in which R⁰ denotes C₂H₅, n-C₃H₇, n-C4H9 or n-C₅H₁₁.

Preferred mixtures contain at least one compound of the formula I
or
at least one compound of the formula I and at least one compound of the formula IA.

In the pure state, the compounds of the formula I and IA are colourless and form liquid-crystalline mesophases in a temperature range which is favourably located for electro-optical use. They are stable chemically, thermally and to light.

Particular preference is given to the compounds of the formula I-2 and IA-2.

The compounds of the formula I and IA are prepared by methods known per se, as described in the literature (for example in the standard works, such as Houben-Weyl, Methoden der organischen Chemie [Methods of Organic Chemistry], Georg-Thieme-Verlag, Stuttgart), to be precise under reaction conditions which are known and suitable for the said reactions. Use can also be made here of variants known per se, which are not mentioned here in greater detail.

If R⁰ in the formulae above and below denotes an alkyl radical and/or an alkoxy radical, this may be straight-chain or branched. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy.

Oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxadecyl.

If R⁰ denotes an alkyl radical in which one CH₂ group has been replaced by -CH=CH-, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl. These radicals may also be mono- or polyhalogenated.

If R⁰ denotes an alkyl or alkenyl radical which is at least monosubstituted by halogen, this radical is preferably straight-chain, and halogen is preferably F or Cl. In the case of polysubstitution, halogen is preferably F. The resultant radicals also include perfluorinated radicals. In the case of monosubstitution, the fluorine or chlorine substituent may be in any desired position, but is preferably in the ω-position.

In the formulae above and below, X⁰ is preferably F, Cl or a mono- or polyfluorinated alkyl or alkoxy radical having 1, 2 or 3 C atoms or a mono- or polyfluorinated alkenyl radical having 2 or 3 C atoms. X⁰ is particularly preferably F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CH₂F, OCFHCF₂CF₃, OCFHCF₂CHF₂, OCH=CF₂, OCF=CF₂, OCF₂CHFCF₃, OCF₂CF₂CF₃, OCF₂CF₂CClF₂, OCClFCF₂CF₃, CF=CF₂, CF=CHF or CH=CF₂, very particularly preferably F or OCF₃.

Particular preference is given to compounds of the formula I and IA in which X⁰ denotes F or OCF₃. Further preferred compounds of the formula I and/or formula IA are those in which R⁰ denotes straight-chain alkyl or alkoxy having 1 to 8 C atoms or straight-chain alkenyl or alkenyloxy having 2 to 7 C atoms. In the compound of the formula I and/or formula IA, L⁵ and L⁶ preferably both denote H, L³ preferably denotes F. L¹ and L² preferably both denote F.

Further preferred embodiments are indicated below:
- The medium additionally comprises one or more neutral compounds of the formulae II and/or III, 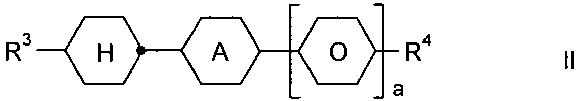 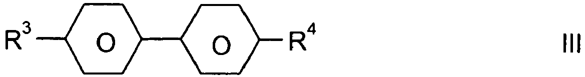 in which
   - A: denotes 1,4-phenylene or trans-1,4-cyclohexylene,
   - a: is 0 or 1, and
   - R³: denotes alkenyl having 2 to 9 C atoms,
   and R⁴ has the meaning indicated for R⁰ in formula I and preferably denotes alkyl having 1 to 12 C atoms or alkenyl having 2 to 9 C atoms.
- The compounds of the formula II are preferably selected from the following formulae, 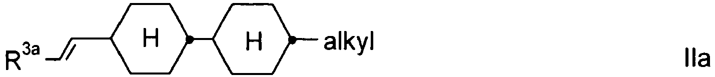 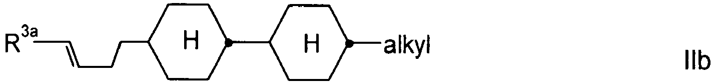 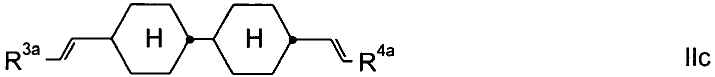 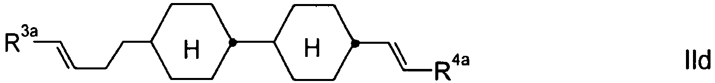 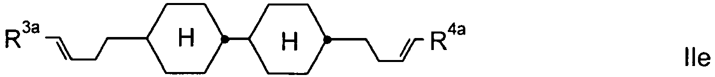 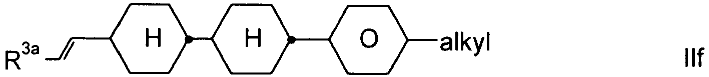 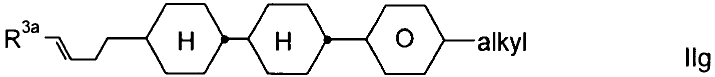 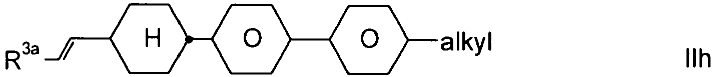 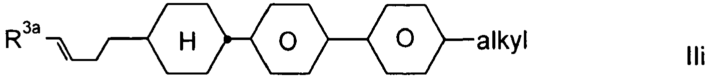 in which R^{3a} and R^{4a} each, independently of one another, denote H, CH₃, C₂H₅ or C₃H₇, and "alkyl" denotes a straight-chain alkyl group having 1 to 8 C atoms. Particular preference is given to compounds of the formulae IIa and IIf, in particular in which R^{3a} denotes H or CH₃, and compounds of the formula IIc, in particular in which R^{3a} and R^{4a} denote H, CH₃ or C₂H₅.

Preference is furthermore given to compounds of the formula II which have a non-terminal double bond in the alkenyl side chain,

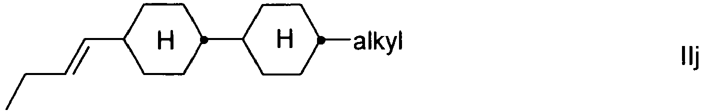

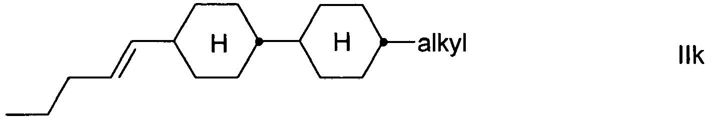

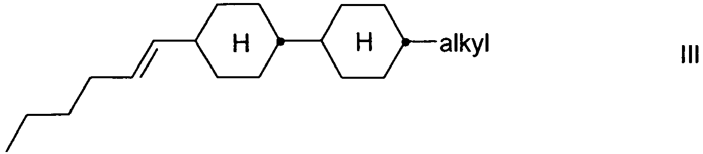

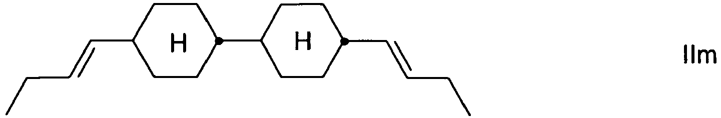

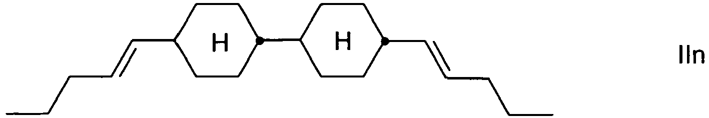

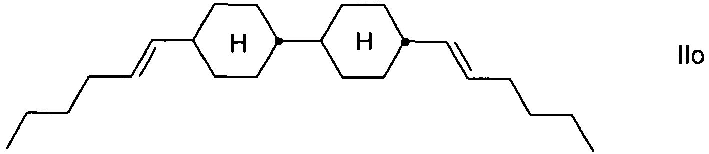

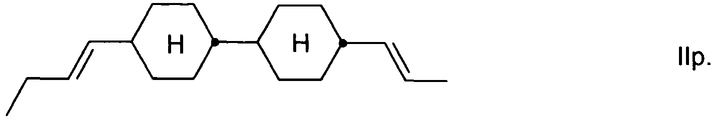

Very particularly preferred compounds of the formula II are the compounds of the formulae 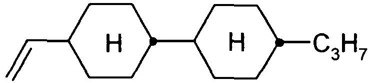 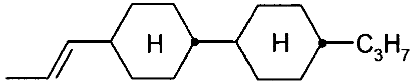 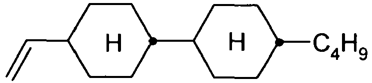 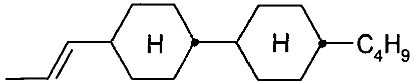 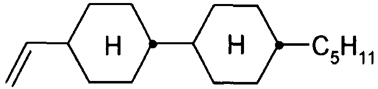 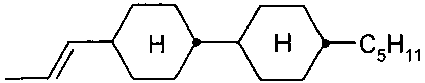 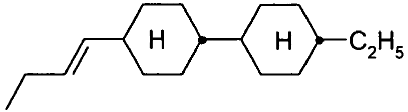 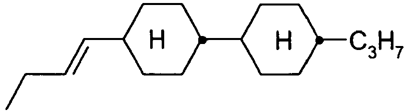 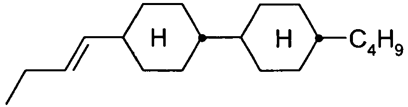 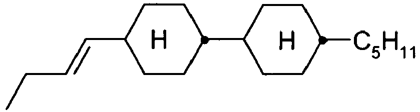 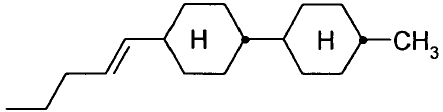 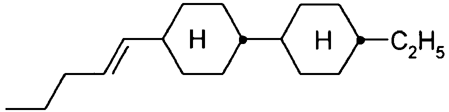 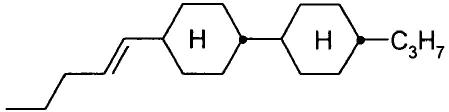 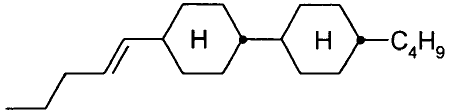 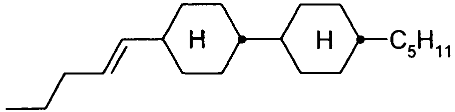 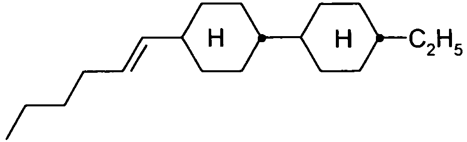 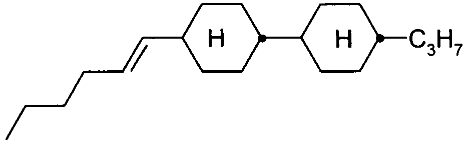 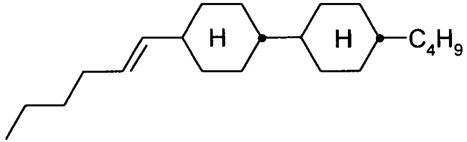 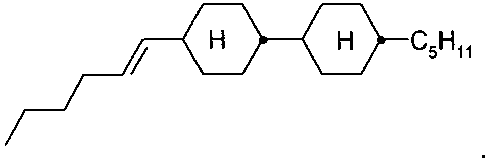
- The compounds of the formula III are preferably selected from the following formulae, 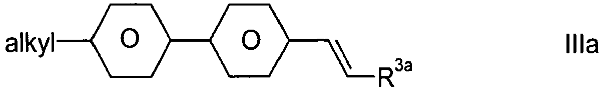 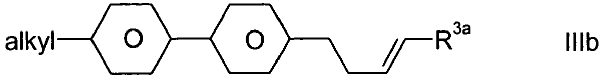 in which "alkyl" and R^{3a} have the meanings indicated above, and R^{3a} preferably denotes H or CH₃. Particular preference is given to compounds of the formula IIIb;
- The medium preferably additionally contains one or more compounds selected from the following formulae, 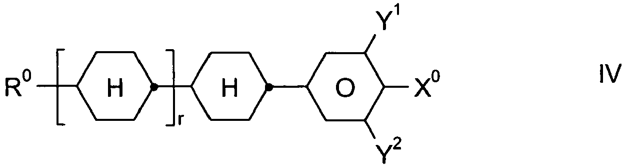 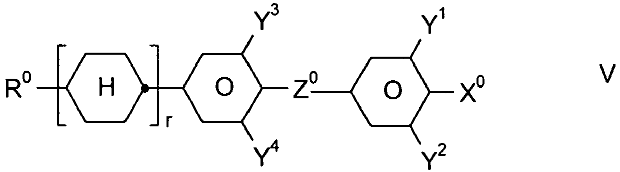 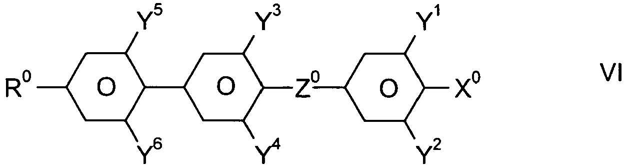 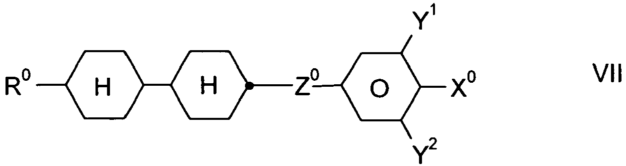 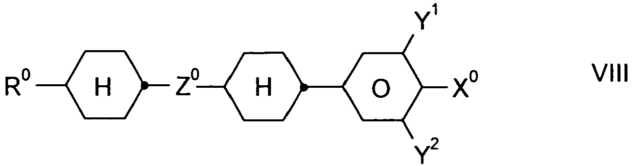 in which
   - R⁰ and X⁰: have the meanings indicated in formula I, and
   - Y¹⁻⁶: each, independently of one another, denote H or F,
   - Z⁰: denotes -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- or -OCF₂-, in the formulae V and VI also a single bond, and
   - r: denotes 0 or 1.

In the compounds of the formulae IV to VIII, X⁰ preferably denotes F or OCF₃, furthermore OCHF₂, CF₃, CF₂H, Cl, OCH=CF₂. R⁰ is preferably straight-chain alkyl or alkenyl having up to 6 C atoms.
- The compounds of the formula IV are preferably selected from the following formulae, 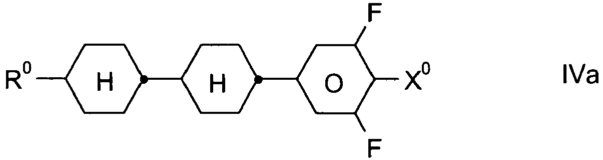 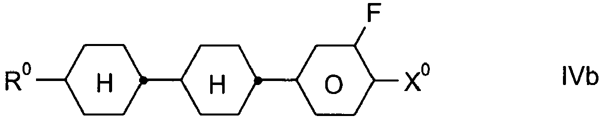 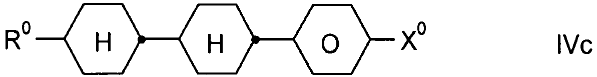 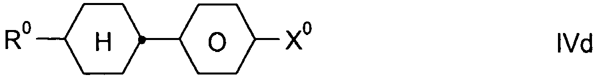 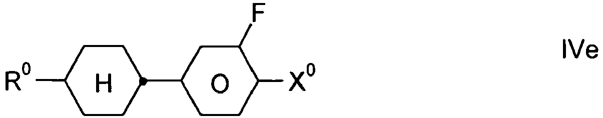 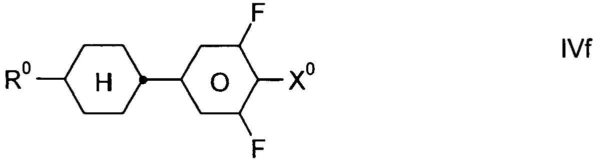 in which R⁰ and X⁰ have the meanings indicated above.
   Preferably, R⁰ in formula IV denotes alkyl having 1 to 8 C atoms and X⁰ denotes F, Cl, OCHF₂ or OCF₃, furthermore OCH=CF₂. In the compound of the formula IVb, R⁰ preferably denotes alkyl or alkenyl. In the compound of the formula IVd, X⁰ preferably denotes Cl, furthermore F.
- The compounds of the formula V are preferably selected from the following formulae, 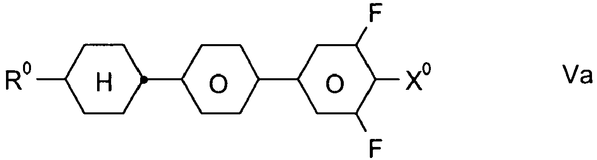 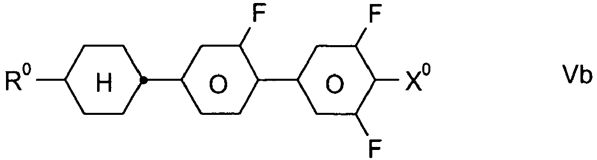 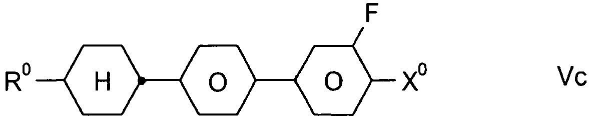 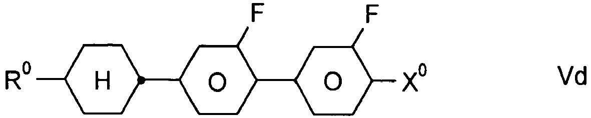 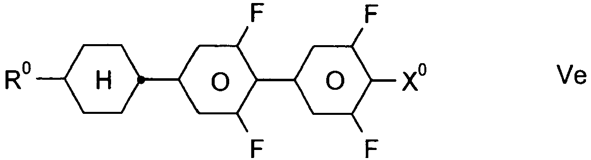 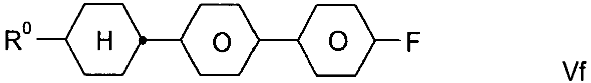 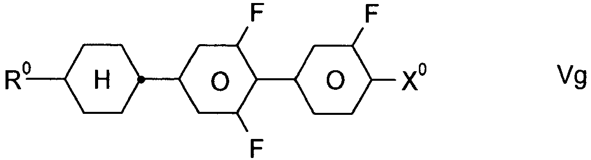 in which R⁰ and X⁰ have the meanings indicated above. Preferably, R⁰ in formula V denotes alkyl having 1 to 8 C atoms and X⁰ denotes F;
- The medium contains one or more compounds of the formula VI-1 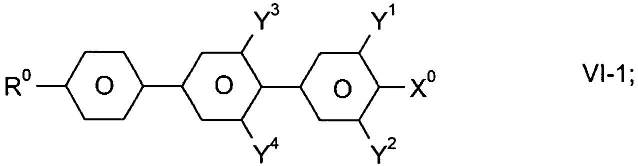 particularly preferably those selected from the following formulae: 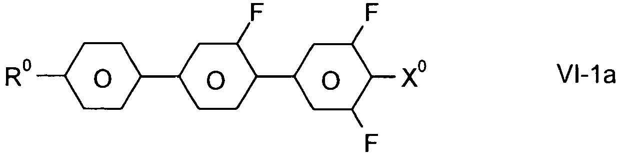 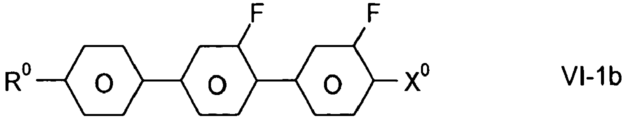 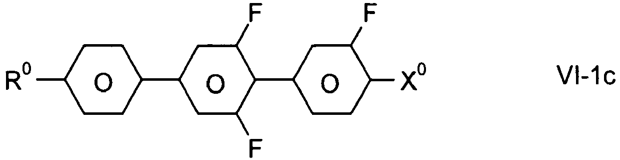 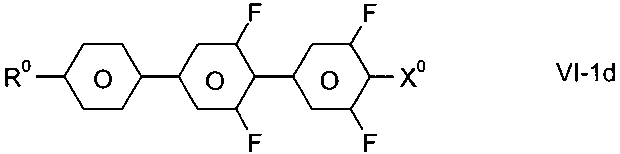 in which R⁰ and X⁰ have the meanings indicated above. Preferably, R⁰ in formula VI denotes alkyl having 1 to 8 C atoms and X⁰ denotes F, furthermore OCF₃.
- The medium contains one or more compounds of the formula VI-2 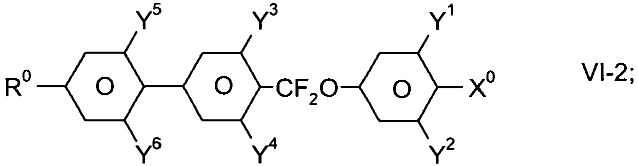 particularly preferably those selected from the following formulae: 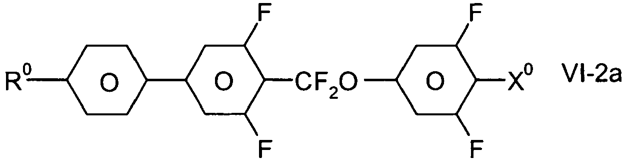 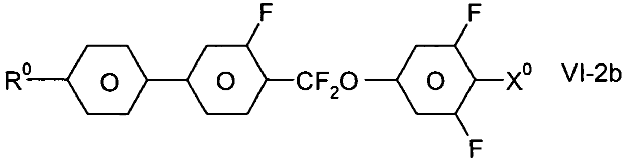 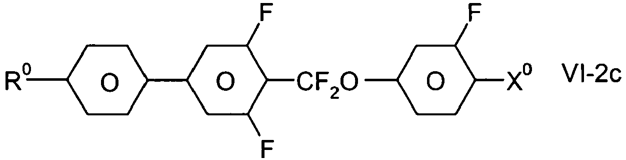 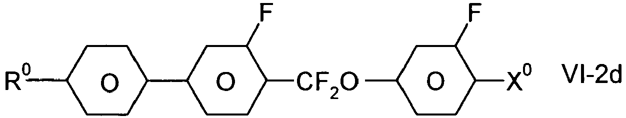 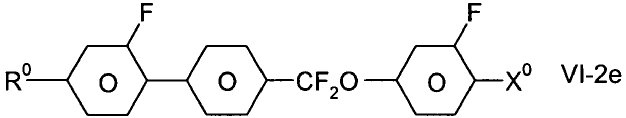 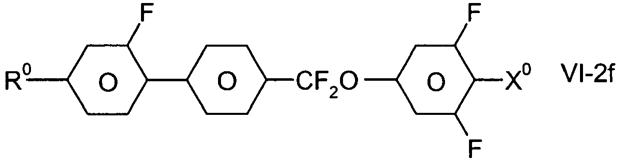 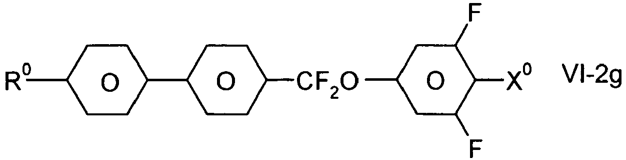 in which R⁰ and X⁰ have the meanings indicated above. Preferably, R⁰ in formula VI denotes alkyl having 1 to 8 C atoms and X⁰ denotes F;
- The medium preferably contains one or more compounds of the formula VII in which Z⁰ denotes -CF₂O-, -CH₂CH₂- or -COO-, particularly preferably those selected from the following formulae: 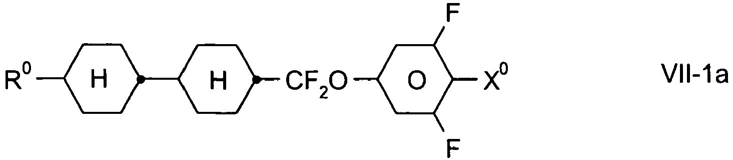 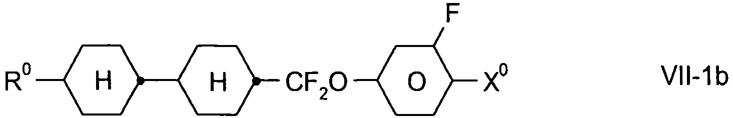 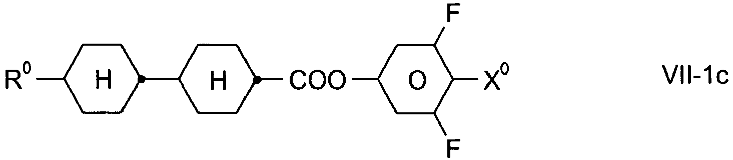 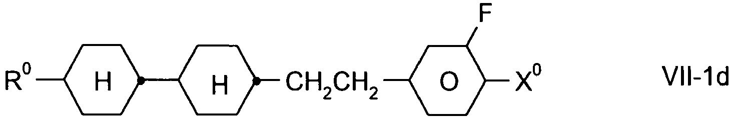 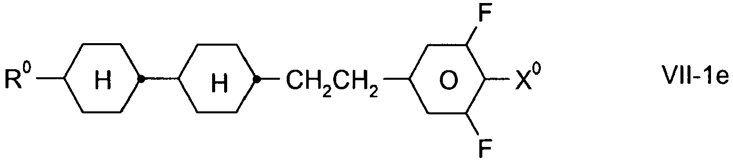 in which R⁰ and X⁰ have the meanings indicated above. Preferably, R⁰ in formula VII denotes alkyl having 1 to 8 C atoms and X⁰ denotes F, furthermore OCF₃.

The compounds of the formula VIII are preferably selected from the following formulae: 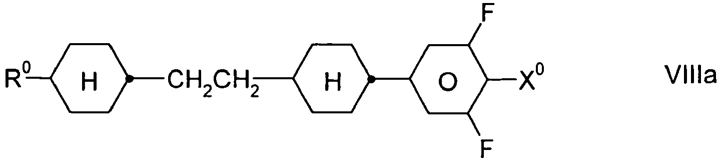 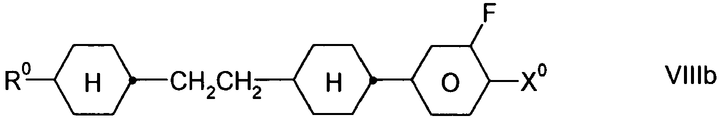 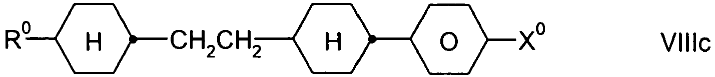 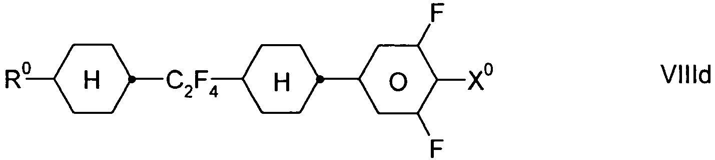 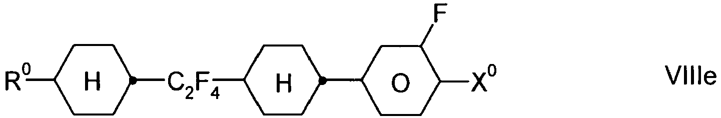 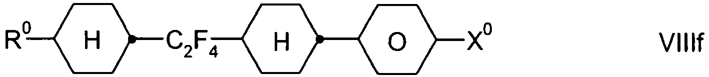 in which R⁰ and X⁰ have the meanings indicated above. R⁰ preferably denotes a straight-chain alkyl radical having 1 to 8 C atoms. X⁰ preferably denotes F.
- The medium additionally contains one or more compounds of the following formula: 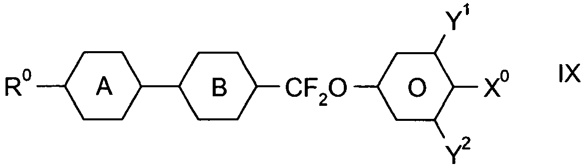 in which R⁰, X⁰, Y¹ and Y² have the meaning indicated above, and 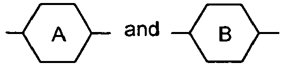 each, independently of one another, denote 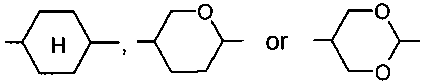 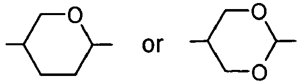 where rings A and B do not both simultaneously denote cyclohexylene;
- The compounds of the formula IX are preferably selected from the following formulae: 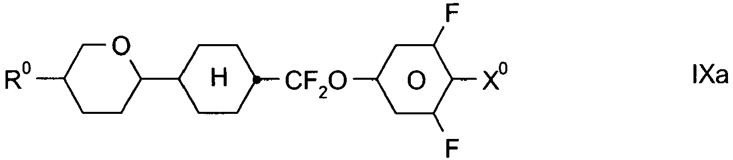 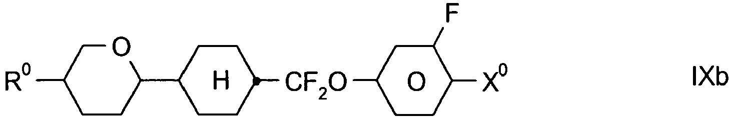 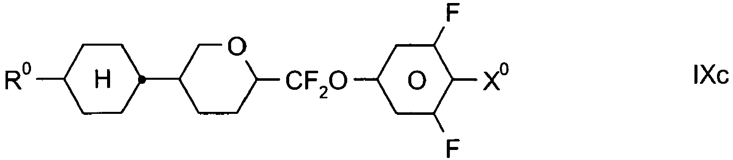 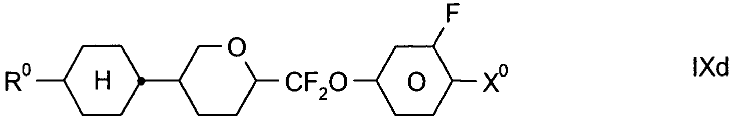 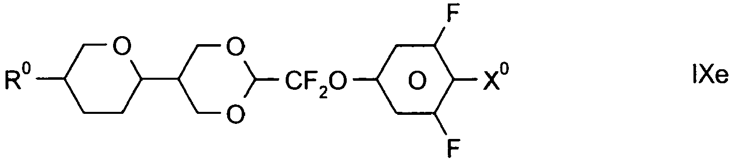 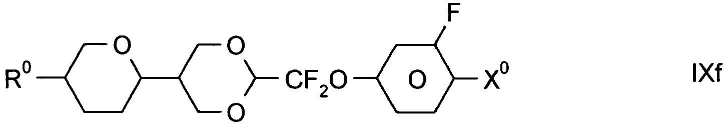 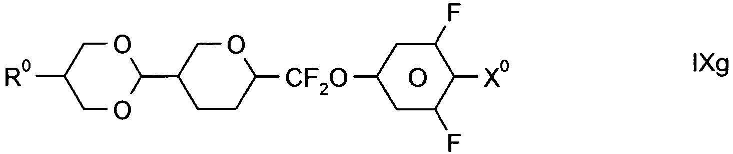 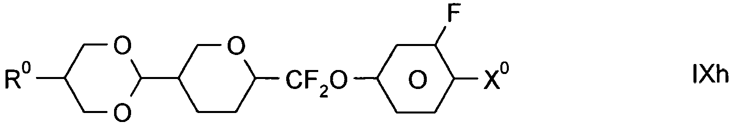 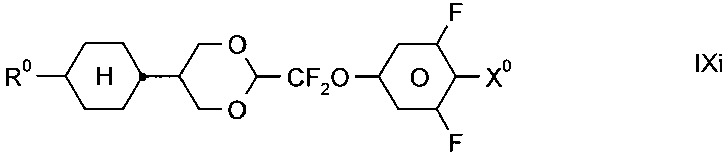 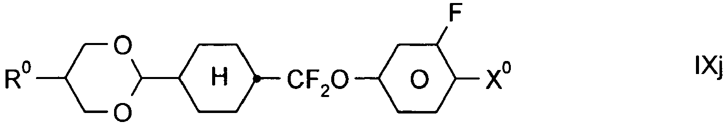 in which R⁰ and X⁰ have the meanings indicated above. Preferably, R⁰ denotes alkyl having 1 to 8 C atoms and X⁰ denotes F. Particular preference is given to compounds of the formula IXa;
- The medium additionally contains one or more compounds selected from the following formulae: 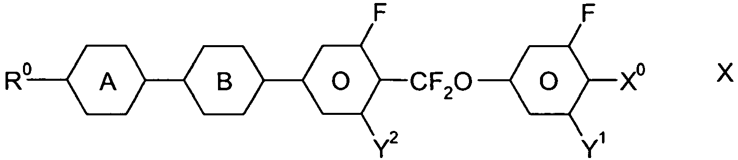 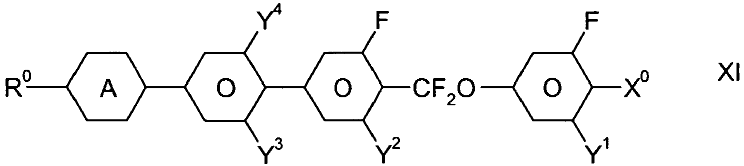 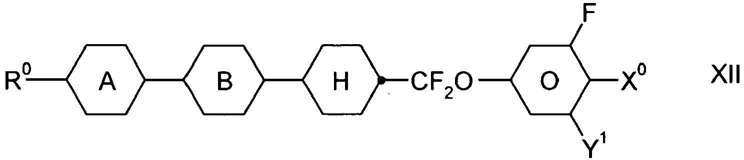 in which R⁰, X⁰ and Y¹⁻⁴ have the meaning indicated in formula I, and 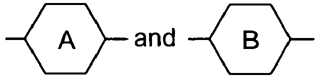 each, independently of one another, denote 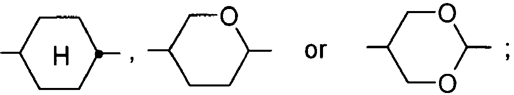 with the proviso that the compound of the formula X is not identical with the compound of the formula IA.
- The compounds of the formulae X, XI and XII are preferably selected from the following formulae: 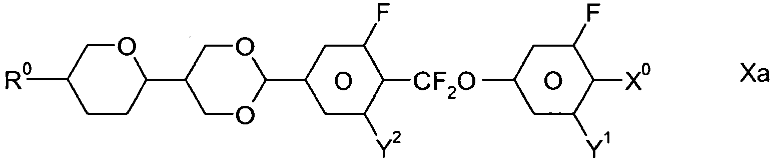 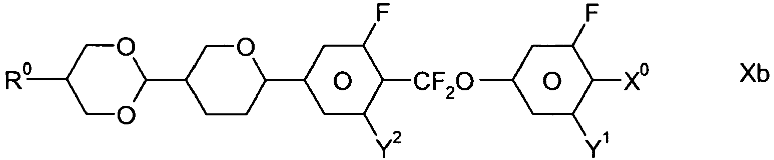 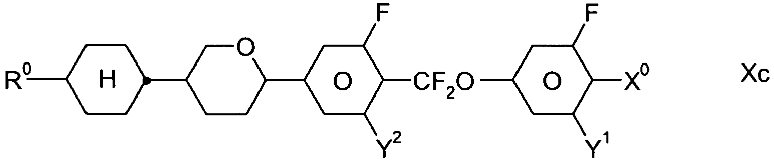 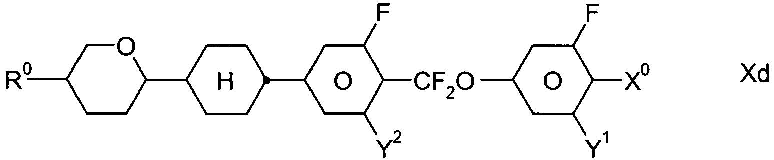 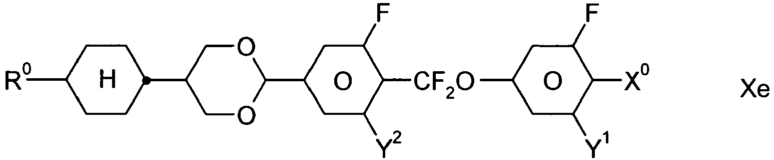 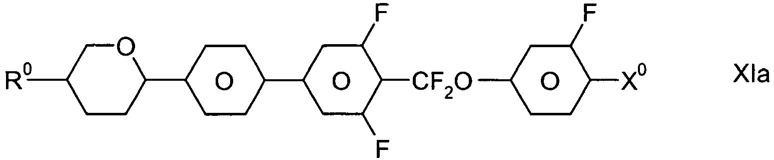 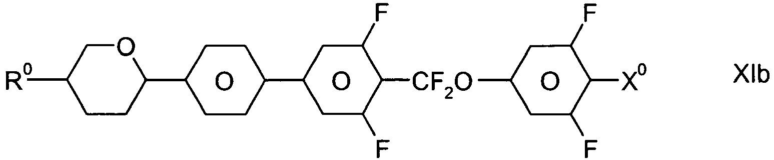 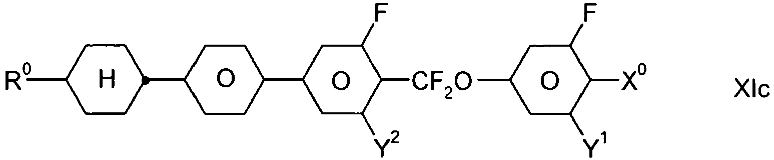 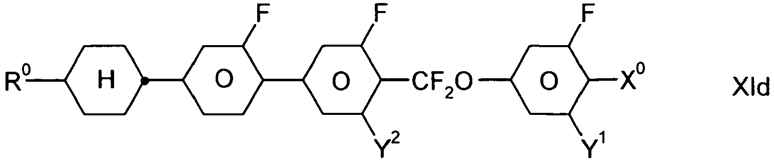 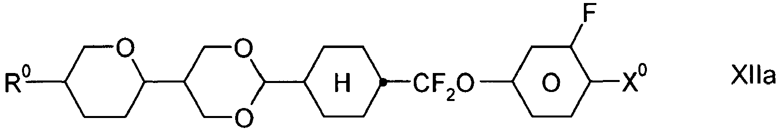 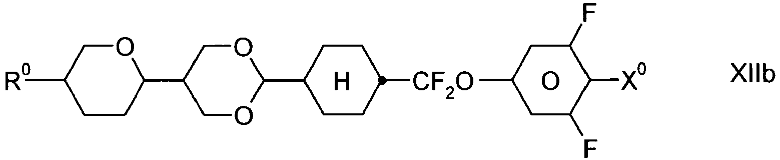 in which R⁰ and X⁰ have the meanings indicated above. Preferably, R⁰ denotes alkyl having 1 to 8 C atoms and X⁰ denotes F. Particularly preferred compounds are those in which Y¹ denotes F and Y² denotes H or F, preferably F. Particular preference is given to media comprising one or more compounds of the formula Xlb in which X⁰ = F.
- The medium additionally contains one or more compounds of the following formula: 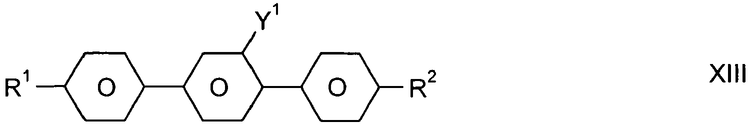 in which R¹ and R² each, independently of one another, denote n-alkyl, alkoxy, oxaalkyl, fluoroalkyl or alkenyl, each having up to 9 C atoms, and preferably each, independently of one another, denote alkyl having 1 to 8 C atoms. Y¹ denotes H or F.

Preferred compounds of the formula XIII are the compounds of the formulae 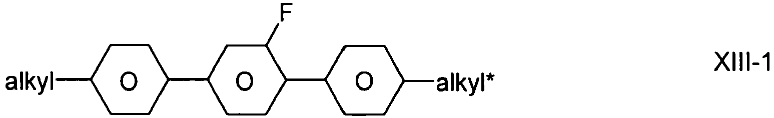 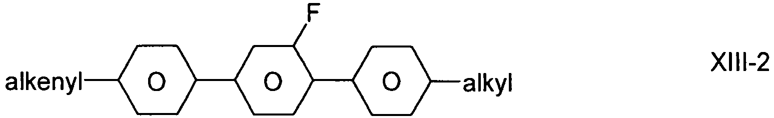 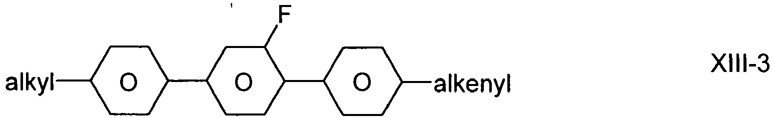 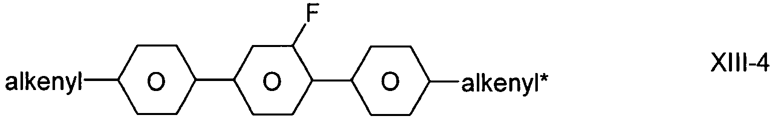 in which
- alkyl and alkyl*: each, independently of one another, denote a straight-chain alkyl radical having 1 to 6 C atoms, and
- alkenyl and alkenyl*: each, independently of one another, denote a straight-chain alkenyl radical having 2 to 6 C atoms.

Particular preference is given to media comprising one or more compounds of the formulae XIII-1 and/or XIII-3.
- The medium additionally contains one or more compounds selected from the following formulae: 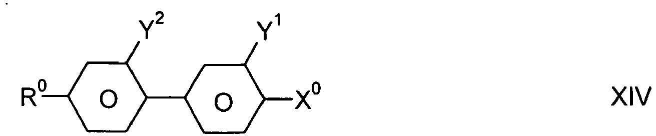 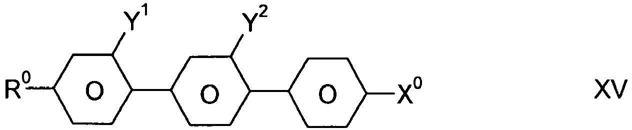 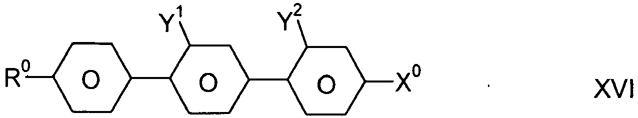 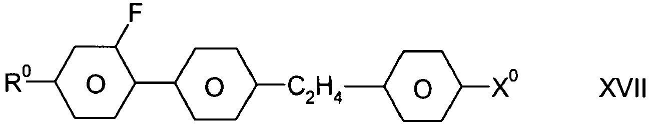 in which R⁰, X⁰, Y¹ and Y² have the meanings indicated above. Preferably, R⁰ denotes alkyl having 1 to 8 C atoms and X⁰ denotes F or Cl;
- The compounds of the formulae XIV, XV and XVI are preferably selected from compounds of the formulae 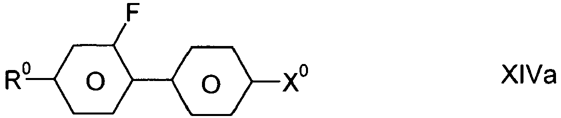 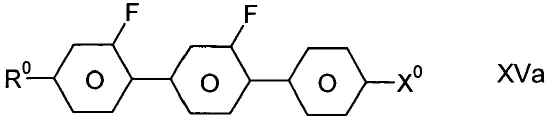 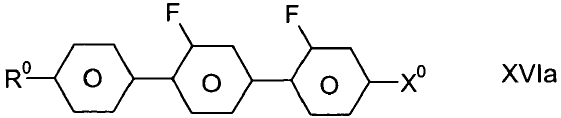 in which R⁰ and X⁰ have the meanings indicated above. R⁰ preferably denotes alkyl having 1 to 8 C atoms. In the compounds of the formula XIV, X⁰ preferably denotes F or Cl.
- The medium additionally contains one or more compounds of the following formulae D1 and/or D2, 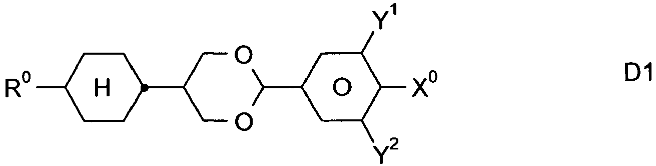 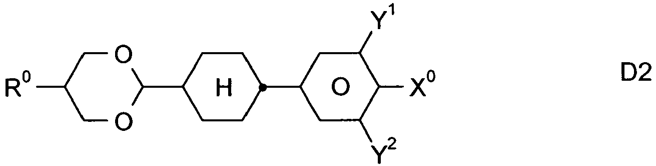 in which Y¹, Y², R⁰ and X⁰ have the meaning indicated above. Preferably, R⁰ denotes alkyl having 1 to 8 C atoms and X⁰ denotes F. Particular preference is given to compounds of the formulae 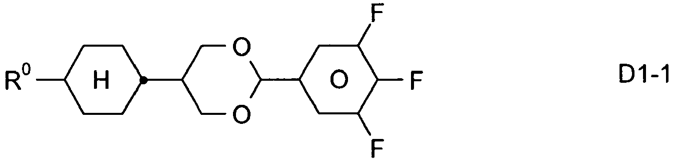 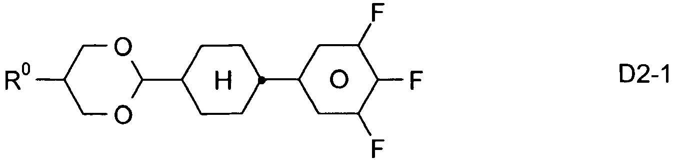 in which R⁰ has the meanings indicated above and preferably denotes straight-chain alkyl having 1 to 6 C atoms, in particular C₂H₅, n-C₃H₇ or n-C₅H₁₁.
- The medium additionally contains one or more compounds of the following formula: 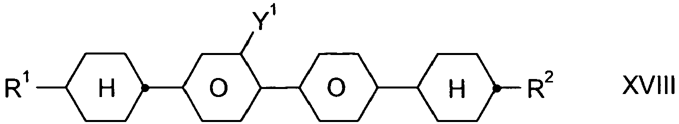 in which Y¹, R¹ and R² have the meaning indicated above. R¹ and R² preferably each, independently of one another, denote alkyl having 1 to 8 C atoms;
- The medium additionally contains one or more compounds of the following formula: 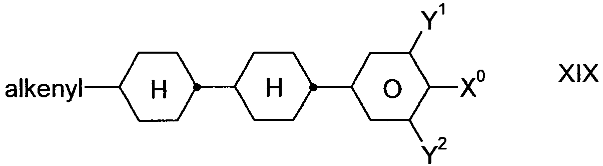 in which X⁰, Y¹ and Y² have the meanings indicated above, and "alkenyl" denotes C₂₋₇-alkenyl. Particular preference is given to compounds of the following formula: 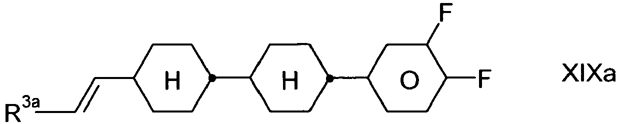 in which R^{3a} has the meaning indicated above and preferably denotes H;
- The medium additionally contains one or more tetracyclic compounds selected from the formulae XX to XXVI: 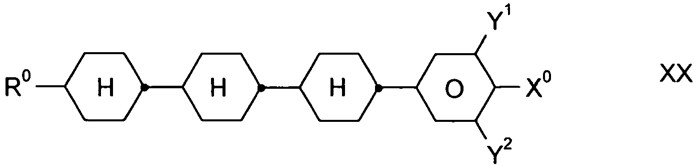 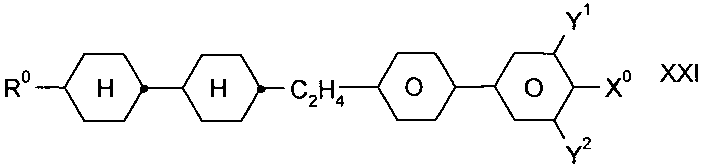 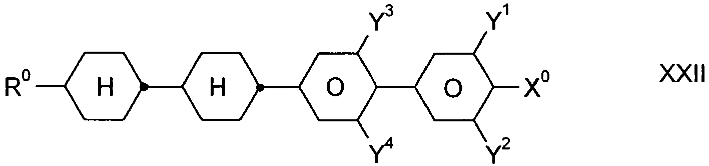 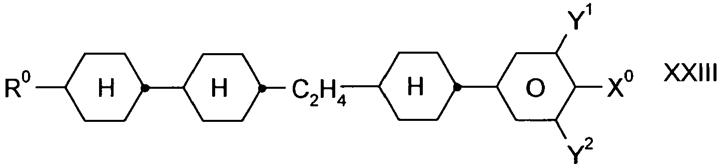 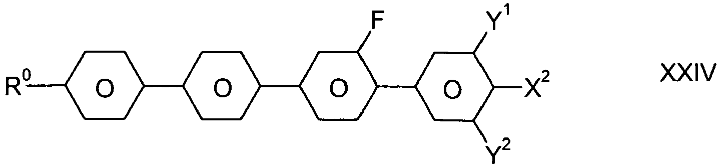 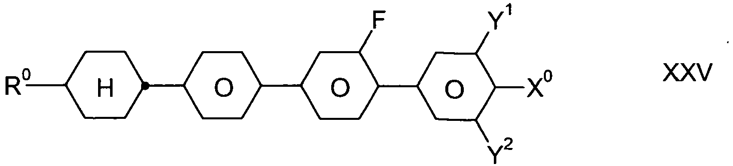 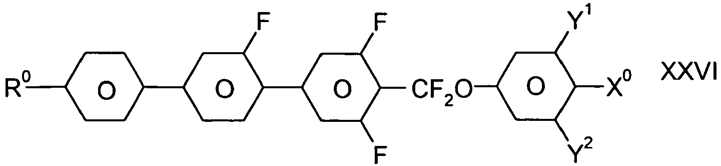 in which Y¹⁻⁴, R⁰ and X⁰ each, independently of one another, have one of the meanings indicated above. X⁰ is preferably F, Cl, CF₃, OCF₃ or OCHF₂. R⁰ preferably denotes alkyl, alkoxy, oxaalkyl, fluoroalkyl or alkenyl, each having up to 8 C atoms.

Preferred media comprise one or more compounds of the formula 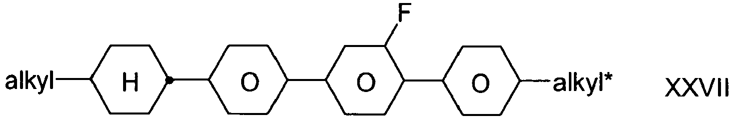 in which alkyl and alkyl* each, independently of one another, denote a straight-chain alkyl radical having 1 to 6 C atoms.

Particular preference is given to compounds of the formulae

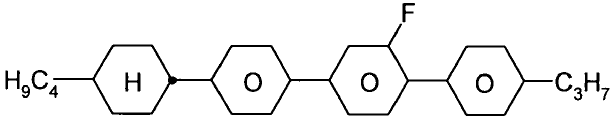

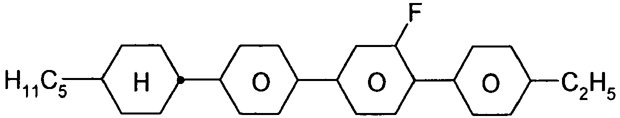

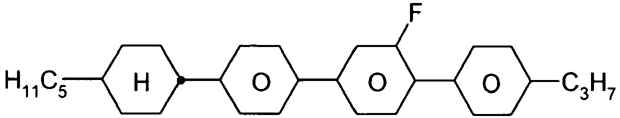

The compound of the formula XXVII is preferably employed in amounts of 0.5 - 30 % by weight, in particular 3 - 25 % by weight. 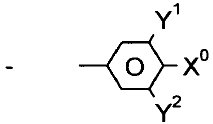 is preferably 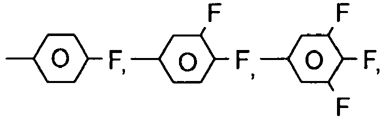 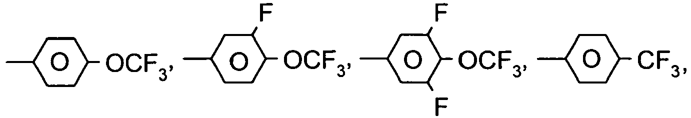 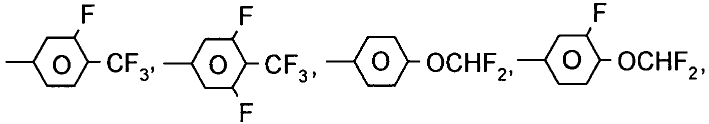 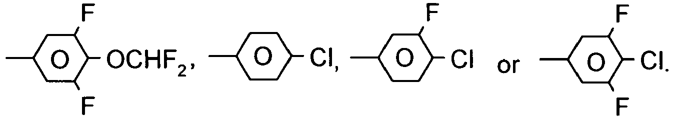
- R⁰ is preferably straight-chain alkyl or alkenyl having 2 to 7 C atoms;
- X⁰ is preferably F, furthermore OCF₃, Cl or CF₃;
- The medium preferably contains one, two or three compounds of the formula I;
- The medium preferably contains one, two or three compounds of the formula IA;
- The medium preferably contains at least one compound of the formula I and at least one compound of the formula IA;
- The medium preferably contains at least one compound of the formula I-2;
- The medium preferably contains at least one compound of the formula IA-2;
- The medium preferably contains at least one compound of the formula 1-2 and at least one compound of the formula IA-2;
- The medium preferably contains one or more compounds selected from the group of the compounds of the formulae I, II, III, V, VI-1, VI-2, XIII, XIV, XV, XVIII, XXIV, XXVI, XXVII;
- The medium preferably contains one or more compounds of the formula VI-1;
- The medium preferably contains one or more compounds of the formula VI-2;
- The medium preferably contains 1-25 % by weight, preferably 2-20 % by weight, particularly preferably 2-15 % by weight, of at least one compound of the formula I and/or IA;
- The proportion of compounds of the formulae II-XXVII in the mixture as a whole is preferably 20 to 99 % by weight;
- The medium preferably comprises 25-80 % by weight, particularly preferably 30-70 % by weight, of compounds of the formulae II and/or III;
- The medium preferably contains 5-40 % by weight, particularly preferably 10-30 % by weight, of compounds of the formula V;
- The medium preferably contains 3-30 % by weight, particularly preferably 6-25 % by weight, of compounds of the formula VI-1;
- The medium preferably contains 2-30 % by weight, particularly preferably 4-25 % by weight, of compounds of the formula VI-2;
- The medium contains 5-40 % by weight, particularly preferably 10-30 % by weight, of compounds of the formula XIII;
- The medium preferably contains 1-25 % by weight, particularly preferably 2-15 % by weight, of compounds of the formula XIV;
- The medium preferably contains 5-45 % by weight, particularly preferably 10-35 % by weight, of compounds of the formula XV;
- The medium preferably contains 1-20 % by weight, particularly preferably 2-15 % by weight, of compounds of the formula XVII;
- The medium additionally comprises one or more compounds of the formulae St-1 to St-3: 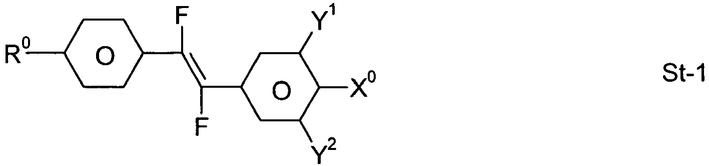 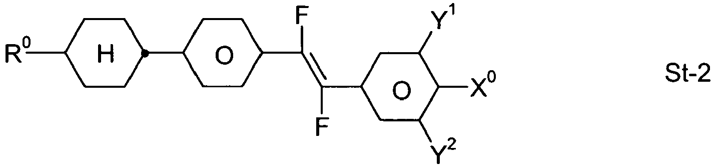 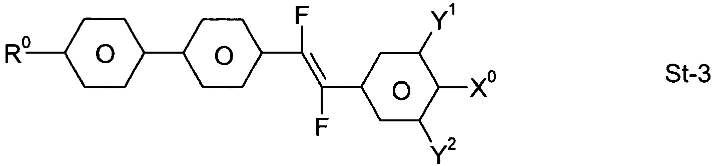 in which R⁰, Y¹, Y² and X⁰ have the meanings indicated above. R⁰ preferably denotes straight-chain alkyl, preferably having 1-6 C atoms. X⁰ is preferably F or OCF₃. Y¹ preferably denotes F. Y² preferably denotes F. Preference is furthermore given to compounds in which Y¹ = F and Y² = H. The compounds of the formulae St-1 to St-3 are preferably employed in the mixtures according to the invention in concentrations of 3 - 30% by weight, in particular 5 - 25% by weight.
- The medium additionally contains one or more pyrimidine or pyridine compounds of the formula N-1 to N-3, 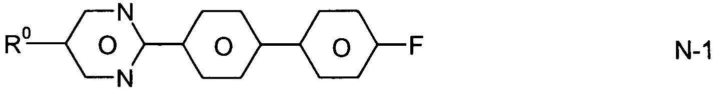 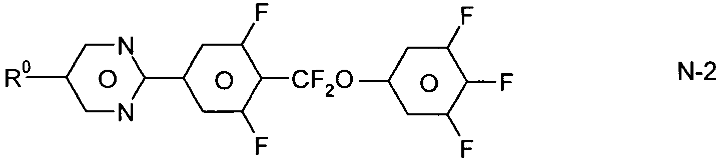 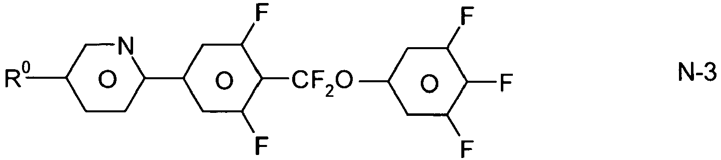 in which R⁰ is preferably straight-chain alkyl having 2-5 C atoms. Preferred mixtures comprise 3-30% by weight, in particular 5-20% by weight, of this (these) pyrimidine compound(s).
- Particularly preferred media comprise one or more compounds of the formulae 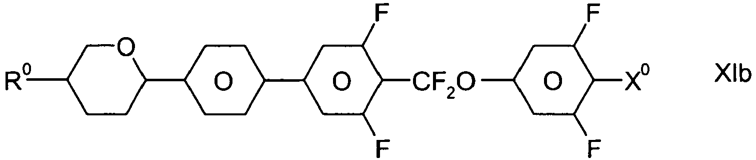 and/or 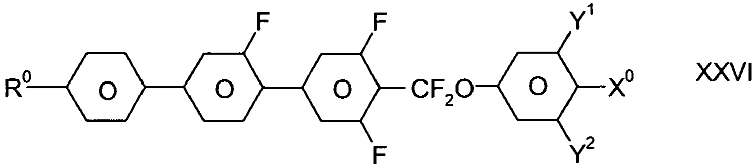 in which Y¹ and Y² preferably both denote fluorine; X⁰ preferably denotes fluorine, furthermore OCF₃. R⁰ in the compounds XIb and XXV is preferably a straight-chain alkyl radical having 1-6 C atoms, in particular 2-5 C atoms.
- Preferred media comprise at least one compound of the formula I and/or of the formula IA, at least one compound of the formula Xlb, at least one compound of the formula XXVI and in addition at least one compound of the formula 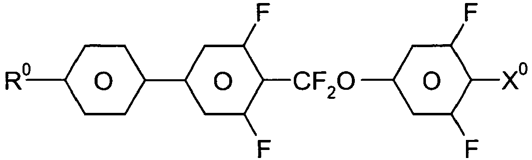 and/or 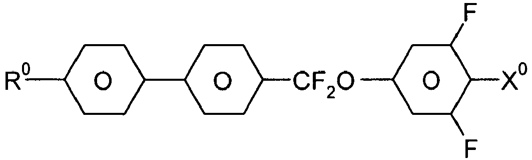 in which preferably X⁰ denotes fluorine, furthermore OCF₃, and R⁰ denotes a straight-chain alkyl radical having 1-6 C atoms, in particular 2-5 C atoms.

It has been found that even a relatively small proportion of compounds of the formula I and/or IA mixed with conventional liquid-crystal materials, but in particular with one or more compounds of the formulae II to XXVII, results in a significant increase in the light stability and in low birefringence values, with broad nematic phases with low smectic-nematic transition temperatures being observed at the same time, improving the shelf life. At the same time, the mixtures exhibit very low threshold voltages and very good values for the VHR on exposure to UV.

The term "alkyl" or "alkyl*" in this application encompasses straight-chain and branched alkyl groups having 1-7 carbon atoms, in particular the straight-chain groups methyl, ethyl, propyl, butyl, pentyl, hexyl and heptyl. Groups having 1-6 carbon atoms are generally preferred.

The term "alkenyl" or "alkenyl*" in this application encompasses straight-chain and branched alkenyl groups having 2-7 carbon atoms, in particular the straight-chain groups. Preferred alkenyl groups are C₂-C₇-1E-alkenyl, C₄-C₇-3E-alkenyl, C₅-C₇-4-alkenyl, C₆-C₇-5-alkenyl and C₇-6-alkenyl, in particular C₂-C₇-1E-alkenyl, C₄-C₇-3E-alkenyl and C₅-C₇-4-alkenyl. Examples of particularly preferred alkenyl groups are vinyl, 1 E-propenyl, 1E-butenyl, 1 E-pentenyl, 1 E-hexenyl, 1 E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl, 6-heptenyl and the like. Groups having up to 5 carbon atoms are generally preferred.

The term "fluoroalkyl" in this application encompasses straight-chain groups having at least one fluorine atom, preferably a terminal fluorine, i.e. fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.

The term "oxaalkyl" or "alkoxy" in this application encompasses straight-chain radicals of the formula CₙH₂ₙ₊₁-O-(CH₂)ₘ, in which n and m each, independently of one another, denote 1 to 6. m may also denote 0. Preferably, n = 1 and m = 1-6 or m = 0 and n = 1-3.

Through a suitable choice of the meanings of R⁰ and X⁰, the addressing times, the threshold voltage, the steepness of the transmission characteristic lines, etc., can be modified in the desired manner. For example, 1E-alkenyl radicals, 3E-alkenyl radicals, 2E-alkenyloxy radicals and the like generally result in shorter addressing times, improved nematic tendencies and a higher ratio between the elastic constants k₃₃ (bend) and k₁₁ (splay) compared with alkyl and alkoxy radicals. 4-Alkenyl radicals, 3-alkenyl radicals and the like generally give lower threshold voltages and lower values of k₃₃/k₁₁ compared with alkyl and alkoxy radicals. The mixtures according to the invention are distinguished, in particular, by high K₁ values and thus have significantly faster response times than the mixtures from the prior art.

The optimum mixing ratio of the compounds of the above-mentioned formulae depends substantially on the desired properties, on the choice of the components of the above-mentioned formulae and on the choice of any further components that may be present.

Suitable mixing ratios within the range indicated above can easily be determined from case to case.

The total amount of compounds of the above-mentioned formulae in the mixtures according to the invention is not crucial. The mixtures can therefore comprise one or more further components for the purposes of optimisation of various properties. However, the observed effect on the desired improvement in the properties of the mixture is generally greater, the higher the total concentration of compounds of the above-mentioned formulae.

In a particularly preferred embodiment, the media according to the invention comprise compounds of the formulae IV to VIII in which X⁰ denotes F, OCF₃, OCHF₂, OCH=CF₂, OCF=CF₂ or OCF₂-CF₂H. A favourable synergistic action with the compounds of the formula I results in particularly advantageous properties. In particular, mixtures comprising compounds of the formulae I, VI and XI are distinguished by their low threshold voltages.

The individual compounds of the above-mentioned formulae and the sub-formulae thereof which can be used in the media according to the invention are either known or can be prepared analogously to the known compounds.

The invention also relates to electro-optical displays, such as, for example, TN, STN, FFS, IPS, VA-IPS, OCB, TN-TFT or MLC displays, having two plane-parallel outer plates, which, together with a frame, form a cell, integrated non-linear elements for switching individual pixels on the outer plates, and a nematic liquid-crystal mixture having positive dielectric anisotropy and high specific resistance located in the cell, which contain media of this type, and to the use of these media for electro-optical purposes.

The liquid-crystal mixtures according to the invention enable a significant broadening of the available parameter latitude. The achievable combinations of clearing point, viscosity at low temperature, thermal and UV stability and high optical anisotropy are far superior to previous materials from the prior art.

The mixtures according to the invention are particularly suitable for mobile applications and high-Δn TFT applications, such as, for example, PDAs, notebooks, LCD TVs and monitors.

The liquid-crystal mixtures according to the invention, while retaining the nematic phase down to -20°C and preferably down to -30°C, particularly preferably down to -40°C, and the clearing point ≥ 70°C, preferably ≥ 75°C, at the same time allow rotational viscosities γ1 of ≤ 120 mPa·s, particularly preferably 100 mPa·s, to be achieved, enabling excellent MLC displays having fast response times to be achieved.

The dielectric anisotropy Δε of the liquid-crystal mixtures according to the invention is preferably ≥ +5, particularly preferably ≥ +10. In addition, the mixtures are characterised by low operating voltages. The threshold voltage of the liquid-crystal mixtures according to the invention is preferably ≤ 1.5 V, in particular ≤ 1.2 V.
The birefringence Δn of the liquid-crystal mixtures according to the invention is preferably ≥ 0.90, particularly preferably ≥ 0.10.

The nematic phase range of the liquid-crystal mixtures according to the invention preferably has a width of at least 90°, in particular at least 100°. This range preferably extends at least from -25°C to +70°C.

It goes without saying that, through a suitable choice of the components of the mixtures according to the invention, it is also possible for higher clearing points (for example above 100°C) to be achieved at higher threshold voltages or lower clearing points to be achieved at lower threshold voltages with retention of the other advantageous properties. At viscosities correspondingly increased only slightly, it is likewise possible to obtain mixtures having a higher Δε and thus low thresholds. The MLC displays according to the invention preferably operate at the first Gooch and Tarry transmission minimum [C.H. Gooch and H.A. Tarry, Electron. Lett. 10, 2-4, 1974; C.H. Gooch and H.A. Tarry, Appl. Phys., Vol. 8, 1575-1584, 1975], where, besides particularly favourable electro-optical properties, such as, for example, high steepness of the characteristic line and low angle dependence of the contrast (German patent 30 22 818), lower dielectric anisotropy is sufficient at the same threshold voltage as in an analogous display at the second minimum. This enables significantly higher specific resistance values to be achieved using the mixtures according to the invention at the first minimum than in the case of mixtures comprising cyano compounds. Through a suitable choice of the individual components and their proportions by weight, the person skilled in the art is able to set the birefringence necessary for a pre-specified layer thickness of the MLC display using simple routine methods.

Measurements of the voltage holding ratio (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] have shown that mixtures according to the invention comprising compounds of the formula I exhibit a significantly smaller decrease in the HR on UV exposure than analogous mixtures comprising cyano-phenylcyclohexanes of the formula 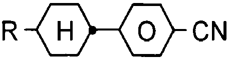 or esters of the formula 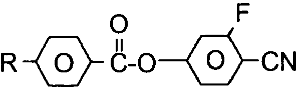 instead of the compounds of the formula I.

The light stability and UV stability of the mixtures according to the invention are considerably better, i.e. they exhibit a significantly smaller decrease in the HR on exposure to light or UV. Even low concentrations of the compounds (< 10% by weight) of the formula I in the mixtures increase the HR by 6% or more compared with mixtures from the prior art.

The construction of the MLC display according to the invention from polarisers, electrode base plates and surface-treated electrodes corresponds to the usual design for displays of this type. The term usual design is broadly drawn here and also encompasses all derivatives and modifications of the MLC display, in particular including matrix display elements based on poly-Si TFTs or MIM.

A significant difference between the displays according to the invention and the hitherto conventional displays based on the twisted nematic cell consists, however, in the choice of the liquid-crystal parameters of the liquid-crystal layer.

The liquid-crystal mixtures which can be used in accordance with the invention are prepared in a manner conventional per se, for example by mixing one or more compounds of the formula I with one or more compounds of the formulae II-XXVII or with further liquid-crystalline compounds and/or additives. In general, the desired amount of the components used in the smaller amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

The construction of the STN and MLC displays according to the invention from polarisers, electrode base plates and surface-treated electrodes corresponds to the conventional construction for displays of this type. The term conventional construction is broadly drawn here and also covers all derivatives and modifications of the MLC display, in particular including matrix display elements based on poly-Si TFT or MIM and very particularly transflective and reflective displays.

A significant difference between the displays according to the invention and the hitherto conventional displays based on the twisted nematic cell consists, however, in the choice of the liquid-crystal parameters of the liquid-crystal layer.

The liquid-crystal mixtures which can be used in accordance with the invention are prepared in a manner conventional per se. In general, the desired amount of the components used in lesser amount is dissolved in the components making up the principal constituent, preferably at elevated temperature. It is also possible to mix solutions of the components in an organic solvent, for example in acetone, chloroform or methanol, and to remove the solvent again, for example by distillation, after thorough mixing. It is furthermore possible to prepare the mixtures in other conventional manners, for example by using premixes, such as, for example, homologue mixtures or using so-called "multibottle" systems.

The polymerisable compounds can be added individually to the liquid crystalline medium, but it is also possible to use mixtures comprising two or more polymerisable compounds. The polymerisable compounds are polymerised or cross-linked (if a compounds contains two or more polymerisable groups) by in-situ polymerisation in the LC medium between the substrates of the LC display with application of a voltage. Suitable and preferred polymerisation methods are, for example, thermal or photopolymerisation, preferably photopolymerisation, in particular UV photopolymerisation. If necessary, one or more initiators may also be added here. Suitable conditions for the polymerisation, and suitable types and amounts or initiators, are known to the person skilled in the art and are described in the literature.

Suitable for free-radical polymerisation are, for example, the commercially available photoinitiators Irgacure651®, Irgacure184®, Irgacure907®, Irgacure369® or Darocure1173® (Ciba Holding). If an initiator is employed, its proportion in the mixture as a whole is preferably 0.001 to 5% by weight, particularly preferably 0.001 to 1% by weight. However, the polymerisation can also take place without addition of an initiator. In a further preferred embodiment, the LC medium does not comprise a polymerisation initiator.

The polymerisable component (= total amount of RMs) in the LC medium may also comprise one or more stabilisers in order to prevent undesired spontaneous polymerisation of the RMs, for example during storage or transport. Suitable types and amounts of stabilisers are known to the person skilled in the art and are described in the literature. Particularly suitable are, for example, the commercially available stabilisers of the Irganox® series (BASF SE). If stabilisers are employed, their proportion, based on the total amount of RMs or polymerisable component A, is preferably 10 - 5000 ppm, particularly preferably 50 - 500 ppm.

The dielectrics may also comprise further additives known to the person skilled in the art and described in the literature. For example, from 0 to 15 %, preferably from 0 to 10 %, of pleochroic dyes and/or chiral dopants, or UV stabilisers, for example those listed in Table D can be added. Especially preferred is the UV stabilizer Tinuvin® 770. The individual compounds added are employed in concentrations of from 0.01 to 6 %, preferably from 0.1 to 3 %. However, the concentration data of the other constituents of the liquid-crystal mixtures, i.e. the liquid-crystalline or mesogenic compounds, are given without taking into account the concentration of these additives.

The invention thus relates to a liquid-crystal (LC) display of the PS (polymer stabilised) or PSA (polymer sustained alignment) type, containing an LC cell consisting of two substrates, where at least one substrate is transparent to light and at least one substrate has an electrode layer, and a layer of an LC medium comprising a polymerised component and a low-molecular-weight component located between the substrates, where the polymerised component is obtainable by polymerisation of one or more polymerisable compounds between the substrates of the LC cell in the LC medium with application of an electrical voltage, characterised in that at least one of the polymerisable compound.

The dielectrics may also comprise further additives known to the person skilled in the art and described in the literature, such as, for example, UV stabilisers, such as Tinuvin® from BASF SE, antioxidants, free-radical scavengers, nanoparticles, etc. For example, 0-15 % of pleochroic dyes or chiral dopants can be added. Suitable stabilisers and dopants are mentioned below in Tables C and D.

In the present application and in the examples below, the structures of the liquid-crystal compounds are indicated by means of acronyms, the transformation into chemical formulae taking place in accordance with Tables A and B below. All radicals CₙH₂ₙ₊₁ and CₘH₂ₘ₊₁ are straight-chain alkyl radicals having n and m C atoms respectively; n, m and k are integers and preferably denote 0, 1, 2, 3, 4, 5, 6, 7, 8, 9, 10, 11 or 12. The coding in Table B is self-evident. In Table A, only the acronym for the parent structure is indicated. In individual cases, the acronym for the parent structure is followed, separated by a dash, by a code for the substituents R¹*, R²*, L¹* and L²*:

| Code for R¹*, R²*, L¹*, L²*, L³* | R¹* | R²* | L¹* | L²* |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Preferred mixture components are shown in Tables A and B.

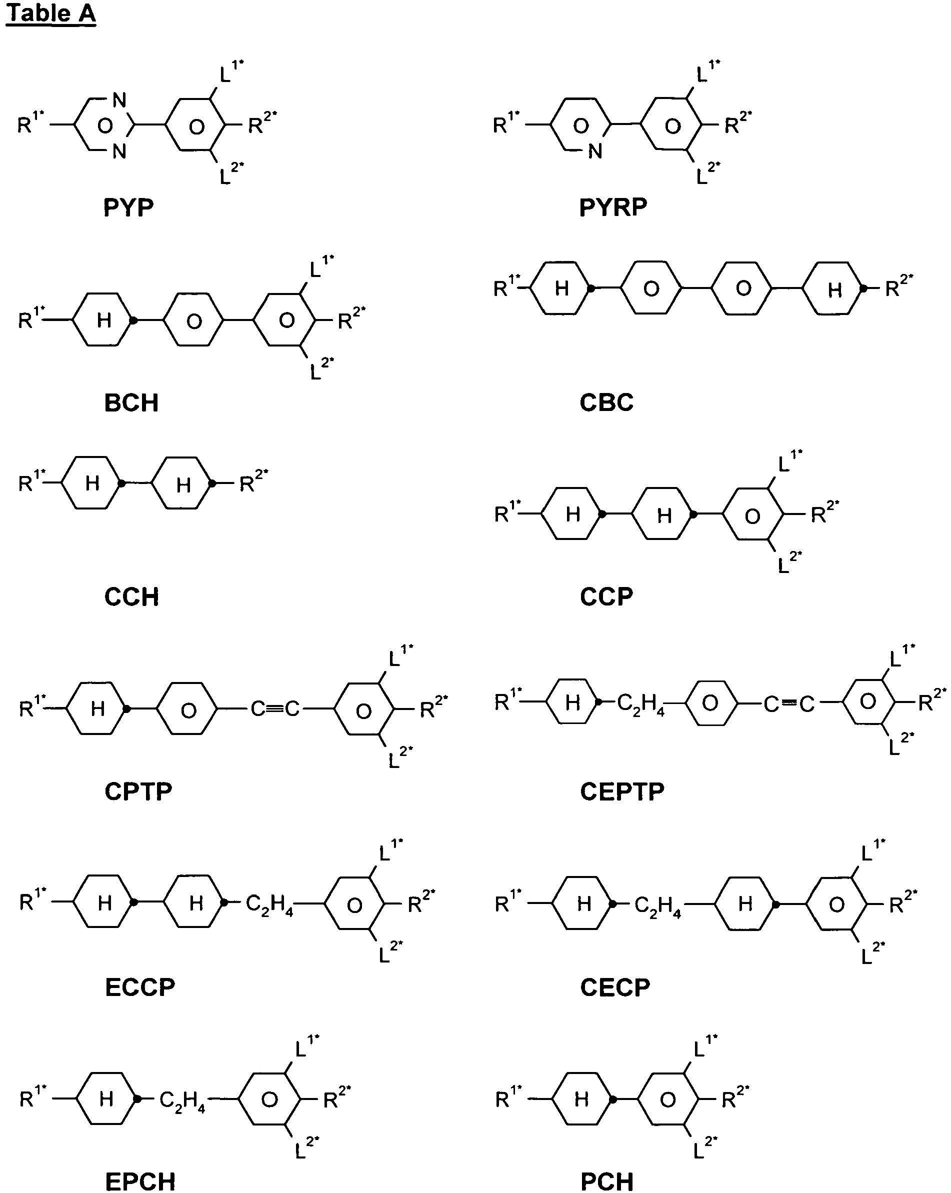

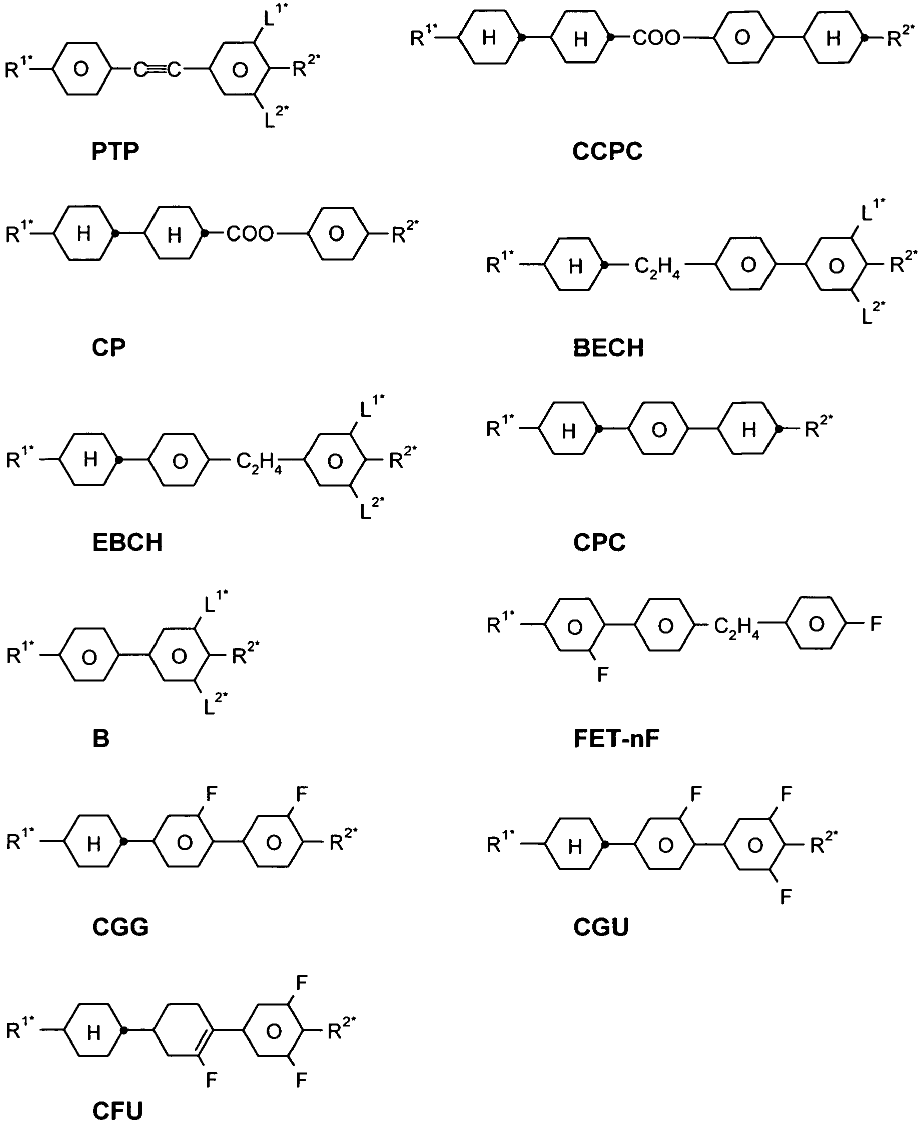

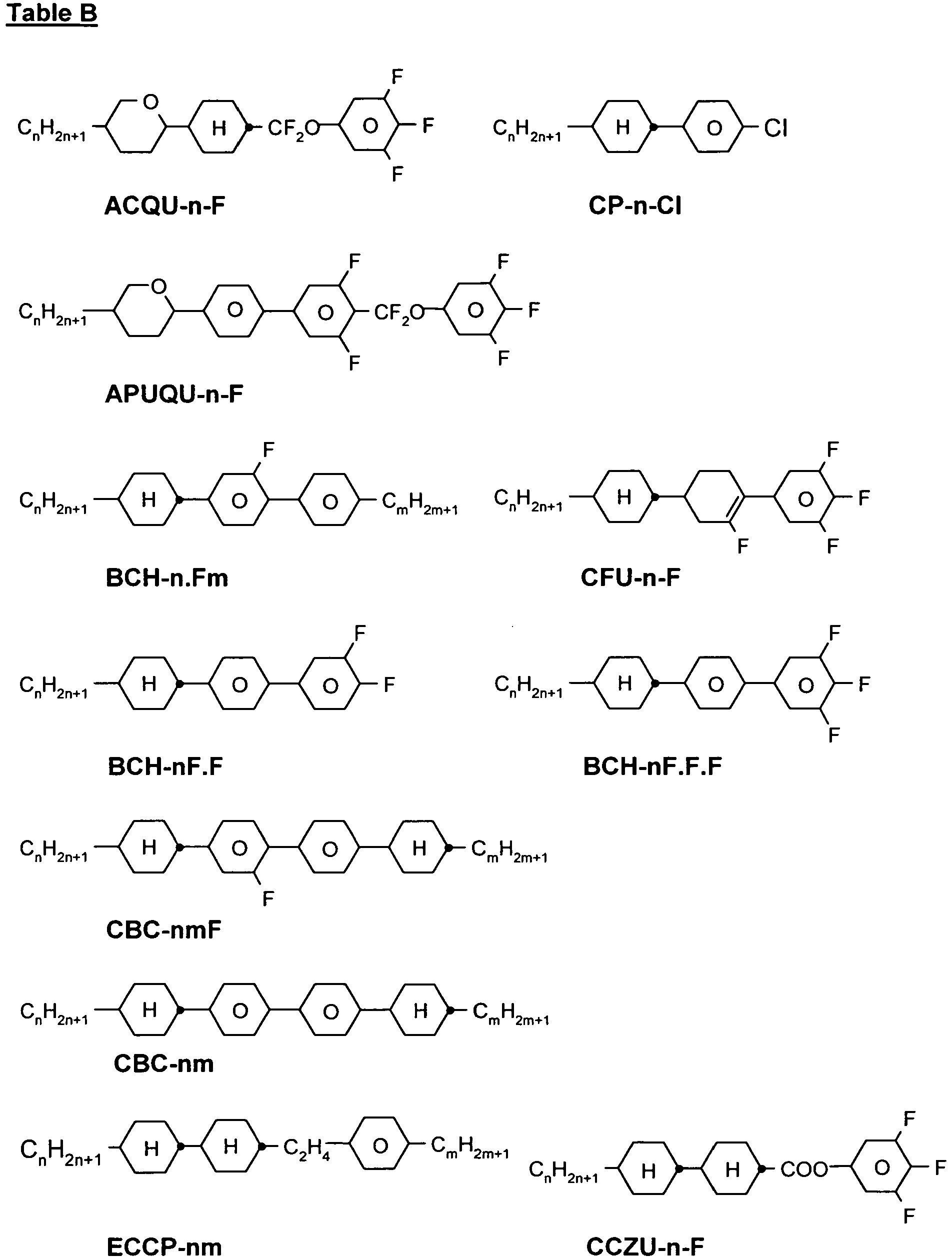

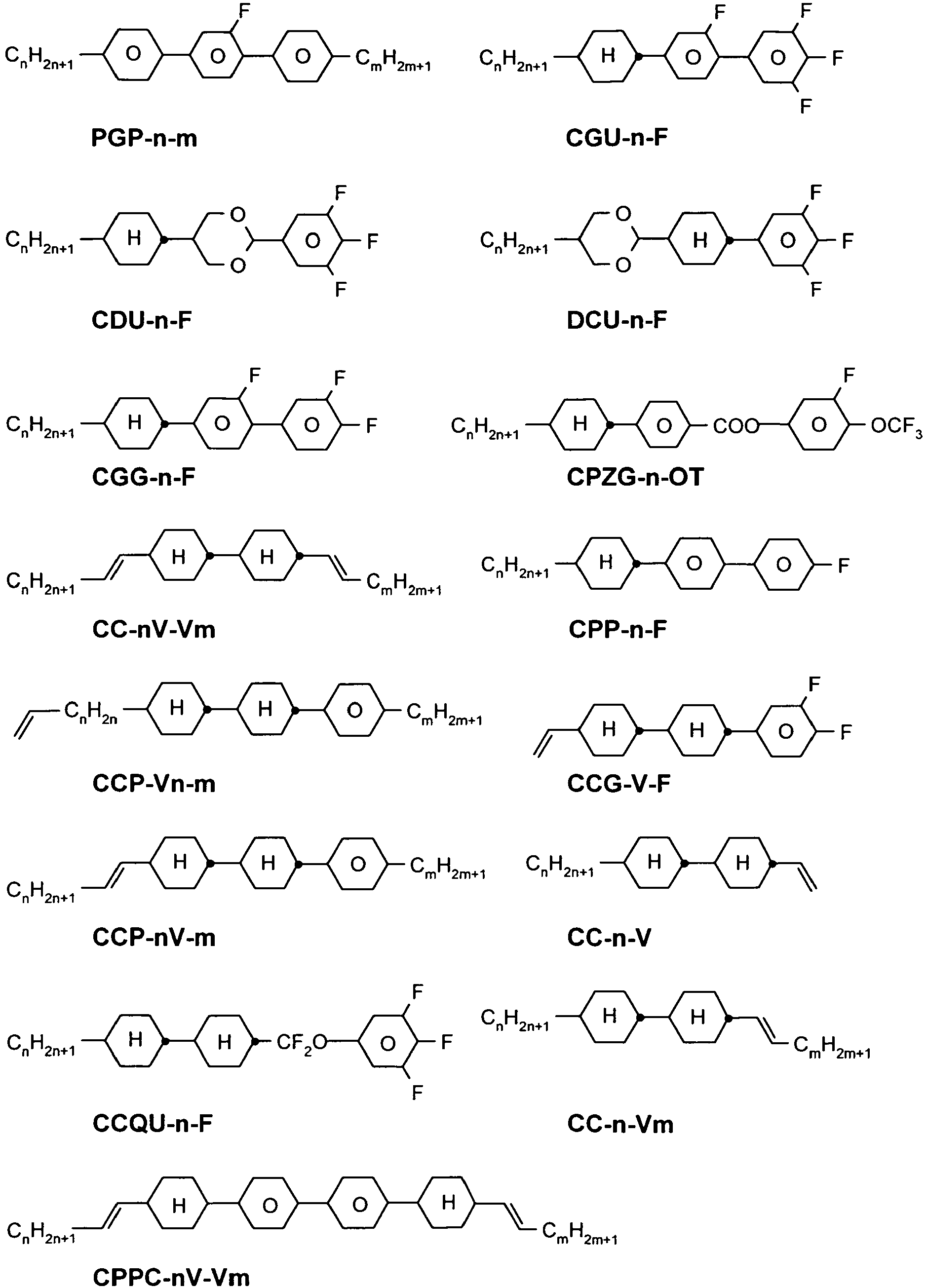

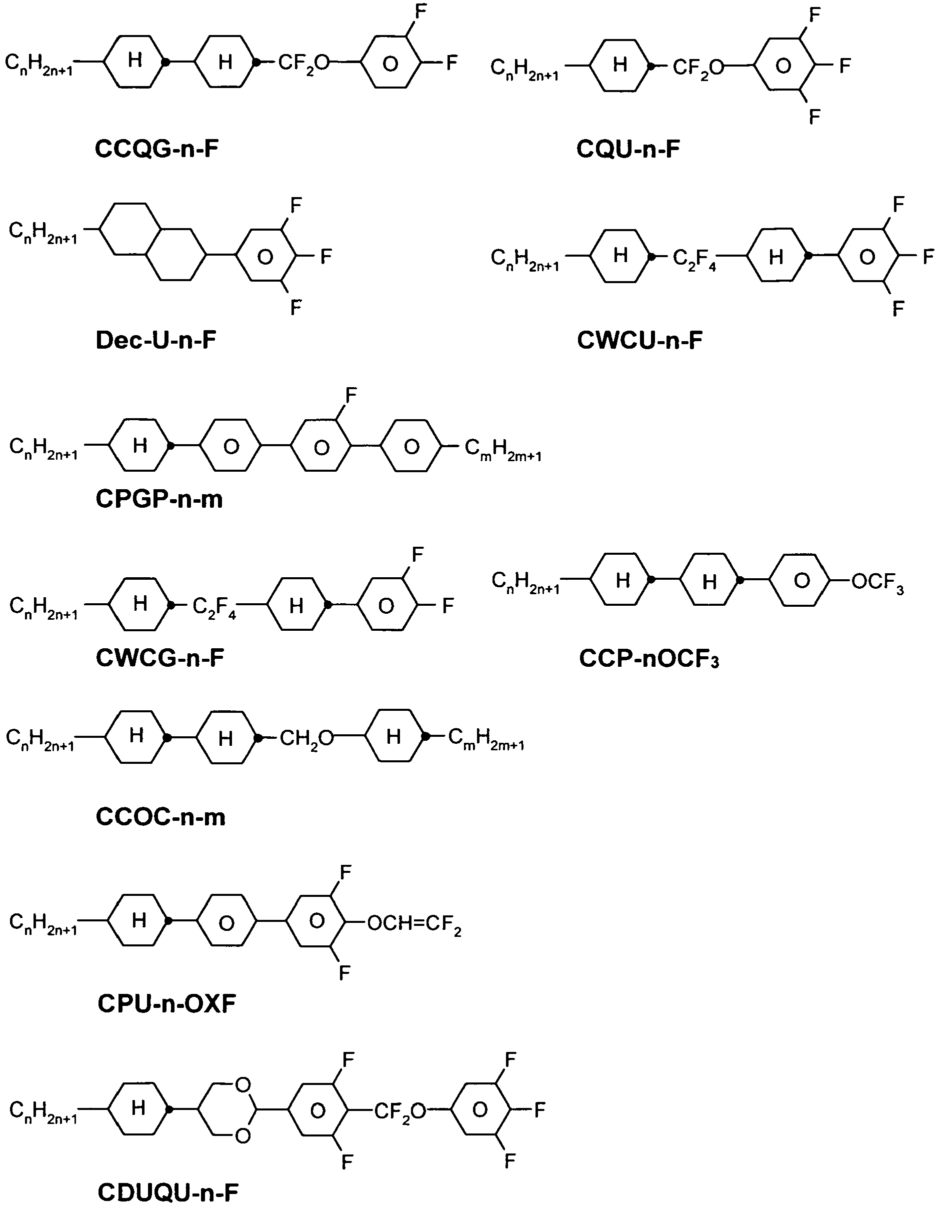

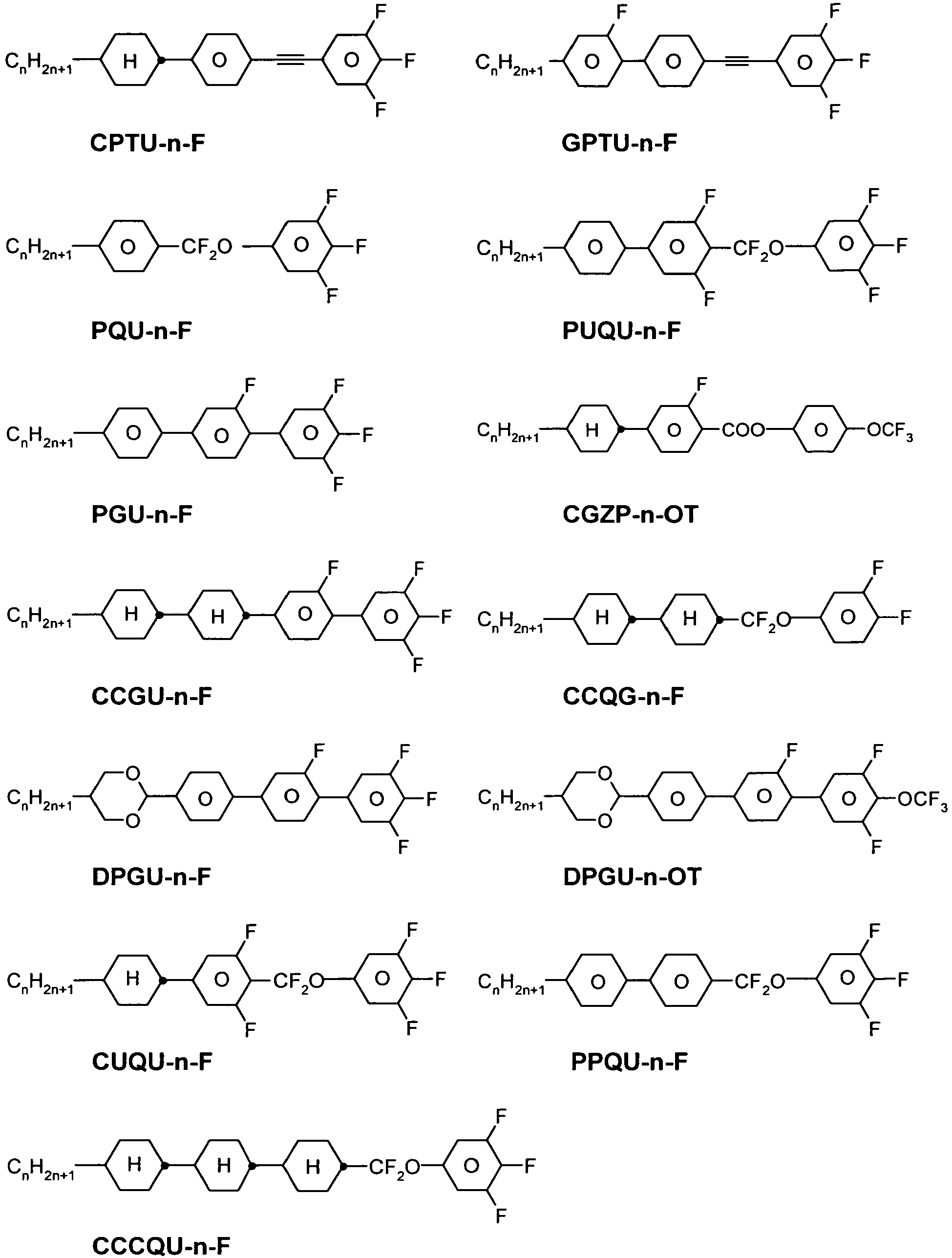

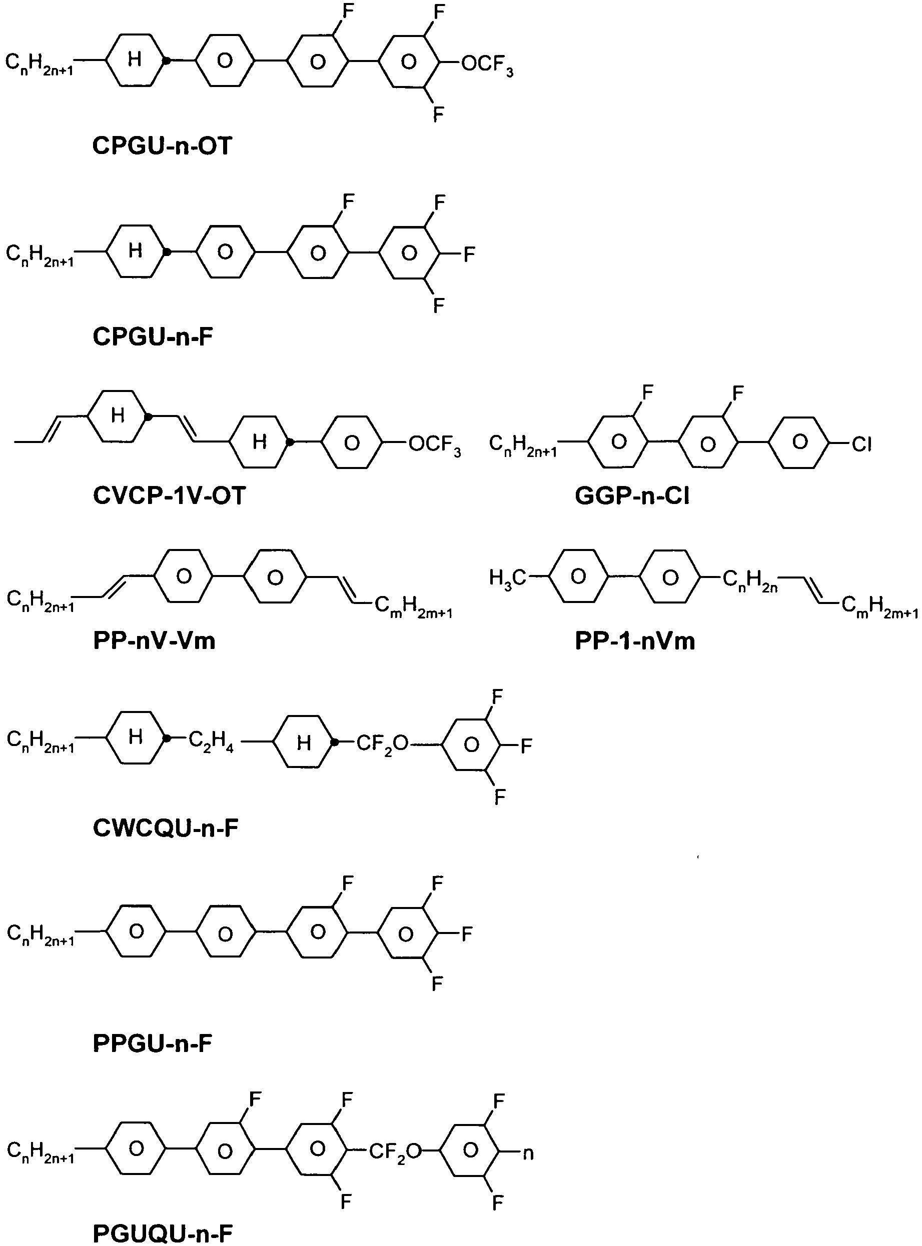

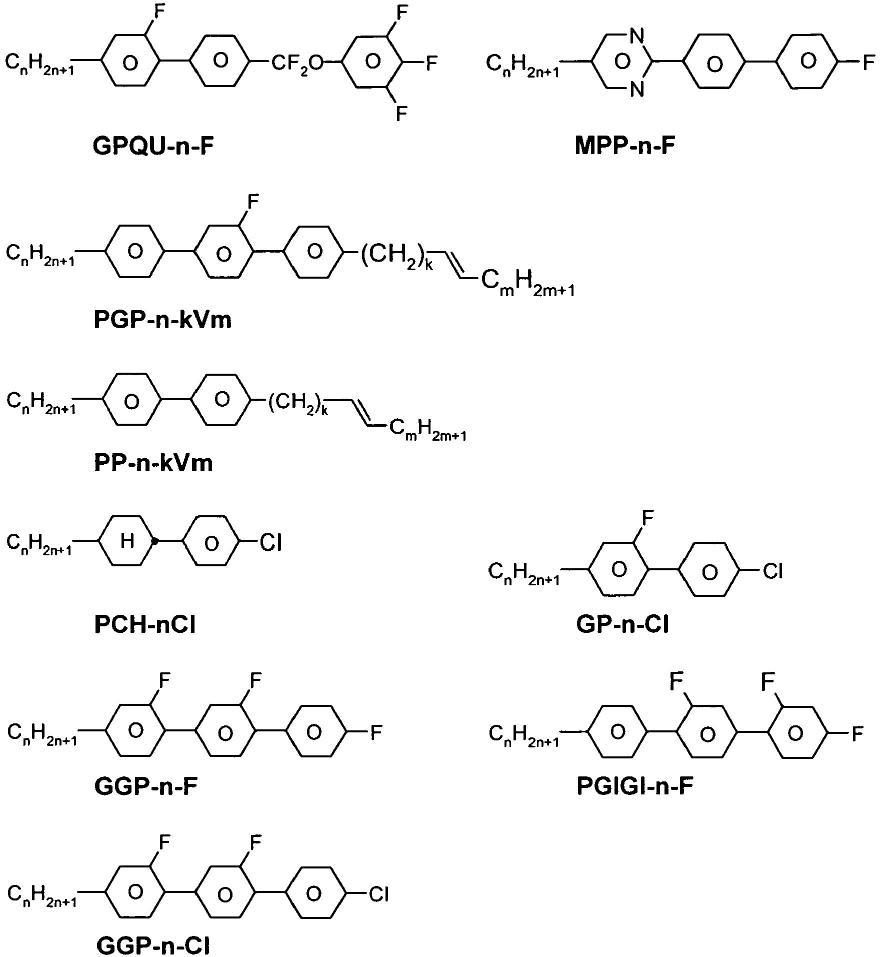

Particular preference is given to liquid-crystalline mixtures which, besides the compounds of the formula I, comprise at least one, two, three, four or more compounds from Table B.

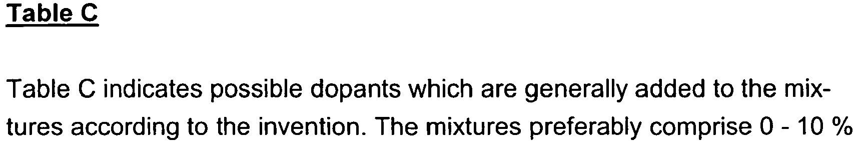

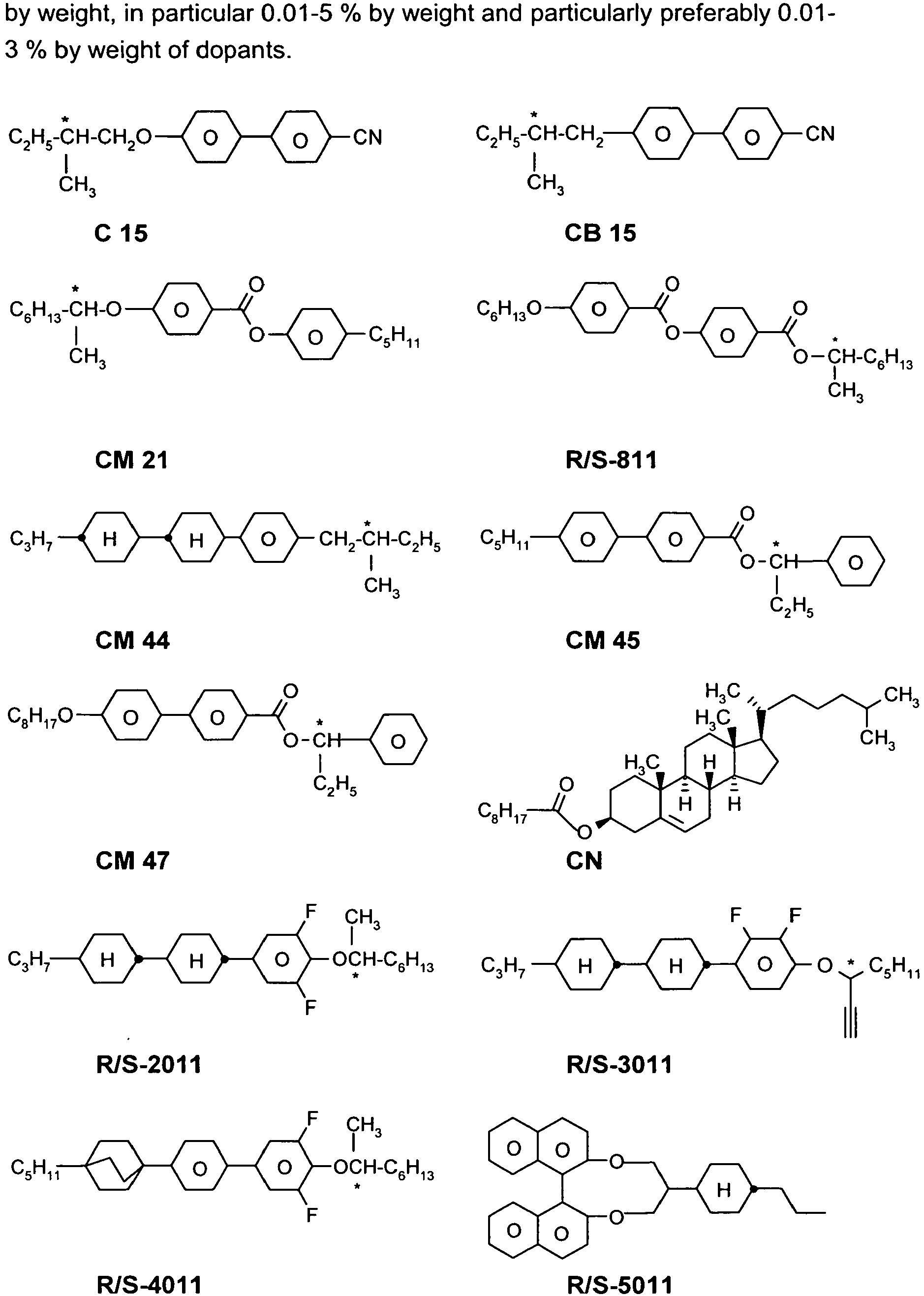

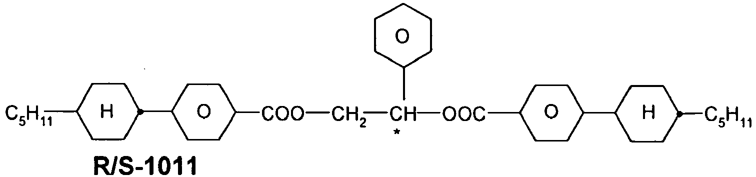

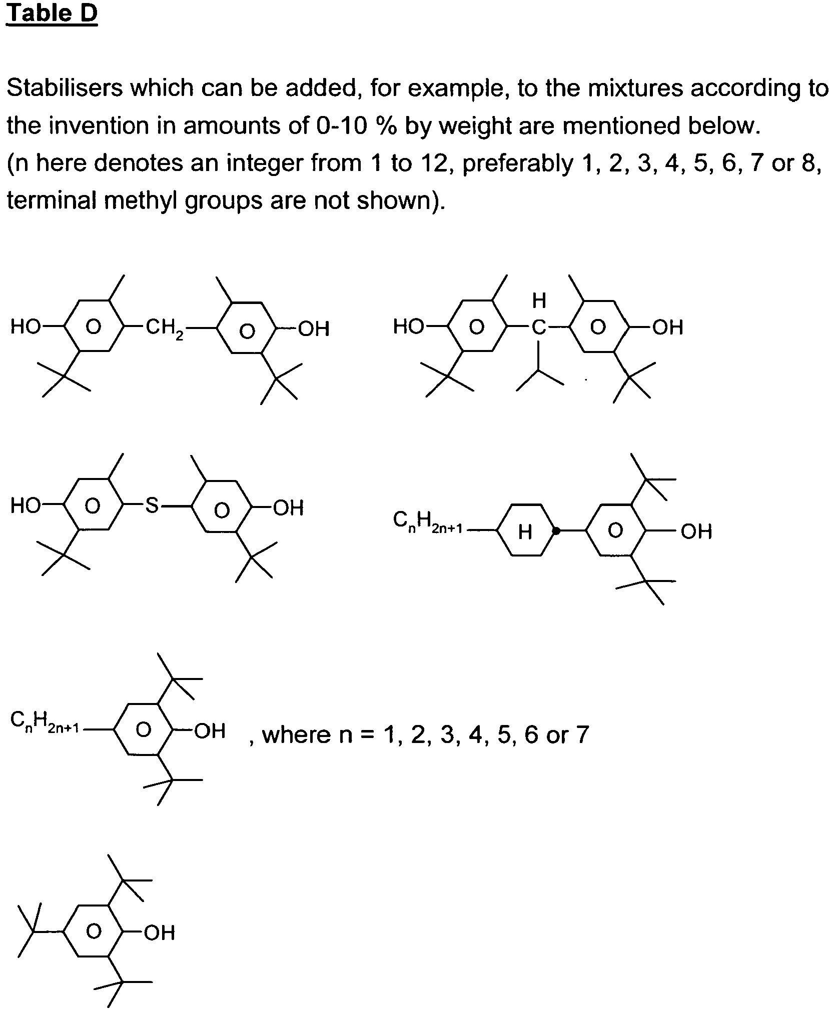

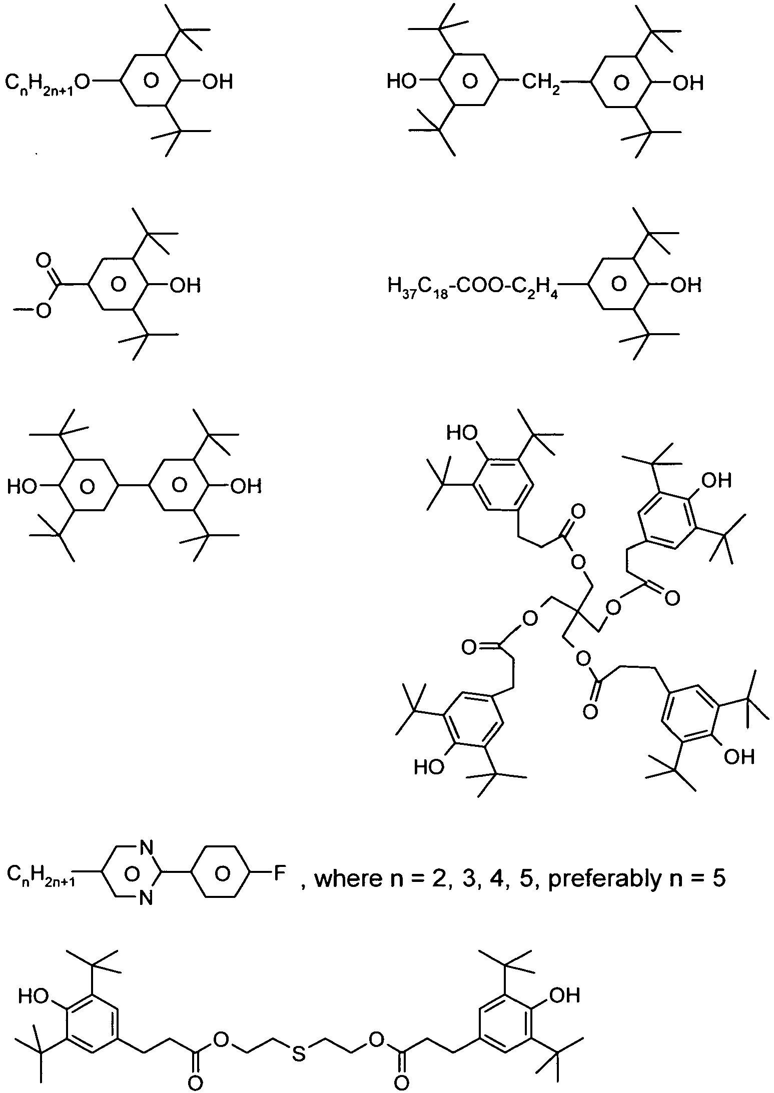

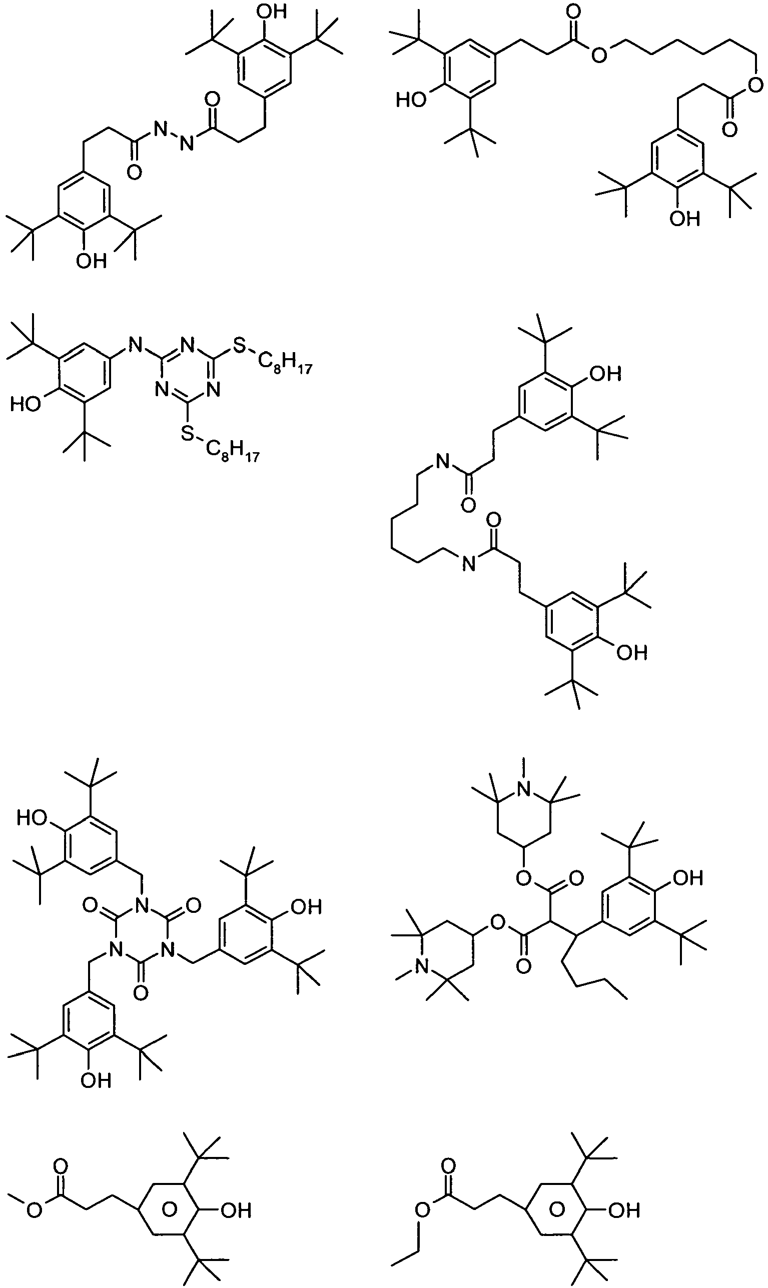

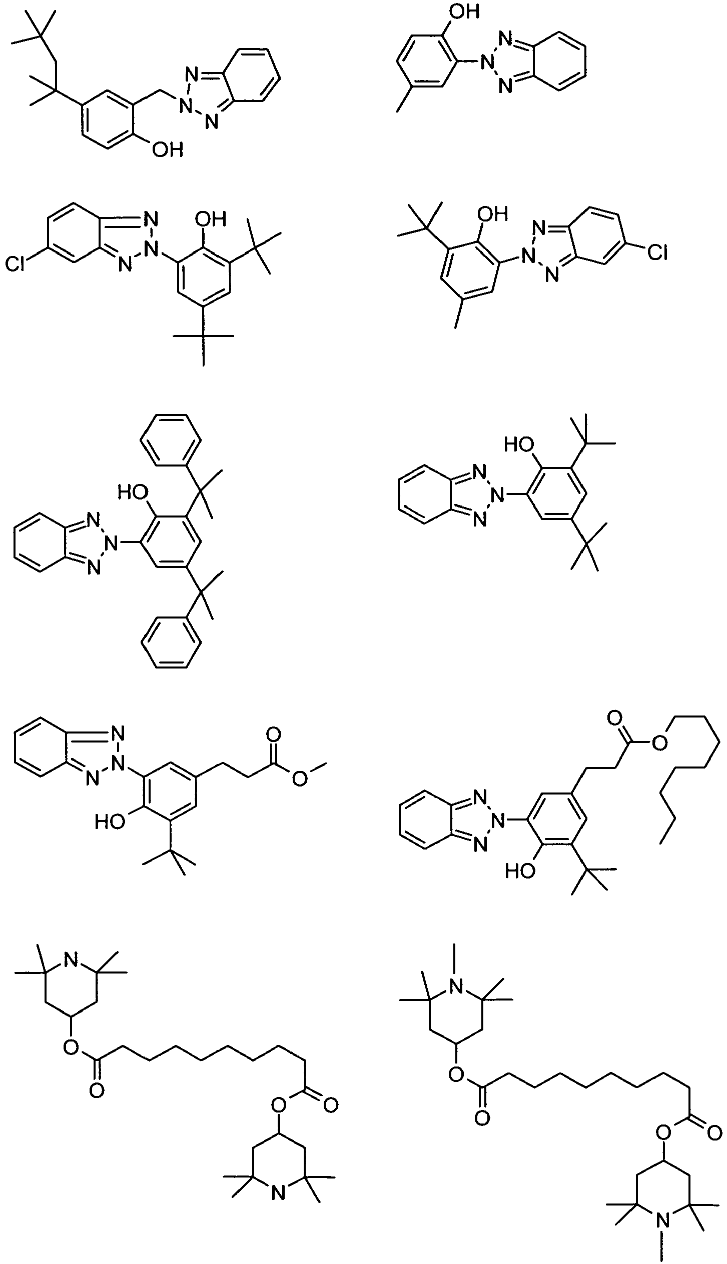

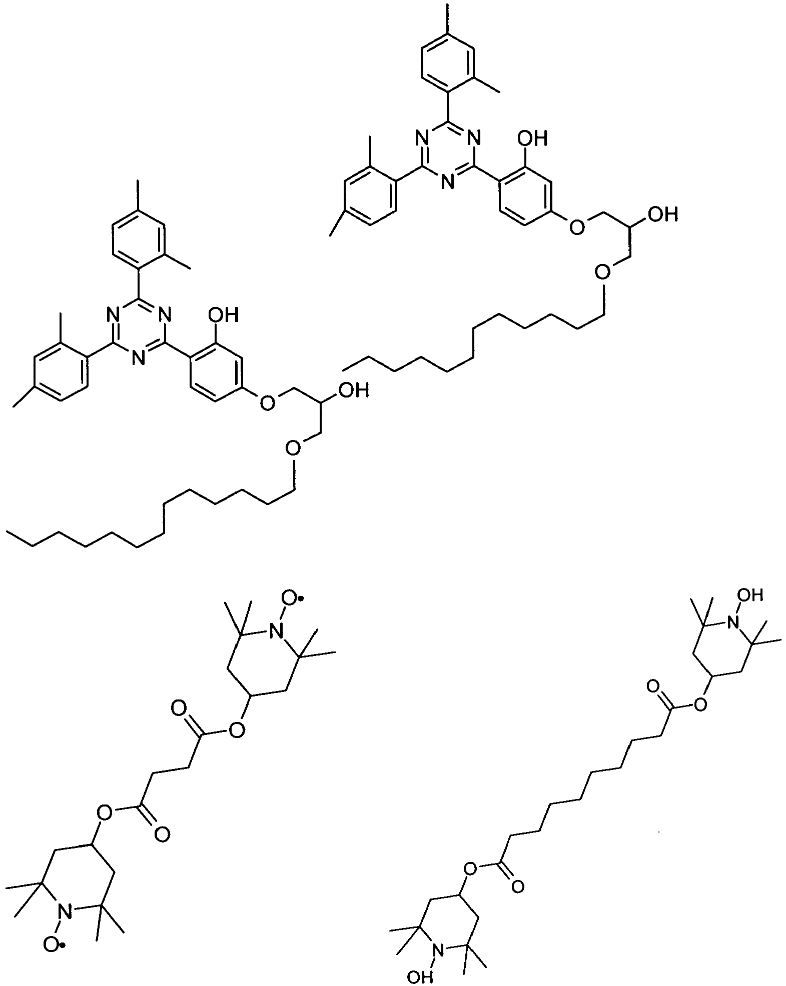

The LC media preferably contains 0 to 10 % by weight, in particular 1 ppm to 5 % by weight, particularly preferably 1 ppm to 1% by weight, of stabilisers. The LC media preferably contains one or more stabilisers selected from the group consisting of compounds from Table D.

**Table E**

| Table E shows illustrative compounds for component (A) which can be used in the LC media in accordance with the present invention, preferably as reactive mesogenic compounds. | |
|---|---|
| 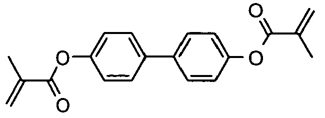 | RM-1 |
| 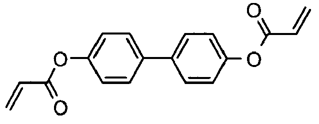 | RM-2 |
| 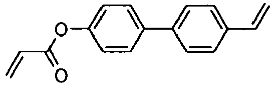 | RM-3 |
| 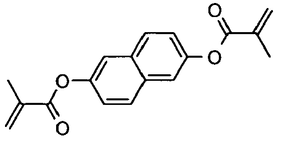 | RM-4 |
| 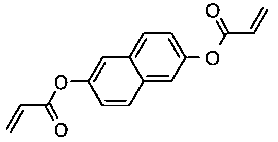 | RM-5 |
| 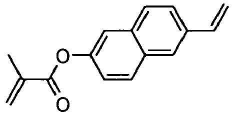 | RM-6 |
| 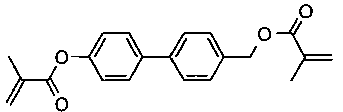 | RM-7 |
| 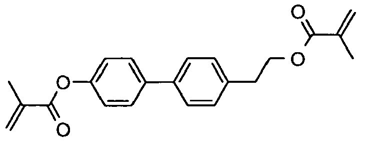 | RM-8 |
| 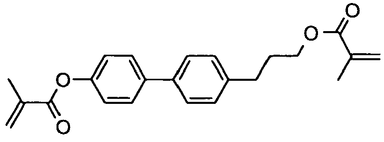 | RM-9 |
| 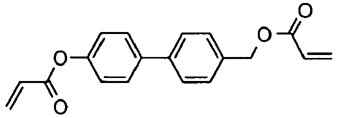 | RM-10 |
| 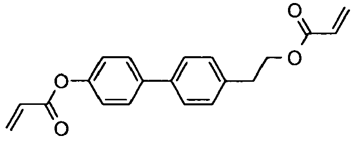 | RM-11 |
| 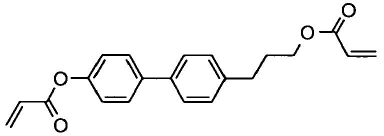 | RM-12 |
| 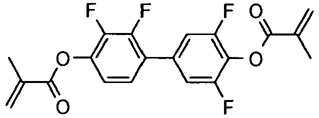 | RM-13 |
| 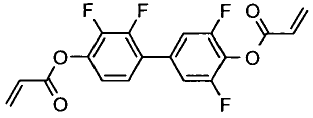 | RM-14 |
| 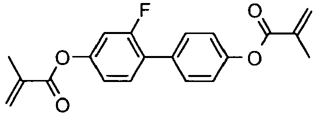 | RM-15 |
| 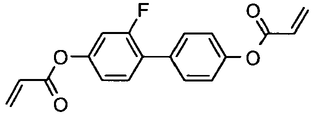 | RM-16 |
| 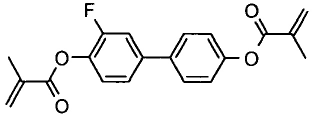 | RM-17 |
| 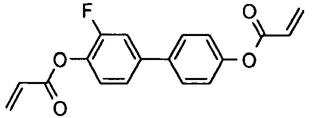 | RM-18 |
| 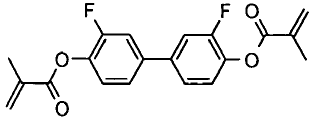 | RM-19 |
| 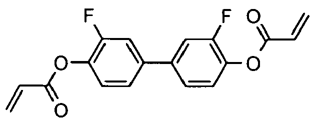 | RM-20 |
| 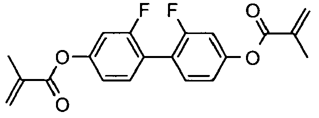 | RM-21 |
| 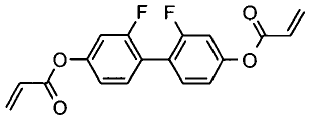 | RM-22 |
| 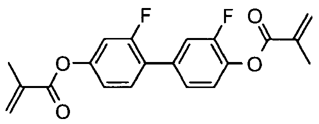 | RM-23 |
| 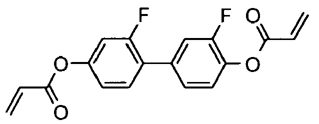 | RM-24 |
| 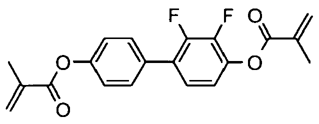 | RM-25 |
| 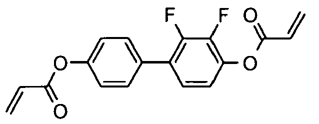 | RM-26 |
| 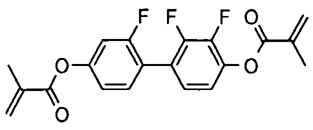 | RM-27 |
| 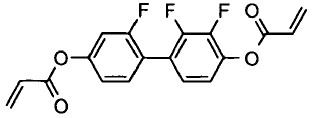 | RM-28 |
| 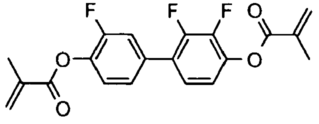 | RM-29 |
| 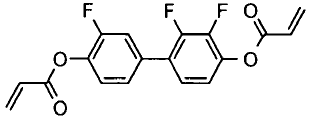 | RM-30 |
| 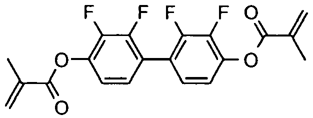 | RM-31 |
| 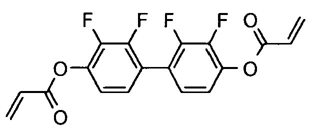 | RM-32 |
| 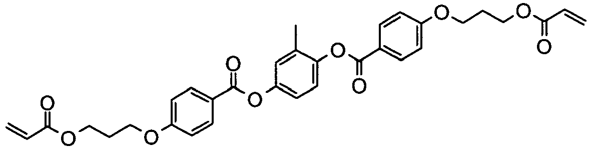 | RM-33 |
| 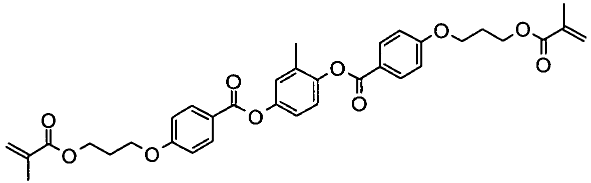 | RM-34 |
| 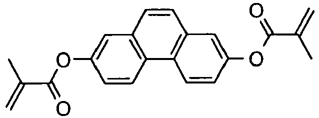 | RM-35 |
| 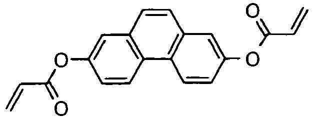 | RM-36 |
| 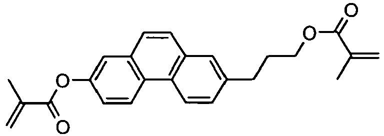 | RM-37 |
| 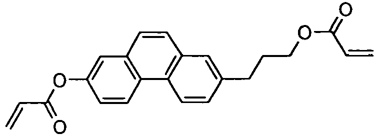 | RM-38 |
| 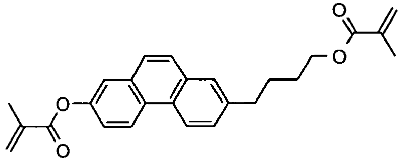 | RM-39 |
| 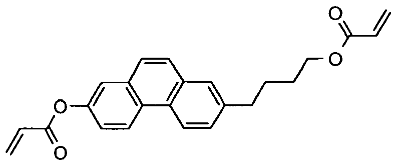 | RM-40 |
| 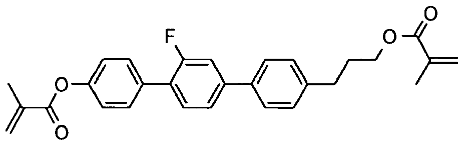 | RM-41 |
| 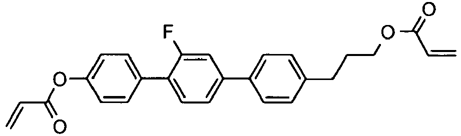 | RM-42 |
| 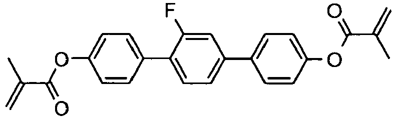 | RM-43 |
| 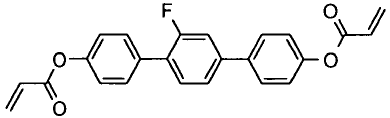 | RM-44 |
| 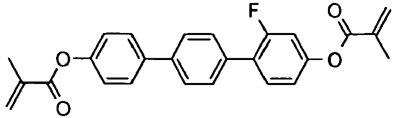 | RM-45 |
| 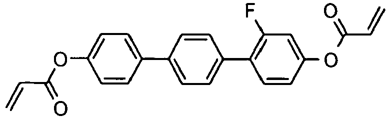 | RM-46 |
| 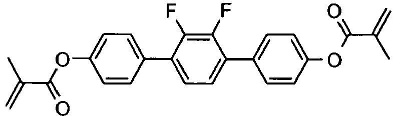 | RM-47 |
| 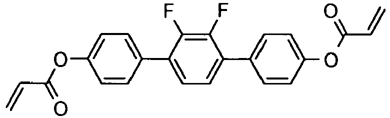 | RM-48 |
| 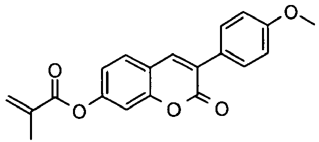 | RM-49 |
| 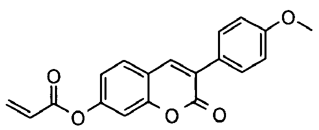 | RM-50 |
| 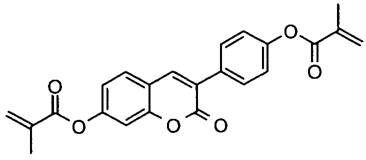 | RM-51 |
| 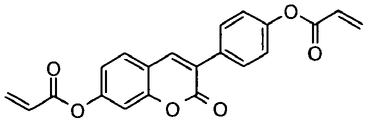 | RM-52 |
| 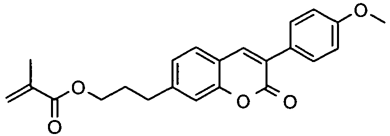 | RM-53 |
| 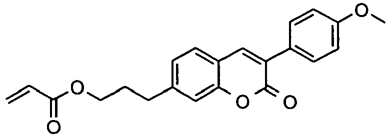 | RM-54 |
| 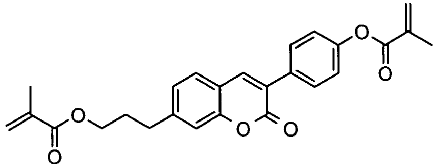 | RM-55 |
| 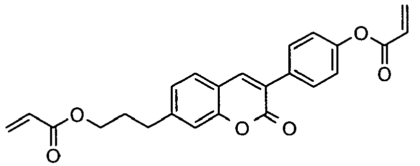 | RM-56 |
| 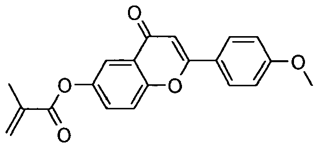 | RM-57 |
| 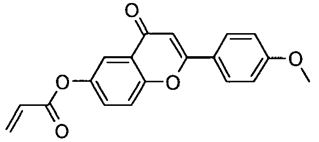 | RM-58 |
| 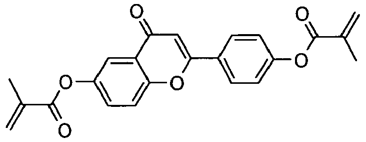 | RM-59 |
| 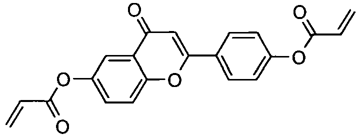 | RM-60 |
| 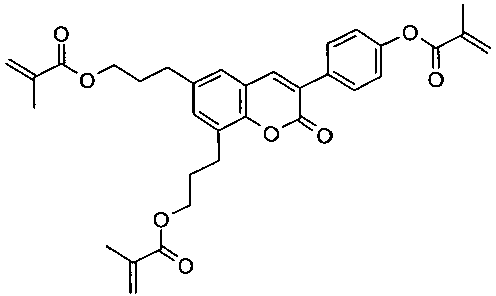 | RM-61 |
| 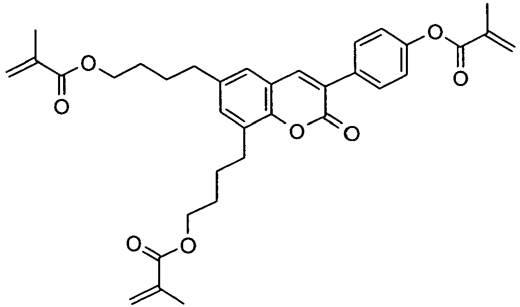 | RM-62 |
| 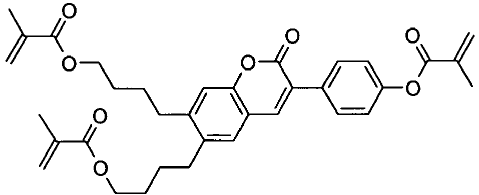 | RM-63 |
| 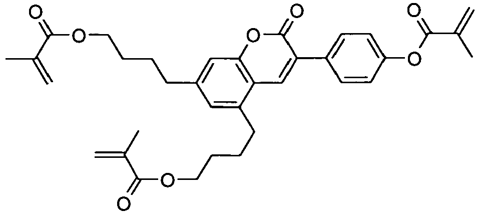 | RM-64 |
| 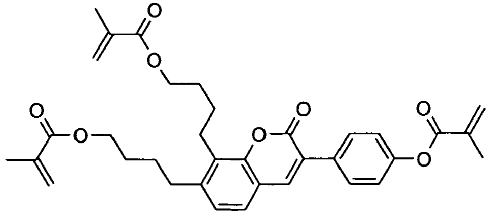 | RM-65 |
| 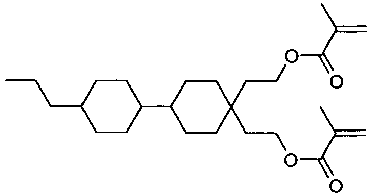 | RM-66 |
| 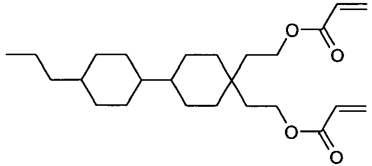 | RM-67 |
| 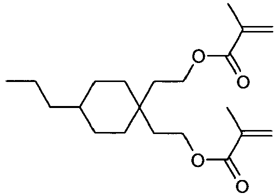 | RM-68 |
| 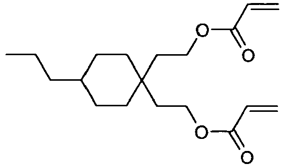 | RM-69 |
| 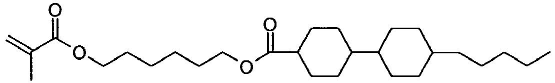 | RM-70 |
| 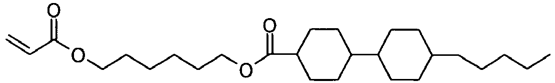 | RM-71 |
| 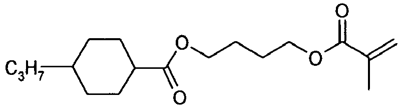 | RM-72 |
| 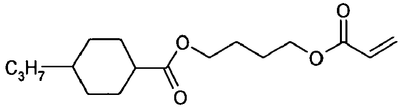 | RM-73 |
| 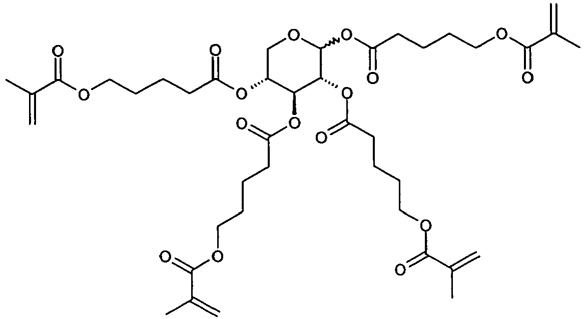 | RM-74 |
| 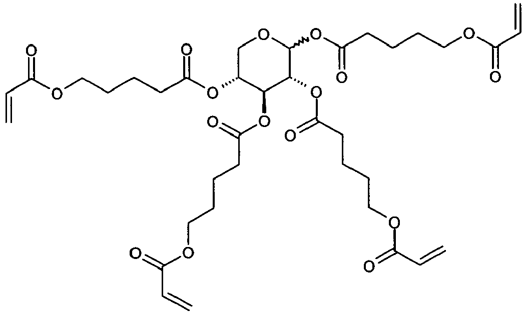 | RM-75 |
| 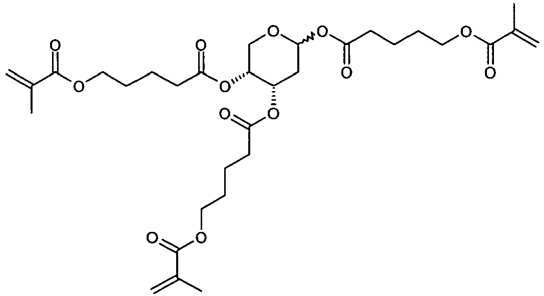 | RM-76 |
| 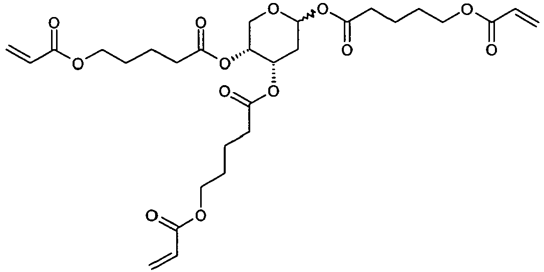 | RM-77 |
| 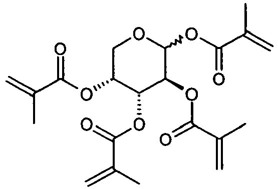 | RM-78 |
| 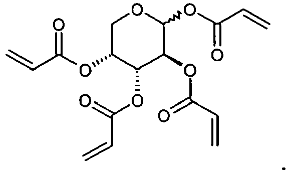 | RM-79 |

In a preferred embodiment of the present invention, the component (A) contains one or more compounds selected from the group of the compounds from Table E, in particular a compound of the formula RM-1, RM-2, RM-4, RM-33, RM-34, RM-35, RM-41, RM-43 and RM-61.

Above and below, the following abbreviations and symbols are used:
- V₁₀: threshold voltage [V] = characteristic voltage at a relative contrast of 10 %
- V₉₀: characteristic voltage [V] at a relative contrast of 90%
- V₀: Freederick voltage [V], capacitive, 20 °C
- VHR: voltage holding ratio [%]
- SR: specific resistance [Ω · cm] after x hours exposure to UV at room temperature
- nₑ: extraordinary refractive index at 20°C and 589 nm,
- nₒ: ordinary refractive index at 20°C and 589 nm,
- Δn: optical anisotropy at 20°C and 589 nm,
- ε_{⊥}: dielectric permittivity perpendicular to the the longitudinal molecular axes at 20°C and 1 kHz,
- ε_{∥}: dielectric permittivity parallel to the director at 20°C and 1 kHz,
- Δε: dielectric anisotropy at 20°C and 1 kHz,
- cl.p., T(N,I): clearing point [°C],
- γ₁: rotational viscosity [mPa·s], at 20°C
- K₁: elastic constant, "splay" deformation at 20°C [pN],
- K₂: elastic constant, "twist" deformation at 20°C [pN],
- K₃: elastic constant, "bend" deformation at 20°C [pN].

Unless explicitly noted otherwise, all concentrations in the present application are quoted in per cent by weight and relate to the corresponding mixture as a whole, comprising all solid or liquid-crystalline components, without solvents.

Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.

All physical properties are and have been determined in accordance with "Merck Liquid Crystals, Physical Properties of Liquid Crystals", Status Nov. 1997, Merck KGaA, Germany, and apply for a temperature of 20°C, and Δn is determined at 589 nm and Δε at 1 kHz, unless explicitly indicated otherwise in each case.

The SR is measured as described in G. Weber et al., Liquid Crystals 5, 1381 (1989).

The VHR is measured as described by T. Jacob and U. Finkenzeller in "Merck Liquid Crystals - Physical Properties of Liquid Crystals", 1997.

The term "threshold voltage" for the present invention relates to the capacitive threshold (V₀), also known as the Freedericks threshold, unless explicitly indicated otherwise. In the examples, the optical threshold may also, as generally usual, be quoted for 10% relative contrast (V₁₀).

Unless stated otherwise, the process of polymerising the polymerisable compounds in the displays as described above and below is carried out at a temperature where the LC medium exhibits a liquid crystal phase, preferably a nematic phase, and most preferably is carried out at room temperature.

Unless stated otherwise, methods of preparing test cells and measuring their electrooptical and other properties are carried out by the methods as described hereinafter or in analogy thereto.

The polymerisable compounds are polymerised in the display or test cell by irradiation with UVA light of defined intensity for a prespecified time, with a voltage simultaneously being applied to the display (usually 10 V to 30 V alternating current, 1 kHz). In the examples, unless indicated otherwise, a metal halide lamp and an intensity of 100 mW/cm² is used for polymerisation. The intensity is measured using a standard UVA meter (Hoenle UV-meter high end with UVA sensor).

The tilt angle can be determined by crystal rotation experiment (Autronic-Melchers TBA-105). A low value (i.e. a large deviation from the 90° angle) corresponds to a large tilt here.

The VHR value can be measured as follows: 0.3% of a polymerisable monomeric compound is added to the LC host mixture, and the resultant mixture is introduced into VA-VHR test cells (not rubbed, VA-polyimide alignment layer, LC-layer thickness d ≈ 6 µm). The HR value is determined after 5 min at 100°C before and after UV exposure at 1 V, 60 Hz, 64 µs pulse (measuring instrument: Autronic-Melchers VHRM-105).

### Examples

The following examples are intended to explain the invention without limiting it.

**Example 1**

| | | | |
|---|---|---|---|
| APUQU-3-F | 5.0 % | Clearing point [°C]: | 90.3 |
| CBC-33 | 2.5 % | Δn [589 nm, 20°C]: | 0.1062 |
| CC-3-V | 33.5 % | Δε [1 kHz, 20°C]: | +7.4 |
| CC-3-V1 | 10.0 % | K₃/K₁ [20 °C]: | 1.15 |
| CCP-3OCF₃ | 2.5 % | Kₐᵥₑ (IPS/FFS): | 12.7 |
| CCP-V-1 | 13.0 % | γ₁ [mPa·s, 20°C]: | 73 |
| CCP-V2-1 | 6.0 % | V₀ [V]: | 1.47 |
| CPGU-3-OT | 4.0 % | | |
| DPGU-4-F | 3.0 % | | |
| PGP-2-2V | 2.0 % | | |
| PGU-2-F | 3.0 % | | |
| PPGU-3-F | 1.0 % | | |
| PUQU-3-F | 14.0 % | | |

To the above given mixture is added 0.3 % by weight of a polymerizable compound of the following structure:

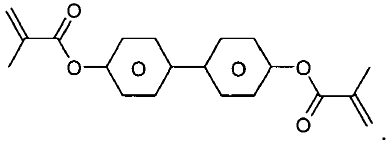

The mixture is introduced into a respective test cell and the polymerisable compound is polymerized via UV irradiation from a high-pressure Hg lamp. The energy of the UV exposure is 1-40 J. A wide-band-pass filter (300 nm ≤ λ ≤ 700 nm) together with soda-lime glass is applied, which reduces intensity of the UV radiation at shorter wavelengths. During the exposure a rectangular electric voltage (0 V ∼ 40 Vₚₚ) is applied to the cells.

**Example 2**

| | | | |
|---|---|---|---|
| APUQU-2-F | 6.0 % | Clearing point [°C]: | 79.1 |
| APUQU-3-F | 6.0 % | Δn [589 nm, 20°C]: | 0.1046 |
| BCH-3F.F.F | 5.0 % | Δε [1 kHz, 20°C]: | +12.3 |
| CC-3-V | 44.5 % | γ₁ [mPa·s, 20°C]: | 77 |
| CCGU-3-F | 2.5 % | V₀ [V]: | 1.03 |
| CCP-3OCF₃ | 8.0 % | | |
| CCQU-3-F | 5.0 % | | |
| CPGU-3-OT | 2.0 % | | |
| DPGU-4-F | 3.0 % | | |
| PGUQU-3-F | 6.0 % | | |
| PGUQU-4-F | 6.0 % | | |
| PPGU-3-F | 1.0 % | | |
| PUQU-2-F | 5.0 % | | |

To the above given mixture is added 0.1 % by weight of a polymerisable compound of the following structure

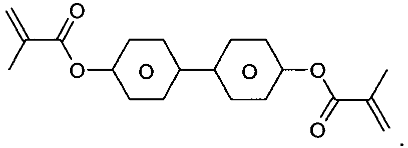

The mixture is introduced into a respective test cell and the polymerisable compound is polymerized via UV irradiation from a high-pressure Hg lamp. The energy of the UV exposure is 1-40 J. A wide-band-pass filter (300 nm ≤ λ ≤ 700 nm) together with soda-lime glass is applied, which reduces intensity of the UV radiation at shorter wavelengths. During the exposure a rectangular electric voltage (0 V ∼ 40 Vₚₚ) is applied to the cells.

The mixture is highly suitable for PS-FFS applications.

**Example 3**

| | | | |
|---|---|---|---|
| APUQU-2-F | 6.0 % | Clearing point [°C]: | 79.1 |
| APUQU-3-F | 6.0 % | Δn [589 nm, 20°C]: | 0.1046 |
| BCH-3F.F.F | 5.0 % | Δε [1 kHz, 20°C]: | +12.3 |
| CC-3-V | 44.5 % | γ₁ [mPa·s, 20°C]: | 77 |
| CCGU-3-F | 2.5 % | V₀ [V]: | 1.03 |
| CCP-3OCF₃ | 8.0 % | | |
| CCQU-3-F | 5.0 % | | |
| CPGU-3-OT | 2.0 % | | |
| DPGU-4-F | 3.0 % | | |
| PGUQU-3-F | 6.0 % | | |
| PGUQU-4-F | 6.0 % | | |
| PPGU-3-F | 1.0 % | | |
| PUQU-2-F | 5.0 % | | |

To the above given mixture is added 0.3 % by weight of a polymerisable compound of the following structure

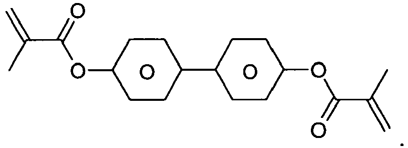

The mixture is introduced into a respective test cell and the polymerisable compound is polymerized via UV irradiation from a high-pressure Hg lamp. The energy of the UV exposure is 1-40 J. A wide-band-pass filter (300 nm ≤ λ ≤ 700 nm) together with soda-lime glass is applied, which reduces intensity of the UV radiation at shorter wavelengths. During the exposure a rectangular electric voltage (0 V ∼ 40 Vₚₚ) is applied to the cells.

The mixture is highly suitable for PS-FFS applications.

**Example 4**

| | | | |
|---|---|---|---|
| APUQU-2-F | 6.0 % | Clearing point [°C]: | 75 |
| APUQU-3-F | 8.0 % | Δn [589 nm, 20°C]: | 0.1222 |
| BCH-3F.F.F | 10.0 % | Δε [1 kHz, 20°C]: | +18.3 |
| CC-3-V | 33.0 % | K₃/K₁ [20 °C]: | 1.13 |
| CCP-3OCF₃ | 7.0 % | V₀ [V]: | 0.78 |
| CPGU-3-OT | 3.5 % | | |
| DPGU-4-F | 4.0 % | | |
| PGUQU-4-F | 7.0 % | | |
| PGUQU-3-F | 8.0 % | | |
| PPGU-3-F | 1.0 % | | |
| PUQU-3-F | 12.5 % | | |

To the above given mixture is added 0.3 % by weight of a polymerisable compound of the following structure

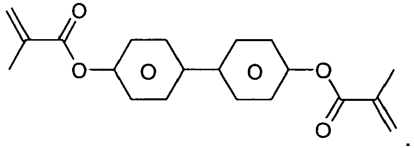

The mixture is introduced into a respective test cell and the polymerisable compound is polymerized via UV irradiation from a high-pressure Hg lamp. The energy of the UV exposure is 1-40 J. A wide-band-pass filter (300 nm ≤ λ ≤ 700 nm) together with soda-lime glass is applied, which reduces intensity of the UV radiation at shorter wavelengths. During the exposure a rectangular electric voltage (0 V ∼ 40 Vₚₚ) is applied to the cells.

The mixture is highly suitable for PS-FFS applications and VA-IPS applications. The PS-mixture of this example is especially preferred for TV applications with negative PI alignment for IPS driving.

**Example 5**

| | | | |
|---|---|---|---|
| APUQU-2-F | 3.5 % | Clearing point [°C]: | 89.7 |
| CC-3-V | 34.5 % | Δn [589 nm, 20°C]: | 0.1073 |
| CC-3-V1 | 9.0 % | Δε [1 kHz, 20°C]: | +6.5 |
| CCP-3OCF₃ | 8.0 % | K₃/K₁ [20 °C]: | 1.13 |
| CCP-V-1 | 12.0 % | γ₁ [mPa·s, 20°C]: | 68 |
| CCP-V2-1 | 4.5 % | V₀ [V]: | 1.56 |
| CPGU-3-OT | 3.5 % | | |
| CPGP-5-2 | 1.5 % | | |
| DPGU-4-F | 3.0 % | | |
| PGP-2-2V | 4.0 % | | |
| PGU-2-F | 4.5 % | | |
| PPGU-3-F | 1.0 % | | |
| PUQU-3-F | 11.0 % | | |

To the above given mixture is added 0.3 % by weight of a polymerisable compound of the following structure

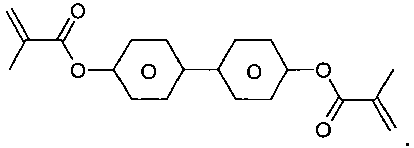

The mixture is highly suitable for PS-FFS applications and VA-IPS applications, especially for mobile applications.

**Example 6**

| | | | |
|---|---|---|---|
| APUQU-2-F | 3.5 % | Clearing point [°C]: | 89.7 |
| CC-3-V | 34.5 % | Δn [589 nm, 20°C]: | 0.1073 |
| CC-3-V1 | 9.0 % | Δε [1 kHz, 20°C]: | +6.5 |
| CCP-3OCF₃ | 8.0 % | K₃/K₁ [20 °C]: | 1.13 |
| CCP-V-1 | 12.0 % | γ₁ [mPa·s, 20°C]: | 68 |
| CCP-V2-1 | 4.5 % | V₀ [V]: | 1.56 |
| CPGU-3-OT | 3.5 % | | |
| CPGP-5-2 | 1.5% | | |
| DPGU-4-F | 3.0 % | | |
| PGP-2-2V | 4.0 % | | |
| PGU-2-F | 4.5 % | | |
| PPGU-3-F | 1.0 % | | |
| PUQU-3-F | 11.0 % | | |

To the above given mixture is added 0.3 % by weight of a polymerisable compound of the following structure

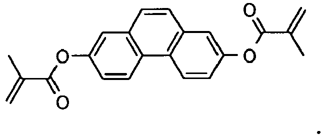

The mixture is highly suitable for PS-FFS applications and VA-IPS applications, especially for mobile applications.

**Example 7**

| | | | |
|---|---|---|---|
| APUQU-2-F | 3.5 % | Clearing point [°C]: | 89.7 |
| CC-3-V | 34.5 % | Δn [589 nm, 20°C]: | 0.1073 |
| CC-3-V1 | 9.0 % | Δε [1 kHz, 20°C]: | +6.5 |
| CCP-3OCF₃ | 8.0 % | K₃/K₁ [20 °C]: | 1.13 |
| CCP-V-1 | 12.0 % | γ₁ [mPa·s, 20°C]: | 68 |
| CCP-V2-1 | 4.5 % | V₀ [V]: | 1.56 |
| CPGU-3-OT | 3.5 % | | |
| CPGP-5-2 | 1.5 % | | |
| DPGU-4-F | 3.0 % | | |
| PGP-2-2V | 4.0 % | | |
| PGU-2-F | 4.5 % | | |
| PPGU-3-F | 1.0 % | | |
| PUQU-3-F | 11.0 % | | |

To the above given mixture is added 0.3 % by weight of a polymerisable compound of the following structure

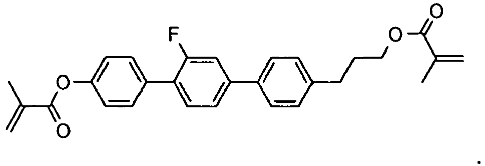

The mixture is highly suitable for PS-FFS applications and VA-IPS applications, especially for mobile applications.

**Example 8**

| | | | |
|---|---|---|---|
| BCH-3F.F | 3.5 % | Clearing point [°C]: | 89.2 |
| CC-3-V | 36.5 % | Δn [589 nm, 20°C]: | 0.1073 |
| CC-3-V1 | 7.0 % | Δε [1 kHz, 20°C]: | +6.4 |
| CCP-3OCF₃ | 10.0 % | K₃/K₁ [20 °C]: | 1.09 |
| CCP-V-1 | 12.5 % | γ₁ [mPa·s, 20°C]: | 68 |
| CDUQU-3-F | 5.5 % | V₀ [V]: | 1.57 |
| CPGP-5-2 | 2.5 % | | |
| DPGU-4-F | 4.0 % | | |
| PGP-2-2V | 4.5 % | | |
| PGU-2-F | 8.5 % | | |
| PPGU-3-F | 1.0 % | | |
| PUQU-3-F | 5.0 % | | |

To the above given mixture is added 0.3 % by weight of a polymerisable compound of the following structure

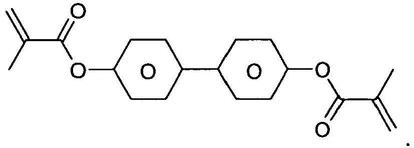

The mixture is highly suitable for PS-FFS applications and VA-IPS applications, especially for mobile applications.

**Example 9**

| | | | |
|---|---|---|---|
| BCH-3F.F | 3.5 % | Clearing point [°C]: | 89.2 |
| CC-3-V | 36.5 % | Δn [589 nm, 20°C]: | 0.1073 |
| CC-3-V1 | 7.0 % | Δε [1 kHz, 20°C]: | +6.4 |
| CCP-3OCF₃ | 10.0 % | K₃/K₁ [20 °C]: | 1.09 |
| CCP-V-1 | 12.5 % | γ₁ [mPa·s, 20°C]: | 68 |
| CDUQU-3-F | 5.5 % | V₀ [V]: | 1.57 |
| CPGP-5-2 | 2.5 % | | |
| DPGU-4-F | 4.0 % | | |
| PGP-2-2V | 4.5 % | | |
| PGU-2-F | 8.5 % | | |
| PPGU-3-F | 1.0 % | | |
| PUQU-3-F | 5.0 % | | |

To the above given mixture is added 0.3 % by weight of a polymerisable compound of the following structure

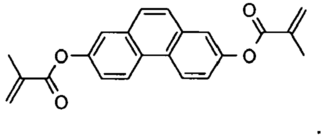

The mixture is highly suitable for PS-FFS applications and VA-IPS applications, especially for mobile applications.

**Example 10**

| | | | |
|---|---|---|---|
| BCH-3F.F | 3.5 % | Clearing point [°C]: | 89.2 |
| CC-3-V | 36.5 % | Δn [589 nm, 20°C]: | 0.1073 |
| CC-3-V1 | 7.0 % | Δε [1 kHz, 20°C]: | +6.4 |
| CCP-3OCF₃ | 10.0 % | K₃/K₁ [20 °C]: | 1.09 |
| CCP-V-1 | 12.5 % | γ₁ [mPa·s, 20°C]: | 68 |
| CDUQU-3-F | 5.5 % | V₀ [V]: | 1.57 |
| CPGP-5-2 | 2.5 % | | |
| e4-F | 4.0 % | | |
| PGP-2-2V | 4.5 % | | |
| PGU-2-F | 8.5 % | | |
| PPGU-3-F | 1.0 % | | |
| PUQU-3-F | 5.0 % | | |

To the above given mixture is added 0.3 % by weight of a polymerisable compound of the following structure

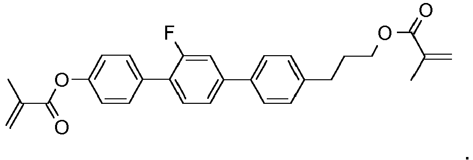

The mixture is highly suitable for PS-FFS applications and VA-IPS applications, especially for mobile applications.

**Comparative Example 1**

| | | | |
|---|---|---|---|
| APUQU-2-F | 6.0 % | Clearing point [°C]: | 80.4 |
| APUQU-3-F | 6.0 % | Δn [589 nm, 20°C]: | 0.1002 |
| BCH-32 | 5.0 % | Δε [1 kHz, 20°C]: | +9.6 |
| CC-3-V | 32.5 % | K₃/K₁ [20 °C]: | 1.16 |
| CCP-3OCF₃ | 8.0 % | γ₁ [mPa·s, 20°C]: | 58 |
| CCP-V-1 | 18.0 % | V₀ [V]: | 1.18 |
| CDUQU-3-F | 5.0 % | | |
| PP-1-2V1 | 2.0 % | | |
| PUQU-2-F | 5.0 % | | |
| PUQU-3-F | 12.5 % | | |

To the above given mixture is added 0.3 % by weight of a polymerisable compound of the following structure

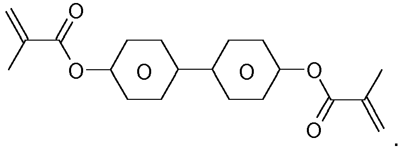

The mixture is highly suitable for PS-FFS applications and VA-IPS applications. The PS-mixture of this example is especially preferred for niotebook applications with negative PI alignment for FFS driving.

**Example 11**

| | | | |
|---|---|---|---|
| APUQU-2-F | 6.0 % | Clearing point [°C]: | 80.2 |
| APUQU-3-F | 6.0 % | Δn [589 nm, 20°C]: | 0.0998 |
| BCH-3F.F.F | 3.5 % | Δε [1 kHz, 20°C]: | +9.4 |
| CC-3-V | 44.5 % | K₃/K₁ [20 °C]: | 1.15 |
| CCP-3OCF₃ | 2.5 % | γ₁ [mPa·s, 20°C]: | 55 |
| CCP-V-1 | 16.5 % | V₀ [V]: | 1.17 |
| DPGU-4-F | 5.5 % | | |
| PGUQU-3-F | 6.0 % | | |
| PUQU-3-F | 9.5 % | | |

To the above given mixture is added 0.3 % by weight of a polymerisable compound of the following structure

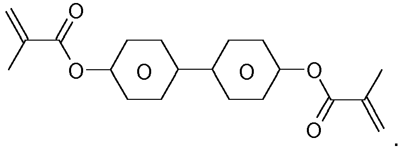

The mixture is highly suitable for PS-FFS applications and VA-IPS applications. The PS-mixture of this example is especially preferred for notebook applications with negative PI alignment for FFS driving.

**Comparative Example 2**

| | | | |
|---|---|---|---|
| APUQU-2-F | 6.0 % | Clearing point [°C]: | 80.1 |
| APUQU-3-F | 7.0 % | Δn [589 nm, 20°C]: | 0.1012 |
| BCH-32 | 5.0 % | Δε [1 kHz, 20°C]: | +9.5 |
| CC-3-V | 32.0 % | K₃/K₁ [20 °C]: | 1.09 |
| CCP-3OCF₃ | 8.0 % | γ₁ [mPa·s, 20°C]: | 58 |
| CCP-V-1 | 18.0 % | V₀ [V]: | 1.19 |
| CDUQU-3-F | 4.0 % | | |
| PP-1-2V1 | 2.5 % | | |
| PUQU-2-F | 5.0 % | | |
| PUQU-3-F | 12.5 % | | |

To the above given mixture is added 0.3 % by weight of a polymerisable compound of the following structure

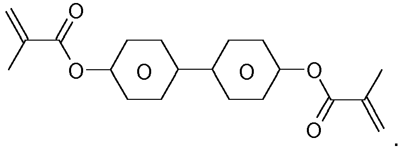

The mixture is highly suitable for PS-FFS applications and VA-IPS applications. The PS-mixture of this example is especially preferred for notebook applications with negative PI alignment for FFS driving.

## Claims

1. Liquid-crystalline medium, **characterised in that** it contains
- a polymerisable component (A) containing one or more polymerisable compounds,
- a liquid crystalline component (B) containing one or more compounds of the general formula I 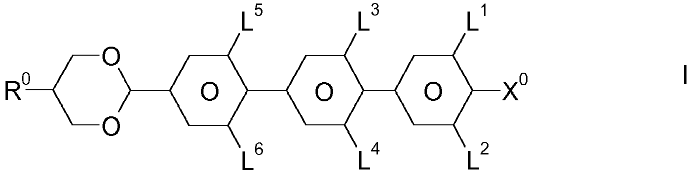 in which
R⁰ denotes an alkyl or alkoxy radical having 1 to 15 C atoms, where, in addition, one or more CH₂ groups in these radicals may each be replaced, independently of one another, by -C≡C-, -CF₂O-, -CH=CH-, 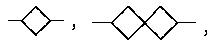 -O-, -CO-O- or -O-CO- in such a way that O atoms are not linked directly to one another, and where, in addition, one or more H atoms may be replaced by halogen atoms,
X⁰ denotes F, Cl, CN, SF₅, SCN, NCS, a halogenated alkyl radical, a halogenated alkenyl radical, a halogenated alkoxy radical or a halogenated alkenyloxy radical having up to 6 C atoms, and
L¹⁻⁶ each, independently of one another, denote H or F and
additionally one or more compounds selected from the group of formulae X, XI and XII 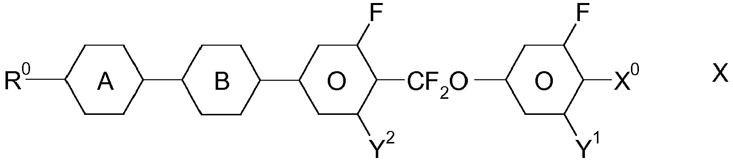 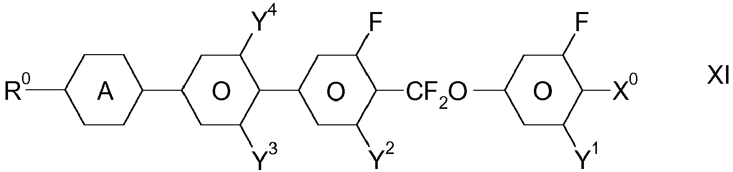 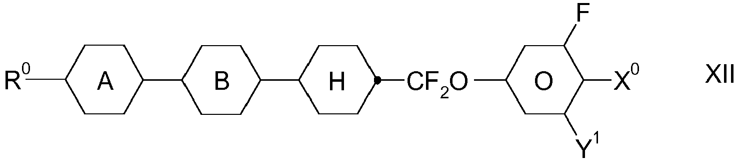 in which
Y¹⁻⁴, independently of one another, denote H or F, and
R⁰ and X⁰ have the meaning indicated in formula I, and 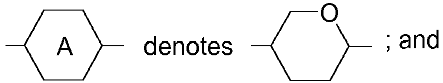 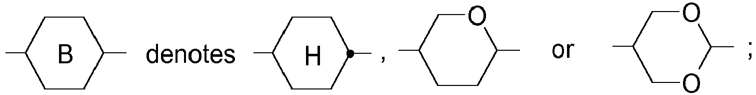 with the proviso that the media having one of the following compositions
| Composition Abbreviation | c/% | Physical properties | |
|---|---|---|---|
| CC-3-V | 37.0% | Clearing point [°C]: | 80.0 |
| CCP-V-1 | 5.0% | Δn [589 nm, 20°C]: | 0.1287 |
| PGU-2-F | 3.0% | Δε [1 kHz, 20°C]: | 17.3 |
| PGU-3-F | 8.0% | γ₁ [mPa·s, 20°C]: | 99 |
| BCH-3F.F.F | 8.0% | LTS [bulk, -25°C]: | > 1000 h |
| APUQU-2-F | 7.0% | V₁₀ [V]: | 1.05 |
| APUQU-3-F | 8.0% | | |
| PGUQU-3-F | 4.0% | | |
| PGUQU-4-F | 6.0% | | |
| PGUQU-5-F | 6.0% | | |
| DPGU-4-F | 8.0% | | |
| Composition Abbreviation | c/% | Physical properties | |
|---|---|---|---|
| CC-3-V | 22.0% | Clearing point [°C]: | 79.5 |
| CCP-1F.F.F | 3.0% | Δn [589 nm, 20°C]: | 0.1294 |
| CCP-2F.F.F | 9.0% | Δε [1 kHz, 20°C]: | 20.2 |
| CCP-3F.F.F | 9.0% | γ₁ [mPa·s, 20°C]: | 129 |
| CPU-3-OXF | 12.0% | LTS [bulk, -25°C]: | > 1000 h |
| PGU-2-F | 3.0% | V₁₀[V]: | 1.05 |
| PGU-3-F | 6.0% | | |
| APUQU-2-F | 7.0% | | |
| APUQU-3-F | 7.0% | | |
| PGUQU-3-F | 4.0% | | |
| PGUQU-4-F | 5.0% | | |
| PGUQU-5-F | 6.0% | | |
| DPGU-4-F | 7.0% | | |
| Composition Abbreviation | c/% | Physical properties | |
|---|---|---|---|
| CC-3-V | 33.0% | Clearing point [°C]: | 93.5 |
| CC-3-V1 | 12.0% | Δn [589 nm, 20°C]: | 0.1086 |
| CCP-V2-1 | 6.0% | Δε [1 kHz, 20°C]: | 13.7 |
| CCP-30CF3 | 6.0% | γ₁ [mPa·s, 20°C]: | 92 |
| CCQU-3-F | 4.0% | V₀ [V]: | 1.09 |
| APUQU-2-F | 10.0% | | |
| APUQU-3-F | 10.0% | | |
| PGUQU-3-F | 5.0% | | |
| PGUQU-4-F | 8.0% | | |
| DPGU-4-F | 6.0% | | |
| Composition Abbreviation | c/% | Physical properties | |
|---|---|---|---|
| CC-3-V | 31.0 | Clearing point [°C]: | 96.0 |
| CC-3-V1 | 12.0 | Δn [589 nm, 20°C]: | 0.1087 |
| CCP-V2-1 | 5.0 | Δε [1 kHz, 20°C]: | 15.2 |
| CCGU-3-F | 3.0 | γ₁ [mPa·s, 20°C]: | 106 |
| CCQU-3-F | 11.0 | V₀ [V]: | 1.03 |
| APUQU-2-F | 10.0 | | |
| APUQU-3-F | 10.0 | | |
| PGUQU-3-F | 5.0 | | |
| PGUQU-4-F | 6.0 | | |
| DPGU-4-F | 7.0 | | |
| Composition Abbreviation | c/% | Physical properties | | | |
|---|---|---|---|---|---|
| APUQU-3-F | 5.5 | T(N,I) | = | 90.3 | °C |
| CCQU-5-F | | nₑ(20°C, 589.3 nm) | = | 1.5919 | |
| PUQU-3-F | 14.0 | Δn (20°C, 589.3 nm) | = | 0.1062 | |
| CCP-3-OT | 2.5 | ε_{∥} (20°C, 1 kHz) | = | 10.5 | |
| PGU-2-F | 3.0 | Δε (20°C, 1 kHz) | = | 7.4 | |
| CPGU-3-OT | 4.0 | γ₁ (20°C) | = | 73 | mPa·s |
| DPGU-4-F | 3.0 | k₁ (20°C) | = | 14.3 | pN |
| CC-3-V | 33.5 | k₃/k₁(20°C) | = | 1.15 | |
| CC-3-V1 | 10.0 | V₁₀ (20°C) | = | 1.70 | V |
| CCP-V-1 | 13.0 | V₉₀ (20°C) | = | 2.57 | V |
| CCP-V2-1 | 6.0 | | | | |
| PGP-2-2V | 2.0 | | | | |
| CPPC-3-3 | 9.5 | | | | |
are excluded.

2. Liquid-crystalline medium according to Claim 1, **characterised in that** liquid crystalline component (B) additionally contains one or more compounds of the general formula IA 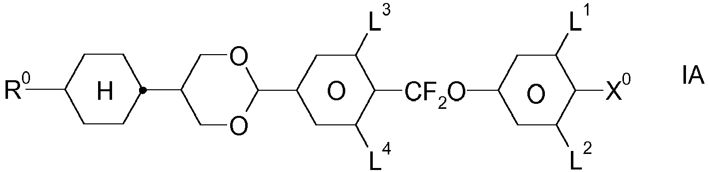 wherein R⁰, L¹⁻⁴ and X⁰ have the meanings indicated in Claim 1.

3. Liquid-crystalline medium according to Claim 1 or 2, **characterised in that** the polymerisable component (A) contains at least one polymerisable compound selected from the group of the compounds of the formula 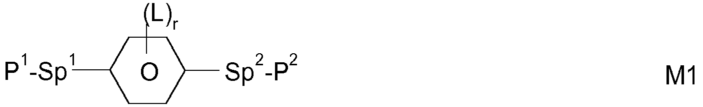 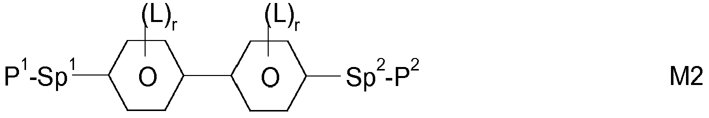 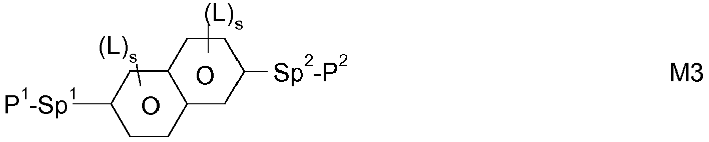 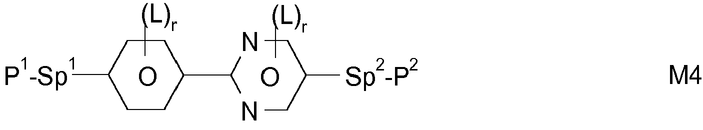 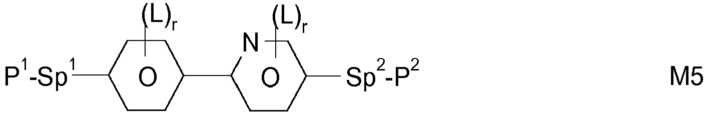 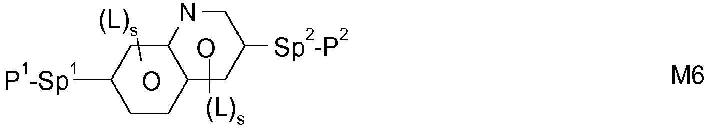 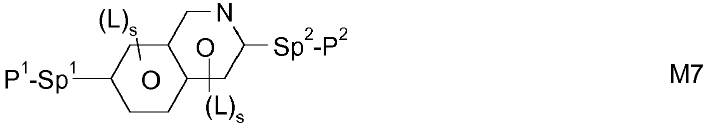 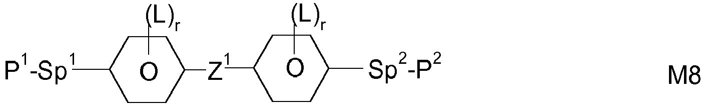 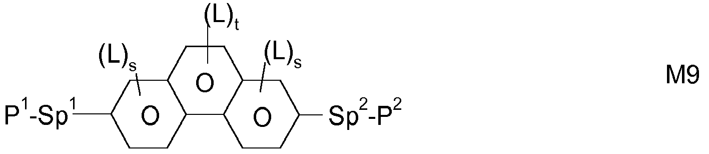 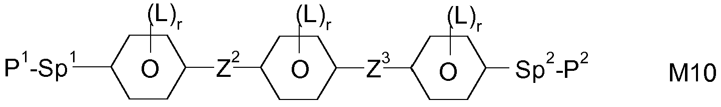 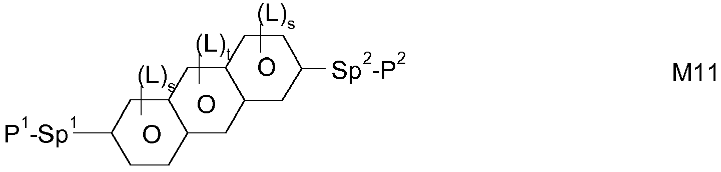 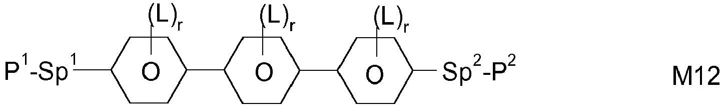 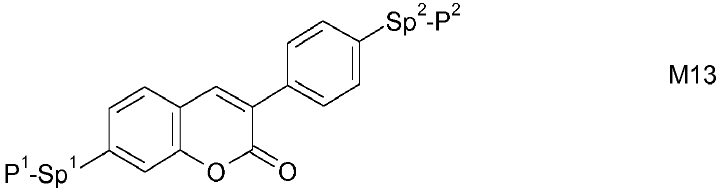 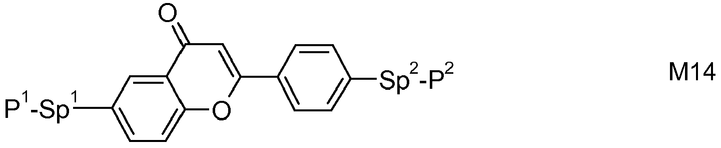 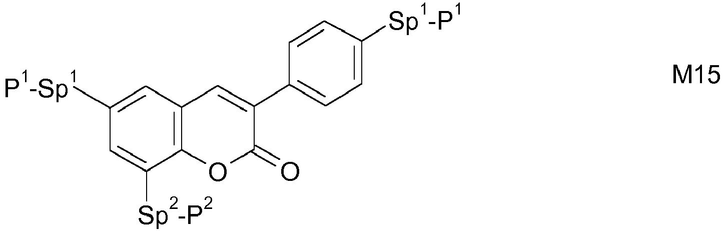 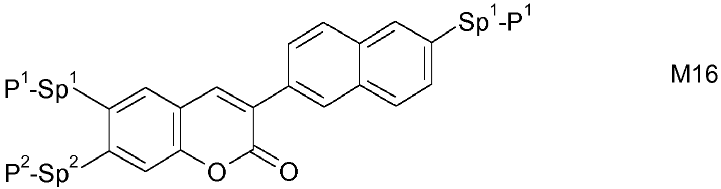 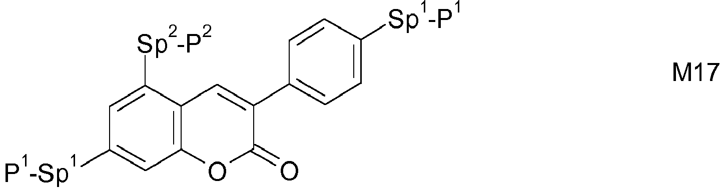 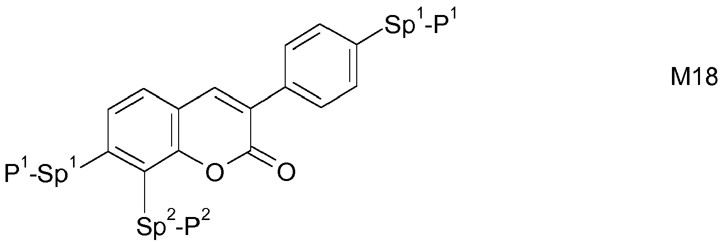 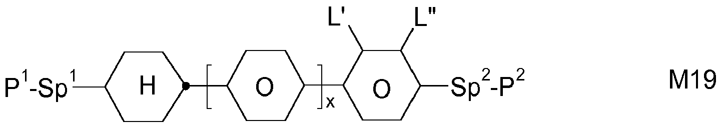 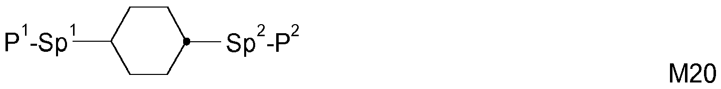 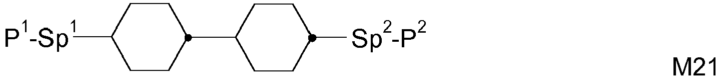 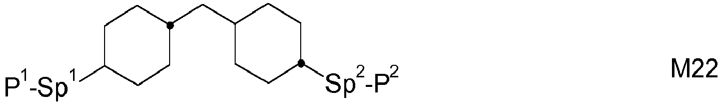 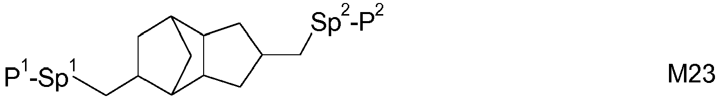 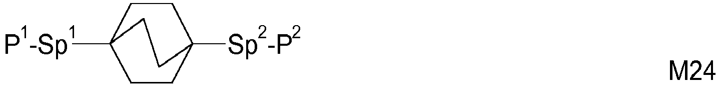 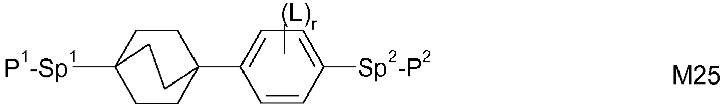 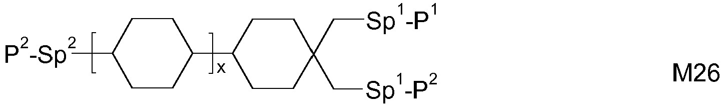 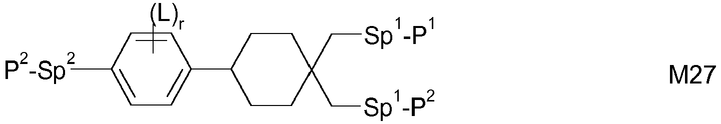 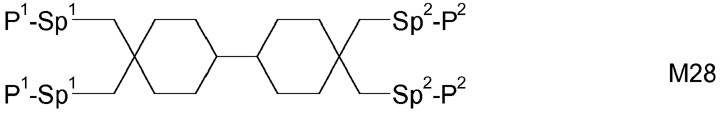 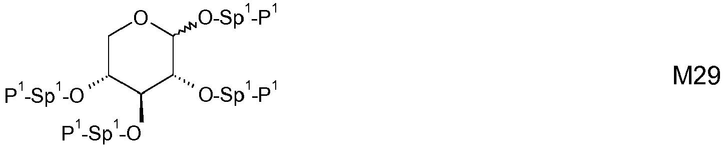 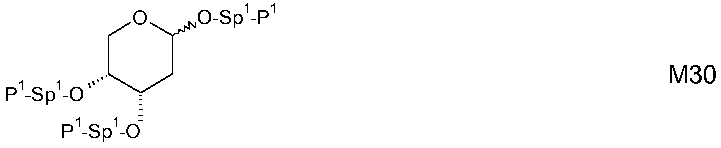 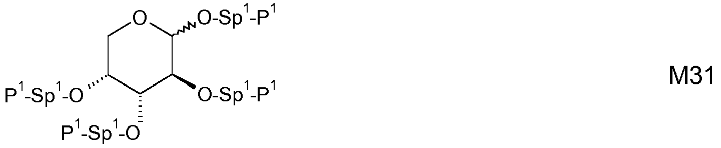 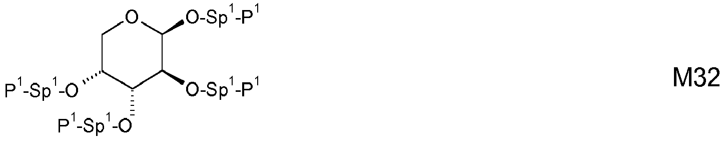 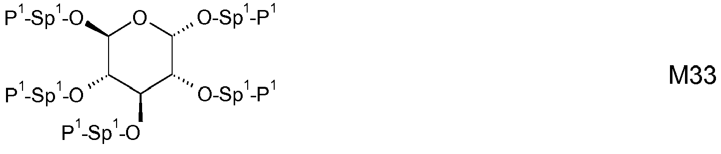 in which the individual radicals have the following meanings:
P¹ and P² each, independently of one another, denote a polymerisable group, preferably having one of the meanings indicated above and below for P, particularly preferably an acrylate, methacrylate, fluoroacrylate, oxetane, vinyl, vinyloxy or epoxide group,
Sp¹ and Sp² each, independently of one another, denote a single bond or a spacer group, preferably having one of the meanings indicated above and below for Sp, and particularly preferably denote -(CH₂)ₚ₁-, -(CH₂)ₚ₁-O-, -(CH₂)ₚ₁-CO-O- or -(CH₂)ₚ₁-O-CO-O-, in which p1 is an integer from 1 to 12, and where the linking to the adjacent ring in the last-mentioned groups takes place via the O atom, where, in addition, one or more of the radicals P¹-Sp¹- and P²-Sp²- may denote R^{aa}, with the proviso that at least one of the radicals P¹-Sp¹- and P²-Sp²- present does not denote R^{aa},
R^{aa} denotes H, F, Cl, CN or straight-chain or branched alkyl having 1 to 25 C atoms, in which, in addition, one or more non-adjacent CH₂ groups may each be replaced, independently of one another, by C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),
R⁰, R⁰⁰ each, independently of one another and identically or differently on each occurrence, denote H or alkyl having 1 to 12 C atoms,
R^{y} and R^{z} each, independently of one another, denote H, F, CH₃ or CF₃,
Z¹ denotes -O-, -CO-, -C(R^{y}R^{z})- or -CF₂CF₂-,
Z² and Z³ each, independently of one another, denote -CO-O-, -O-CO-, -CH₂O-, -OCH₂-, -CF₂O-, -OCF₂- or -(CH₂)ₙ-, where n is 2, 3 or 4,
L on each occurrence, identically or differently, denotes F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms, preferably F,
L' and L" each, independently of one another, denote H, F or Cl,
r denotes 0, 1, 2, 3 or 4,
s denotes 0, 1, 2 or 3,
t denotes 0, 1 or 2,
x denotes 0 or 1.

4. Liquid-crystalline medium according to one or more of Claim 1 to 3, **characterised in that** the polymerisable component (A) contains at least one polymerisable compound selected from the group RM-1 to RM-79

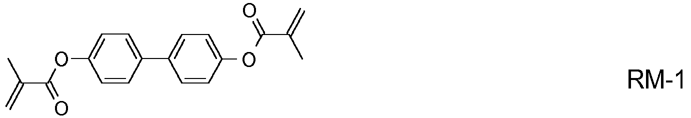

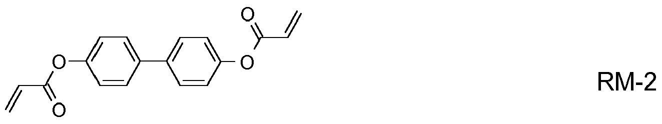

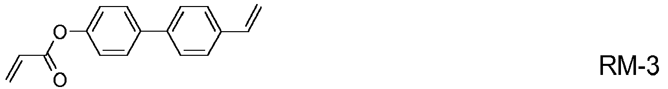

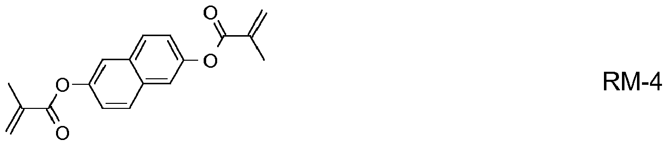

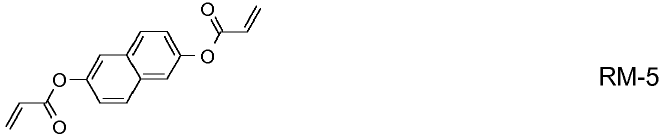

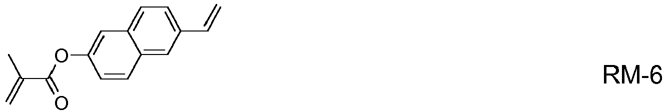

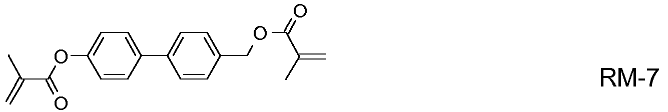

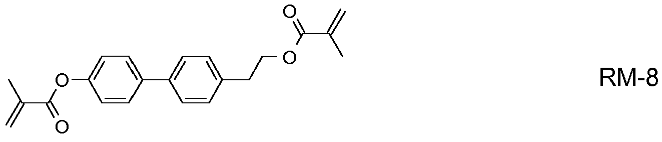

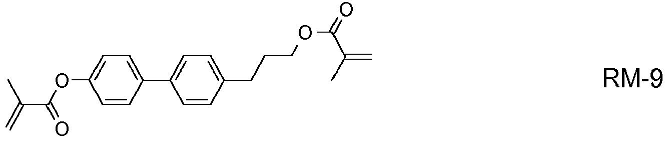

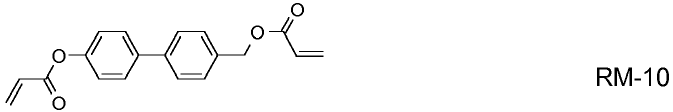

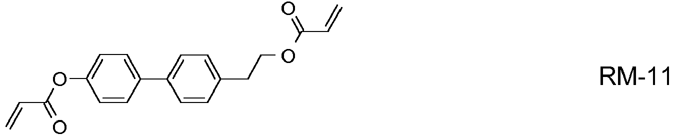

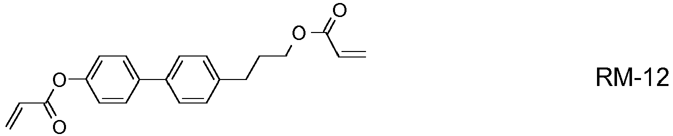

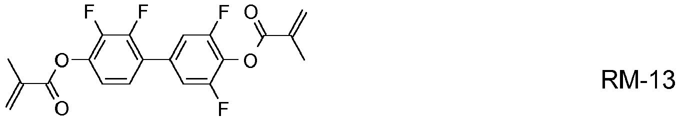

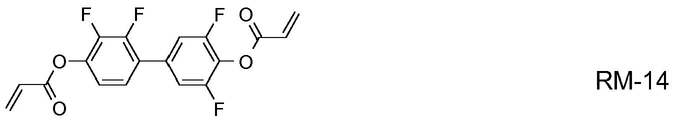

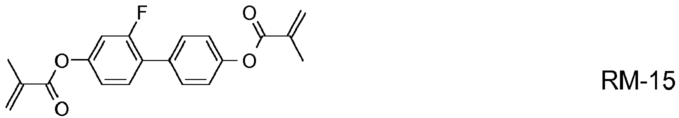

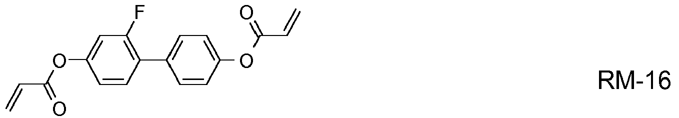

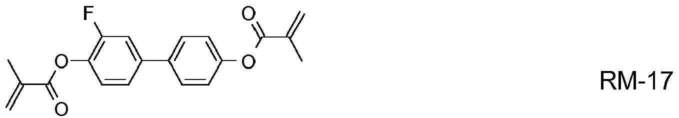

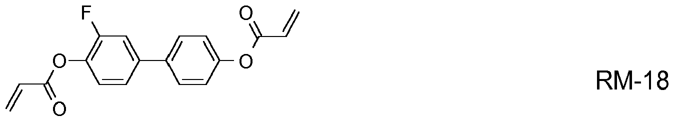

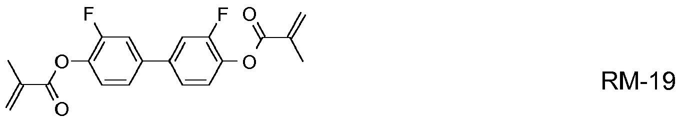

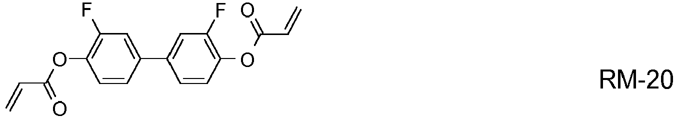

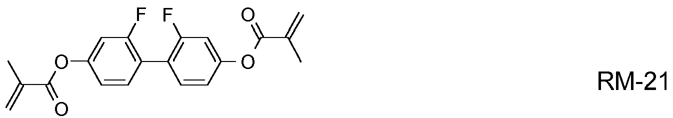

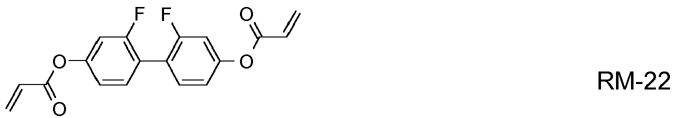

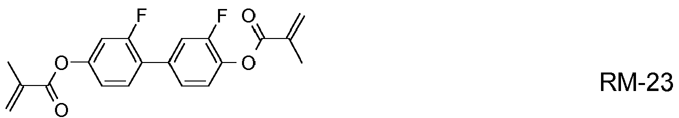

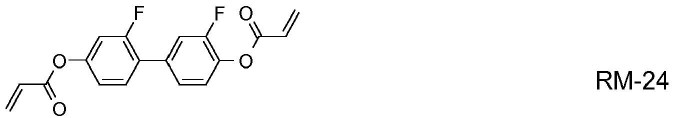

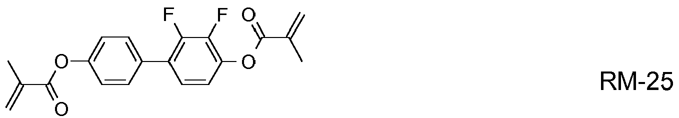

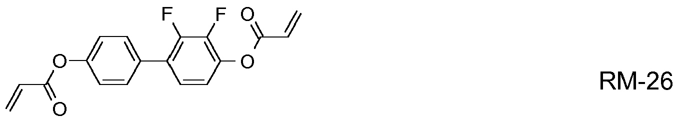

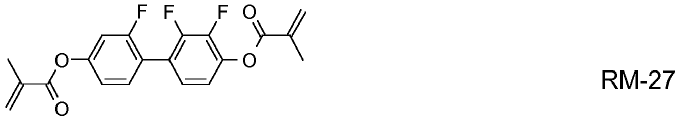

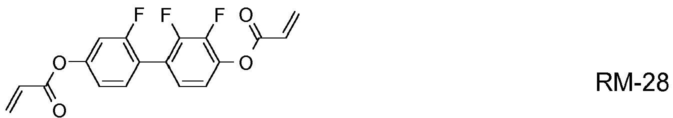

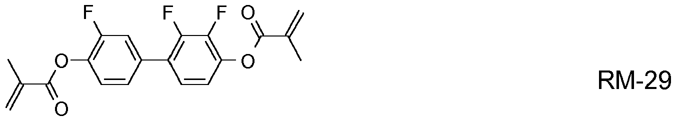

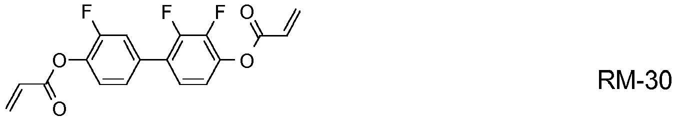

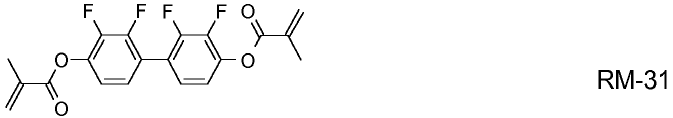

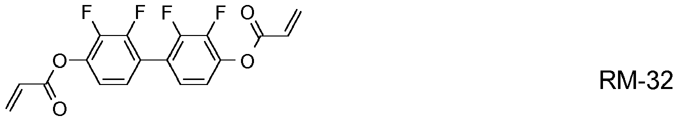

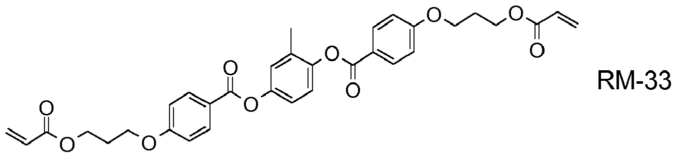

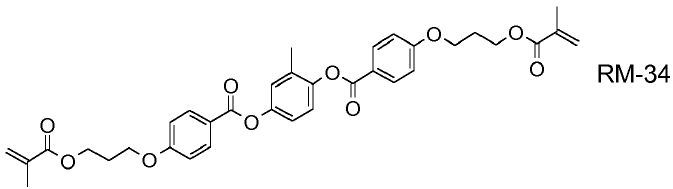

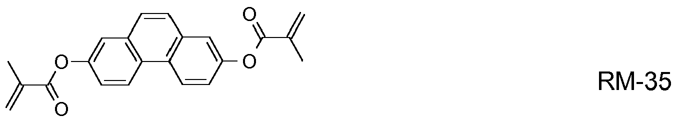

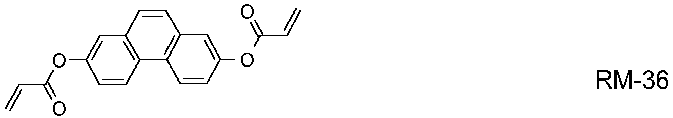

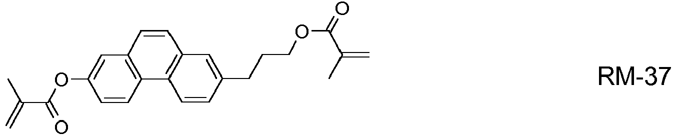

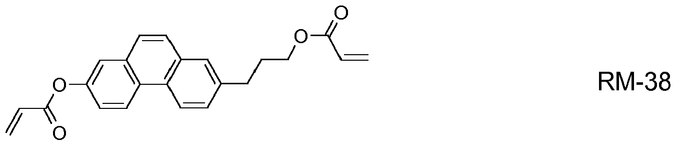

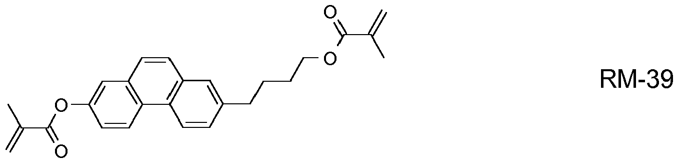

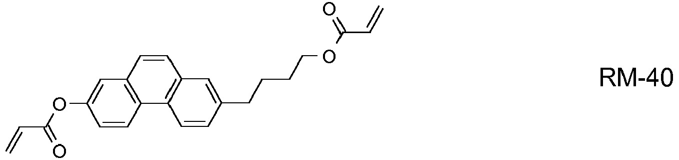

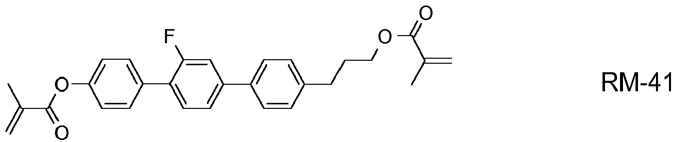

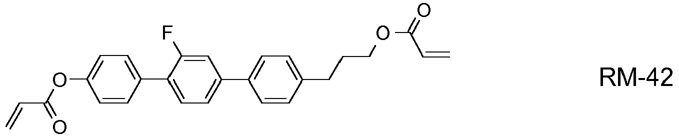

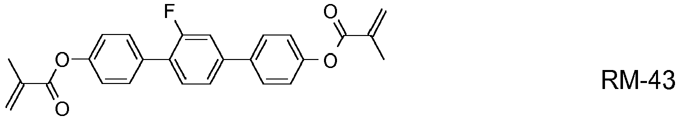

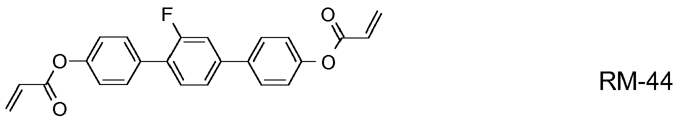

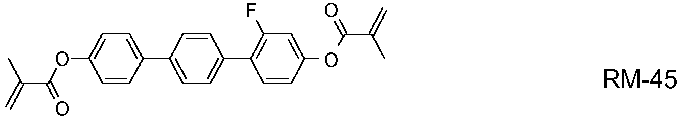

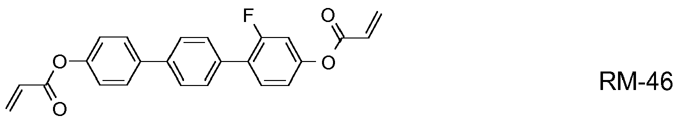

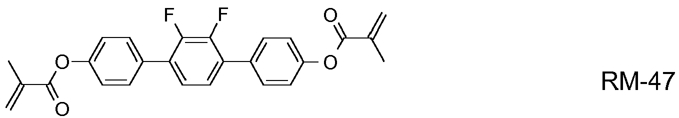

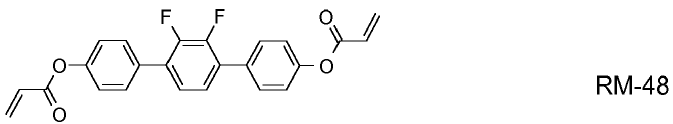

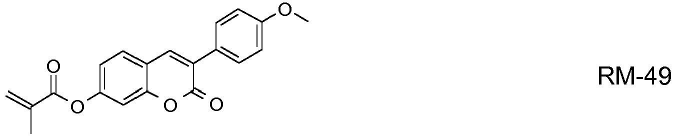

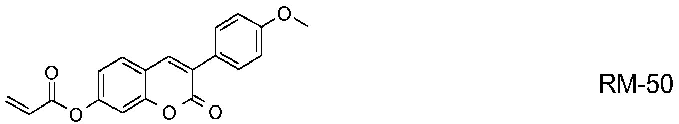

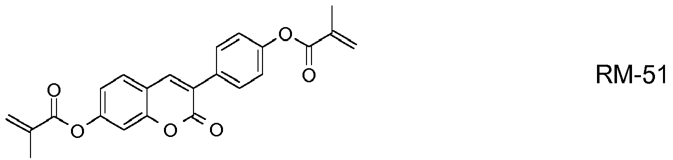

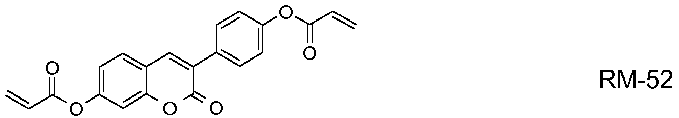

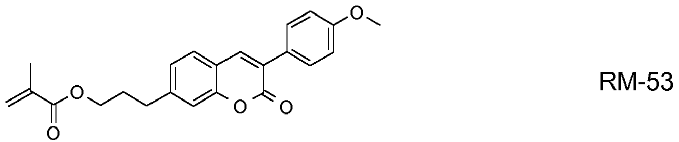

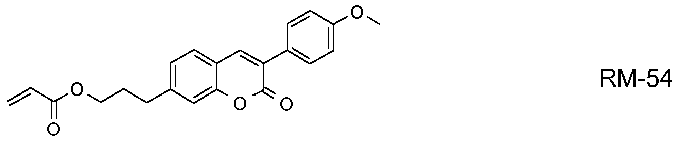

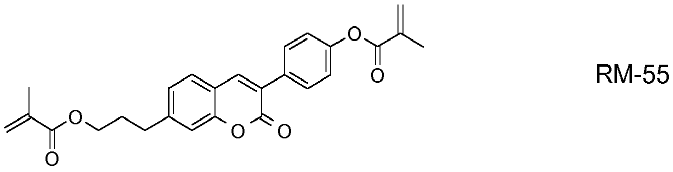

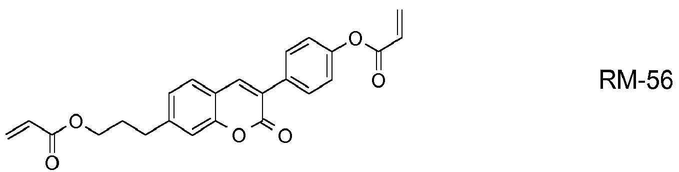

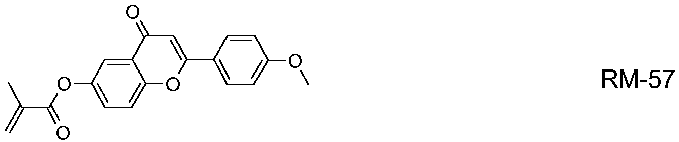

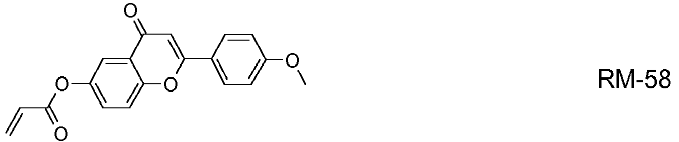

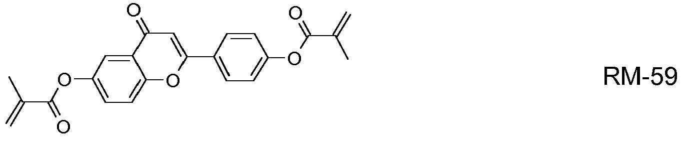

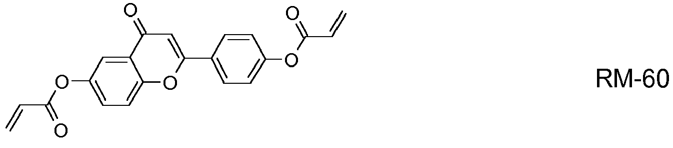

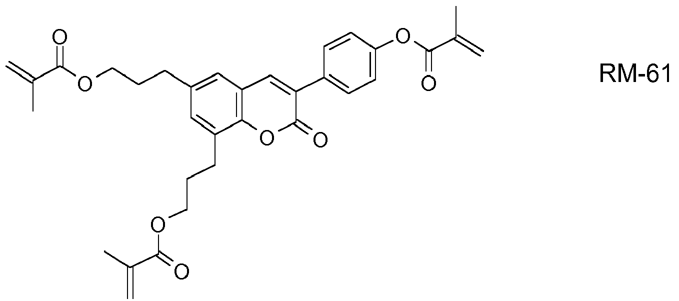

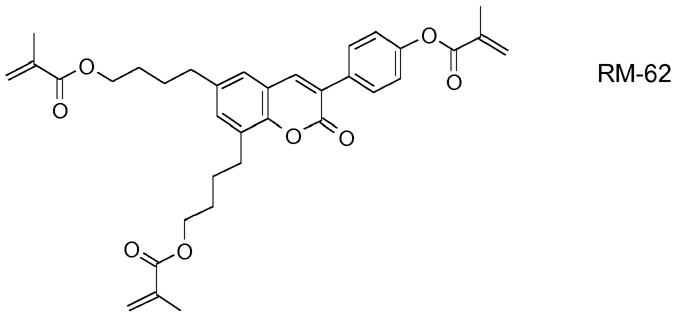

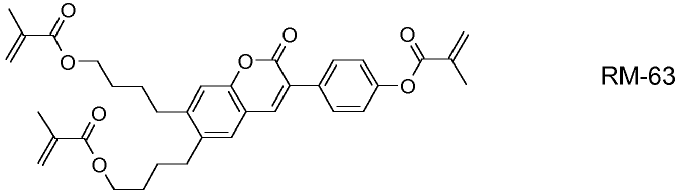

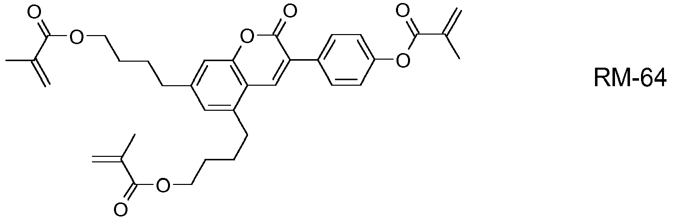

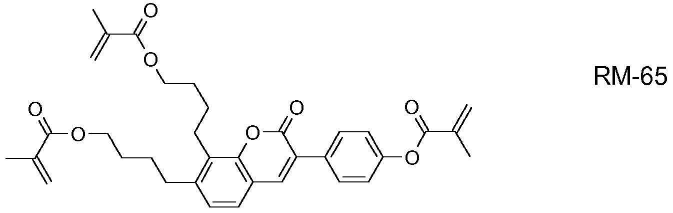

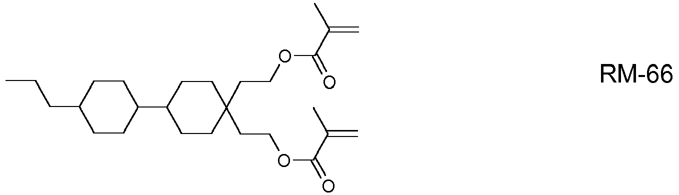

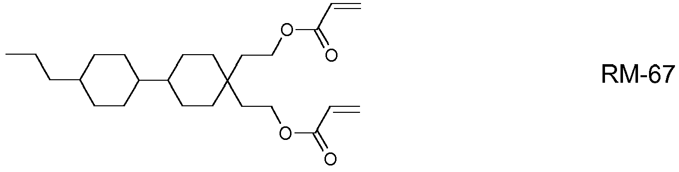

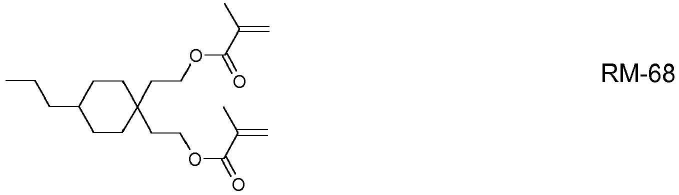

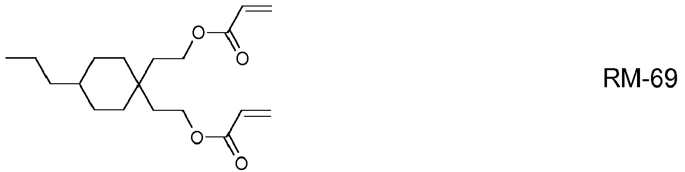

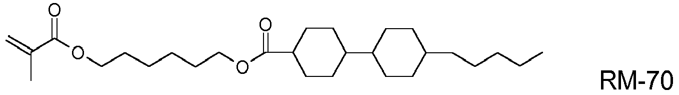

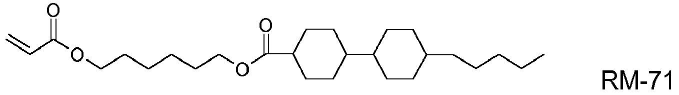

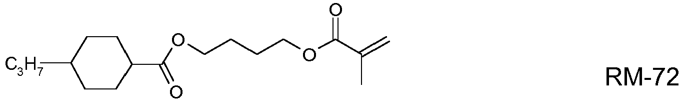

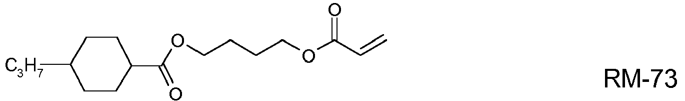

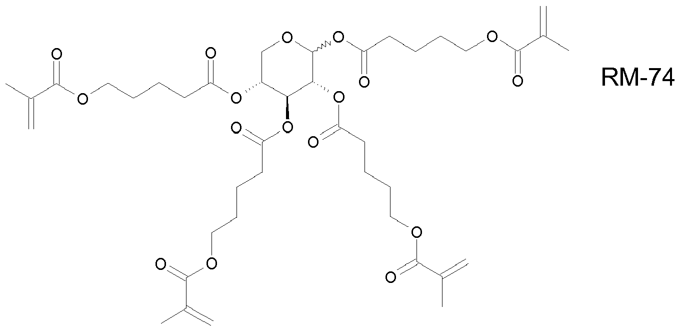

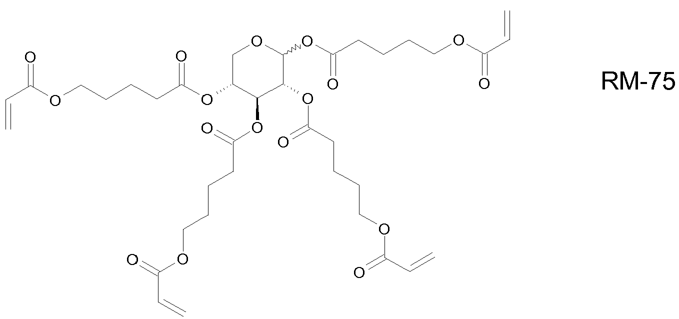

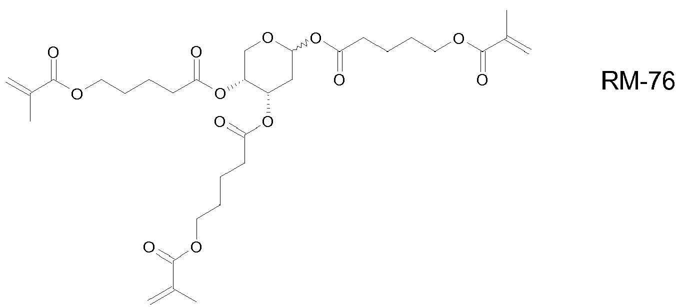

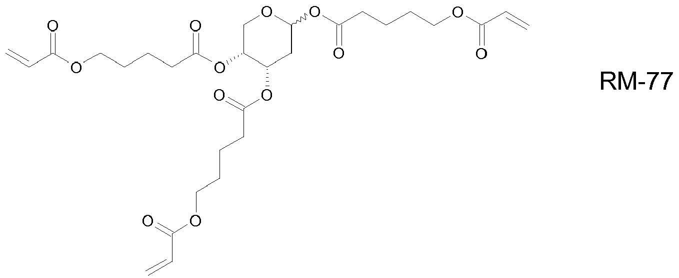

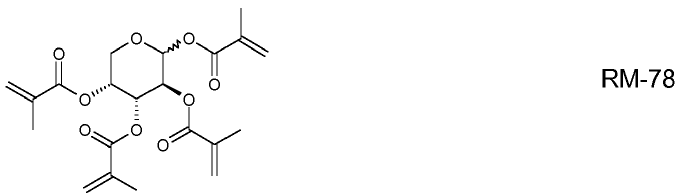

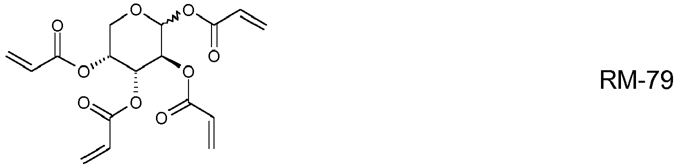

5. Liquid-crystalline medium according to one or more of Claims 1 to 4, **characterised in that** it contains at least one compound selected from the group of compounds of the formulae Xe, XIa, XIb , XIc and XId, 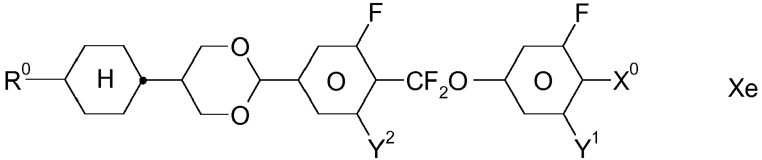 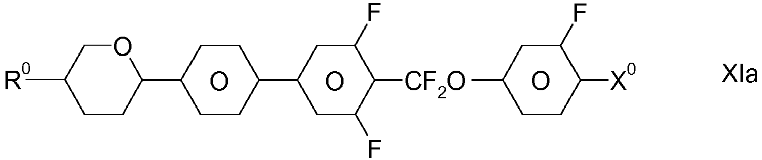 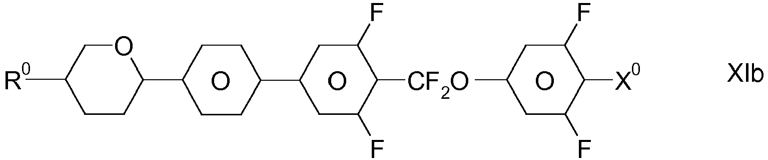 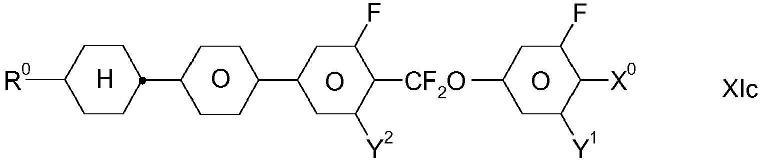 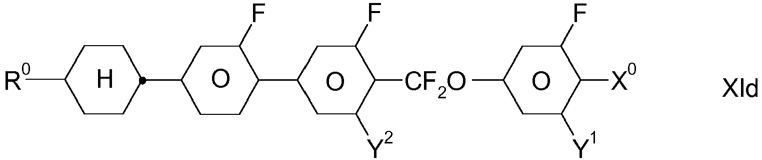 in which
Y¹ and Y², independently of one another, denote H or F and
R⁰ and X⁰ have the meanings as given in Claim 1.

6. Liquid-crystalline medium according to one or more of Claims 1 to 5, **characterised in that** R⁰ in formula I and formula IA denotes straight-chain alkyl with 1 to 6 carbon atoms or straight-chain alkenyl with 2-6 carbon atoms.

7. Liquid-crystalline medium according to one or more of Claims 1 to 6, **characterised in that** the component B contains at least one compound of the formula I and at least one compound of the formula IA.

8. Liquid-crystalline medium according to one or more of Claims 1 to 7, **characterised in that** it additionally contains one or more compounds of the formulae II and/or III, 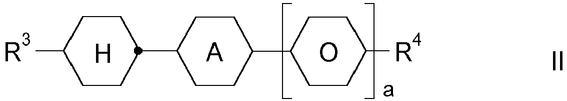 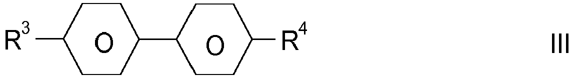 in which
A denotes 1,4-phenylene or trans-1,4-cyclohexylene,
a denotes 0 or 1,
R³ denotes alkenyl having 2 to 9 C atoms, and
R⁴ has the meanings indicated for R⁰ in Claim 1.

9. Liquid-crystalline medium according to one or more of Claims 1 to 8, **characterised in that** it additionally contains one or more compounds of the formulae IIa to IIp and/or IIIa and IIIb, 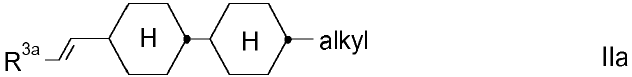 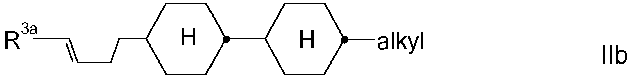 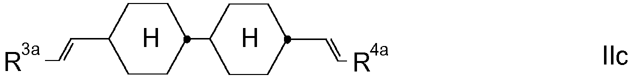 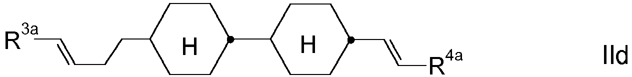 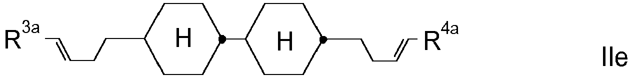 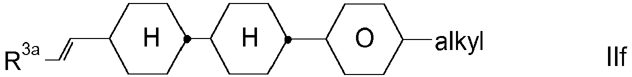 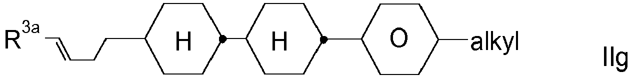 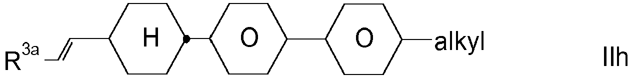 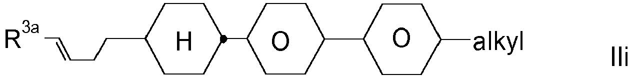 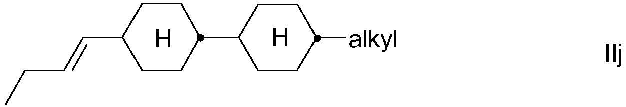 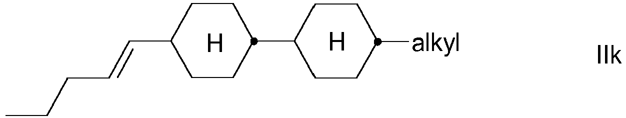 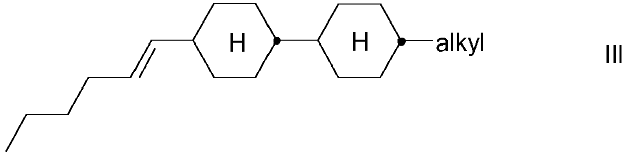 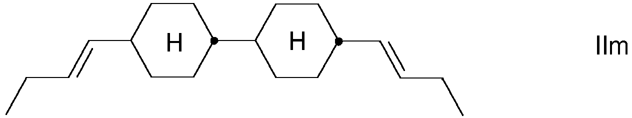 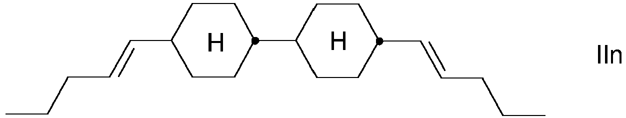 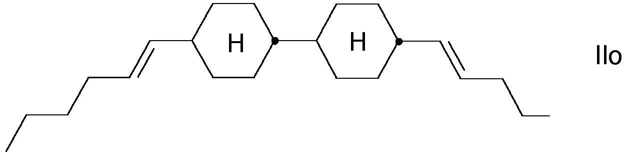 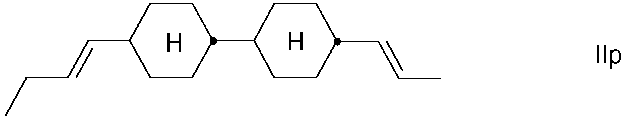 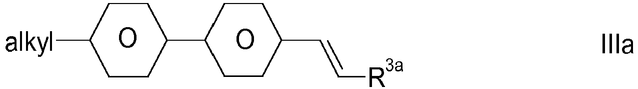 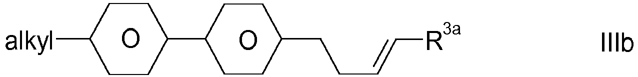 in which R^{3a} and R^{4a} each, independently of one another, denote H, CH₃, C₂H₅ or C₃H₇, and "alkyl" denotes a straight-chain alkyl group having 1 to 8 C atoms.

10. Liquid-crystalline medium according to one or more of Claims 1 to 9, **characterised in that** it additionally contains one or more compounds selected from the compounds of the formulae IV to VIII, 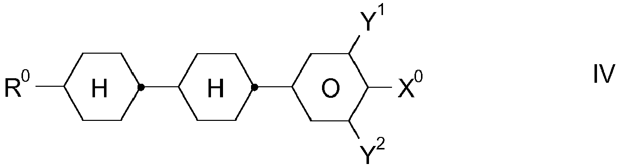 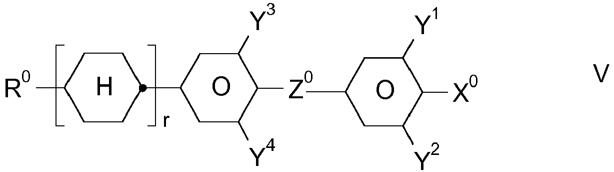 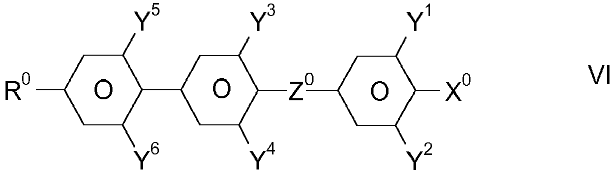 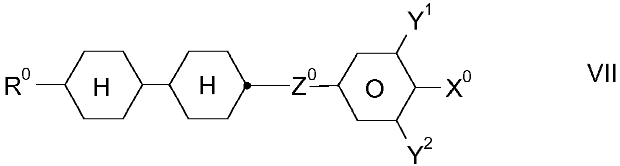 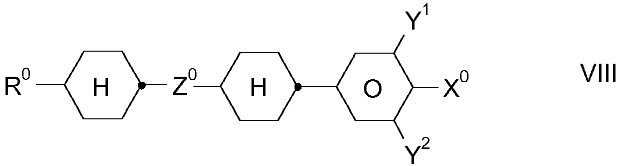 in which R⁰ and X⁰ have the meanings indicated in Claim 1, and
Y¹⁻⁶ each, independently of one another, denote H or F,
Z⁰ denotes -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- or -OCF₂-, in the formulae V and VI also a single bond, and
r denotes 0 or 1.

11. Liquid-crystalline medium according to one or more of Claims 1 to 10, **characterised in that** it additionally contains one or more compounds selected from the compounds of the formulae Va to Vg: 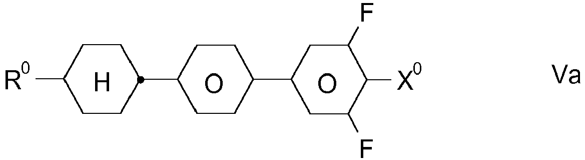 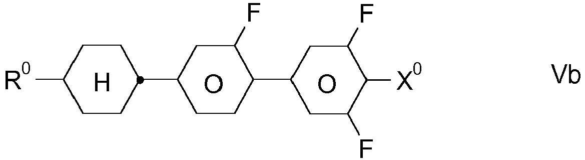 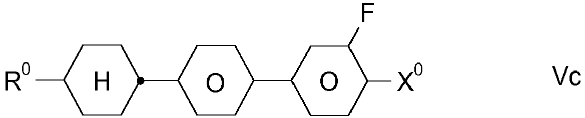 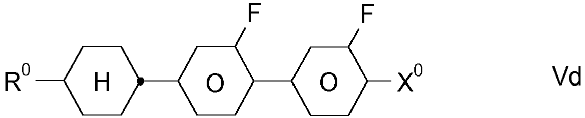 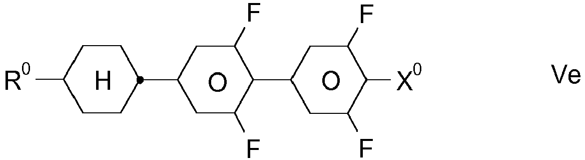 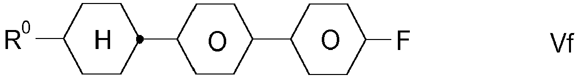 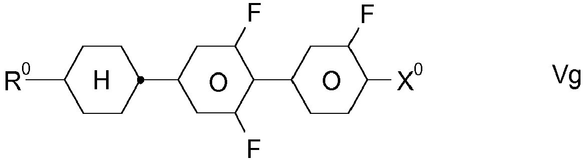 in which R⁰ and X⁰ have the meanings indicated in Claim 1.

12. Liquid-crystalline medium according to one or more of Claims 1 to 11, **characterised in that** it contains one or more compounds selected from the compounds of the formulae VI-1a to VI-1d: 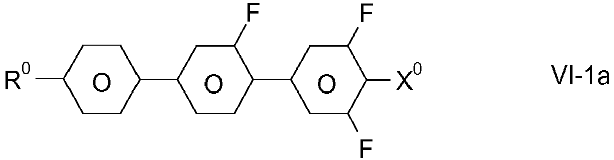 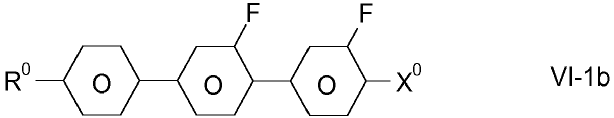 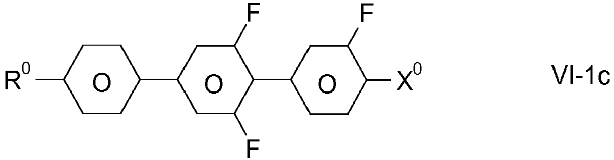 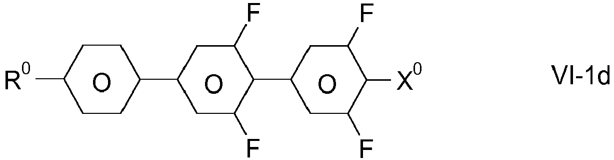 in which R⁰ and X⁰ have the meanings indicated in Claim 1.

13. Liquid-crystalline medium according to one or more of Claims 1 to 11, **characterised in that** it contains one or more compounds selected from the compounds of the formulae VI-2a to VI-2g: 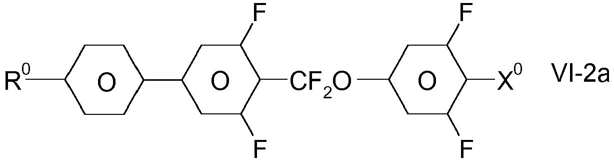 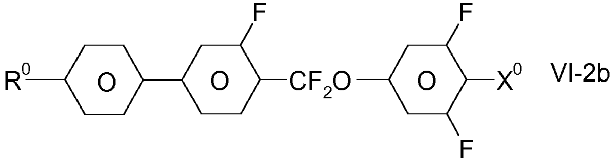 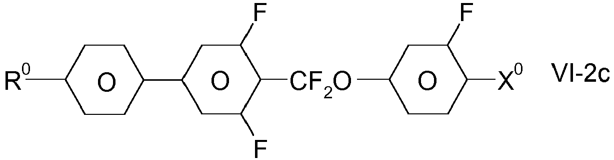 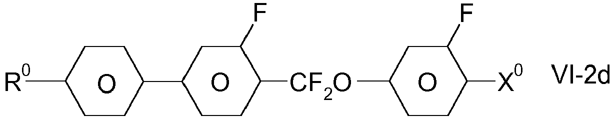 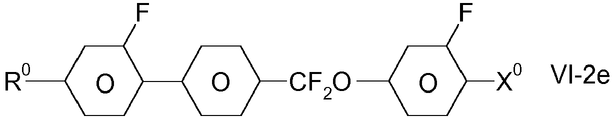 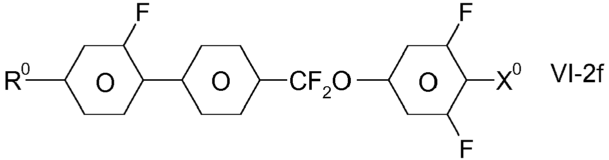 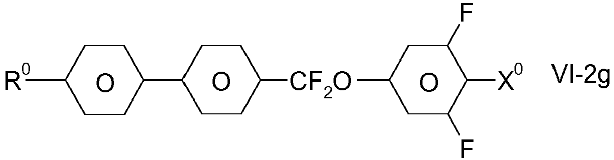 in which R⁰ and X⁰ have the meanings indicated in Claim 1.

14. Liquid-crystalline medium according to one or more of Claims 1 to 13, **characterised in that** it additionally contains one or more compounds selected from the following formula 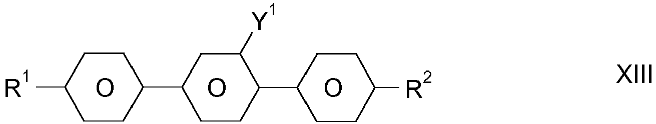 in which
R¹ and R² each, independently of one another, denote n-alkyl, alkoxy, oxaalkyl, fluoroalkyl or alkenyl, each having up to 9 C atoms, and Y¹ denotes H or F.

15. Liquid-crystalline medium according to one or more of Claims 1 to 14, **characterised in that** it additionally contains one or more compounds selected from the following formula 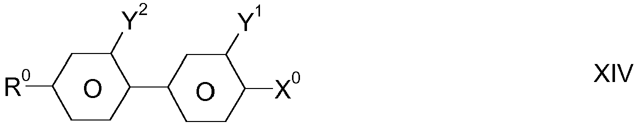 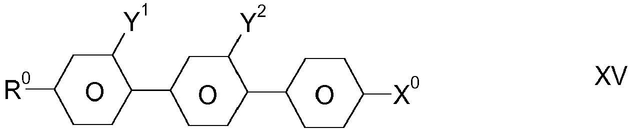 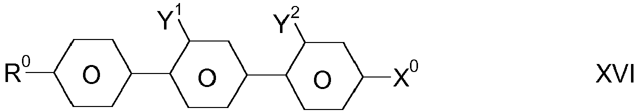 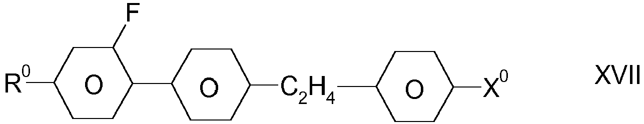 in which R⁰, X⁰, Y¹ and Y² have the meanings indicated in Claim 5.

16. Liquid-crystalline medium according to one or more of Claims 1 to 15, **characterised in that** it contains one or more compounds of the formula XIb 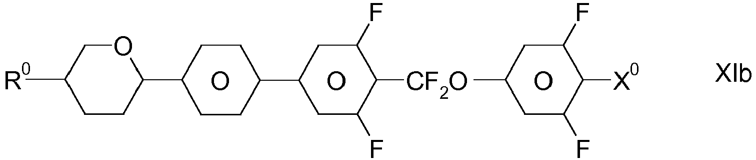 and/or one or more compounds of the formula XXVI 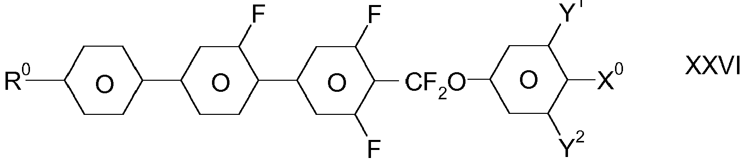 in which R⁰ and X⁰ have the meanings indicated in Claim 1, and Y¹ and Y² each, independently of one another, denote H or F.

17. Liquid-crystalline medium according to one or more of Claims 1 to 16, **characterised in that** it contains 1-25 % by weight of compounds of the formula I.

18. Liquid-crystalline medium according to one or more of the Claims 1 to 17, **characterised in that** it contains 0.01 - 10 % by weight of a polymerisable compound based on the liquid crystalline mixture.

19. Liquid-crystalline medium according to one or more of Claims 1 to 18, **characterised in that** it additionally contains one or more UV stabilisers and/or antioxidants.

20. Use of a liquid-crystalline medium according to one or more of Claims 1 to 19 for electro-optical purposes.

21. Electro-optical liquid-crystal display containing a liquid-crystalline medium according to one or more of Claims 1 to 19.

22. Electro-optical liquid-crystal display according to Claim 21, **characterised in that** it is a PS-TN, PS-TN-TFT, PS-FFS, PS-VA-IPS- or PS-IPS display.

23. Process for the preparation of a liquid-crystalline medium according to one or more of Claims 1 to 19, **characterised in that** at least one compound of the formula I and/or IA and at least one polymerisable compound are mixed with at least one further liquid-crystalline compound and optionally with one or more suitable additives.

## Patentansprüche

1. Flüssigkristallines Medium, **dadurch gekennzeichnet, dass** es
- eine polymerisierbare Komponente (A) enthaltend eine oder mehrere polymerisierbare Verbindungen,
- eine flüssigkristalline Komponente (B) enthaltend eine oder mehrere Verbindungen der allgemeinen Formel I 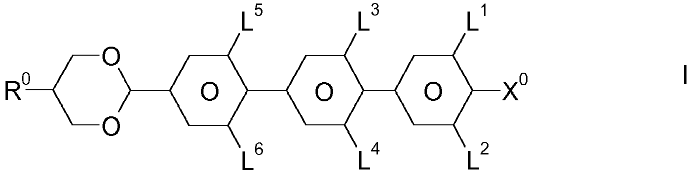 worin
R⁰ einen Alkyl- oder Alkoxyrest mit 1 bis 15 C-Atomen bedeutet, wobei zusätzlich eine oder mehrere CH₂-Gruppen in diesen Resten unabhängig voneinander jeweils so durch -C≡C-, -CF₂O-, -CH=CH-, 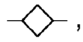 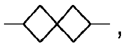 -O-, -CO-O- oder -O-CO- ersetzt sein können, dass O-Atome nicht direkt miteinander verknüpft sind, und wobei zusätzlich ein oder mehrere H-Atome durch Halogenatome ersetzt sein können,
X⁰ F, Cl, CN, SF₅, SCN, NCS, einen halogenierten Alkylrest, einen halogenierten Alkenylrest, einen halogenierten Alkoxyrest oder einen halogenierten Alkenyloxyrest mit bis zu 6 C-Atomen bedeutet, und
L¹⁻⁶ jeweils unabhängig voneinander H oder F bedeuten und
zusätzlich eine oder mehrere Verbindungen, die ausgewählt sind aus der Gruppe der Formeln X, XI und XII 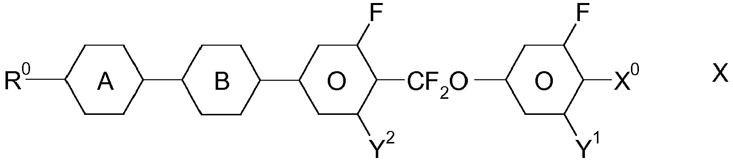 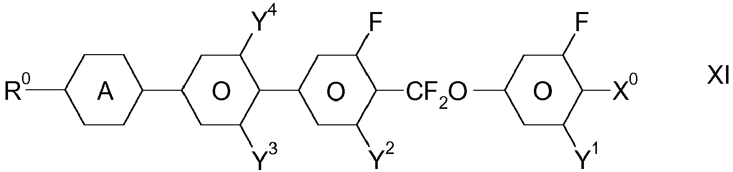 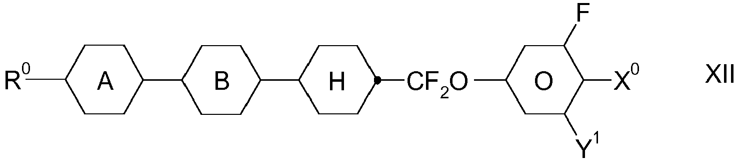 worin
Y¹⁻⁴, jeweils unabhängig voneinander H oder F bedeuten und
R⁰ und X⁰ die in Formel I angegebene Bedeutung besitzen, und 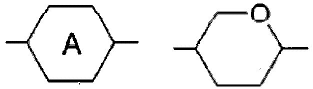 bedeutet; und 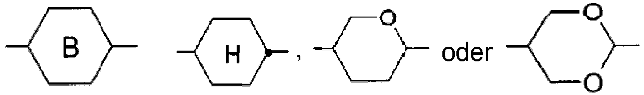 bedeutet; enthält, mit der Maßgabe, dass die Medien mit einer der folgenden Zusammensetzungen
| Zusammensetzung Abkürzung | c/% | Physikalische Eigenschaften | |
|---|---|---|---|
| CC-3-V | 37,0% | Klärpunkt [°C]: | 80,0 |
| CCP-V-1 | 5,0% | Δn [589 nm, 20°C]: | 0,1287 |
| PGU-2-F | 3,0% | Δε [1 kHz, 20°C]: | 17,3 |
| PGU-3-F | 8,0% | γ₁ [mPa·s, 20°C]: | 99 |
| BCH-3F.F.F | 8,0% | LTS [bulk, -25°C]: | > 1000 h |
| APUQU-2-F | 7,0% | V₁₀[V]: | 1,05 |
| APUQU-3-F | 8,0% | | |
| PGUQU-3-F | 4,0% | | |
| PGUQU-4-F | 6,0% | | |
| PGUQU-5-F | 6,0% | | |
| DPGU-4-F | 8,0% | | |
| Zusammensetzung Abkürzung | c/% | Physikalische Eigenschaften | |
|---|---|---|---|
| CC-3-V | 22,0% | Klärpunkt [°C]: | 79,5 |
| CCP-1F.F.F | 3,0% | Δn [589 nm, 20°C]: | 0,1294 |
| CCP-2F.F.F | 9,0% | Δε [1 kHz, 20°C]: | 20,2 |
| CCP-3F.F.F | 9,0% | γ₁ [mPa·s, 20°C]: | 129 |
| CPU-3-OXF | 12,0% | LTS [bulk, -25°C]: | > 1000 h |
| PGU-2-F | 3,0% | V₁₀ [V]: | 1,05 |
| PGU-3-F | 6,0% | | |
| APUQU-2-F | 7,0% | | |
| APUQU-3-F | 7,0% | | |
| PGUQU-3-F | 4,0% | | |
| PGUQU-4-F | 5,0% | | |
| PGUQU-5-F | 6,0% | | |
| DPGU-4-F | 7,0% | | |
| Zusammensetzung Abkürzung | c/% | Physikalische Eigenschaften | |
|---|---|---|---|
| CC-3-V | 33,0% | Klärpunkt [°C]: | 93,5 |
| CC-3-V1 | 12,0% | Δn [589 nm, 20°C]: | 0,1086 |
| CCP-V2-1 | 6,0% | Δε [1 kHz, 20°C]: | 13,7 |
| CCP-30CF3 | 6,0% | γ₁ [mPa·s, 20°C]: | 92 |
| CCQU-3-F | 4,0% | V₁₀ [V]: | 1,09 |
| APUQU-2-F | 10,0% | | |
| APUQU-3-F | 10,0% | | |
| PGUQU-3-F | 5,0% | | |
| PGUQU-4-F | 8,0% | | |
| DPGU-4-F | 6,0% | | |
| Zusammensetzung Abkürzung | c/% | Physikalische Eigenschaften | |
|---|---|---|---|
| CC-3-V | 31,0 | Klärpunkt [°C]: | 96,0 |
| CC-3-V1 | 12,0 | Δn [589 nm, 20°C]: | 0,1087 |
| CCP-V2-1 | 5,0 | Δε [1 kHz, 20°C]: | 15,2 |
| CCGU-3-F | 3,0 | γ₁ [mPa·s, 20°C]: | 106 |
| CCQU-3-F | 11,0 | V₁₀ [V]: | 1,03 |
| APUQU-2-F | 10,0 | | |
| APUQU-3-F | 10,0 | | |
| PGUQU-3-F | 5,0 | | |
| PGUQU-4-F | 6,0 | | |
| DPGU-4-F | 7,0 | | |
| Zusammensetzung Abkürzung | c/% | Physikalische Eigenschaften | | | |
|---|---|---|---|---|---|
| APUQU-3-F | 5,5 | T(N,I) | = | 90,3 | °C |
| CCQU-5-F | | nₒ (20°C, 589,3 nm) | = | 1,5919 | |
| PUQU-3-F | 14,0 | Δn (20°C, 589,3 nm) | = | 0,1062 | |
| CCP-3-OT | 2,5 | ε_{∥} (20°C, 1 kHz) | = | 10,5 | |
| PGU-2-F | 3,0 | Δε (20°C, 1 kHz) | = | 7,4 | |
| CPGU-3-OT | 4,0 | γ₁ (20°C) | = | 73 | mPa·s |
| DPGU-4-F | 3,0 | k₁ (20°C) | = | 14,3 | pN |
| CC-3-V | 33,5 | K₃/k₁ (20°C) | = | 1,15 | |
| CC-3-V1 | 10,0 | V₁₀ (20°C) | = | 1,70 | V |
| CCP-V-1 | 13,0 | V₉₀ (20°C) | = | 2,57 | V |
| CCP-V2-1 | 6,0 | | | | |
| PGP-2-2V | 2,0 | | | | |
| CPPC-3-3 | 9,5 | | | | |
ausgenommen sind.

2. Flüssigkristallines Medium nach Anspruch 1, **dadurch gekennzeichnet, dass** die flüssigkristalline Komponente (B) zusätzlich eine oder mehrere Verbindungen der allgemeinen Formel IA 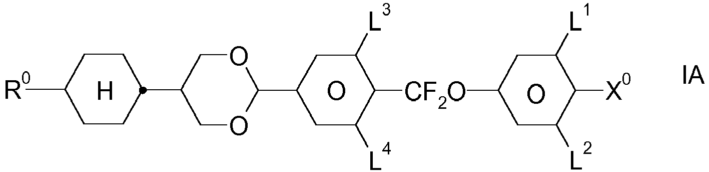 worin R⁰, L¹⁻⁴ und X⁰ die in Anspruch 1 gegebenen Bedeutungen besitzen,
enthält.

3. Flüssigkristallines Medium nach Anspruch 1 oder 2, **dadurch gekennzeichnet, dass** die polymerisierbare Komponente (A) mindestens eine polymerisierbare Verbindung enthält, die ausgewählt ist aus der Gruppe der Verbindungen der Formel 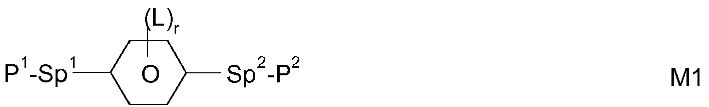 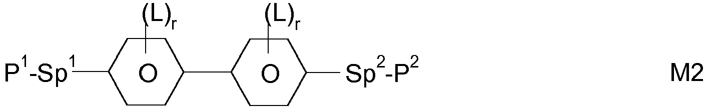 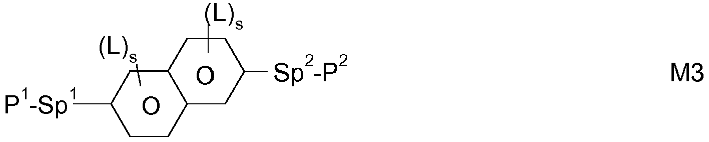 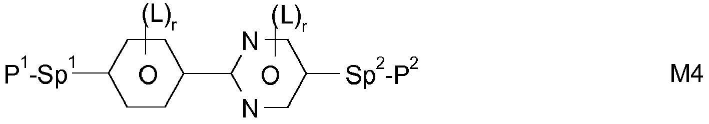 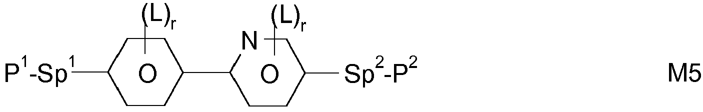 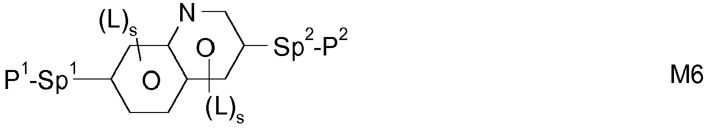 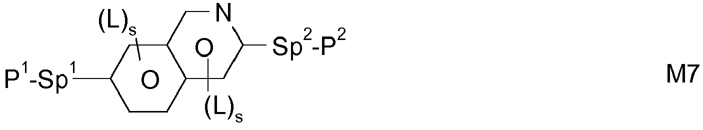 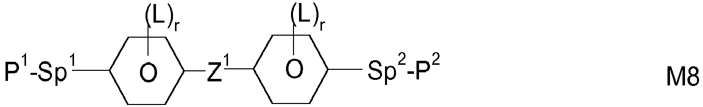 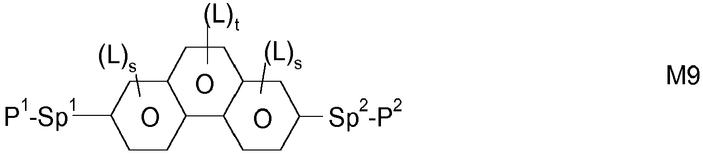 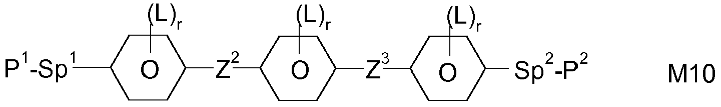 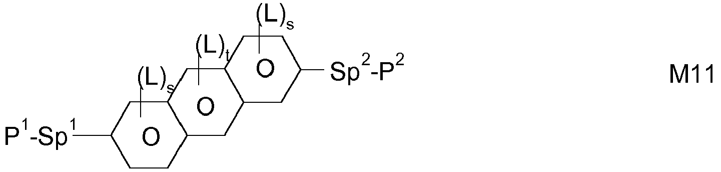 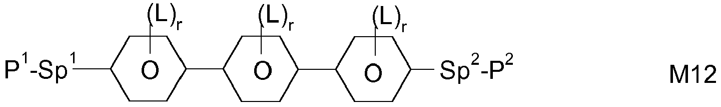 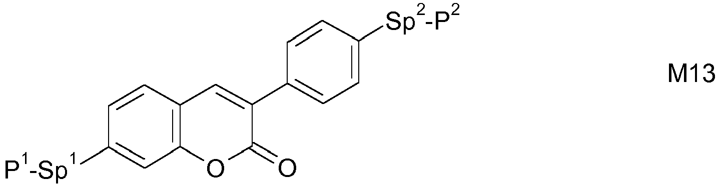 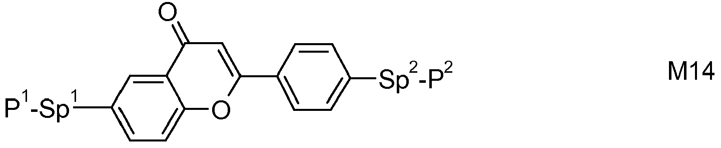 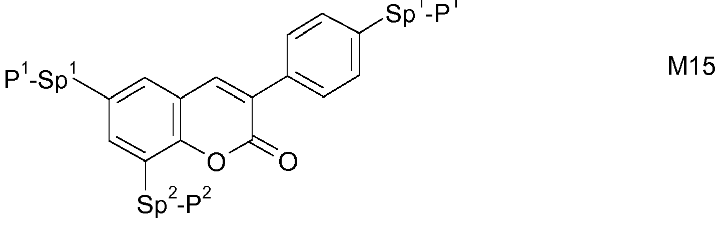 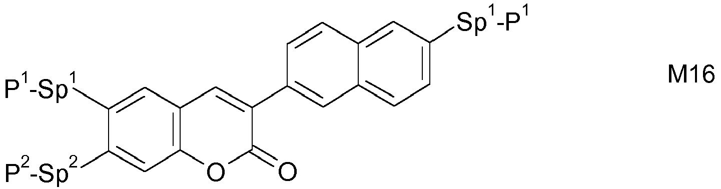 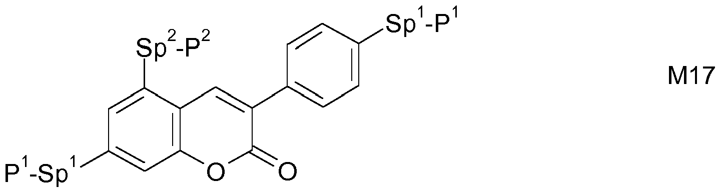 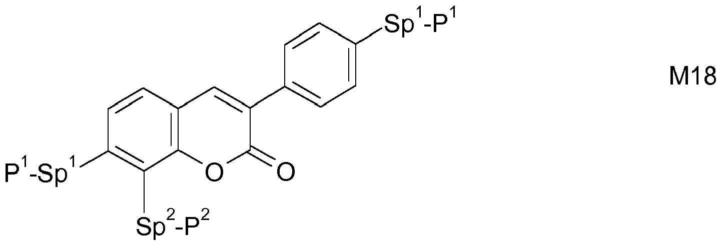 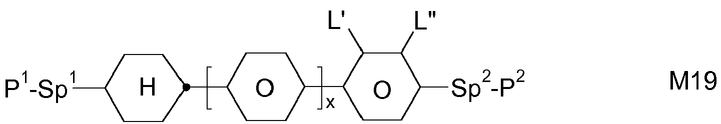 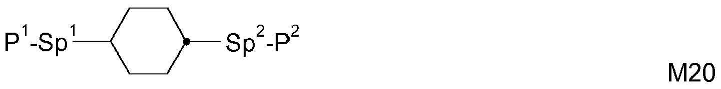 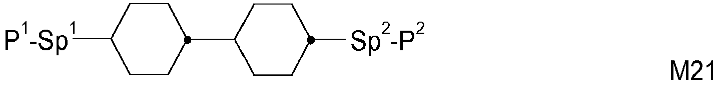 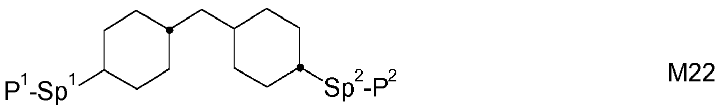 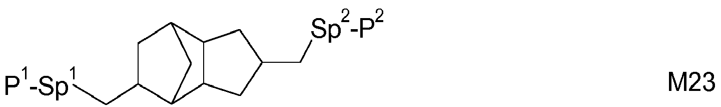 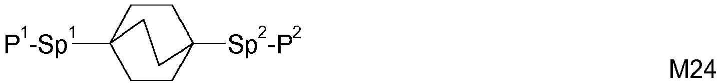 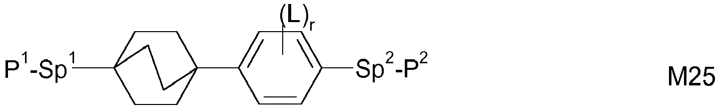 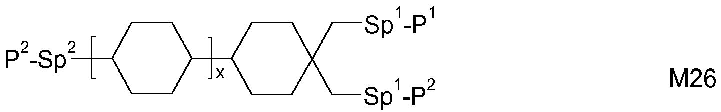 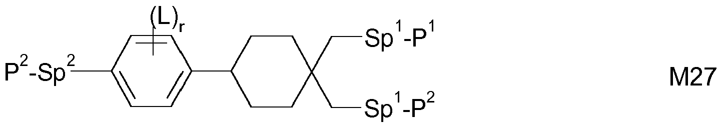 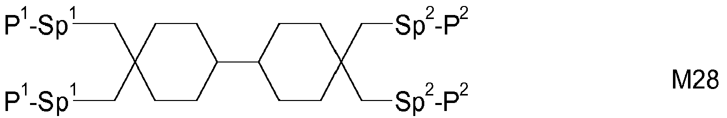 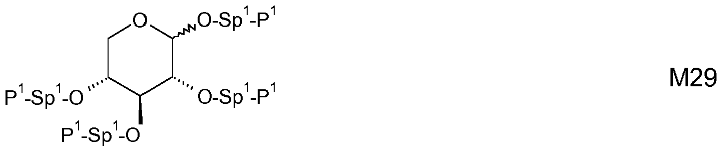 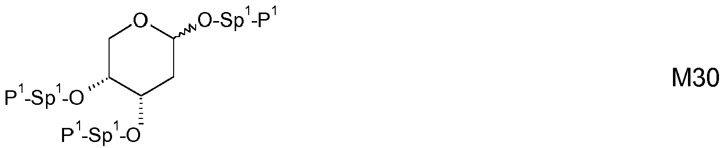 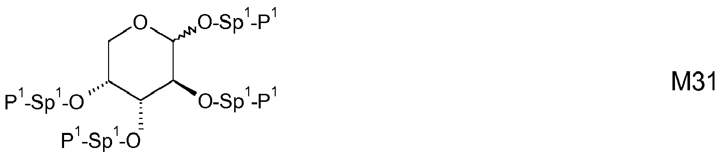 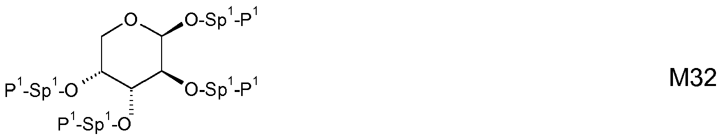 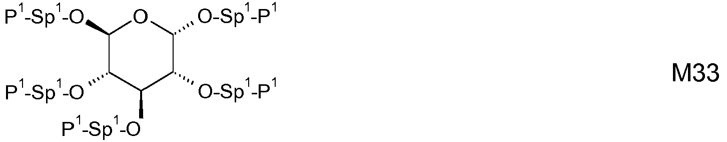 worin die einzelnen Reste die folgenden Bedeutungen besitzen:
P¹ und P² bedeuten jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyl-, Vinyloxy- oder Epoxidgruppe,
Sp¹ und Sp² bedeuten jeweils unabhängig voneinander eine Einfachbindung oder eine Spacergruppe, vorzugsweise mit einer der vor- und nachstehend für Sp angegebenen Bedeutungen, und bedeuten besonders bevorzugt -(CH₂)ₚ₁-, -(CH₂)ₚ₁-O-, -(CH₂)ₚ₁-CO-O- oder -(CH₂)ₚ₁-O-CO-O-, worin p1 eine ganze Zahl von 1 bis 12 ist und wobei die Verknüpfung zum benachbarten Ring in den letztgenannten Gruppen über das O-Atom erfolgt,
wobei zusätzlich einer oder mehrere der Reste P¹-Sp¹- und P²-Sp²- R^{aa} bedeuten können, mit der Maßgabe, dass mindestens einer der vorhandenen Reste P¹-Sp¹- und P²-Sp²-nicht R^{aa} bedeutet,
R^{aa} bedeutet H, F, Cl, CN oder geradkettiges oder verzweigtes Alkyl mit 1 bis 25 C-Atomen, worin zusätzlich eine oder mehrere nicht benachbarte CH₂-Gruppen jeweils unabhängig voneinander so durch -C(R⁰)=C(R⁰⁰)-, -C≡C-, -N(R⁰)-, -O-, -S-, -CO-, -CO-O-, -O-CO-, -O-CO-O- ersetzt sein können, dass O- und/oder S-Atome nicht direkt miteinander verknüpft sind, und worin zusätzlich ein oder mehrere H-Atome durch F, Cl, CN oder P¹-Sp¹-ersetzt sein können, besonders bevorzugt geradkettiges oder verzweigtes, gegebenenfalls ein- oder mehrfach fluoriertes Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen (wobei die Alkenyl- und Alkinylreste mindestens zwei C-Atome aufweisen und die verzweigten Reste mindestens drei C-Atome aufweisen),
R⁰, R⁰⁰ bedeuten jeweils unabhängig voneinander und gleich oder verschieden bei jedem Auftreten H oder Alkyl mit 1 bis 12 C-Atomen,
R^{y} und R^{z} bedeuten jeweils unabhängig voneinander H, F, CH₃ oder CF₃,
Z¹ bedeutet -O-, -CO-, -C(R^{y}R^{z})- oder -CF₂CF₂-,
Z² und Z³ bedeuten jeweils unabhängig voneinander -CO-O-, -O-CO-, -CH₂O-, -OCH₂-, -CF₂O-, -OCF₂- oder -(CH₂)ₙ-, wobei n 2, 3 oder 4 ist,
L bedeutet bei jedem Auftreten gleich oder verschieden F, Cl, CN oder geradkettiges oder verzweigtes, gegebenenfalls ein- oder mehrfach fluoriertes Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen, vorzugsweise F,
L' und L" bedeuten jeweils unabhängig voneinander H, F oder Cl,
r bedeutet 0, 1, 2, 3 oder 4,
s bedeutet 0, 1, 2 oder 3,
t bedeutet 0, 1 oder 2,
x bedeutet 0 oder 1.

4. Flüssigkristallines Medium nach einem oder mehreren der Ansprüche 1 bis 3, **dadurch gekennzeichnet, dass** die polymerisierbare Komponente (A) mindestens eine polymerisierbare Verbindung enthält, die ausgewählt ist aus der Gruppe RM-1 bis RM-79

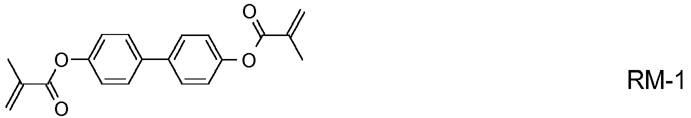

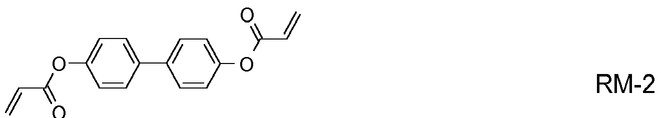

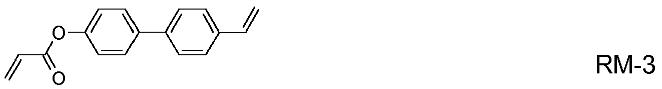

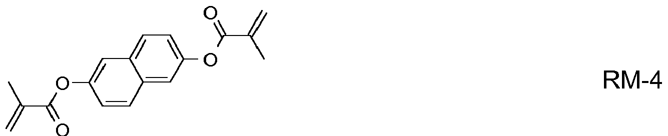

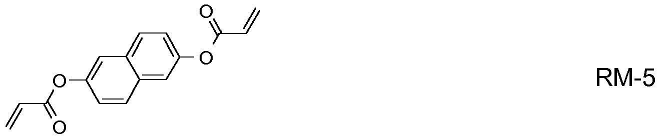

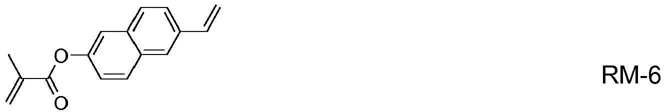

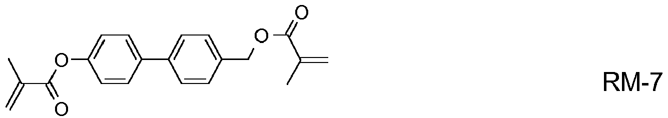

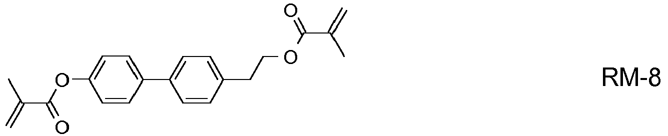

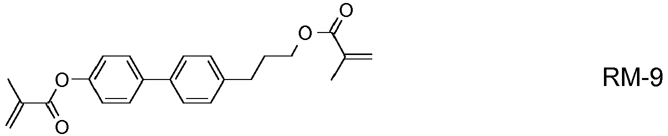

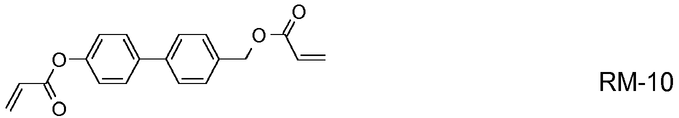

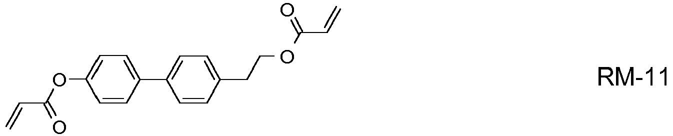

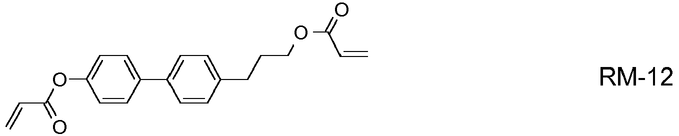

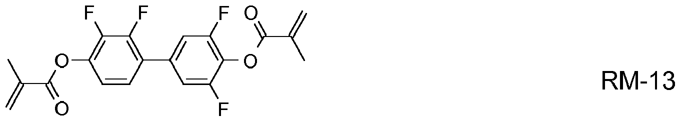

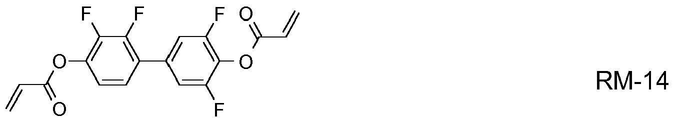

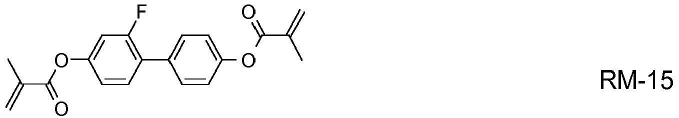

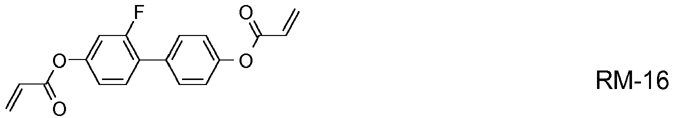

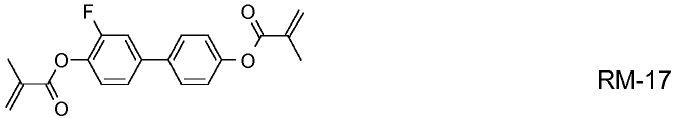

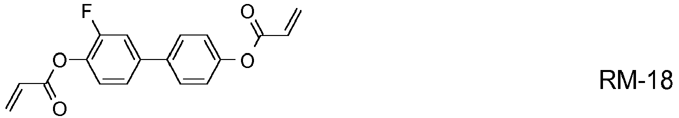

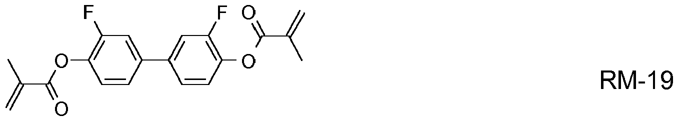

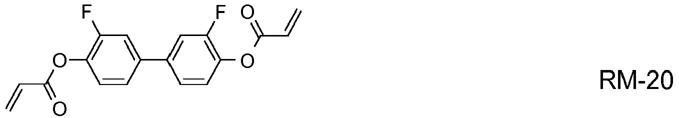

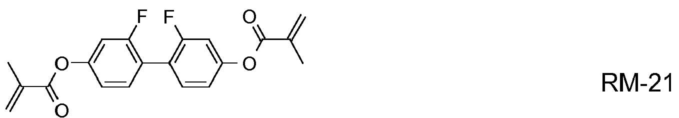

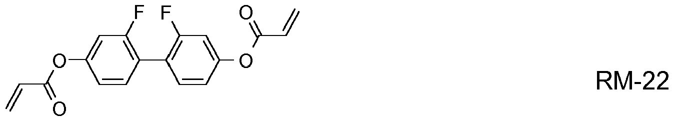

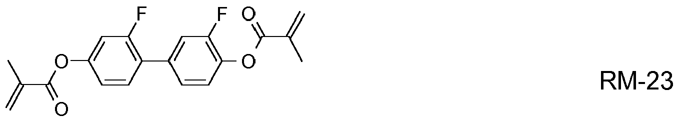

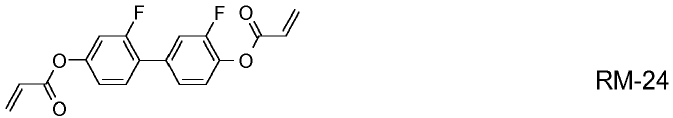

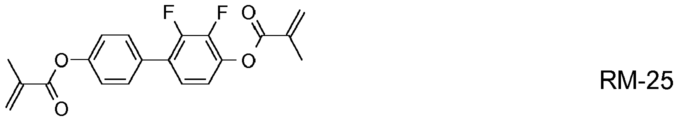

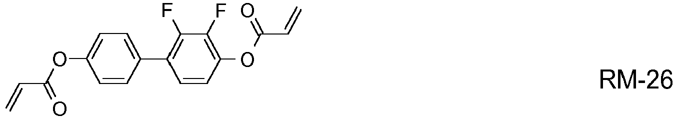

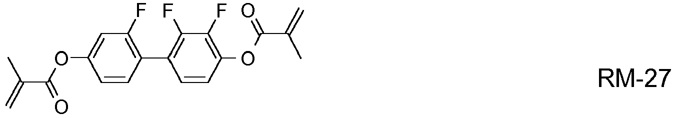

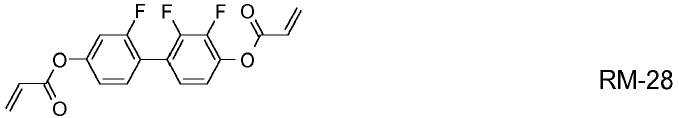

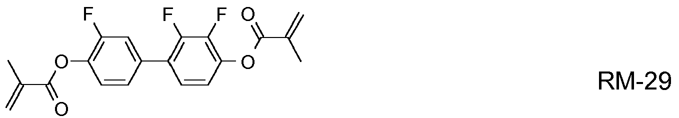

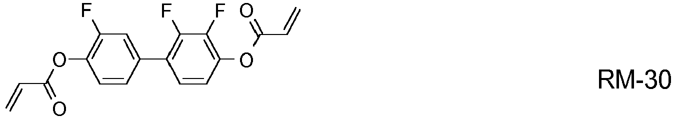

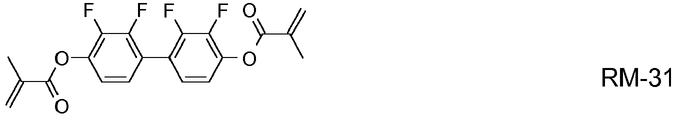

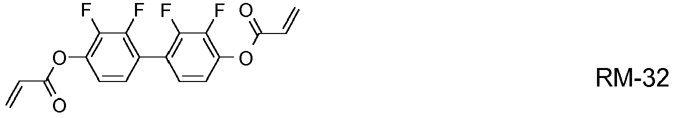

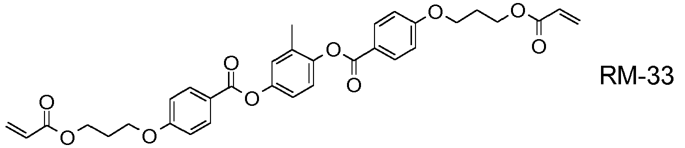

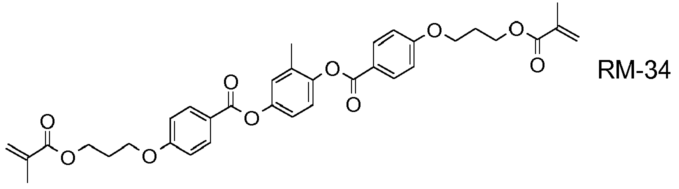

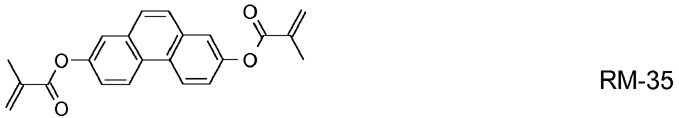

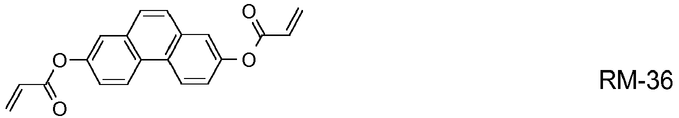

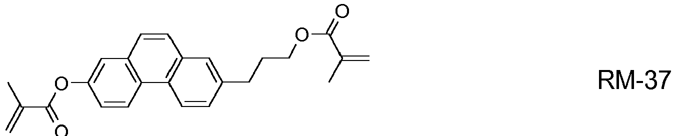

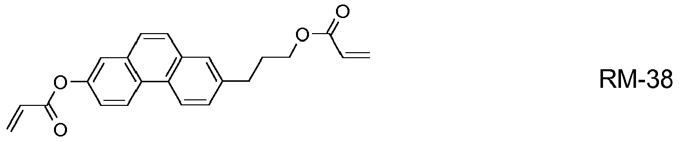

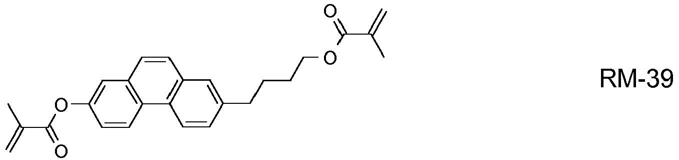

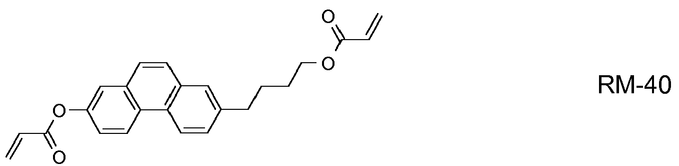

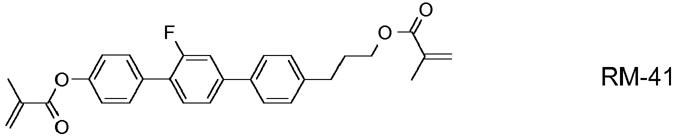

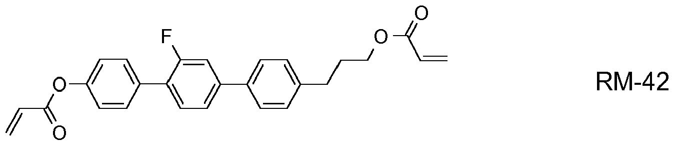

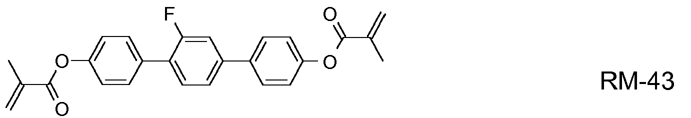

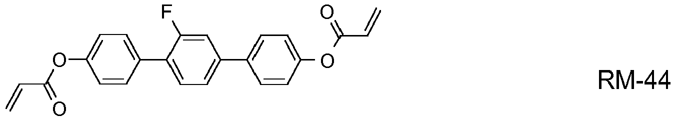

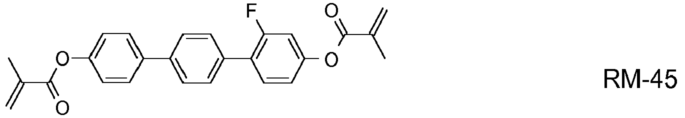

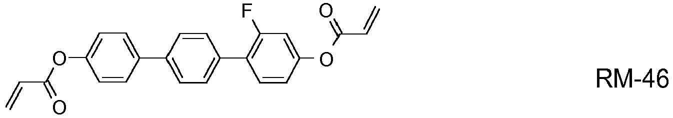

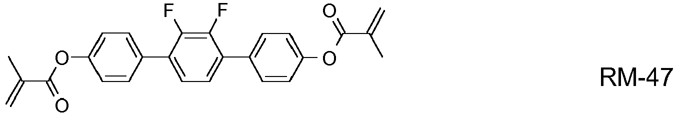

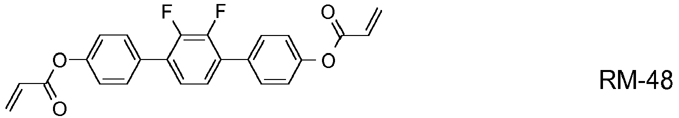

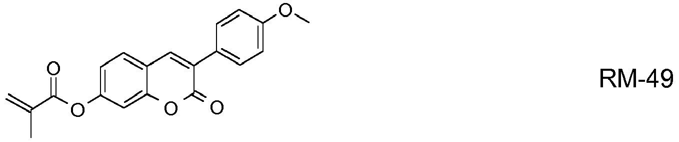

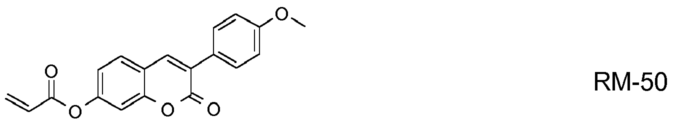

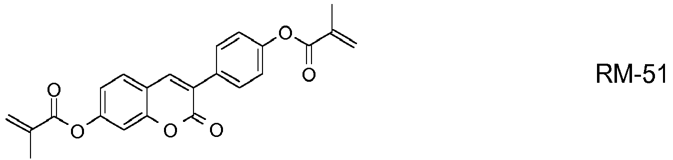

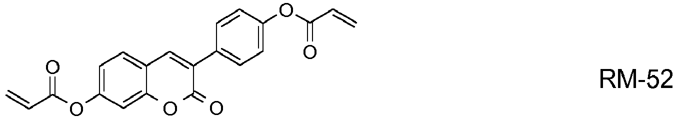

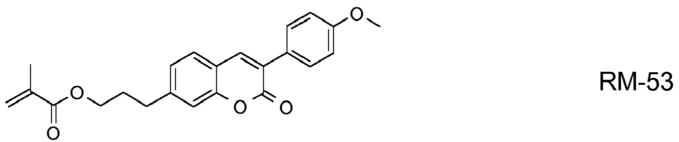

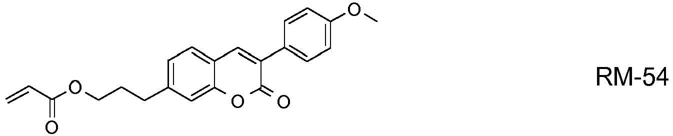

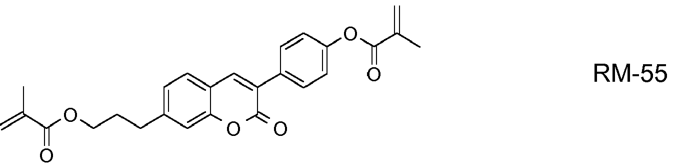

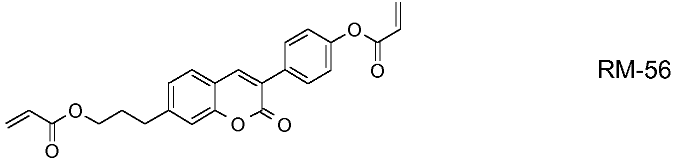

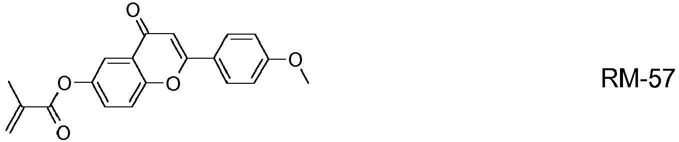

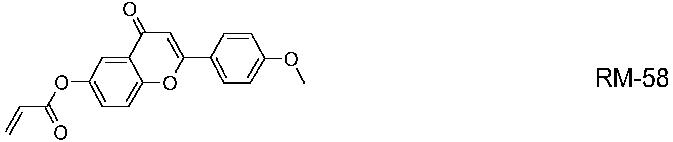

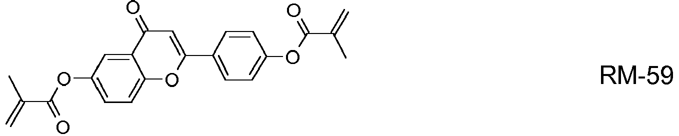

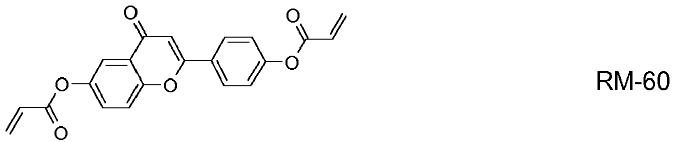

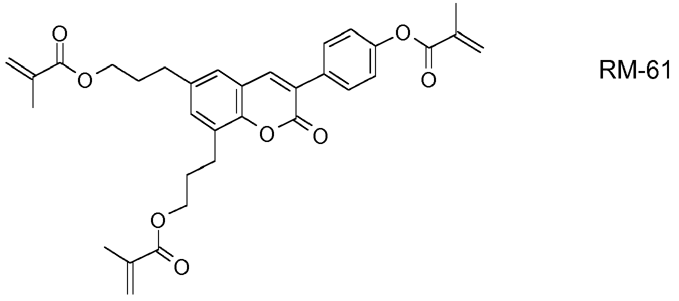

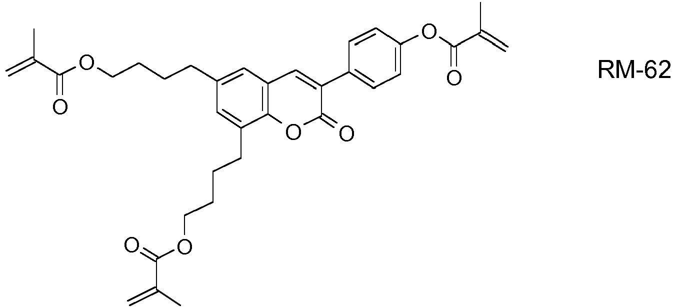

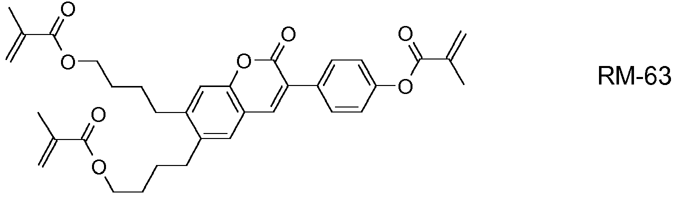

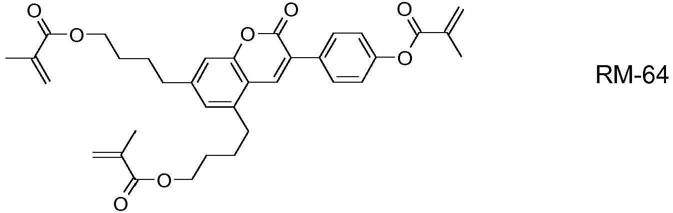

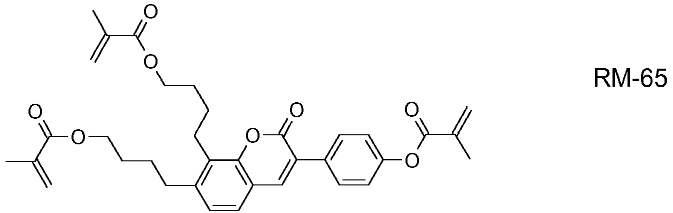

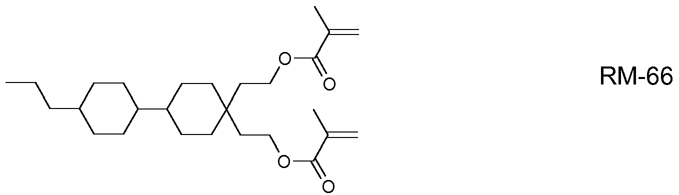

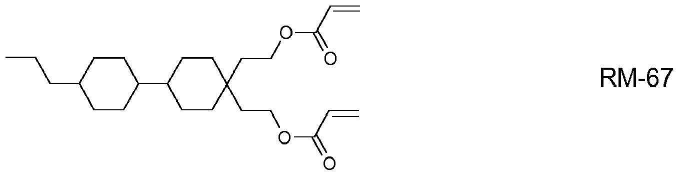

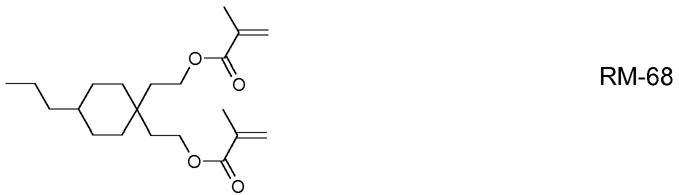

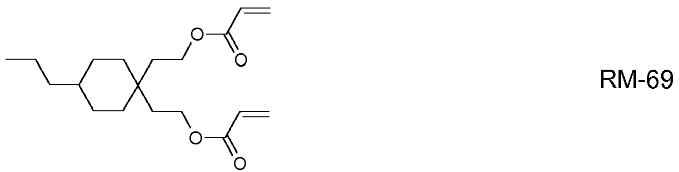

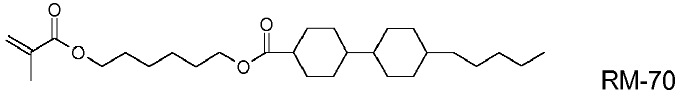

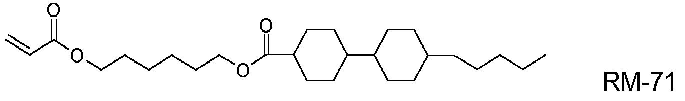

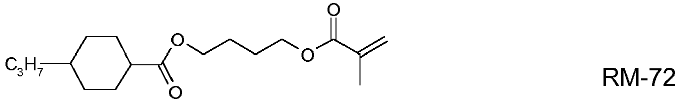

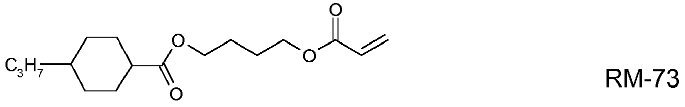

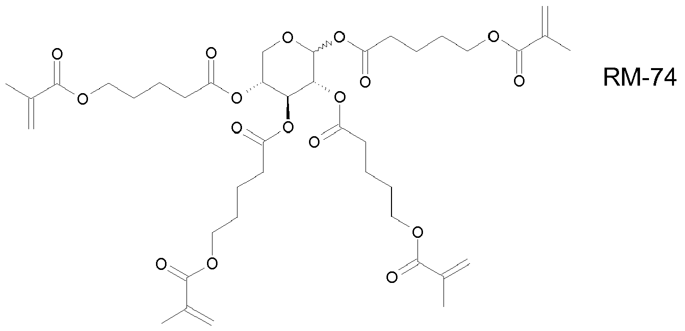

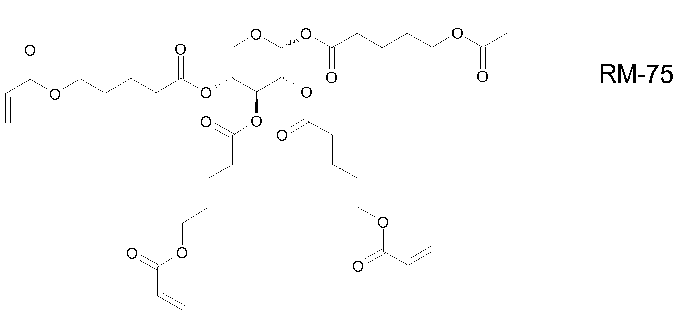

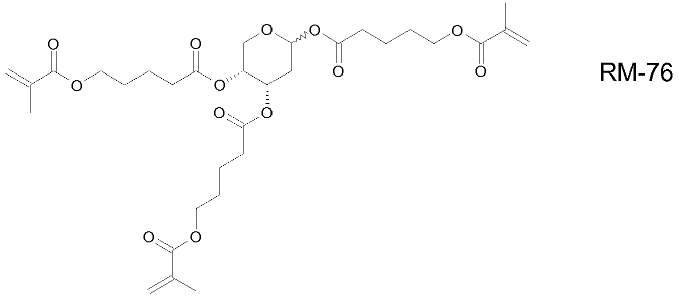

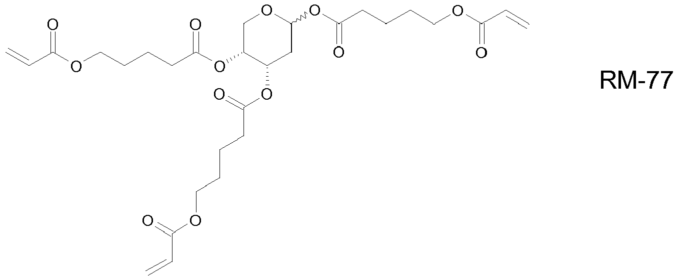

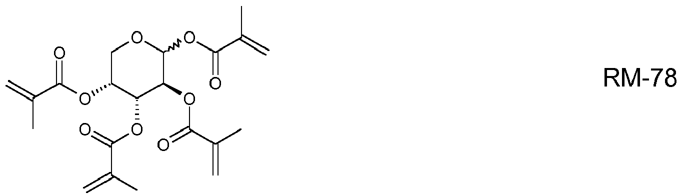

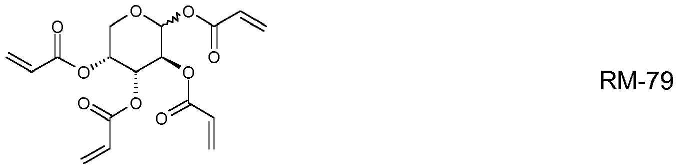

5. Flüssigkristallines Medium nach einem oder mehreren der Ansprüche 1 bis 4, **dadurch gekennzeichnet, dass** es mindestens eine Verbindungen enthält, die ausgewählt ist aus der Gruppe der Verbindungen der Formeln Xe, XIa, XIb, XIc und XId 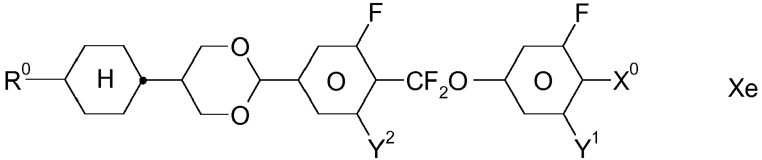 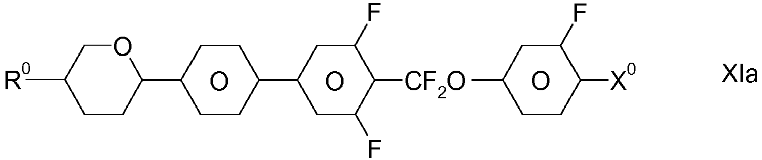 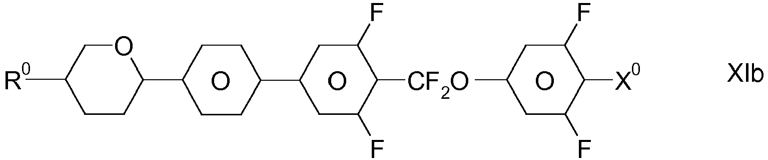 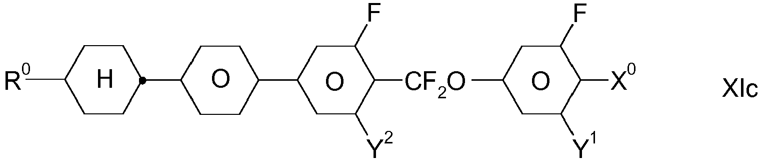 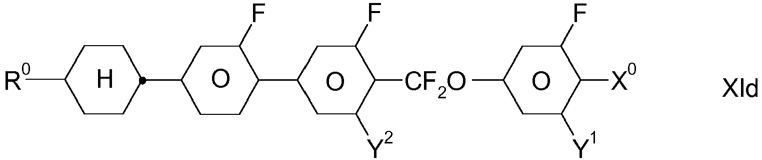 worin
Y¹ und Y² unabhängig voneinander H oder F bedeuten und
R⁰ und X⁰ die wie in Anspruch 1 gegebenen Bedeutungen besitzen.

6. Flüssigkristallines Medium nach einem oder mehreren der Ansprüche 1 bis 5, **dadurch gekennzeichnet, dass** R⁰ in Formel I und Formel IA geradkettiges Alkyl mit 1 bis 6 Kohlenstoffatomen oder geradkettiges Alkenyl mit 2-6 Kohlenstoffatomen bedeutet.

7. Flüssigkristallines Medium nach einem oder mehreren der Ansprüche 1 bis 6, **dadurch gekennzeichnet, dass** die Komponente B mindestens eine Verbindung der Formel I und mindestens eine Verbindung der Formel IA enthält.

8. Flüssigkristallines Medium nach einem oder mehreren der Ansprüche 1 bis 7, **dadurch gekennzeichnet, dass** es zusätzlich eine oder mehrere Verbindungen der Formeln II und/oder III 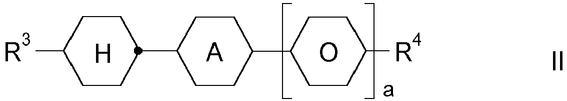 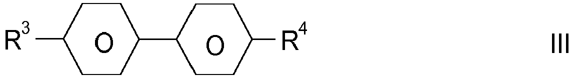 enthält, worin
A 1,4-Phenylen oder trans-1,4-Cyclohexylen bedeutet,
a 0 oder 1 bedeutet,
R³ Alkenyl mit 2 bis 9 C-Atomen bedeutet, und
R⁴ die für R⁰ in Anspruch 1 angegebenen Bedeutungen besitzt.

9. Flüssigkristallines Medium nach einem oder mehreren der Ansprüche 1 bis 8, **dadurch gekennzeichnet, dass** es zusätzlich eine oder mehrere Verbindungen der Formeln IIa bis IIp und/oder IIIa und IIIb 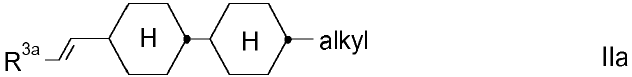 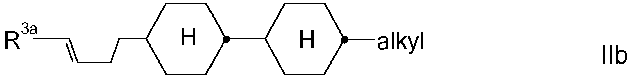 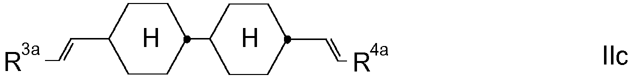 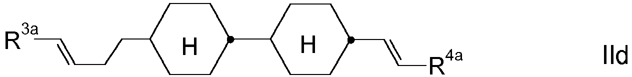 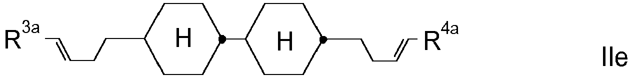 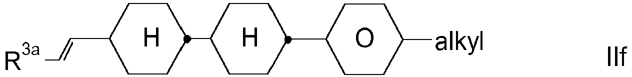 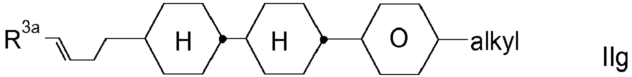 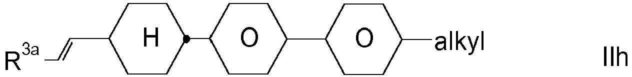 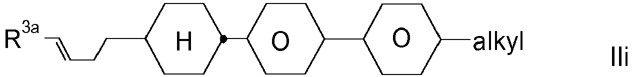 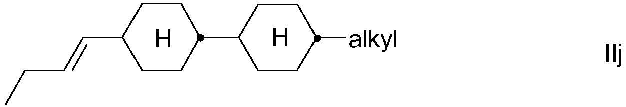 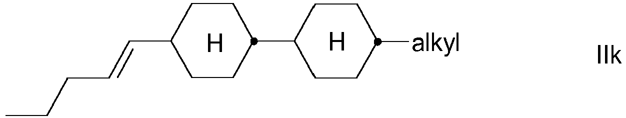 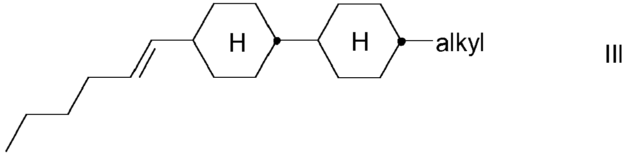 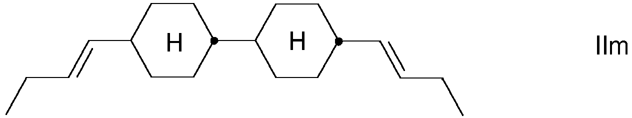 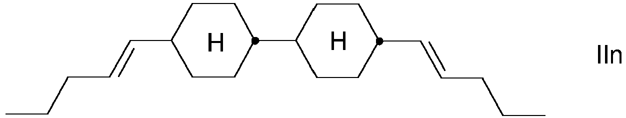 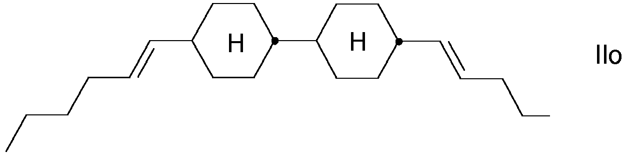 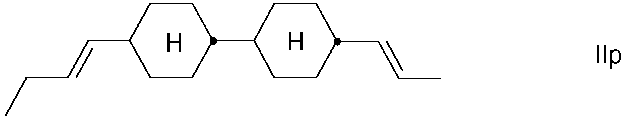 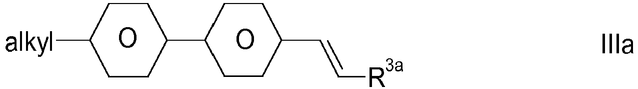 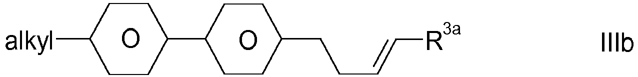 enthält, worin R^{3a} und R^{4a} jeweils unabhängig voneinander H, CH₃, C₂H₅ oder C₃H₇ bedeuten und "alkyl" eine geradkettige Alkylgruppe mit 1 bis 8 C-Atomen bedeutet.

10. Flüssigkristallines Medium nach einem oder mehreren der Ansprüche 1 bis 9, **dadurch gekennzeichnet, dass** es zusätzlich eine oder mehrere Verbindungen enthält, die aus den Verbindungen der Formeln IV bis VIII 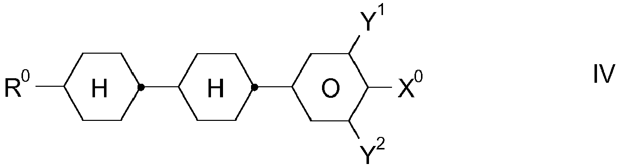 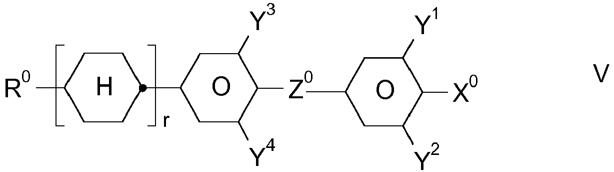 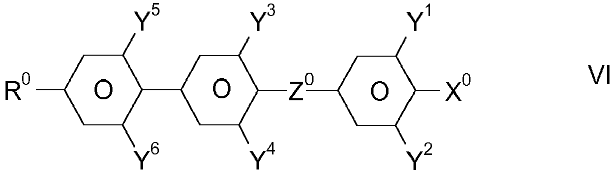 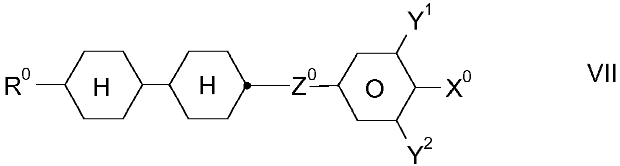 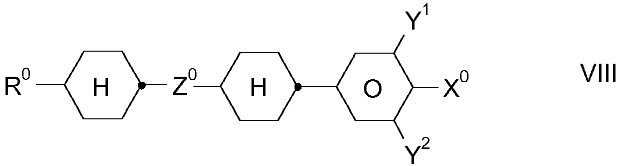 ausgewählt sind, worin R⁰ und X⁰ die in Anspruch 1 angegebenen Bedeutungen besitzen, und
Y¹⁻⁶ jeweils unabhängig voneinander H oder F bedeuten,
Z⁰ -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- oder -OCF₂-, in den Formeln V und VI auch eine Einfachbindung bedeutet, und
r 0 oder 1 bedeutet.

11. Flüssigkristallines Medium nach einem oder mehreren der Ansprüche 1 bis 10, **dadurch gekennzeichnet, dass** es zusätzlich eine oder mehrere Verbindungen enthält, die ausgewählt sind aus den Verbindungen der Formeln Va bis Vg: 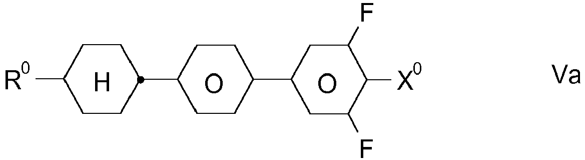 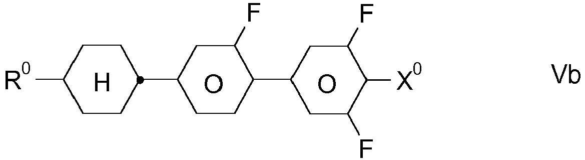 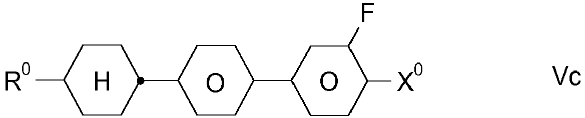 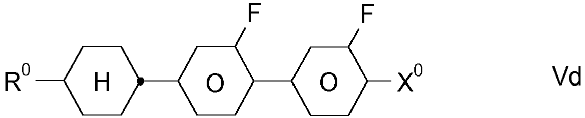 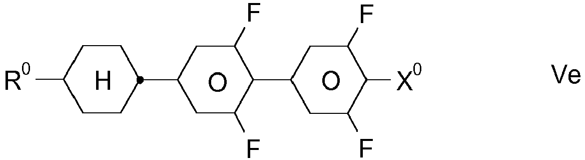 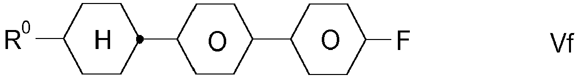 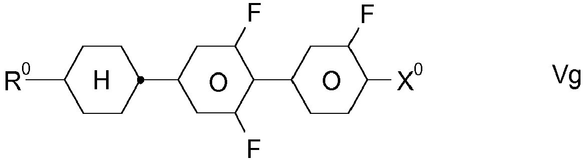 worin R⁰ und X⁰ die in Anspruch 1 angegebenen Bedeutungen besitzen.

12. Flüssigkristallines Medium nach einem oder mehreren der Ansprüche 1 bis 11, **dadurch gekennzeichnet, dass** es eine oder mehrere Verbindungen enthält, die ausgewählt sind aus den Verbindungen der Formeln VI-1a bis VI-1d: 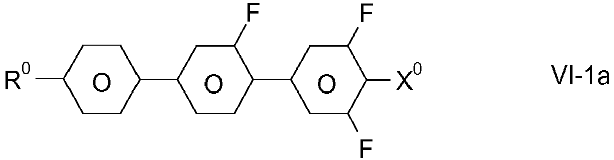 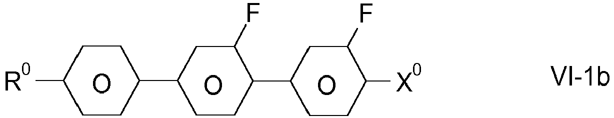 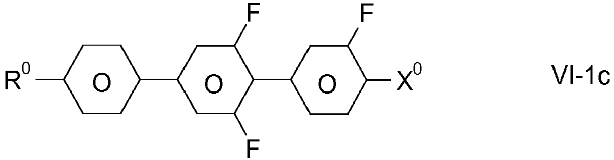 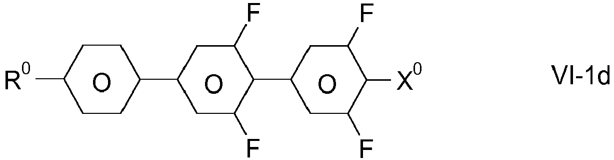 worin R⁰ und X⁰ die in Anspruch 1 angegebenen Bedeutungen besitzen.

13. Flüssigkristallines Medium nach einem oder mehreren der Ansprüche 1 bis 11, **dadurch gekennzeichnet, dass** es eine oder mehrere Verbindungen enthält, die ausgewählt sind aus den Verbindungen der Formeln VI-2a bis VI-2g: 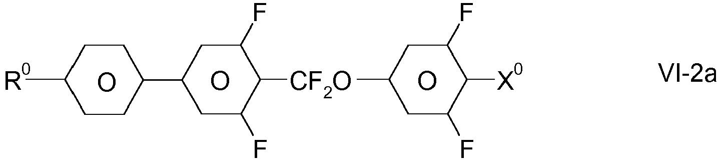 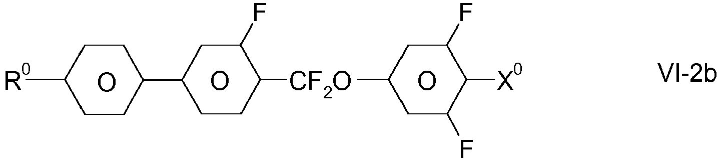 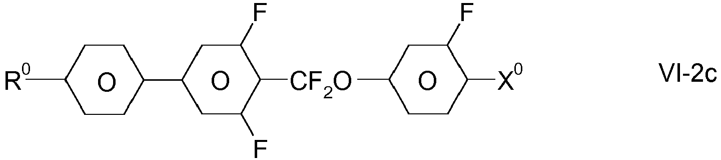 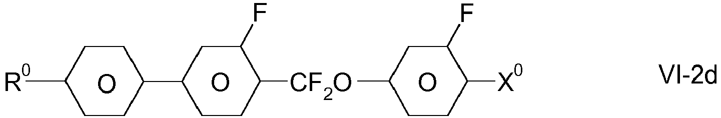 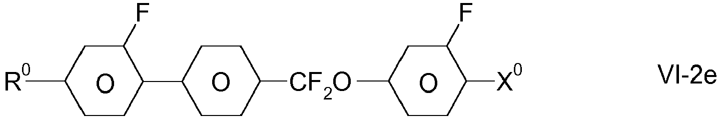 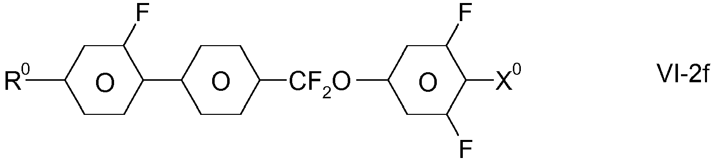 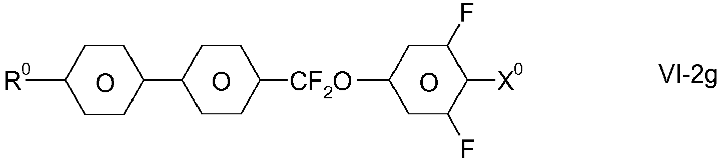 worin R⁰ und X⁰ die in Anspruch 1 angegebenen Bedeutungen besitzen.

14. Flüssigkristallines Medium nach einem oder mehreren der Ansprüche 1 bis 13, **dadurch gekennzeichnet, dass** es zusätzlich eine oder mehrere Verbindungen enthält, die ausgewählt sind aus der folgenden Formel 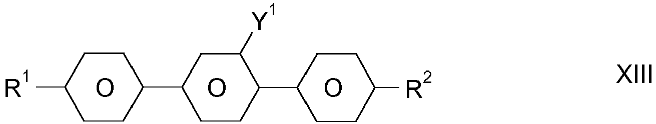 worin
R¹ und R² jeweils unabhängig voneinander n-Alkyl, Alkoxy, Oxaalkyl, Fluoralkyl oder Alkenyl bedeuten, jeweils mit bis zu 9 C-Atomen, und
Y¹ H oder F bedeutet.

15. Flüssigkristallines Medium nach einem oder mehreren der Ansprüche 1 bis 14, **dadurch gekennzeichnet, dass** es zusätzlich eine oder mehrere Verbindungen enthält, die ausgewählt sind aus der folgenden Formel 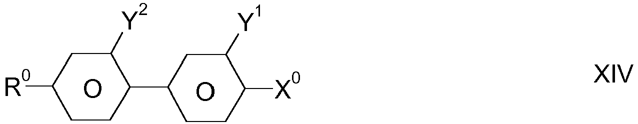 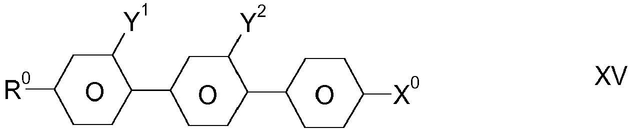 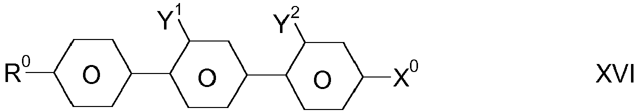 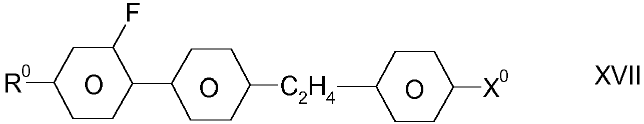 worin R⁰, X⁰, Y¹ und Y² die in Anspruch 5 angegebene Bedeutung besitzt.

16. Flüssigkristallines Medium nach einem oder mehreren der Ansprüche 1 bis 15, **dadurch gekennzeichnet, dass** es eine oder mehrere Verbindungen der Formel XIb 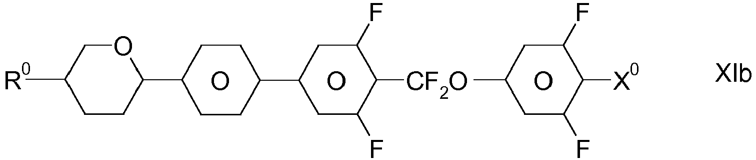 und/oder eine oder mehrere Verbindungen der Formel XXVI 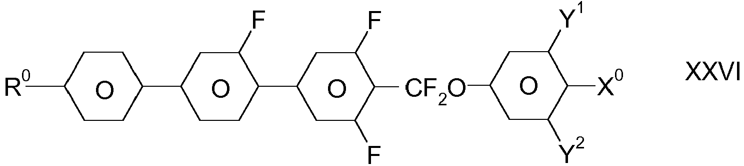 enthält, worin R⁰ und X⁰ die in Anspruch 1 angegebenen Bedeutungen besitzen und Y¹ und Y² jeweils unabhängig voneinander H oder F bedeuten.

17. Flüssigkristallines Medium nach einem oder mehreren der Ansprüche 1 bis 16, **dadurch gekennzeichnet, dass** es 1-25 Gew.-% an Verbindungen der Formel I enthält.

18. Flüssigkristallines Medium nach einem oder mehreren der Ansprüche 1 bis 17, **dadurch gekennzeichnet, dass** es 0,01 - 10 Gew.-% einer polymerisierbaren Verbindung enthält, bezogen auf das flüssigkristalline Gemisch.

19. Flüssigkristallines Medium nach einem oder mehreren der Ansprüche 1 bis 18, **dadurch gekennzeichnet, dass** es zusätzlich ein(en) oder mehrere UV-Stabilisatoren und/oder Antioxidantien enthält.

20. Verwendung eines flüssigkristallinen Mediums nach einem oder mehreren der Ansprüche 1 bis 19 für elektrooptische Zwecke.

21. Elektrooptische Flüssigkristallanzeige enthaltend ein flüssigkristallines Medium nach einem oder mehreren der Ansprüche 1 bis 19.

22. Elektrooptische Flüssigkristallanzeige nach Anspruch 21, **dadurch gekennzeichnet, dass** es sich um eine PS-TN-, PS-TN-TFT-, PS-FFS-, PS-VA-IPS- oder PS-IPS-Anzeige handelt.

23. Verfahren zur Herstellung eines flüssigkristallinen Mediums nach einem oder mehreren der Ansprüche 1 bis 19, **dadurch gekennzeichnet, dass** man mindestens eine Verbindung der Formel I und/oder IA und mindestens eine polymerisierbare Verbindung mit mindestens einer weiteren flüssigkristallinen Verbindung und gegebenenfalls mit einem oder mehreren geeigneten Zusatzstoffen mischt.

## Revendications

1. Milieu cristallin liquide, **caractérisé en ce qu'**il contient
- un composant polymérisable (A) qui contient un ou plusieurs composé(s) polymérisable(s),
- un composant cristallin liquide (B) qui contient un ou plusieurs composé(s) de la formule générale I 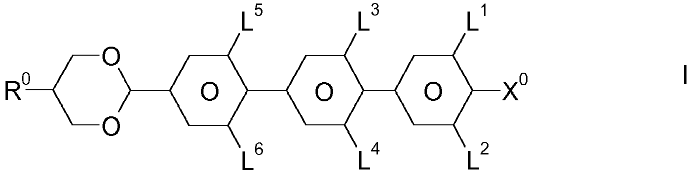 dans laquelle
R⁰ représente un radical alkyle ou alcoxy qui comporte de 1 à 15 atome(s) de C, où, en outre, un ou plusieurs groupe(s) CH₂ dans ces radicaux peut/peuvent chacun être remplacé(s), de manière indépendante les uns des autres, par -C≡C-, -CF₂O-, -CH=CH-, 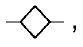 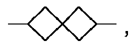 -O-, -CO-O- ou -O-CO- de telle sorte que des atomes de O ne soient pas liés directement les uns aux autres et où, en outre, un ou plusieurs atome(s) de H peut/peuvent être remplacé(s) par des atomes d'halogène,
X⁰ représente F, Cl, CN, SF₅, SCN, NCS, un radical alkyle halogéné, un radical alkényle halogéné, un radical alcoxy halogéné ou un radical alkényloxy halogéné qui comporte jusqu'à 6 atomes de C, et
L¹⁻⁶ représentent chacun, de manière indépendante les uns des autres, H ou F, et
de façon additionnelle, un ou plusieurs composé(s) qui est/sont sélectionné(s) parmi le groupe des formules X, XI et XII 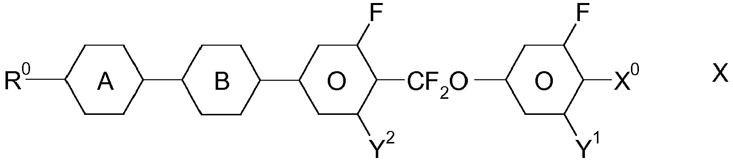 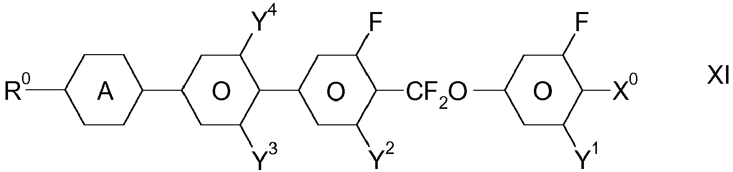 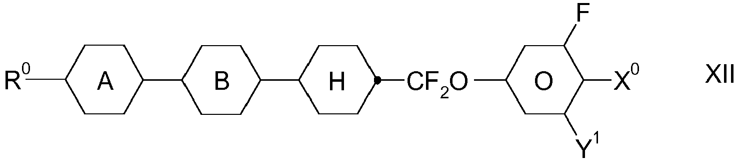
Y¹⁻⁴, représentent chacun, de manière indépendante les uns des autres, H ou F, et
dans lesquelles R⁰ et X⁰ présentent les significations qui ont été indiquées selon la formule I, et 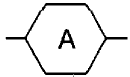 représente 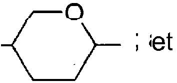 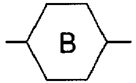 représente 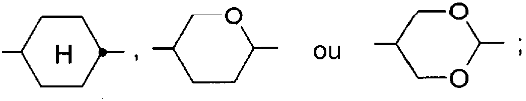 étant entendu que les milieux qui présentent l'une des compositions qui suivent
| Abréviation Composition | c/% | Propriétés physiques | |
|---|---|---|---|
| CC-3-V | 37,0% | Point de clarification [°C] : | 80,0 |
| CCP-V-1 | 5,0% | Δn [589 nm, 20°C] : | 0,1287 |
| PGU-2-F | 3,0% | Δε [1 kHz, 20°C] : | 17,3 |
| PGU-3-F | 8,0% | γ₁ [mPa·s, 20°C] : | 99 |
| BCH-3F.F.F | 8,0% | LTS [masse -25°C] : | > 1000 h |
| APUQU-2-F | 7,0% | V₁₀ [V] : | 1,05 |
| APUQU-3-F | 8,0% | | |
| PGUQU-3-F | 4,0% | | |
| PGUQU-4-F | 6,0% | | |
| PGUQU-5-F | 6,0% | | |
| DPGU-4-F | 8,0% | | |
| Abréviation Composition | c/% | Propriétés physiques | |
|---|---|---|---|
| CC-3-V | 22,0% | Point de clarification [°C] : | 79,5 |
| CCP-1F.F.F | 3,0% | Δn [589 nm, 20°C] : | 0,1294 |
| CCP-2F.F.F | 9,0% | Δε [1 kHz, 20°C] : | 20,2 |
| CCP-3F.F.F | 9,0% | γ₁ [mPa·s, 20°C] : | 129 |
| CPU-3-OXF | 12,0% | LTS [masse -25°C] : | > 1000 h |
| PGU-2-F | 3,0% | V₁₀ [V]: | 1,05 |
| PGU-3-F | 6,0% | | |
| APUQU-2-F | 7,0% | | |
| APUQU-3-F | 7,0% | | |
| PGUQU-3-F | 4,0% | | |
| PGUQU-4-F | 5,0% | | |
| PGUQU-5-F | 6,0% | | |
| DPGU-4-F | 7,0% | | |
| Abréviation Composition | c/% | Propriétés physiques | |
|---|---|---|---|
| CC-3-V | 33,0% | Point de clarification [°C] : | 93,5 |
| CC-3-V1 | 12,0% | Δn [589 nm, 20°C] : | 0,1086 |
| CCP-V2-1 | 6,0% | Δε [1 kHz, 20°C] : | 13,7 |
| CCP-30CF3 | 6,0% | γ₁ [mPa·s, 20°C] : | 92 |
| CCQU-3-F | 4,0% | V₁₀ [V] : | 1,09 |
| APUQU-2-F | 10,0% | | |
| APUQU-3-F | 10,0% | | |
| PGUQU-3-F | 5,0% | | |
| PGUQU-4-F | 8,0% | | |
| DPGU-4-F | 6,0% | | |
| Abréviation Composition | c/% | Propriétés physiques | |
|---|---|---|---|
| CC-3-V | 31,0 | Point de clarification [°C] : | 96,0 |
| CC-3-V1 | 12,0 | Δn [589 nm, 20°C] : | 0,1087 |
| CCP-V2-1 | 5,0 | Δε [1 kHz, 20°C] : | 15,2 |
| CCGU-3-F | 3,0 | γ₁ [mPa·s, 20°C] : | 106 |
| CCQU-3-F | 11,0 | V₁₀ [V] : | 1,03 |
| APUQU-2-F | 10,0 | | |
| APUQU-3-F | 10,0 | | |
| PGUQU-3-F | 5,0 | | |
| PGUQU-4-F | 6,0 | | |
| DPGU-4-F | 7,0 | | |
| Abréviation Composition | c/% | Propriétés physiques | | | |
|---|---|---|---|---|---|
| APUQU-3-F | 5,5 | T(N,I) | = | 90,3 | °C |
| CCQU-5-F | | nₒ(20°C, 589,3 nm) | = | 1,5919 | |
| PUQU-3-F | 14,0 | Δn (20°C, 589,3 nm) | = | 0,1062 | |
| CCP-3-OT | 2,5 | ε∥ (20°C, 1 kHz) | = | 10,5 | |
| PGU-2-F | 3,0 | Δε (20°C, 1 kHz) | = | 7,4 | |
| CPGU-3-OT | 4,0 | γ₁ (20°C) | = | 73 | mPa·s |
| DPGU-4-F | 3,0 | k₁ (20°C) | = | 14,3 | pN |
| CC-3-V | 33,5 | K₃/k₁(20°C) | = | 1,15 | |
| CC-3-V1 | 10,0 | V₁₀ (20°C) | = | 1,70 | V |
| CCP-V-1 | 13,0 | V₉₀ (20°C) | = | 2,57 | V |
| CCP-V2-1 | 6,0 | | | | |
| PGP-2-2V | 2,0 | | | | |
| CPPC-3-3 | 9,5 | | | | |
sont exclus.

2. Milieu cristallin liquide selon la revendication 1, **caractérisé en ce que** le composant cristallin liquide (B) contient de façon additionnelle un ou plusieurs composé(s) de la formule générale IA 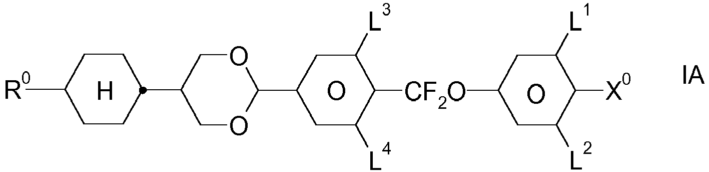 dans lesquelles R⁰, L¹⁻⁴ et X⁰ présentent les significations qui ont été données selon la revendication 1.

3. Milieu cristallin liquide selon la revendication 1 ou 2, **caractérisé en ce que** le composant polymérisable (A) contient au moins un composé polymérisable qui est sélectionné parmi le groupe des composés des formules 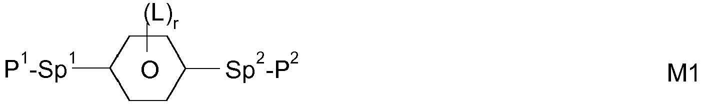 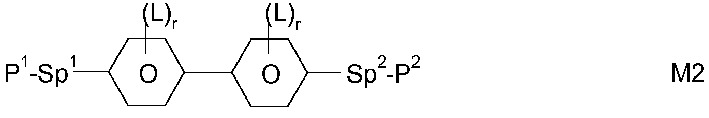 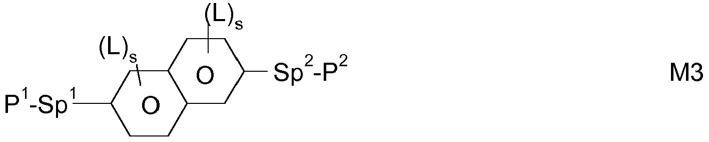 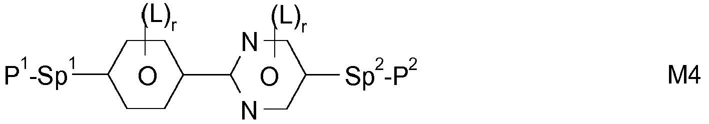 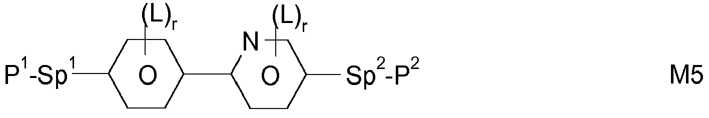 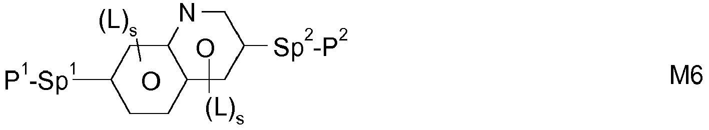 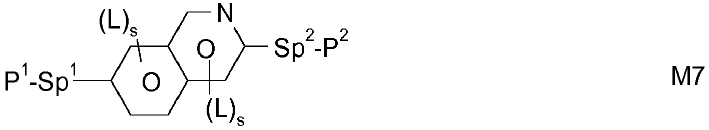 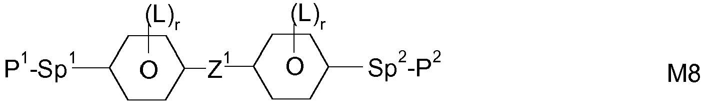 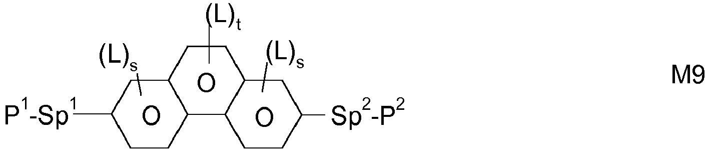 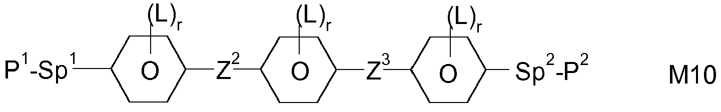 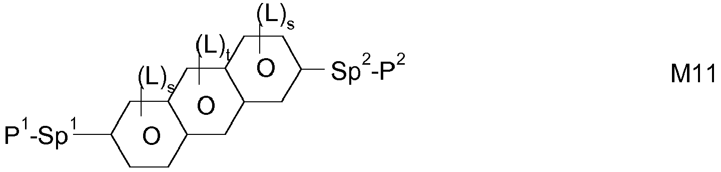 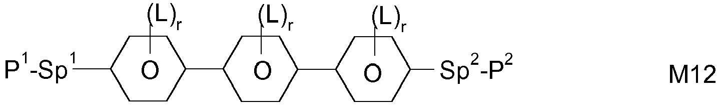 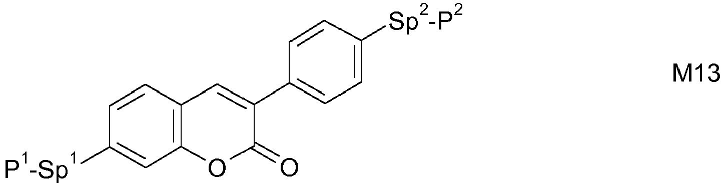 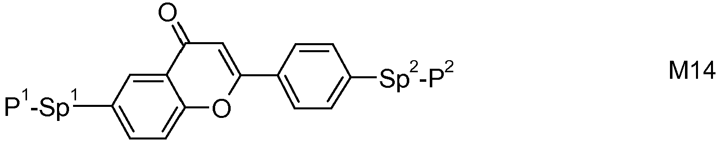 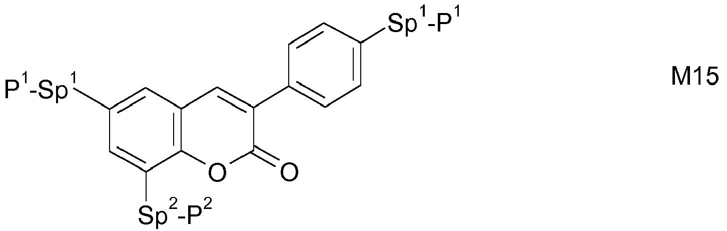 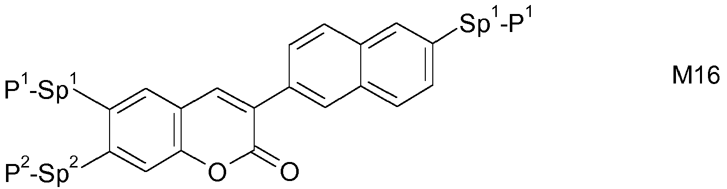 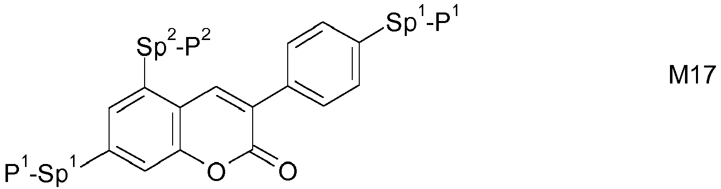 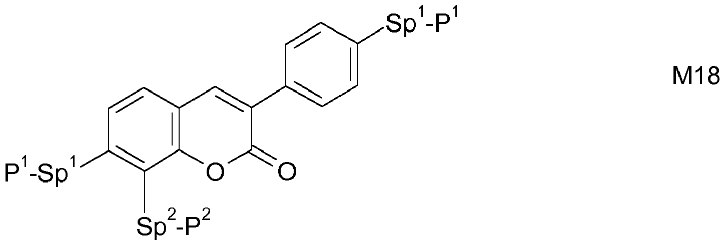 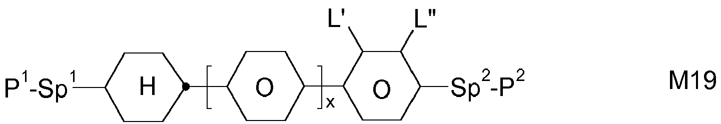 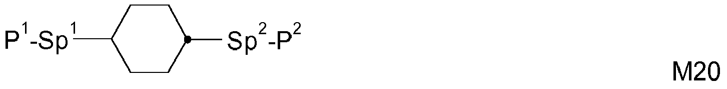 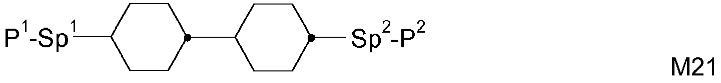 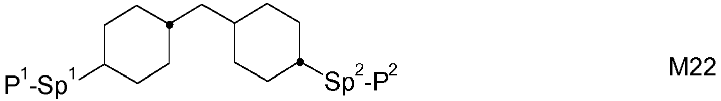 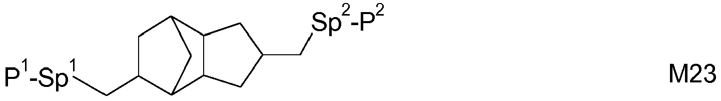 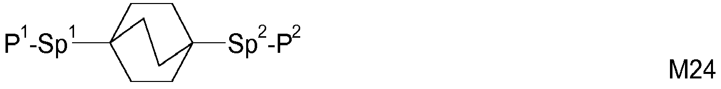 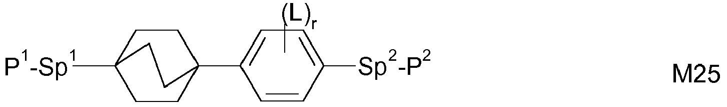 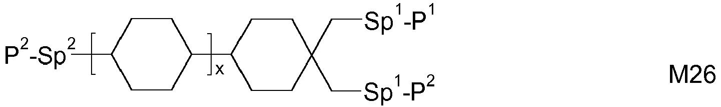 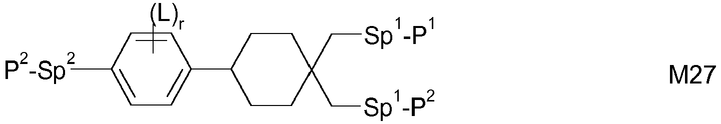 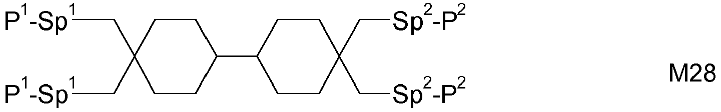 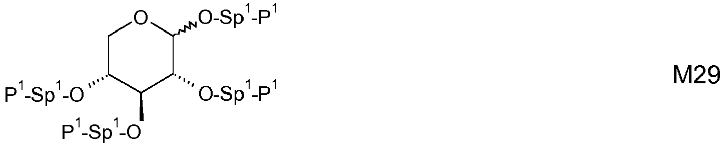 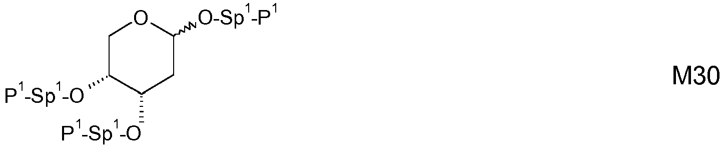 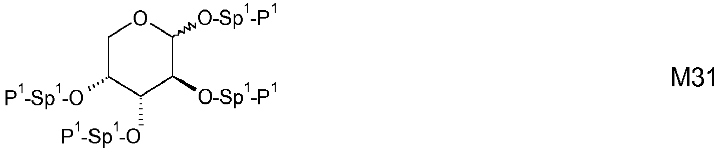 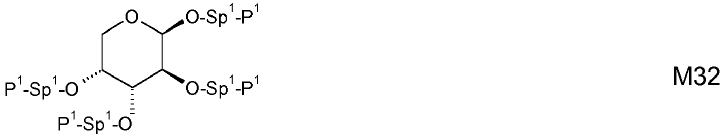 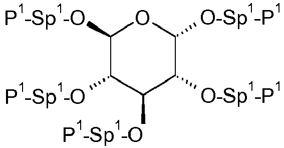 dans lesquelles les radicaux individuels présentent les significations qui suivent :
P¹ et P² représentent chacun, de manière indépendante l'un de l'autre, un groupe polymérisable, de préférence qui présente l'une des significations qui ont été indiquées ci-avant et qui sont indiquées ci-après pour P, de façon particulièrement préférable, un groupe acrylate, méthacrylate, fluoroacrylate, oxétane, vinyle, vinyloxy ou époxyde,
Sp¹ et Sp² représentent chacun, de manière indépendante l'un de l'autre, une liaison simple ou un groupe d'espaceur, de préférence qui présente l'une des significations qui ont été indiquées ci-avant et qui sont indiquées ci-après pour Sp, et de façon particulièrement préférable, ils représentent -(CH₂)ₚ₁-, -(CH₂)ₚ₁-O-, -(CH₂)ₚ₁-CO-O- ou -(CH₂)ₚ₁-O-CO-O-, où p1 est un entier de 1 à 12, et où la liaison sur le cycle adjacent dans les groupes qui ont été mentionnés en dernier est réalisée via l'atome de O, où, en outre, un ou plusieurs des radicaux P¹-Sp¹- et P²-Sp²- peut/peuvent représenter R^{aa}, étant entendu qu'au moins l'un des radicaux P¹-Sp¹- et P²-Sp²- qui sont présents ne représente pas R^{aa},
R^{aa} représente H, F, Cl, CN ou alkyle en chaîne droite ou ramifié qui comporte de 1 à 25 atome(s) de C, où, en outre, un ou plusieurs groupe(s) CH₂ non adjacents peut/peuvent chacun être remplacé(s), de manière indépendante les uns des autres, par -C(R⁰)=C(R⁰⁰)-, -C≡C-, -N(R⁰)-, -O-, -S-, -CO-, -CO-O-, -O-CO-, -O-CO-O- de telle sorte que des atomes de O et/ou de S ne soient pas liés directement les uns aux autres, et où, en outre, un ou plusieurs atome(s) de H peut/ peuvent être remplacé(s) par F, Cl, CN ou P¹-Sp¹-, de façon particulièrement préférable, alkyle, alcoxy, alkényle, alkynyle, alkylcarbonyle, alcoxycarbonyle, alkylcarbonyloxy ou alcoxycarbonyloxy en chaîne droite ou ramifié, en option mono- ou polyfluoré qui comporte de 1 à 12 atome(s) de C (où les radicaux alkényle et alkynyle comportent au moins deux atomes de C et les radicaux ramifiés comportent au moins trois atomes de C),
R⁰, R⁰⁰ représentent chacun, de manière indépendante l'un de l'autre et de façon identique ou différente pour chaque occurrence, H ou alkyle qui comporte de 1 à 12 atome(s) de C,
R^{y} et R^{z} représentent chacun, de manière indépendante l'un de l'autre, H, F, CH₃ ou CF₃,
Z¹ représente -O-, -CO-, -C(R^{y}R^{z})- ou -CF₂CF₂-,
Z² et Z³ représentent chacun, de manière indépendante l'un de l'autre, -CO-O-, -O-CO-, -CH₂O-, -OCH₂-, -CF₂O-, -OCF₂- ou -(CH₂)ₙ-, où n est 2, 3 ou 4,
L représente pour chaque occurrence, de manière identique ou différente, F, Cl, CN ou alkyle, alcoxy, alkényle, alkynyle, alkylcarbonyle, alcoxycarbonyle, alkylcarbonyloxy ou alcoxycarbonyloxy en chaîne droite ou ramifié, en option mono- ou polyfluoré qui comporte de 1 à 12 atome(s) de C, de préférence F,
L' et L" représentent chacun, de manière indépendante l'un de l'autre, H, F ou Cl,
r représente 0, 1, 2, 3 ou 4,
s représente 0, 1, 2 ou 3,
t représente 0, 1 ou 2,
x représente 0 ou 1.

4. Milieu cristallin liquide selon une ou plusieurs des revendications 1 à 3, **caractérisé en ce que** le composant polymérisable (A) contient au moins un composé polymérisable qui est sélectionné parmi le groupe des formules RM-1 à RM-79

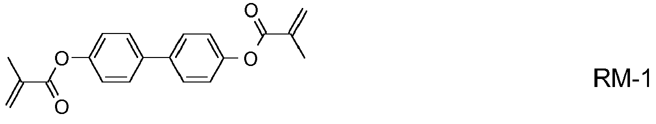

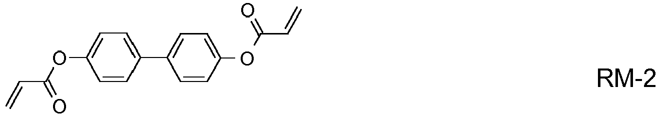

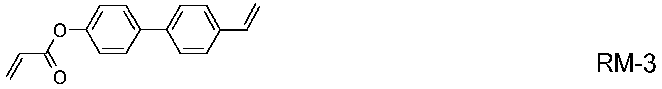

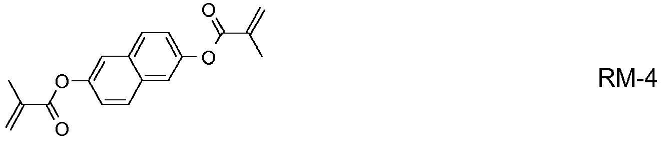

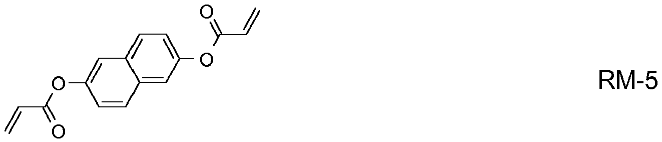

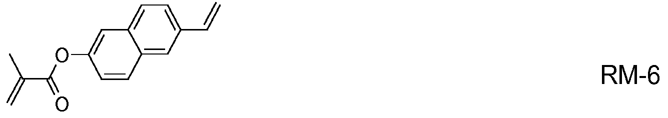

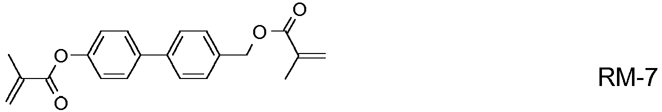

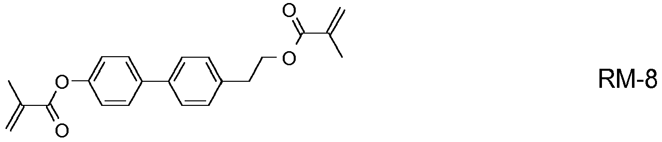

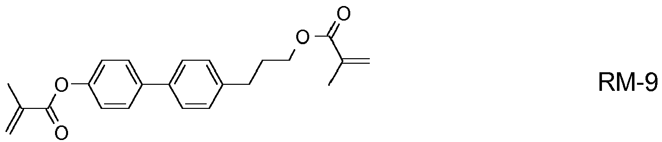

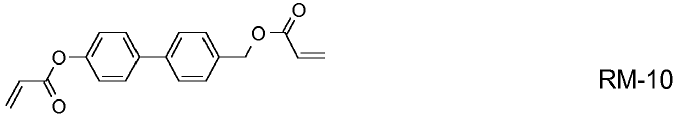

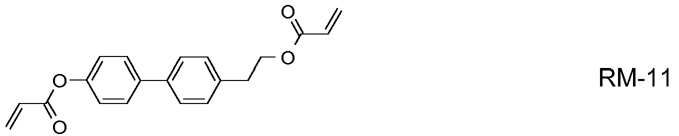

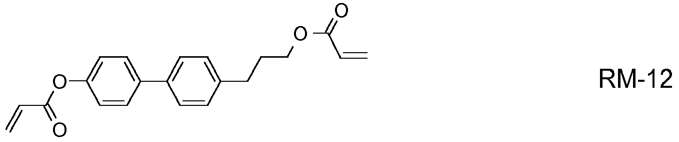

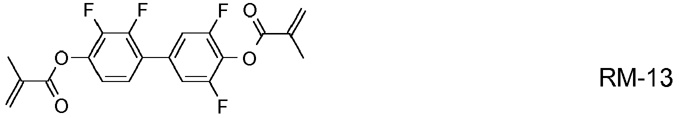

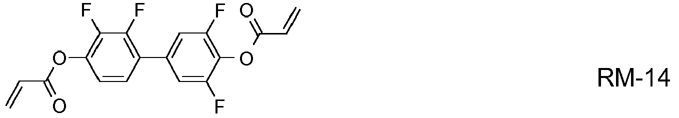

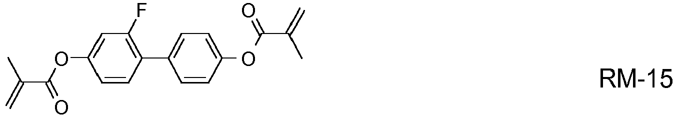

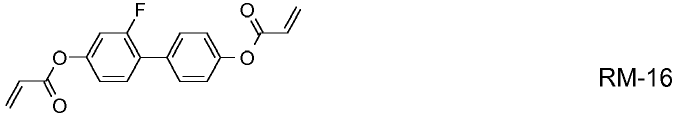

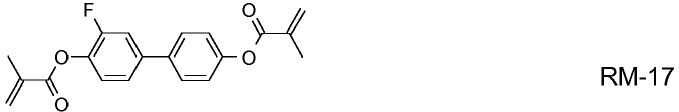

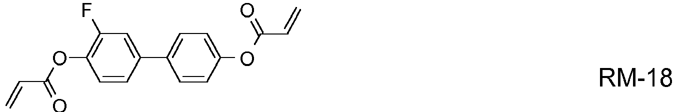

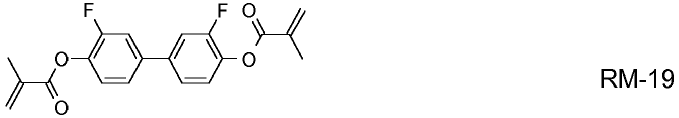

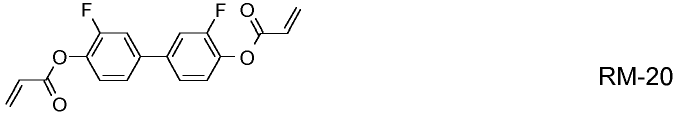

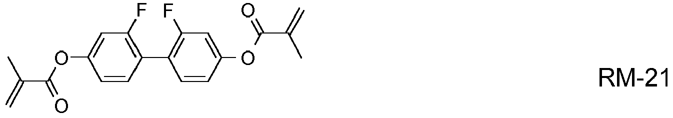

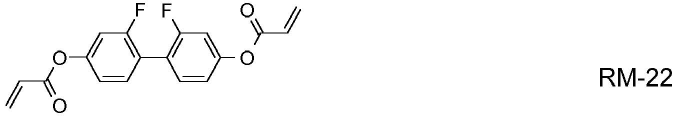

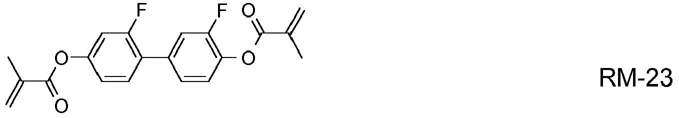

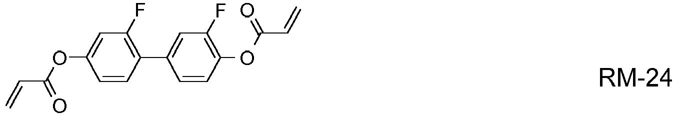

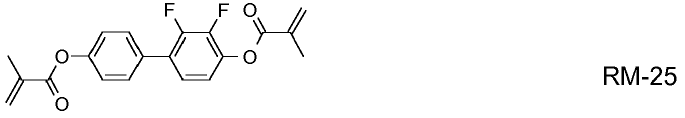

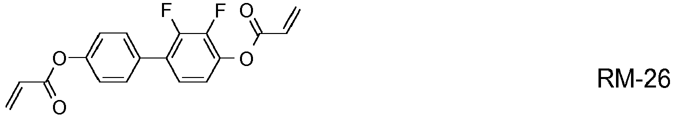

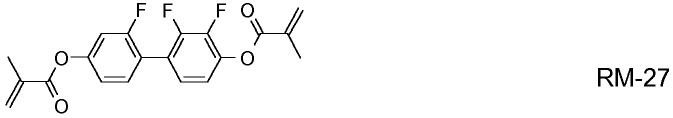

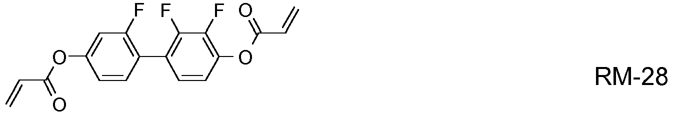

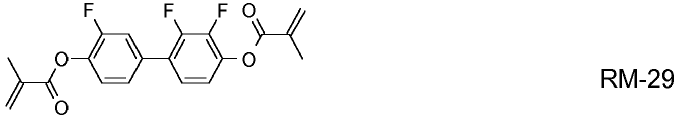

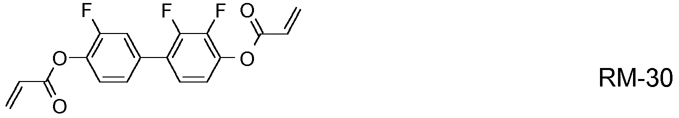

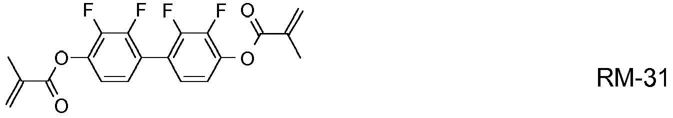

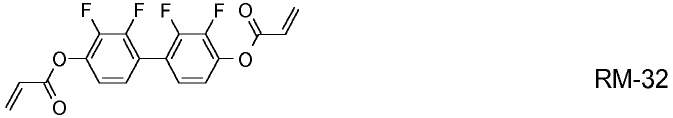

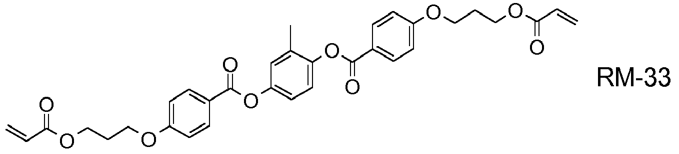

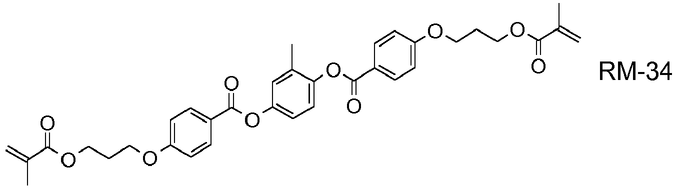

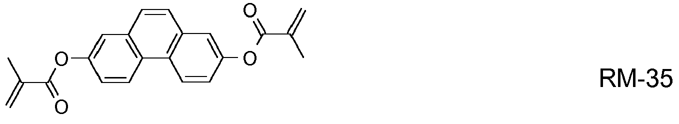

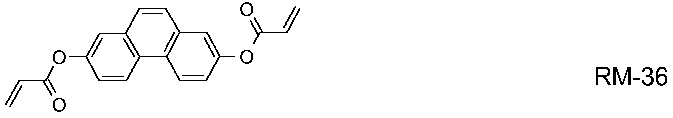

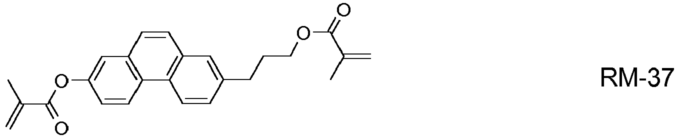

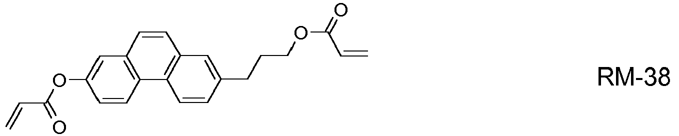

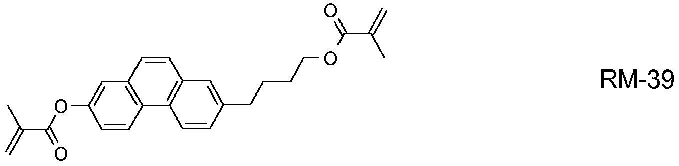

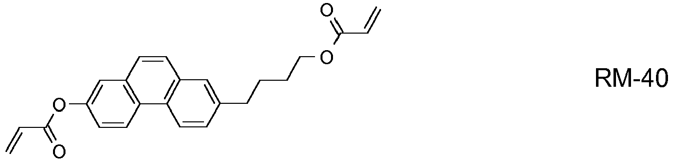

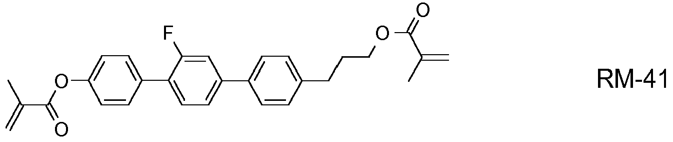

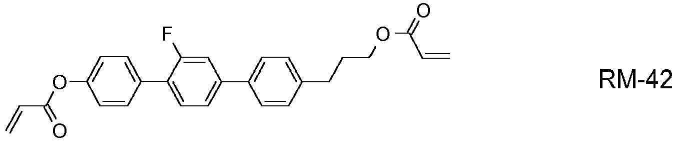

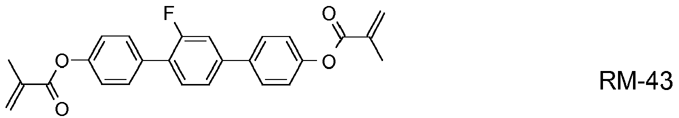

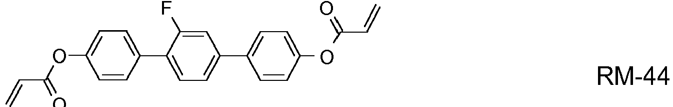

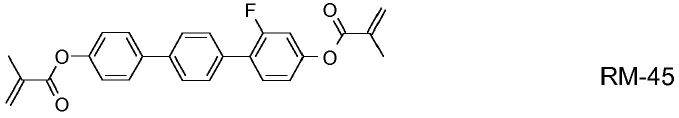

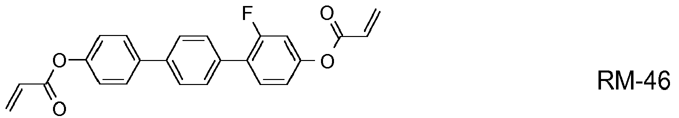

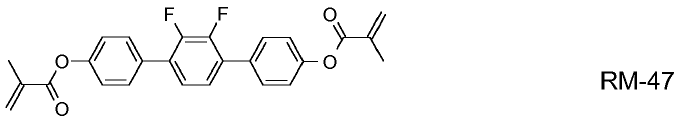

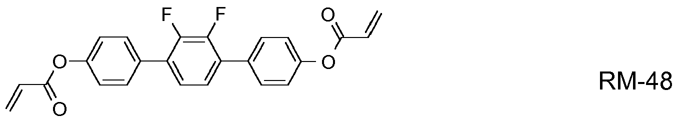

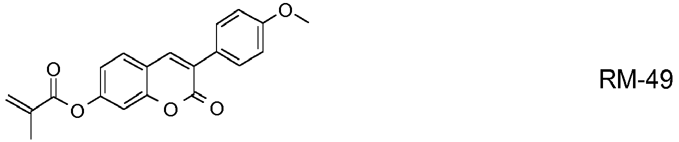

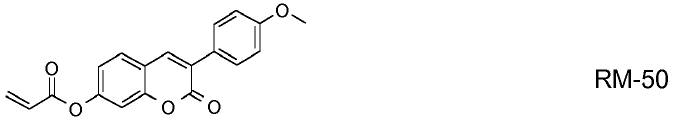

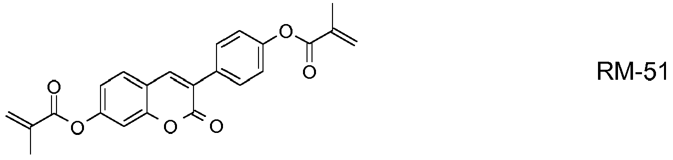

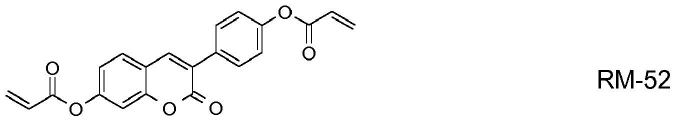

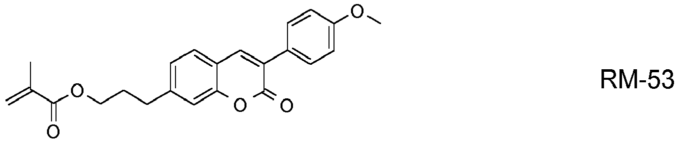

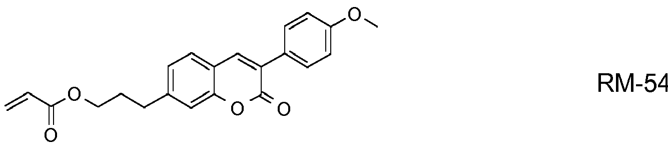

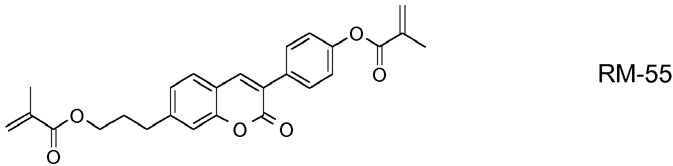

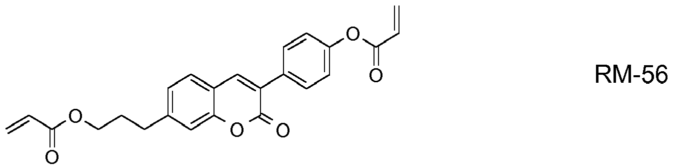

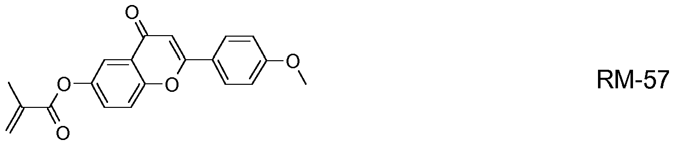

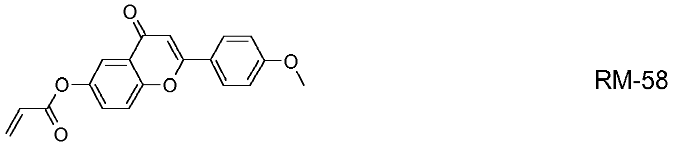

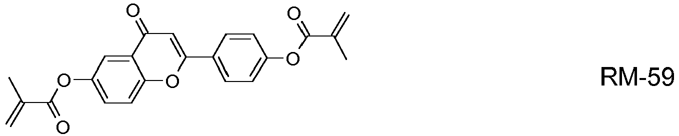

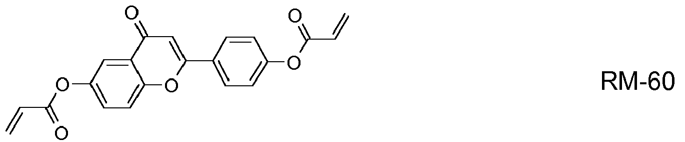

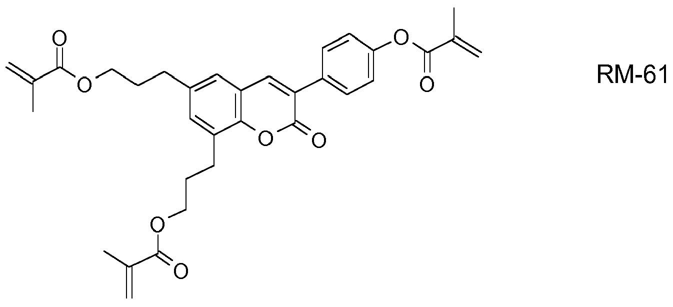

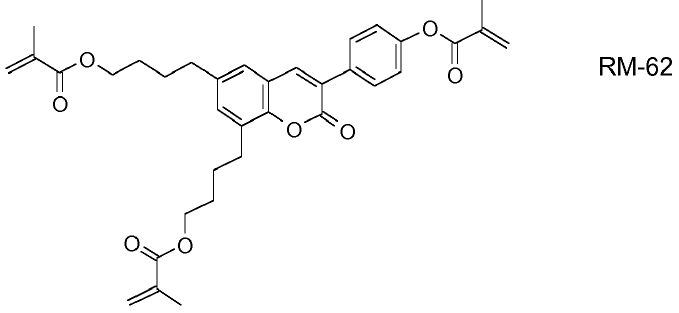

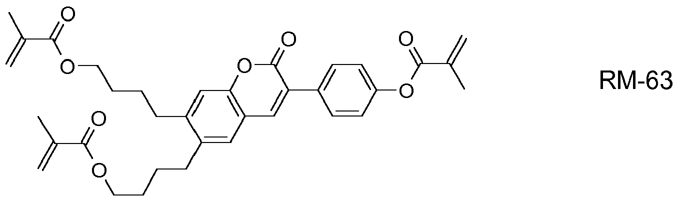

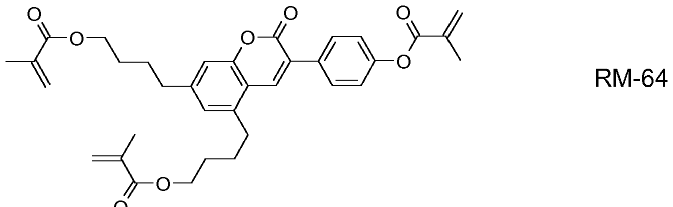

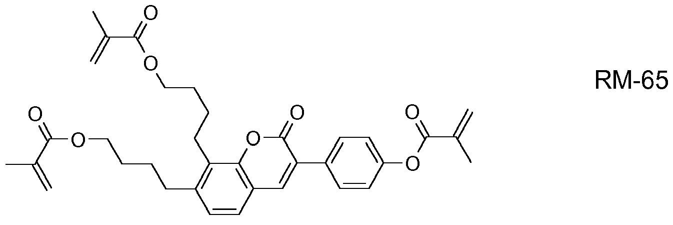

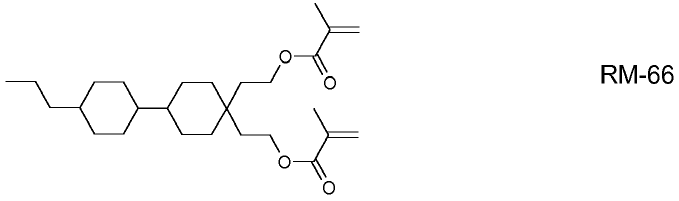

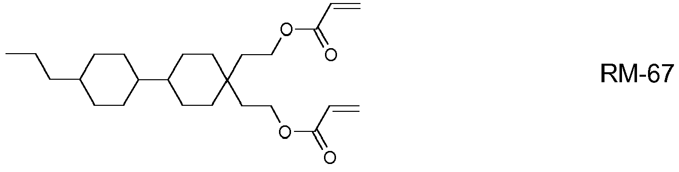

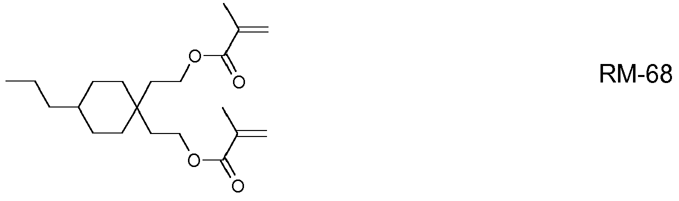

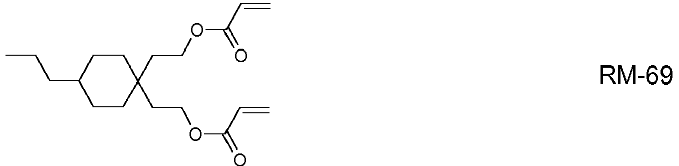

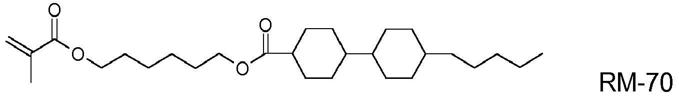

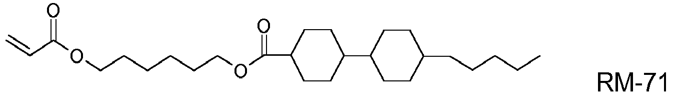

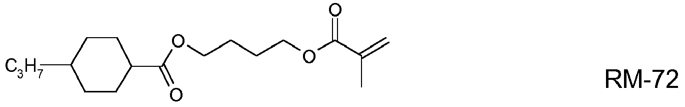

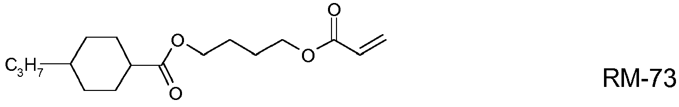

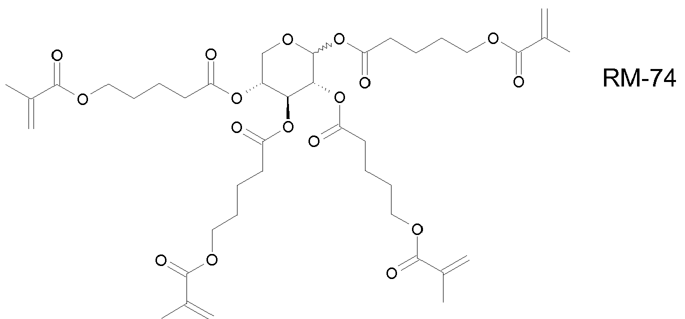

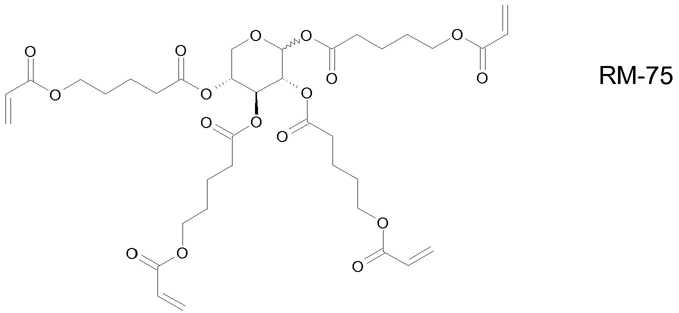

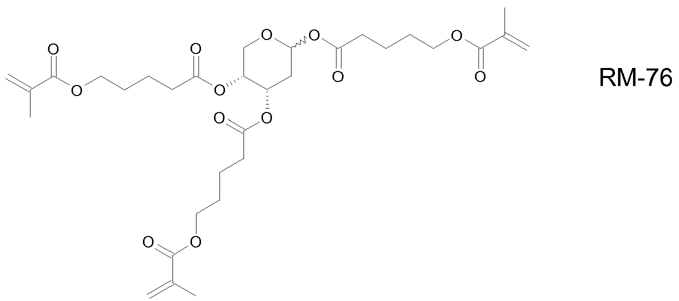

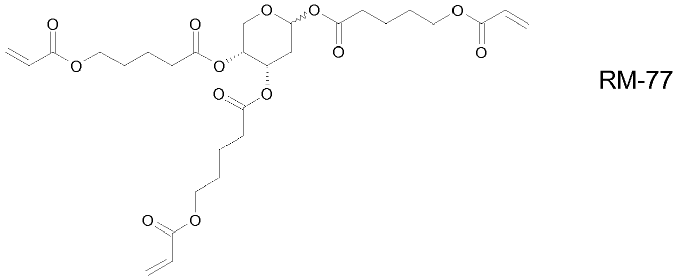

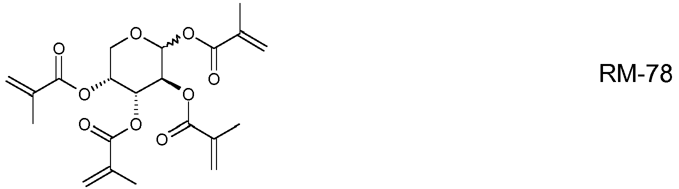

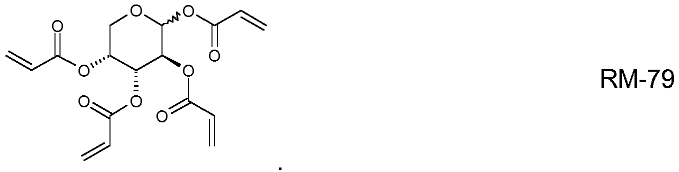

5. Milieu cristallin liquide selon une ou plusieurs des revendications 1 à 4, **caractérisé en ce qu'**il contient au moins un composé qui est sélectionné parmi le groupe des composés des formules Xe, XIa, XIb, XIc et XId, 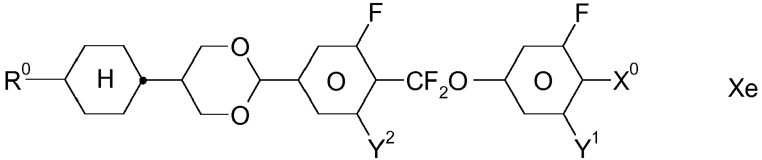 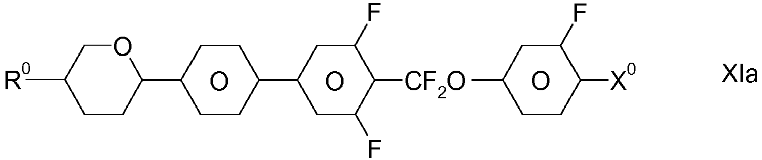 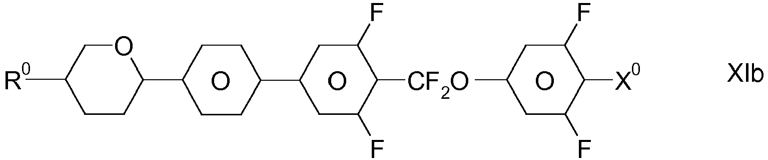 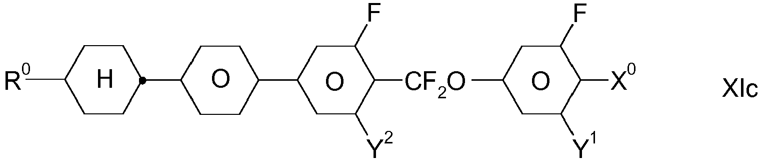 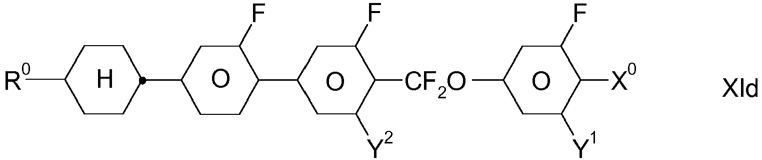 dans lesquelles
Y¹ et Y² représentent, de manière indépendante les uns des autres, H ou F, et
R⁰ et X⁰ présentent les significations qui ont été données selon la revendication 1.

6. Milieu cristallin liquide selon une ou plusieurs des revendications 1 à 5, **caractérisé en ce que** R⁰ dans la formule I et dans la formule IA représente alkyle en chaîne droite qui comporte de 1 à 6 atome(s) de carbone ou alkényle en chaîne droite qui comporte de 2 à 6 atomes de carbone.

7. Milieu cristallin liquide selon une ou plusieurs des revendications 1 à 6, **caractérisé en ce que** le composant B contient au moins un composé de la formule I et au moins un composé de la formule IA.

8. Milieu cristallin liquide selon une ou plusieurs des revendications 1 à 7, **caractérisé en ce qu'**il contient de façon additionnelle un ou plusieurs composé(s) des formules II et/ou III, 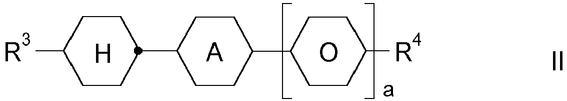 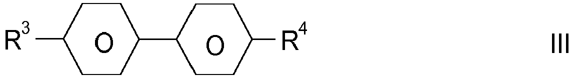 dans lesquelles
A représente 1,4-phénylène ou trans-1,4-cyclohexylène,
a représente 0 ou 1,
R³ représente alkényle qui comporte de 2 à 9 atomes de C, et
R⁴ présente les significations qui ont été indiquées pour R⁰ selon la revendication 1.

9. Milieu cristallin liquide selon une ou plusieurs des revendications 1 à 8, **caractérisé en ce qu'**il contient de façon additionnelle un ou plusieurs composé(s) des formules IIa à IIp et/ou IIIa et IIIb, 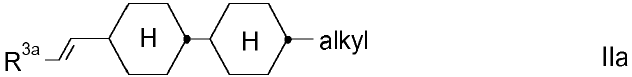 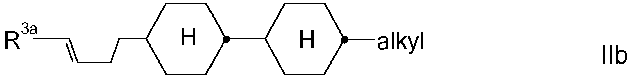 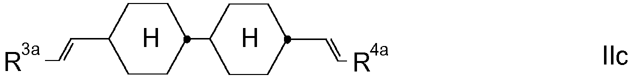 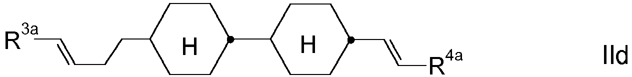 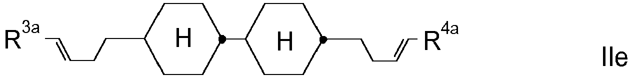 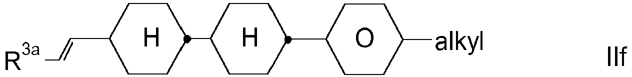 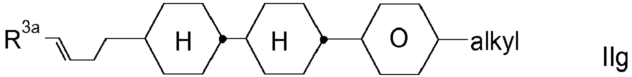 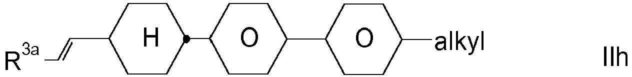 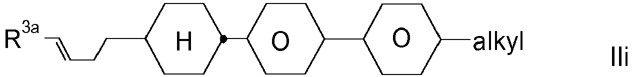 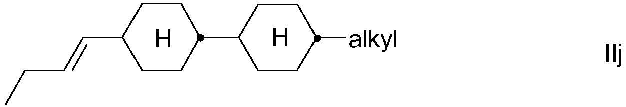 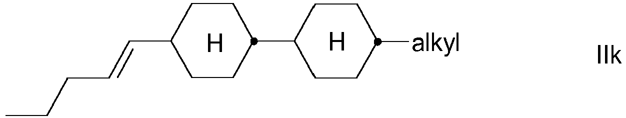 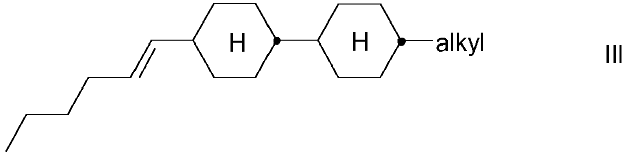 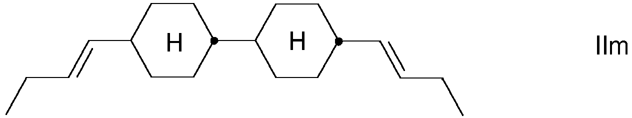 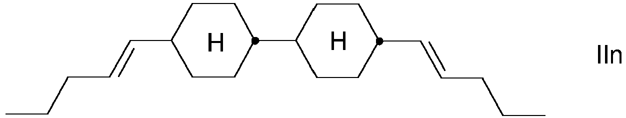 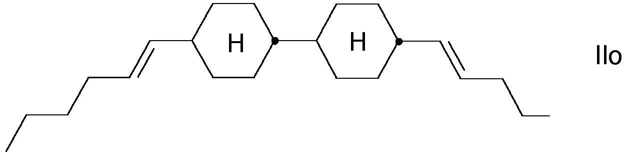 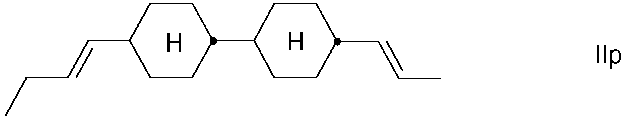 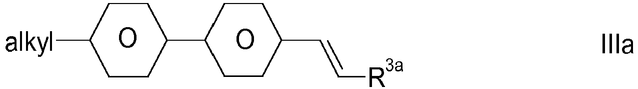 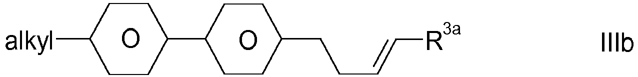 dans lesquelles R^{3a} et R^{4a} représentent chacun, de manière indépendante l'un de l'autre, H, CH₃, C₂H₅ ou C₃H₇, et "alkyl" représente un groupe alkyle en chaîne droite qui comporte de 1 à 8 atome(s) de C.

10. Milieu cristallin liquide selon une ou plusieurs des revendications 1 à 9, **caractérisé en ce qu'**il contient de façon additionnelle un ou plusieurs composé(s) qui est/sont sélectionné(s) parmi les composés des formules IV à VIII, 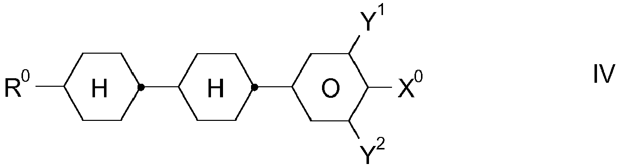 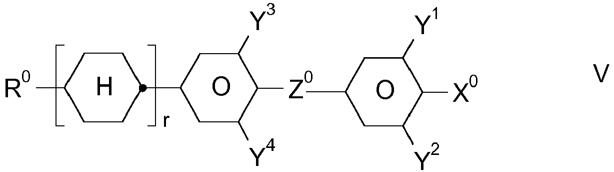 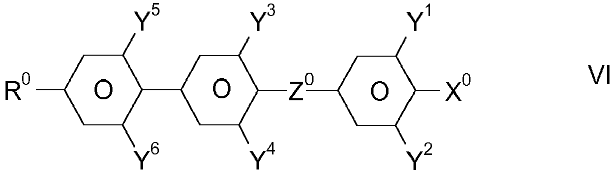 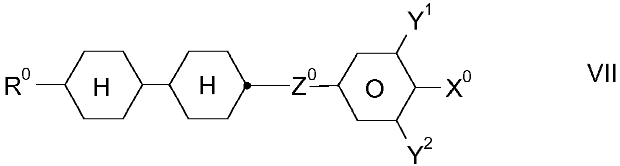 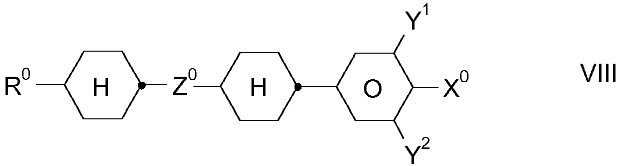 dans lesquelles R⁰ et X⁰ présentent les significations qui ont été indiquées selon la revendication 1, et
Y¹⁻⁶ représentent chacun, de manière indépendante les uns des autres, H ou F,
Z⁰ représente -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- ou -OCF₂-, dans les formules V et VI également une liaison simple, et
r représente 0 ou 1.

11. Milieu cristallin liquide selon une ou plusieurs des revendications 1 à 10, **caractérisé en ce qu'**il contient de façon additionnelle un ou plusieurs composé(s) qui est/sont sélectionné(s) parmi les composés des formules Va à Vg : 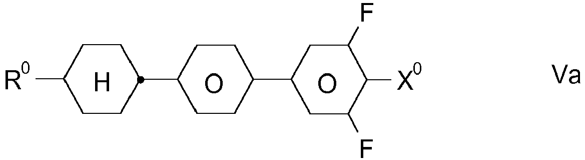 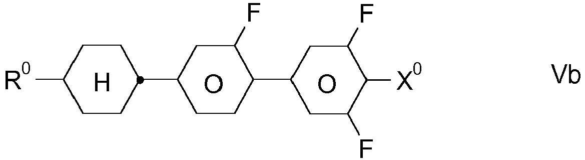 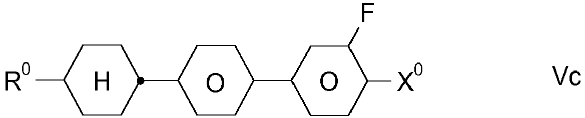 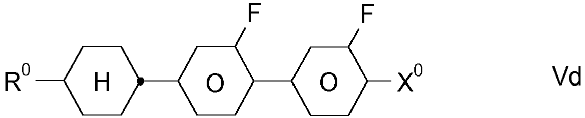 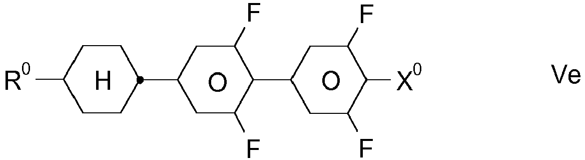 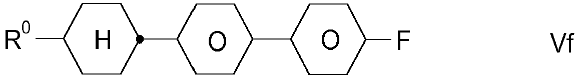 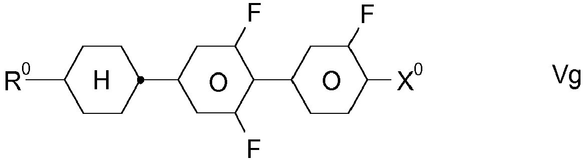 dans lesquelles R⁰ et X⁰ présentent les significations qui ont été indiquées selon la revendication 1.

12. Milieu cristallin liquide selon une ou plusieurs des revendications 1 à 11, **caractérisé en ce qu'**il contient un ou plusieurs composé(s) qui est/sont sélectionné(s) parmi les composés des formules VI-1a à VI-1d : 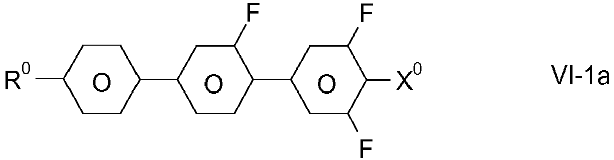 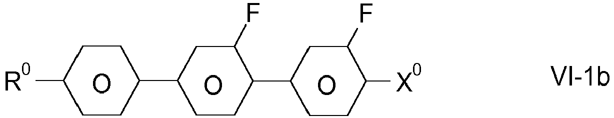 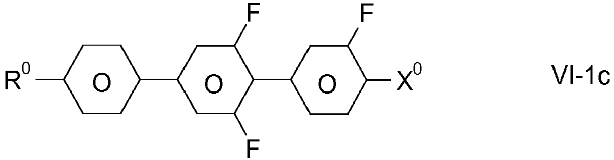 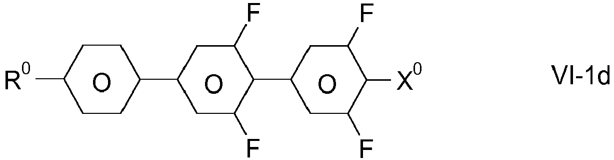 dans lesquelles R⁰ et X⁰ présentent les significations qui ont été indiquées selon la revendication 1.

13. Milieu cristallin liquide selon une ou plusieurs des revendications 1 à 11, **caractérisé en ce qu'**il contient un ou plusieurs composé(s) qui est/sont sélectionné(s) parmi les composés des formules VI-2a à VI-2g : 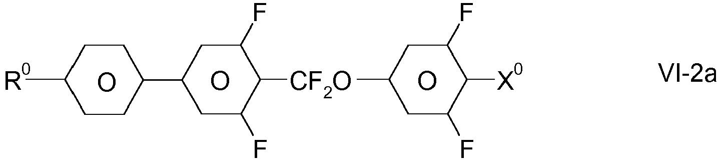 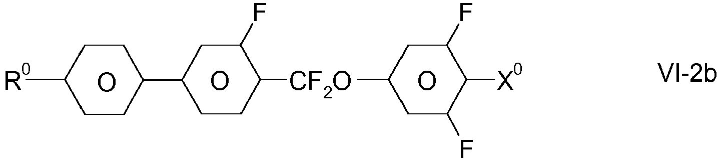 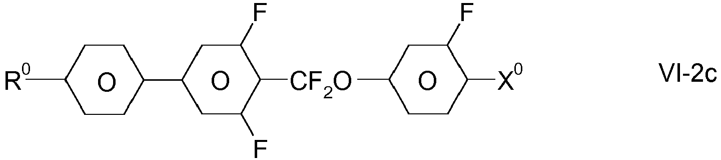 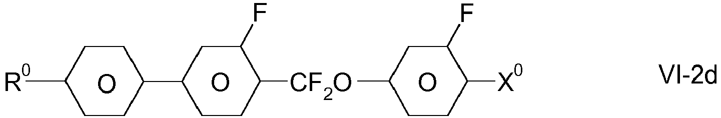 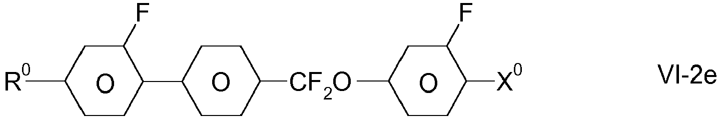 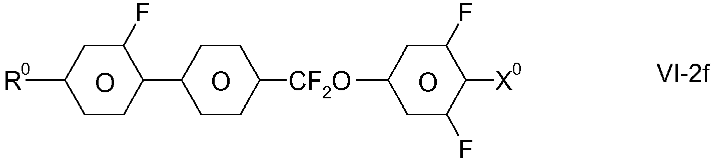 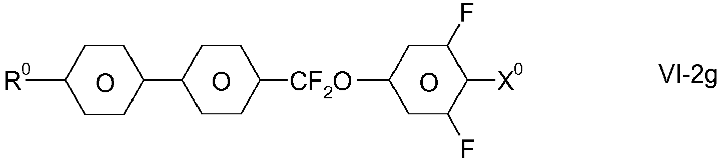 dans lesquelles R⁰ et X⁰ présentent les significations qui ont été indiquées selon la revendication 1.

14. Milieu cristallin liquide selon une ou plusieurs des revendications 1 à 13, **caractérisé en ce qu'**il contient de façon additionnelle un ou plusieurs composé(s) qui est/sont sélectionné(s) parmi la formule qui suit 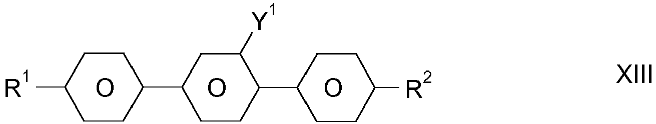 dans laquelle
R¹ et R² représentent chacun, de manière indépendante l'un de l'autre, n-alkyle, alcoxy, oxaalkyle, fluoroalkyle ou alkényle dont chacun comporte jusqu'à 9 atomes de C, et Y¹ représente H ou F.

15. Milieu cristallin liquide selon une ou plusieurs des revendications 1 à 14, **caractérisé en ce qu'**il contient de façon additionnelle un ou plusieurs composé(s) qui est/sont sélectionné(s) parmi les formules qui suivent 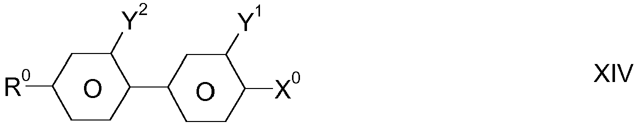 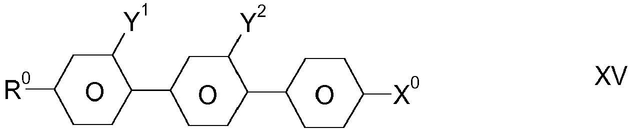 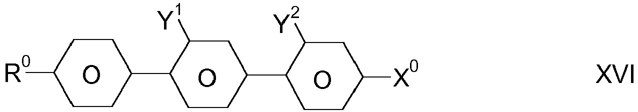 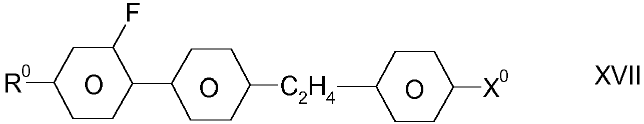 dans lesquelles R⁰, X⁰, Y¹ et Y² présentent les significations qui ont été indiquées selon le revendication 5.

16. Milieu cristallin liquide selon une ou plusieurs des revendications 1 à 15, **caractérisé en ce qu'**il contient un ou plusieurs composé(s) de la formule XIb 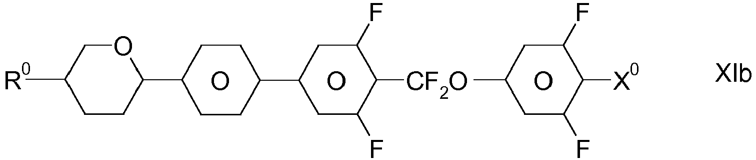 et/ou un ou plusieurs composé(s) de la formule XXVI 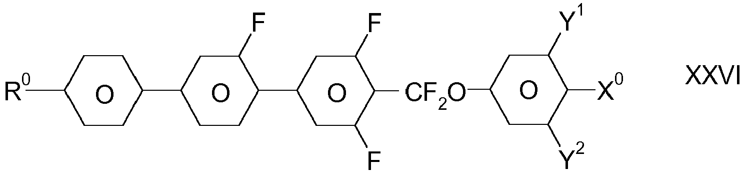 dans lesquelles R⁰ et X⁰ présentent les significations qui ont été indiquées selon la revendication 1, et Y¹ et Y² représentent chacun, de manière indépendante l'un de l'autre, H ou F.

17. Milieu cristallin liquide selon une ou plusieurs des revendications 1 à 16, **caractérisé en ce qu'**il contient de 1 à 25 % en poids des composés de la formule I.

18. Milieu cristallin liquide selon une ou plusieurs des revendications 1 à 17, **caractérisé en ce qu'**il contient de 0,01 à 10% en poids d'un composé polymérisable sur la base du mélange cristallin liquide.

19. Milieu cristallin liquide selon une ou plusieurs des revendications 1 à 18, **caractérisé en ce qu'**il contient de façon additionnelle un ou plusieurs stabilisateur(s) UV et/ou antioxydant(s).

20. Utilisation d'un milieu cristallin liquide selon une ou plusieurs des revendications 1 à 19 à des fins électro-optiques.

21. Affichage à cristaux liquides électro-optique contenant un milieu cristallin liquide selon une ou plusieurs des revendications 1 à 19.

22. Affichage à cristaux liquides électro-optique selon la revendication 21, **caractérisé en ce qu'**il s'agit d'un affichage du type PS-TN, PS-TN-TFT, PS-FFS, PS-VA-IPS- ou PS-IPS.

23. Procédé pour la préparation d'un milieu cristallin liquide selon une ou plusieurs des revendications 1 à 19, **caractérisé en ce qu'**au moins un composé de la formule I et/ou de la formule IA et au moins un composé polymérisable sont mélangés avec au moins un autre composé cristallin liquide et en option, avec un ou plusieurs additif(s) approprié(s).
